(19) Europäisches Patentamt
European Patent Office
Office européen des brevets

(11) EP 4 648 340 A1

(12) EUROPEAN PATENT APPLICATION

(43) Date of publication:
**12.11.2025 Bulletin 2025/46**

(21) Application number: **25174656.6**

(22) Date of filing: **06.05.2025**

(51) International Patent Classification (IPC):
***H04L 5/00*** *(2006.01)*

(52) Cooperative Patent Classification (CPC):
**H04L 5/001; H04L 5/0048;** H04L 5/0055;
H04L 27/26025

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **06.05.2024 US 202463643158 P**

(71) Applicants:
- **Ofinno, LLC**
**Reston, VA 20190 (US)**
- **Zhou, Hua**
**Reston, Virginia 20190 (US)**
- **Cirik, Ali Cagatay**
**Reston, Virginia 20190 (US)**
- **Dinan, Esmael Hejazi**
**Reston, Virginia 20190 (US)**
- **Kazmi, Muhammad Ali**
**Reston, Virginia 20190 (US)**
- **Keating, Ryan**
**Reston VA 20190 (US)**
- **Prasad, Gautham**
**Reston, Virginia 20190 (US)**

(72) Inventors:
- **ZHOU, Hua**
**Reston, Virginia 20190 (US)**
- **CIRIK, Ali Cagatay**
**Reston, Virginia 20190 (US)**
- **DINAN, Esmael Hejazi**
**Reston, Virginia 20190 (US)**
- **KAZMI, Muhammad Ali**
**Reston, Virginia 20190 (US)**
- **KEATING, Ryan**
**Reston, Virginia 20190 (US)**
- **PRASAD, Gautham**
**Reston, Virginia 20190 (US)**

(74) Representative: **Westphal, Mussgnug & Partner, Patentanwälte mbB**
**Werinherstraße 79**
**81541 München (DE)**

# (54) SYNCHRONIZATION SIGNAL BLOCK TRANSMISSION ON A CELL

(57) A method can include receiving, by a wireless device, at a first time interval, a command indicating an activation of on-demand synchronization signal blocks (OD-SSBs) of a first cell. The method can also include receiving, via the first cell and from at least a time gap after the first time interval, one or more of the OD-SSBs. The time gap is the number of slots based on a subcarrier spacing (SCS) of an uplink bandwidth part (BWP), of a second cell, on which the wireless device transmits a hybrid automatic repeat request acknowledgment (HARQ-ACK) information corresponding to the command.

EP 4 648 340 A1

## Description

### CROSS REFERENCE TO RELATED APPLICATION

This application is related to and claims the priority of U.S. Provisional Patent Application No. 63/643,158, filed May 6, 2024, the entirety of which is hereby incorporated herein by reference.

### BRIEF DESCRIPTION OF THE DRAWINGS

Examples of several of the various embodiments of the present disclosure are described herein with reference to the drawings.

FIG. 1A and FIG. 1B illustrate example mobile communication networks in which embodiments of the present disclosure may be implemented.
FIG. 2A and FIG. 2B respectively illustrate a New Radio (NR) user plane and control plane protocol stack.
FIG. 3 illustrates an example of services provided between protocol layers of the NR user plane protocol stack of FIG. 2A.
FIG. 4A illustrates an example downlink data flow through the NR user plane protocol stack of FIG. 2A.
FIG. 4B illustrates an example format of a MAC subheader in a MAC PDU.
FIG. 5A and FIG. 5B respectively illustrate a mapping between logical channels, transport channels, and physical channels for the downlink and uplink.
FIG. 6 is an example diagram showing RRC state transitions of a UE.
FIG. 7 illustrates an example configuration of an NR frame into which OFDM symbols are grouped.
FIG. 8 illustrates an example configuration of a slot in the time and frequency domain for an NR carrier.
FIG. 9 illustrates an example of bandwidth adaptation using three configured BWPs for an NR carrier.
FIG. 10A illustrates three carrier aggregation configurations with two component carriers.
FIG. 10B illustrates an example of how aggregated cells may be configured into one or more PUCCH groups.
FIG. 11A illustrates an example of an SS/PBCH block structure and location.
FIG. 11B illustrates an example of CSI-RSs that are mapped in the time and frequency domains.
FIG. 12A and FIG. 12B respectively illustrate examples of three downlink and uplink beam management procedures.
FIG. 13A, FIG. 13B, and FIG. 13C respectively illustrate a four-step contention-based random access procedure, a two-step contention-free random access procedure, and another two-step random access procedure.
FIG. 14A illustrates an example of CORESET configurations for a bandwidth part.
FIG. 14B illustrates an example of a CCE-to-REG mapping for DCI transmission on a CORESET and PDCCH processing.
FIG. 15 illustrates an example of a wireless device in communication with a base station.
FIG. 16A, FIG. 16B, FIG. 16C, and FIG. 16D illustrate example structures for uplink and downlink transmission.
FIG. 17A, FIG. 17B, and FIG. 17C illustrate aspects of example embodiments according to the present disclosure.
FIG. 18A and FIG. 18B illustrate aspects of example embodiments according to the present disclosure.
FIG. 19 illustrates an aspect of an example embodiment according to the present disclosure.
FIG. 20 illustrates an aspect of an example embodiment according to the present disclosure.
FIG. 21A and FIG. 21B illustrate aspects of example embodiments according to the present disclosure.
FIG. 22 illustrates an aspect of an example embodiment according to the present disclosure.
FIG. 23 illustrates an aspect of an example embodiment according to the present disclosure.
FIG. 24A, FIG. 24B, and FIG. 24C illustrate aspects of example embodiments according to the present disclosure.
FIG. 25 illustrates an aspect of an example embodiment according to the present disclosure.
FIG. 26 illustrates an aspect of an example embodiment according to the present disclosure.
FIG. 27 illustrates an aspect of an example embodiment according to the present disclosure.
FIG. 28 illustrates an aspect of an example embodiment according to the present disclosure.
FIG. 29 illustrates an aspect of an example embodiment according to the present disclosure.
FIG. 30 illustrates an aspect of an example embodiment according to the present disclosure.
FIG. 31 illustrates an aspect of an example embodiment according to the present disclosure.
FIG. 32A and FIG. 32B illustrate aspects of example embodiments according to the present disclosure.
FIG. 33 illustrates an aspect of an example embodiment according to the present disclosure.
FIG. 34 illustrates an aspect of an example embodiment according to the present disclosure.
FIG. 35 illustrates an aspect of an example embodiment according to the present disclosure.
FIG. 36 illustrates an aspect of an example embodiment according to the present disclosure.
FIG. 37 illustrates an aspect of an example embodiment according to the present disclosure.
FIG. 38 illustrates an aspect of an example embodiment according to the present disclosure.
FIG. 39 illustrates an aspect of an example embodiment according to the present disclosure.
FIG. 40 illustrates an aspect of an example embodiment according to the present disclosure.

FIG. 41 illustrates an aspect of an example embodiment according to the present disclosure.

FIG. 42 illustrates an aspect of an example embodiment according to the present disclosure.

FIG. 43 illustrates an aspect of an example embodiment according to the present disclosure.

FIG. 44 illustrates an aspect of an example embodiment according to the present disclosure.

FIG. 45 illustrates an aspect of an example embodiment according to the present disclosure.

## DETAILED DESCRIPTION

In the present disclosure, various embodiments are presented as examples of how the disclosed techniques may be implemented and/or how the disclosed techniques may be practiced in environments and scenarios. It will be apparent to persons skilled in the relevant art that various changes in form and detail can be made therein without departing from the scope. In fact, after reading the description, it will be apparent to one skilled in the relevant art how to implement alternative embodiments. The present embodiments should not be limited by any of the described exemplary embodiments. The embodiments of the present disclosure will be described with reference to the accompanying drawings. Limitations, features, and/or elements from the disclosed example embodiments may be combined to create further embodiments within the scope of the disclosure. Any figures which highlight the functionality and advantages, are presented for example purposes only. The disclosed architecture is sufficiently flexible and configurable, such that it may be utilized in ways other than that shown. For example, the actions listed in any flowchart may be re-ordered or only optionally used in some embodiments.

Embodiments may be configured to operate as needed. The disclosed mechanism may be performed when certain criteria are met, for example, in a wireless device, a base station, a radio environment, a network, a combination of the above, and/or the like. Example criteria may be based, at least in part, on for example, wireless device or network node configurations, traffic load, initial system set up, packet sizes, traffic characteristics, a combination of the above, and/or the like. When the one or more criteria are met, various example embodiments may be applied. Therefore, it may be possible to implement example embodiments that selectively implement disclosed protocols.

A base station may communicate with a mix of wireless devices. Wireless devices and/or base stations may support multiple technologies, and/or multiple releases of the same technology. Wireless devices may have some specific capability(ies) depending on wireless device category and/or capability(ies). When this disclosure refers to a base station communicating with a plurality of wireless devices, this disclosure may refer to a subset of the total wireless devices in a coverage area. This disclosure may refer to, for example, a plurality of wireless devices of a given LTE or 5G release with a given capability and in a given sector of the base station. The plurality of wireless devices in this disclosure may refer to a selected plurality of wireless devices, and/or a subset of total wireless devices in a coverage area which perform according to disclosed methods, and/or the like. There may be a plurality of base stations or a plurality of wireless devices in a coverage area that may not comply with the disclosed methods, for example, those wireless devices or base stations may perform based on older releases of LTE or 5G technology.

In this disclosure, "a" and "an" and similar phrases are to be interpreted as "at least one" and "one or more." Similarly, any term that ends with the suffix "(s)" is to be interpreted as "at least one" and "one or more." In this disclosure, the term "may" is to be interpreted as "may, for example." In other words, the term "may" is indicative that the phrase following the term "may" is an example of one of a multitude of suitable possibilities that may, or may not, be employed by one or more of the various embodiments. The terms "comprises" and "consists of", as used herein, enumerate one or more components of the element being described. The term "comprises" is interchangeable with "includes" and does not exclude unenumerated components from being included in the element being described. By contrast, "consists of" provides a complete enumeration of the one or more components of the element being described. The term "based on", as used herein, should be interpreted as "based at least in part on" rather than, for example, "based solely on". The term "and/or" as used herein represents any possible combination of enumerated elements. For example, "A, B, and/or C" may represent A; B; C; A and B; A and C; B and C; or A, B, and C.

If A and B are sets and every element of A is an element of B, A is called a subset of B. In this specification, only non-empty sets and subsets are considered. For example, possible subsets of B = {cell1, cell2} are: {cell1}, {cell2}, and {cell1, cell2}. The phrase "based on" (or equally "based at least on") is indicative that the phrase following the term "based on" is an example of one of a multitude of suitable possibilities that may, or may not, be employed to one or more of the various embodiments. The phrase "in response to" (or equally "in response at least to") is indicative that the phrase following the phrase "in response to" is an example of one of a multitude of suitable possibilities that may, or may not, be employed to one or more of the various embodiments. The phrase "depending on" (or equally "depending at least to") is indicative that the phrase following the phrase "depending on" is an example of one of a multitude of suitable possibilities that may, or may not, be employed to one or more of the various embodiments. The phrase "employing/using" (or equally "employing/using at least") is indicative that the phrase following the phrase "employing/using" is an example of one of a multitude of suitable possibilities that may, or may not, be employed to one or more of the various embodiments.

The term configured may relate to the capacity of a device whether the device is in an operational or non-operational state. Configured may refer to specific settings in a device that affect or implement the operational characteristics of the device whether the device is in an operational or non-operational state. In other words, the hardware, software, firmware, registers, memory values, and/or the like may be "configured" within a device, whether the device is in an operational or nonoperational state, to provide the device with specific characteristics. Terms such as "a control message to cause in a device" may mean that a control message has parameters that may be used to configure specific characteristics or may be used to implement certain actions in the device, whether the device is in an operational or non-operational state.

In this disclosure, parameters (or equally called, fields, or Information elements: IEs) may comprise one or more information objects, and an information object may comprise one or more other objects. For example, if parameter (IE) N comprises parameter (IE) M, and parameter (IE) M comprises parameter (IE) K, and parameter (IE) K comprises parameter (information element) J. Then, for example, N comprises K, and N comprises J. In an example embodiment, when one or more messages comprise a plurality of parameters, it implies that a parameter in the plurality of parameters is in at least one of the one or more messages, but does not have to be in each of the one or more messages.

Many features presented are described as being optional through the use of "may" or the use of parentheses. For the sake of brevity and legibility, the present disclosure does not explicitly recite each and every permutation that may be obtained by choosing from the set of optional features. The present disclosure is to be interpreted as explicitly disclosing all such permutations. For example, a system described as having three optional features may be embodied in seven ways, namely with just one of the three possible features, with any two of the three possible features or with three of the three possible features.

Many of the elements described in the disclosed embodiments may be implemented as modules. A module is defined here as an element that performs a defined function and has a defined interface to other elements. The modules described in this disclosure may be implemented in hardware, software in combination with hardware, firmware, wetware (e.g., hardware with a biological element), or a combination thereof, which may be behaviorally equivalent. For example, modules may be implemented as a software routine written in a computer language configured to be executed by a hardware machine (such as C, C++, Fortran, Java, Basic, MATLAB or the like) or a modeling/simulation program such as Simulink, Stateflow, GNU Octave, or LabVIEWMathScript. It may be possible to implement modules using physical hardware that incorporates discrete or programmable analog, digital and/or quantum hardware. Examples of programmable hardware comprise: computers, microcontrollers, microprocessors, application-specific integrated circuits (ASICs); field programmable gate arrays (FPGAs); and complex programmable logic devices (CPLDs). Computers, microcontrollers and microprocessors are programmed using languages such as assembly, C, C++ or the like. FPGAs, ASICs and CPLDs are often programmed using hardware description languages (HDL) such as VHSIC hardware description language (VHDL) or Verilog that configure connections between internal hardware modules with lesser functionality on a programmable device. The mentioned technologies are often used in combination to achieve the result of a functional module.

FIG. 1A illustrates an example of a mobile communication network 100 in which embodiments of the present disclosure may be implemented. The mobile communication network 100 may be, for example, a public land mobile network (PLMN) run by a network operator. As illustrated in FIG. 1A, the mobile communication network 100 includes a core network (CN) 102, a radio access network (RAN) 104, and a wireless device 106,

The CN 102 may provide the wireless device 106 with an interface to one or more data networks (DNs), such as public DNs (e.g., the Internet), private DNs, and/or intra-operator DNs, As part of the interface functionality, the CN 102 may set up end-to-end connections between the wireless device 106 and the one or more DNs, authenticate the wireless device 106, and provide charging functionality.

The RAN 104 may connect the CN 102 to the wireless device 106 through radio communications over an air interface. As part of the radio communications, the RAN 104 may provide scheduling, radio resource management, and retransmission protocols. The communication direction from the RAN 104 to the wireless device 106 over the air interface is known as the downlink and the communication direction from the wireless device 106 to the RAN 104 over the air interface is known as the uplink. Downlink transmissions may be separated from uplink transmissions using frequency division duplexing (FDD), time-division duplexing (TDD), and/or some combination of the two duplexing techniques.

The term wireless device may be used throughout this disclosure to refer to and encompass any mobile device or fixed (non-mobile) device for which wireless communication is needed or usable. For example, a wireless device may be a telephone, smart phone, tablet, computer, laptop, sensor, meter, wearable device, Internet of Things (IoT) device, vehicle roadside unit (RSU), relay node, automobile, and/or any combination thereof. The term wireless device encompasses other terminology, including user equipment (UE), user terminal (UT), access terminal (AT), mobile station, handset, wireless transmit and receive unit (WTRU), and/or wireless communication device.

The RAN 104 may include one or more base stations (not shown). The term base station may be used throughout this disclosure to refer to and encompass a Node B (associated with UMTS and/or 3G standards), an Evolved Node B (eNB, associated with E-UTRA and/or 4G standards), a remote radio head (RRH), a baseband processing unit coupled to one or more RRHs, a repeater node or relay node used to extend the coverage area of a donor node, a Next Generation Evolved Node B (ng-eNB), a Generation Node B (gNB, associated with NR and/or 5G standards), an access point (AP, associated with, for example, Wi-Fi or any other suitable wireless communication standard), and/or any combination thereof. A base station may comprise at least one gNB Central Unit (gNB-CU) and at least one a gNB Distributed Unit (gNB-DU),

A base station included in the RAN 104 may include one or more sets of antennas for communicating with the wireless device 106 over the air interface. For example, one or more of the base stations may include three sets of antennas to respectively control three cells (or sectors). The size of a cell may be determined by a range at which a receiver (e.g., a base station receiver) can successfully receive the transmissions from a transmitter (e.g., a wireless device transmitter) operating in the cell. Together, the cells of the base stations may provide radio coverage to the wireless device 106 over a wide geographic area to support wireless device mobility.

In addition to three-sector sites, other implementations of base stations are possible. For example, one or more of the base stations in the RAN 104 may be implemented as a sectored site with more or less than three sectors. One or more of the base stations in the RAN 104 may be implemented as an access point, as a baseband processing unit coupled to several remote radio heads (RRHs), and/or as a repeater or relay node used to extend the coverage area of a donor node. A baseband processing unit coupled to RRHs may be part of a centralized or cloud RAN architecture, where the baseband processing unit may be either centralized in a pool of baseband processing units or virtualized. A repeater node may amplify and rebroadcast a radio signal received from a donor node. A relay node may perform the same/similar functions as a repeater node but may decode the radio signal received from the donor node to remove noise before amplifying and rebroadcasting the radio signal.

The RAN 104 may be deployed as a homogenous network of macrocell base stations that have similar antenna patterns and similar high-level transmit powers. The RAN 104 may be deployed as a heterogeneous network. In heterogeneous networks, small cell base stations may be used to provide small coverage areas, for example, coverage areas that overlap with the comparatively larger coverage areas provided by macrocell base stations. The small coverage areas may be provided in areas with high data traffic (or so-called "hotspots") or in areas with weak macrocell coverage. Examples of small cell base stations include, in order of decreasing coverage area, microcell base stations, picocell base stations, and femtocell base stations or home base stations.

The Third-Generation Partnership Project (3GPP) was formed in 1998 to provide global standardization of specifications for mobile communication networks similar to the mobile communication network 100 in FIG. 1A. To date, 3GPP has produced specifications for three generations of mobile networks: a third generation (3G) network known as Universal Mobile Telecommunications System (UMTS), a fourth generation (4G) network known as Long-Term Evolution (LTE), and a fifth generation (5G) network known as 5G System (5GS). Embodiments of the present disclosure are described with reference to the RAN of a 3GPP 5G network, referred to as next-generation RAN (NG-RAN). Embodiments may be applicable to RANs of other mobile communication networks, such as the RAN 104 in FIG. 1A, the RANs of earlier 3G and 4G networks, and those of future networks yet to be specified (e.g., a 3GPP 6G network). NG-RAN implements 5G radio access technology known as New Radio (NR) and may be provisioned to implement 4G radio access technology or other radio access technologies, including non-3GPP radio access technologies.

FIG. 1B illustrates another example mobile communication network 150 in which embodiments of the present disclosure may be implemented. Mobile communication network 150 may be, for example, a PLMN run by a network operator. As illustrated in FIG. 1B, mobile communication network 150 includes a 5G core network (5G-CN) 152, an NG-RAN 154, and UEs 156A and 156B (collectively UEs 156). These components may be implemented and operate in the same or similar manner as corresponding components described with respect to FIG. 1A.

The 5G-CN 152 provides the UEs 156 with an interface to one or more DNs, such as public DNs (e.g., the Internet), private DNs, and/or intra-operator DNs, As part of the interface functionality, the 5G-CN 152 may set up end-to-end connections between the UEs 156 and the one or more DNs, authenticate the UEs 156, and provide charging functionality. Compared to the CN of a 3GPP 4G network, the basis of the 5G-CN 152 may be a service-based architecture. This means that the architecture of the nodes making up the 5G-CN 152 may be defined as network functions that offer services via interfaces to other network functions. The network functions of the 5G-CN 152 may be implemented in several ways, including as network elements on dedicated or shared hardware, as software instances running on dedicated or shared hardware, or as virtualized functions instantiated on a platform (e.g., a cloud-based platform).

As illustrated in FIG. 1B, the 5G-CN 152 includes an Access and Mobility Management Function (AMF) 158A and a User Plane Function (UPF) 158B, which are shown as one component AMF/UPF 158 in FIG. 1B for ease of illustration. The UPF 158B may serve as a gateway between the NG-RAN 154 and the one or more DNs, The UPF 158B may perform functions such as packet routing and forwarding, packet inspection and user plane policy rule enforcement, traffic usage reporting, uplink classification to support routing of traffic flows to the one or more DNs, quality of service (QoS) handling for the user plane (e.g., packet filtering, gating, uplink/-downlink rate enforcement, and uplink traffic verification), downlink packet buffering, and downlink data notification triggering. The UPF 158B may serve as an anchor point for intra-linter-Radio Access Technology (RAT) mobility, an external protocol (or packet) data unit (PDU) session point of interconnect to the one or more DNs, and/or a branching point to support a multi-homed PDU session. The UEs 156 may be configured to receive services through a PDU session, which is a logical connection between a UE and a DN.

The AMF 158A may perform functions such as Non-Access Stratum (NAS) signaling termination, NAS signaling security, Access Stratum (AS) security control, inter-CN node signaling for mobility between 3GPP access networks, idle mode UE reachability (e.g., control and execution of paging retransmission), registration area management, intra-system and inter-system mobility support, access authentication, access authorization including checking of roaming rights, mobility management control (subscription and policies), network slicing support, and/or session management function (SMF) selection, NAS may refer to the functionality operating between a CN and a UE, and AS may refer to the functionality operating between the UE and a RAN.

The 5G-CN 152 may include one or more additional network functions that are not shown in FIG. 1B for the sake of clarity. For example, the 5G-CN 152 may include one or more of a Session Management Function (SMF), an NR Repository Function (NRF), a Policy Control Function (PCF), a Network Exposure Function (NEF), a Unified Data Management (UDM), an Application Function (AF), and/or an Authentication Server Function (AUSF),

The NG-RAN 154 may connect the 5G-CN 152 to the UEs 156 through radio communications over the air interface. The NG-RAN 154 may include one or more gNBs, illustrated as gNB 160A and gNB 160B (collectively gNBs 160) and/or one or more ng-eNBs, illustrated as ng-eNB 162A and ng-eNB 162B (collectively ng-eNBs 162). The gNBs 160 and ng-eNBs 162 may be more generically referred to as base stations. The gNBs 160 and ng-eNBs 162 may include one or more sets of antennas for communicating with the UEs 156 over an air interface. For example, one or more of the gNBs 160 and/or one or more of the ng-eNBs 162 may include three sets of antennas to respectively control three cells (or sectors). Together, the cells of the gNBs 160 and the ng-eNBs 162 may provide radio coverage to the UEs 156 over a wide geographic area to support UE mobility.

As shown in FIG. 1B, the gNBs 160 and/or the ng-eNBs 162 may be connected to the 5G-CN 152 by means of an NG interface and to other base stations by an Xn interface. The NG and Xn interfaces may be established using direct physical connections and/or indirect connections over an underlying transport network, such as an internet protocol (IP) transport network. The gNBs 160 and/or the ng-eNBs 162 may be connected to the UEs 156 by means of a Uu interface. For example, as illustrated in FIG. 1B, gNB 160A may be connected to the UE 156A by means of a Uu interface. The NG, Xn, and Uu interfaces are associated with a protocol stack. The protocol stacks associated with the interfaces may be used by the network elements in FIG. 1B to exchange data and signaling messages and may include two planes: a user plane and a control plane. The user plane may handle data of interest to a user. The control plane may handle signaling messages of interest to the network elements.

The gNBs 160 and/or the ng-eNBs 162 may be connected to one or more AMF/UPF functions of the 5G-CN 152, such as the AMF/UPF 158, by means of one or more NG interfaces. For example, the gNB 160A may be connected to the UPF 158B of the AMF/UPF 158 by means of an NG-User plane (NG-U) interface. The NG-U interface may provide delivery (e.g., non-guaranteed delivery) of user plane PDUs between the gNB 160A and the UPF 158B. The gNB 160A may be connected to the AMF 158A by means of an NG-Control plane (NG-C) interface. The NG-C interface may provide, for example, NG interface management, UE context management, UE mobility management, transport of NAS messages, paging, PDU session management, and configuration transfer and/or warning message transmission.

The gNBs 160 may provide NR user plane and control plane protocol terminations towards the UEs 156 over the Uu interface. For example, the gNB 160A may provide NR user plane and control plane protocol terminations toward the UE 156A over a Uu interface associated with a first protocol stack. The ng-eNBs 162 may provide Evolved UMTS Terrestrial Radio Access (E-UTRA) user plane and control plane protocol terminations towards the UEs 156 over a Uu interface, where E-UTRA refers to the 3GPP 4G radio-access technology. For example, the ng-eNB 162B may provide E-UTRA user plane and control plane protocol terminations towards the UE 156B over a Uu interface associated with a second protocol stack.

The 5G-CN 152 was described as being configured to handle NR and 4G radio accesses. It will be appreciated by one of ordinary skill in the art that it may be possible for NR to connect to a 4G core network in a mode known as "non-standalone operation," In non-standalone operation, a 4G core network is used to provide (or at least support) control-plane functionality (e.g., initial access, mobility, and paging). Although only one AMF/UPF 158 is shown in FIG. 1B, one gNB or ng-eNB may be connected to multiple AMF/UPF nodes to provide redundancy and/or to load share across the multiple AMF/UPF nodes.

As discussed, an interface (e.g., Uu, Xn, and NG interfaces) between the network elements in FIG. 1B may be associated with a protocol stack that the network elements use to exchange data and signaling messages. A protocol stack may include two planes: a user plane and a control plane. The user plane may handle data of interest to a user, and the control plane may handle signaling messages of interest to the network elements.

FIG. 2A and FIG. 2B respectively illustrate examples of NR user plane and NR control plane protocol stacks for the Uu interface that lies between a UE 210 and a gNB 220. The protocol stacks illustrated in FIG. 2A and FIG. 2B may be the same or similar to those used for the Uu interface between, for example, the UE 156A and the gNB 160A shown in FIG. 1B.

FIG. 2A illustrates a NR user plane protocol stack comprising five layers implemented in the UE 210 and the gNB 220. At the bottom of the protocol stack, physical layers (PHYs) 211 and 221 may provide transport services to the higher layers of the protocol stack and may correspond to layer 1 of the Open Systems Interconnection (OSI) model. The next four protocols above PHYs 211 and 221 comprise media access control layers (MACs) 212 and 222, radio link control layers (RLCs) 213 and 223, packet data convergence protocol layers (PDCPs) 214 and 224, and service data application protocol layers (SDAPs) 215 and 225. Together, these four protocols may make up layer 2, or the data link layer, of the OSI model.

FIG. 3 illustrates an example of services provided between protocol layers of the NR user plane protocol stack. Starting from the top of FIG. 2A and FIG. 3, the SDAPs 215 and 225 may perform QoS flow handling. The UE 210 may receive services through a PDU session, which may be a logical connection between the UE 210 and a DN. The PDU session may have one or more QoS flows. A UPF of a CN (e.g., the UPF 158B) may map IP packets to the one or more QoS flows of the PDU session based on QoS requirements (e.g., in terms of delay, data rate, and/or error rate). The SDAPs 215 and 225 may perform mapping/de-mapping between the one or more QoS flows and one or more data radio bearers. The mapping/de-mapping between the QoS flows and the data radio bearers may be determined by the SDAP 225 at the gNB 220. The SDAP 215 at the UE 210 may be informed of the mapping between the QoS flows and the data radio bearers through reflective mapping or control signaling received from the gNB 220. For reflective mapping, the SDAP 225 at the gNB 220 may mark the downlink packets with a QoS flow indicator (QFI), which may be observed by the SDAP 215 at the UE 210 to determine the mapping/de-mapping between the QoS flows and the data radio bearers.

The PDCPs 214 and 224 may perform header compression/decompression to reduce the amount of data that needs to be transmitted over the air interface, ciphering/deciphering to prevent unauthorized decoding of data transmitted over the air interface, and integrity protection (to ensure control messages originate from intended sources. The PDCPs 214 and 224 may perform retransmissions of undelivered packets, in-sequence delivery and reordering of packets, and removal of packets received in duplicate due to, for example, an intra-gNB handover. The PDCPs 214 and 224 may perform packet duplication to improve the likelihood of the packet being received and, at the receiver, remove any duplicate packets. Packet duplication may be useful for services that require high reliability.

Although not shown in FIG. 3, PDCPs 214 and 224 may perform mapping/de-mapping between a split radio bearer and RLC channels in a dual connectivity scenario. Dual connectivity is a technique that allows a UE to connect to two cells or, more generally, two cell groups: a master cell group (MCG) and a secondary cell group (SCG). A split bearer is when a single radio bearer, such as one of the radio bearers provided by the PDCPs 214 and 224 as a service to the SDAPs 215 and 225, is handled by cell groups in dual connectivity. The PDCPs 214 and 224 may map/de-map the split radio bearer between RLC channels belonging to cell groups.

The RLCs 213 and 223 may perform segmentation, retransmission through Automatic Repeat Request (ARQ), and removal of duplicate data units received from MACs 212 and 222, respectively. The RLCs 213 and 223 may support three transmission modes: transparent mode (TM); unacknowledged mode (UM); and acknowledged mode (AM). Based on the transmission mode an RLC is operating, the RLC may perform one or more of the noted functions. The RLC configuration may be per logical channel with no dependency on numerologies and/or Transmission Time Interval (TTI) durations. As shown in FIG. 3, the RLCs 213 and 223 may provide RLC channels as a service to PDCPs 214 and 224, respectively.

The MACs 212 and 222 may perform multiplexing/demultiplexing of logical channels and/or mapping between logical channels and transport channels. The multiplexing/demultiplexing may include multiplexing/-demultiplexing of data units, belonging to the one or more logical channels, into/from Transport Blocks (TBs) delivered to/from the PHYs 211 and 221. The MAC 222 may be configured to perform scheduling, scheduling information reporting, and priority handling between UEs by means of dynamic scheduling. Scheduling may be performed in the gNB 220 (at the MAC 222) for downlink and uplink. The MACs 212 and 222 may be configured to perform error correction through Hybrid Automatic Repeat Request (HARQ) (e.g., one HARQ entity per carrier in case of Carrier Aggregation (CA)), priority handling between logical channels of the UE 210 by means of logical channel prioritization, and/or padding. The MACs 212 and 222 may support one or more numerologies and/or transmission timings. In an example, mapping restrictions in a logical channel prioritization may control which numerology and/or transmission timing a logical channel may use. As shown in FIG. 3, the MACs 212 and 222 may provide logical channels as a service to the RLCs 213 and 223.

The PHYs 211 and 221 may perform mapping of transport channels to physical channels and digital and analog signal processing functions for sending and receiving information over the air interface. These digital and analog signal processing functions may include, for example, coding/decoding and modulation/demodulation. The PHYs 211 and 221 may perform multi-antenna mapping. As shown in FIG. 3, the PHYs 211 and 221 may provide one or more transport channels as a service to the MACs 212 and 222.

FIG. 4A illustrates an example downlink data flow through the NR user plane protocol stack. FIG. 4A illustrates a downlink data flow of three IP packets (*n, n+1,* and *m*) through the NR user plane protocol stack to generate two TBs at the gNB 220. An uplink data flow through the NR user plane protocol stack may be similar to the downlink data flow depicted in FIG. 4A.

The downlink data flow of FIG. 4A begins when SDAP 225 receives the three IP packets from one or more QoS flows and maps the three packets to radio bearers. In FIG. 4A, the SDAP 225 maps IP packets n and *n+1* to a first radio bearer 402 and maps IP packet m to a second radio bearer 404. An SDAP header (labeled with an "H" in FIG. 4A) is added to an IP packet. The data unit from/to a higher protocol layer is referred to as a service data unit (SDU) of the lower protocol layer and the data unit to/from a lower protocol layer is referred to as a protocol data unit (PDU) of the higher protocol layer. As shown in FIG. 4A, the data unit from the SDAP 225 is an SDU of lower protocol layer PDCP 224 and is a PDU of the SDAP 225.

The remaining protocol layers in FIG. 4A may perform their associated functionality (e.g., with respect to FIG. 3), add corresponding headers, and forward their respective outputs to the next lower layer. For example, the PDCP 224 may perform IP-header compression and ciphering and forward its output to the RLC 223. The RLC 223 may optionally perform segmentation (e.g., as shown for IP packet m in FIG. 4A) and forward its output to the MAC 222. The MAC 222 may multiplex a number of RLC PDUs and may attach a MAC subheader to an RLC PDU to form a transport block. In NR, the MAC subheaders may be distributed across the MAC PDU, as illustrated in FIG. 4A. In LTE, the MAC subheaders may be entirely located at the beginning of the MAC PDU. The NR MAC PDU structure may reduce processing time and associated latency because the MAC PDU subheaders may be computed before the full MAC PDU is assembled.

FIG. 4B illustrates an example format of a MAC subheader in a MAC PDU. The MAC subheader includes: an SDU length field for indicating the length (e.g., in bytes) of the MAC SDU to which the MAC subheader corresponds; a logical channel identifier (LCID) field for identifying the logical channel from which the MAC SDU originated to aid in the demultiplexing process; a flag (F) for indicating the size of the SDU length field; and a reserved bit (R) field for future use.

FIG. 4B further illustrates MAC control elements (CEs) inserted into the MAC PDU by a MAC, such as MAC 223 or MAC 222. For example, FIG. 4B illustrates two MAC CEs inserted into the MAC PDU. MAC CEs may be inserted at the beginning of a MAC PDU for downlink transmissions (as shown in FIG. 4B) and at the end of a MAC PDU for uplink transmissions. MAC CEs may be used for in-band control signaling. Example MAC CEs include: scheduling-related MAC CEs, such as buffer status reports and power headroom reports; activation/-deactivation MAC CEs, such as those for activation/-deactivation of PDCP duplication detection, channel state information (CSI) reporting, sounding reference signal (SRS) transmission, and prior configured components; discontinuous reception (DRX) related MAC CEs; timing advance MAC CEs; and random access related MAC CEs. A MAC CE may be preceded by a MAC subheader with a similar format as described for MAC SDUs and may be identified with a reserved value in the LCID field that indicates the type of control information included in the MAC CE.

Before describing the NR control plane protocol stack, logical channels, transport channels, and physical channels are first described as well as a mapping between the channel types. One or more of the channels may be used to carry out functions associated with the NR control plane protocol stack described later below.

FIG. 5A and FIG. 5B illustrate, for downlink and uplink respectively, a mapping between logical channels, transport channels, and physical channels. Information is passed through channels between the RLC, the MAC, and the PHY of the NR protocol stack. A logical channel may be used between the RLC and the MAC and may be classified as a control channel that carries control and configuration information in the NR control plane or as a traffic channel that carries data in the NR user plane. A logical channel may be classified as a dedicated logical channel that is dedicated to a specific UE or as a common logical channel that may be used by more than one UE. A logical channel may also be defined by the type of information it carries. The set of logical channels defined by NR include, for example:

- -- a paging control channel (PCCH) for carrying paging messages used to page a UE whose location is not known to the network on a cell level;
- -- a broadcast control channel (BCCH) for carrying system information messages in the form of a master information block (MIB) and several system information blocks (SIBs), wherein the system information messages may be used by the UEs to obtain information about how a cell is configured and how to operate within the cell;
- -- a common control channel (CCCH) for carrying control messages together with random access;
- -- a dedicated control channel (DCCH) for carrying control messages to/from a specific the UE to configure the UE; and

-- a dedicated traffic channel (DTCH) for carrying user data to/from a specific the UE.

Transport channels are used between the MAC and PHY layers and may be defined by how the information they carry is transmitted over the air interface. The set of transport channels defined by NR includes, for example:

-- a paging channel (PCH) for carrying paging messages that originated from the PCCH;
-- a broadcast channel (BCH) for carrying the MIB from the BCCH;
-- a downlink shared channel (DL-SCH) for carrying downlink data and signaling messages, including the SIBs from the BCCH;
-- an uplink shared channel (UL-SCH) for carrying uplink data and signaling messages; and
-- a random access channel (RACH) for allowing a UE to contact the network without any prior scheduling.

The PHY may use physical channels to pass information between processing levels of the PHY. A physical channel may have an associated set of time-frequency resources for carrying the information of one or more transport channels. The PHY may generate control information to support the low-level operation of the PHY and provide the control information to the lower levels of the PHY via physical control channels, known as L1/L2 control channels. The set of physical channels and physical control channels defined by NR include, for example:

-- a physical broadcast channel (PBCH) for carrying the MIB from the BCH;
-- a physical downlink shared channel (PDSCH) for carrying downlink data and signaling messages from the DL-SCH, as well as paging messages from the PCH;
-- a physical downlink control channel (PDCCH) for carrying downlink control information (DCI), which may include downlink scheduling commands, uplink scheduling grants, and uplink power control commands;
-- a physical uplink shared channel (PUSCH) for carrying uplink data and signaling messages from the UL-SCH and in some instances uplink control information (UCI) as described below;
-- a physical uplink control channel (PUCCH) for carrying UCI, which may include HARQ acknowledgments, channel quality indicators (CQI), pre-coding matrix indicators (PMI), rank indicators (RI), and scheduling requests (SR); and
-- a physical random access channel (PRACH) for random access.

Similar to the physical control channels, the physical layer generates physical signals to support the low-level operation of the physical layer. As shown in FIG. 5A and FIG. 5B, the physical layer signals defined by NR include: primary synchronization signals (PSS), secondary synchronization signals (SSS), channel state information reference signals (CSI-RS), demodulation reference signals (DMRS), sounding reference signals (SRS), and phase-tracking reference signals (PT-RS). These physical layer signals will be described in greater detail below.

FIG. 2B illustrates an example NR control plane protocol stack. As shown in FIG. 2B, the NR control plane protocol stack may use the same/similar first four protocol layers as the example NR user plane protocol stack. These four protocol layers include the PHYs 211 and 221, the MACs 212 and 222, the RLCs 213 and 223, and the PDCPs 214 and 224. Instead of having the SDAPs 215 and 225 at the top of the stack as in the NR user plane protocol stack, the NR control plane stack has radio resource controls (RRCs) 216 and 226 and NAS protocols 217 and 237 at the top of the NR control plane protocol stack.

The NAS protocols 217 and 237 may provide control plane functionality between the UE 210 and the AMF 230 (e.g., the AMF 158A) or, more generally, between the UE 210 and the CN. The NAS protocols 217 and 237 may provide control plane functionality between the UE 210 and the AMF 230 via signaling messages, referred to as NAS messages. There is no direct path between the UE 210 and the AMF 230 through which the NAS messages can be transported. The NAS messages may be transported using the AS of the Uu and NG interfaces, NAS protocols 217 and 237 may provide control plane functionality such as authentication, security, connection setup, mobility management, and session management.

The RRCs 216 and 226 may provide control plane functionality between the UE 210 and the gNB 220 or, more generally, between the UE 210 and the RAN. The RRCs 216 and 226 may provide control plane functionality between the UE 210 and the gNB 220 via signaling messages, referred to as RRC messages. RRC messages may be transmitted between the UE 210 and the RAN using signaling radio bearers and the same/similar PDCP, RLC, MAC, and PHY protocol layers. The MAC may multiplex control-plane and user-plane data into the same transport block (TB). The RRCs 216 and 226 may provide control plane functionality such as: broadcast of system information related to AS and NAS; paging initiated by the CN or the RAN; establishment, maintenance and release of an RRC connection between the UE 210 and the RAN; security functions including key management; establishment, configuration, maintenance and release of signaling radio bearers and data radio bearers; mobility functions; QoS management functions; the UE measurement reporting and control of the reporting; detection of and recovery from radio link failure (RLF); and/or NAS message transfer. As part of establishing an RRC connection, RRCs 216 and 226 may establish an RRC context, which may involve configuring parameters for communication between the UE 210 and the RAN.

FIG. 6 is an example diagram showing RRC state transitions of a UE. The UE may be the same or similar to the wireless device 106 depicted in FIG. 1A, the UE 210 depicted in FIG. 2A and FIG. 2B, or any other wireless device described in the present disclosure. As illustrated in FIG. 6, a UE may be in at least one of three RRC states: RRC connected 602 (e.g., RRC_CONNECTED), RRC idle 604 (e.g., RRC_IDLE), and RRC inactive 606 (e.g., RRC_INACTIVE).

In RRC connected 602, the UE has an established RRC context and may have at least one RRC connection with a base station. The base station may be similar to one of the one or more base stations included in the RAN 104 depicted in FIG. 1A, one of the gNBs 160 or ng-eNBs 162 depicted in FIG. 1B, the gNB 220 depicted in FIG. 2A and FIG. 2B, or any other base station described in the present disclosure. The base station with which the UE is connected may have the RRC context for the UE. The RRC context, referred to as the UE context, may comprise parameters for communication between the UE and the base station. These parameters may include, for example: one or more AS contexts; one or more radio link configuration parameters; bearer configuration information (e.g., relating to a data radio bearer, signaling radio bearer, logical channel, QoS flow, and/or PDU session); security information; and/or PHY, MAC, RLC, PDCP, and/or SDAP layer configuration information. While in RRC connected 602, mobility of the UE may be managed by the RAN (e.g., the RAN 104 or the NG-RAN 154). The UE may measure the signal levels (e.g., reference signal levels) from a serving cell and neighboring cells and report these measurements to the base station currently serving the UE. The UE's serving base station may request a handover to a cell of one of the neighboring base stations based on the reported measurements. The RRC state may transition from RRC connected 602 to RRC idle 604 through a connection release procedure 608 or to RRC inactive 606 through a connection inactivation procedure 610.

In RRC idle 604, an RRC context may not be established for the UE. In RRC idle 604, the UE may not have an RRC connection with the base station. While in RRC idle 604, the UE may be in a sleep state for the majority of the time (e.g., to conserve battery power). The UE may wake up periodically (e.g., once in every discontinuous reception cycle) to monitor for paging messages from the RAN. Mobility of the UE may be managed by the UE through a procedure known as cell reselection. The RRC state may transition from RRC idle 604 to RRC connected 602 through a connection establishment procedure 612, which may involve a random access procedure as discussed in greater detail below.

In RRC inactive 606, the RRC context previously established is maintained in the UE and the base station. This allows for a fast transition to RRC connected 602 with reduced signaling overhead as compared to the transition from RRC idle 604 to RRC connected 602. While in RRC inactive 606, the UE may be in a sleep state and mobility of the UE may be managed by the UE through cell reselection. The RRC state may transition from RRC inactive 606 to RRC connected 602 through a connection resume procedure 614 or to RRC idle 604 though a connection release procedure 616 that may be the same as or similar to connection release procedure 608.

An RRC state may be associated with a mobility management mechanism. In RRC idle 604 and RRC inactive 606, mobility is managed by the UE through cell reselection. The purpose of mobility management in RRC idle 604 and RRC inactive 606 is to allow the network to be able to notify the UE of an event via a paging message without having to broadcast the paging message over the entire mobile communications network. The mobility management mechanism used in RRC idle 604 and RRC inactive 606 may allow the network to track the UE on a cell-group level so that the paging message may be broadcast over the cells of the cell group that the UE currently resides within instead of the entire mobile communication network. The mobility management mechanisms for RRC idle 604 and RRC inactive 606 track the UE on a cell-group level. They may do so using different granularities of grouping. For example, there may be three levels of cell-grouping granularity: individual cells; cells within a RAN area identified by a RAN area identifier (RAI); and cells within a group of RAN areas, referred to as a tracking area and identified by a tracking area identifier (TAI).

Tracking areas may be used to track the UE at the CN level. The CN (e.g., the CN 102 or the 5G-CN 152) may provide the UE with a list of TAIs associated with a UE registration area. If the UE moves, through cell reselection, to a cell associated with a TAI not included in the list of TAIs associated with the UE registration area, the UE may perform a registration update with the CN to allow the CN to update the UE's location and provide the UE with a new the UE registration area.

RAN areas may be used to track the UE at the RAN level. For a UE in RRC inactive 606 state, the UE may be assigned a RAN notification area. A RAN notification area may comprise one or more cell identities, a list of RAIs, or a list of TAIs. In an example, a base station may belong to one or more RAN notification areas. In an example, a cell may belong to one or more RAN notification areas. If the UE moves, through cell reselection, to a cell not included in the RAN notification area assigned to the UE, the UE may perform a notification area update with the RAN to update the UE's RAN notification area.

A base station storing an RRC context for a UE or a last serving base station of the UE may be referred to as an anchor base station. An anchor base station may maintain an RRC context for the UE at least during a period of time that the UE stays in a RAN notification area of the anchor base station and/or during a period of time that the UE stays in RRC inactive 606.

A gNB, such as gNBs 160 in FIG. 1B, may be split into two parts: a central unit (gNB-CU), and one or more distributed units (gNB-DU). A gNB-CU may be coupled to one or more gNB-DUs using an F1 interface. The gNB-CU may comprise the RRC, the PDCP, and the SDAP. A gNB-DU may comprise the RLC, the MAC, and the PHY.

In NR, the physical signals and physical channels (discussed with respect to FIG. 5A and FIG. 5B) may be mapped onto orthogonal frequency divisional multiplexing (OFDM) symbols. OFDM is a multicarrier communication scheme that transmits data over F orthogonal subcarriers (or tones). Before transmission, the data may be mapped to a series of complex symbols (e.g., M-quadrature amplitude modulation (M-QAM) or M-phase shift keying (M-PSK) symbols), referred to as source symbols, and divided into *F* parallel symbol streams. The *F* parallel symbol streams may be treated as though they are in the frequency domain and used as inputs to an Inverse Fast Fourier Transform (IFFT) block that transforms them into the time domain. The IFFT block may take in *F* source symbols at a time, one from each of the *F* parallel symbol streams, and use each source symbol to modulate the amplitude and phase of one of *F* sinusoidal basis functions that correspond to the *F* orthogonal subcarriers. The output of the IFFT block may be *F* time-domain samples that represent the summation of the *F* orthogonal subcarriers. The *F* time-domain samples may form a single OFDM symbol. After some processing (e.g., addition of a cyclic prefix) and up-conversion, an OFDM symbol provided by the IFFT block may be transmitted over the air interface on a carrier frequency. The *F* parallel symbol streams may be mixed using an FFT block before being processed by the IFFT block. This operation produces Discrete Fourier Transform (DFT)-precoded OFDM symbols and may be used by UEs in the uplink to reduce the peak to average power ratio (PAPR). Inverse processing may be performed on the OFDM symbol at a receiver using an FFT block to recover the data mapped to the source symbols.

FIG. 7 illustrates an example configuration of an NR frame into which OFDM symbols are grouped. An NR frame may be identified by a system frame number (SFN), The SFN may repeat with a period of 1024 frames. As illustrated, one NR frame may be 10 milliseconds (ms) in duration and may include 10 subframes that are 1 ms in duration. A subframe may be divided into slots that include, for example, 14 OFDM symbols per slot.

The duration of a slot may depend on the numerology used for the OFDM symbols of the slot. In NR, a flexible numerology is supported to accommodate different cell deployments (e.g., cells with carrier frequencies below 1 GHz up to cells with carrier frequencies in the mm-wave range). A numerology may be defined in terms of subcarrier spacing and cyclic prefix duration. For a numerology in NR, subcarrier spacings may be scaled up by powers of two from a baseline subcarrier spacing of 15 kHz, and cyclic prefix durations may be scaled down by powers of two from a baseline cyclic prefix duration of 4.7 $\mu$s. For example, NR defines numerologies with the following subcarrier spacing/cyclic prefix duration combinations: 15 kHz/4.7 us; 30 kHz/2.3 $\mu$s; 60 kHz/1.2 $\mu$s; 120 kHz/0.59 $\mu$s; and 240 kHz/0.29 $\mu$s.

A slot may have a fixed number of OFDM symbols (e.g., 14 OFDM symbols). A numerology with a higher subcarrier spacing has a shorter slot duration and, correspondingly, more slots per subframe. FIG. 7 illustrates this numerology-dependent slot duration and slots-per-subframe transmission structure (the numerology with a subcarrier spacing of 240 kHz is not shown in FIG. 7 for ease of illustration). A subframe in NR may be used as a numerology-independent time reference, while a slot may be used as the unit upon which uplink and downlink transmissions are scheduled. To support low latency, scheduling in NR may be decoupled from the slot duration and start at any OFDM symbol and last for as many symbols as needed for a transmission. These partial slot transmissions may be referred to as mini-slot or subslot transmissions.

FIG. 8 illustrates an example configuration of a slot in the time and frequency domain for an NR carrier. The slot includes resource elements (REs) and resource blocks (RBs). An RE is the smallest physical resource in NR. An RE spans one OFDM symbol in the time domain by one subcarrier in the frequency domain as shown in FIG. 8. An RB spans twelve consecutive REs in the frequency domain as shown in FIG. 8. An NR carrier may be limited to a width of 275 RBs or $275\times12$ = 3300 subcarriers. Such a limitation, if used, may limit the NR carrier to 50, 100, 200, and 400 MHz for subcarrier spacings of 15, 30, 60, and 120 kHz, respectively, where the 400 MHz bandwidth may be set based on a 400 MHz per carrier bandwidth limit.

FIG. 8 illustrates a single numerology being used across the entire bandwidth of the NR carrier. In other example configurations, multiple numerologies may be supported on the same carrier.

NR may support wide carrier bandwidths (e.g., up to 400 MHz for a subcarrier spacing of 120 kHz). Not all UEs may be able to receive the full carrier bandwidth (e.g., due to hardware limitations). Also, receiving the full carrier bandwidth may be prohibitive in terms of UE power consumption. In an example, to reduce power consumption and/or for other purposes, a UE may adapt the size of the UE's receive bandwidth based on the amount of traffic the UE is scheduled to receive. This is referred to as bandwidth adaptation.

NR defines bandwidth parts (BWPs) to support UEs not capable of receiving the full carrier bandwidth and to support bandwidth adaptation. In an example, a BWP may be defined by a subset of contiguous RBs on a carrier. A UE may be configured (e.g., via RRC layer) with one or more downlink BWPs and one or more uplink BWPs per serving cell (e.g., up to four downlink BWPs and up to four uplink BWPs per serving cell). At a given time, one or more of the configured BWPs for a serving cell may be active. These one or more BWPs may be referred to as active BWPs of the serving cell. When a serving cell is configured with a secondary uplink carrier, the serving cell may have one or more first active BWPs in the uplink carrier and one or more second active BWPs in the secondary uplink carrier,

For unpaired spectra, a downlink BWP from a set of configured downlink BWPs may be linked with an uplink BWP from a set of configured uplink BWPs if a downlink BWP index of the downlink BWP and an uplink BWP index of the uplink BWP are the same. For unpaired spectra, a UE may expect that a center frequency for a downlink BWP is the same as a center frequency for an uplink BWP.

For a downlink BWP in a set of configured downlink BWPs on a primary cell (PCell), a base station may configure a UE with one or more control resource sets (CORESETs) for at least one search space. A search space is a set of locations in the time and frequency domains where the UE may find control information. The search space may be a UE-specific search space or a common search space (potentially usable by a plurality of UEs). For example, a base station may configure a UE with a common search space, on a PCell or on a primary secondary cell (PSCell), in an active downlink BWP.

For an uplink BWP in a set of configured uplink BWPs, a BS may configure a UE with one or more resource sets for one or more PUCCH transmissions. A UE may receive downlink receptions (e.g., PDCCH or PDSCH) in a downlink BWP according to a configured numerology (e.g., subcarrier spacing and cyclic prefix duration) for the downlink BWP. The UE may transmit uplink transmissions (e.g., PUCCH or PUSCH) in an uplink BWP according to a configured numerology (e.g., subcarrier spacing and cyclic prefix length for the uplink BWP).

One or more BWP indicator fields may be provided in Downlink Control Information (DCI). A value of a BWP indicator field may indicate which BWP in a set of configured BWPs is an active downlink BWP for one or more downlink receptions. The value of the one or more BWP indicator fields may indicate an active uplink BWP for one or more uplink transmissions.

A base station may semi-statically configure a UE with a default downlink BWP within a set of configured downlink BWPs associated with a PCell. If the base station does not provide the default downlink BWP to the UE, the default downlink BWP may be an initial active downlink BWP. The UE may determine which BWP is the initial active downlink BWP based on a CORESET configuration obtained using the PBCH.

A base station may configure a UE with a BWP inactivity timer value for a PCell. The UE may start or restart a BWP inactivity timer at any appropriate time. For example, the UE may start or restart the BWP inactivity timer (a) when the UE detects a DCI indicating an active downlink BWP other than a default downlink BWP for a paired spectra operation; or (b) when a UE detects a DCI indicating an active downlink BWP or active uplink BWP other than a default downlink BWP or uplink BWP for an unpaired spectra operation. If the UE does not detect DCI during an interval of time (e.g., 1 ms or 0.5 ms), the UE may run the BWP inactivity timer toward expiration (for example, increment from zero to the BWP inactivity timer value, or decrement from the BWP inactivity timer value to zero). When the BWP inactivity timer expires, the UE may switch from the active downlink BWP to the default downlink BWP.

In an example, a base station may semi-statically configure a UE with one or more BWPs. A UE may switch an active BWP from a first BWP to a second BWP in response to receiving a DCI indicating the second BWP as an active BWP and/or in response to an expiry of the BWP inactivity timer (e.g., if the second BWP is the default BWP).

Downlink and uplink BWP switching (where BWP switching refers to switching from a currently active BWP to a not currently active BWP) may be performed independently in paired spectra. In unpaired spectra, downlink and uplink BWP switching may be performed simultaneously. Switching between configured BWPs may occur based on RRC signaling, DCI, expiration of a BWP inactivity timer, and/or an initiation of random access.

FIG. 9 illustrates an example of bandwidth adaptation using three configured BWPs for an NR carrier. A UE configured with the three BWPs may switch from one BWP to another BWP at a switching point. In the example illustrated in FIG. 9, the BWPs include: a BWP 902 with a bandwidth of 40 MHz and a subcarrier spacing of 15 kHz; a BWP 904 with a bandwidth of 10 MHz and a subcarrier spacing of 15 kHz; and a BWP 906 with a bandwidth of 20 MHz and a subcarrier spacing of 60 kHz. The BWP 902 may be an initial active BWP, and the BWP 904 may be a default BWP. The UE may switch between BWPs at switching points. In the example of FIG. 9, the UE may switch from the BWP 902 to the BWP 904 at a switching point 908. The switching at the switching point 908 may occur for any suitable reason, for example, in response to an expiry of a BWP inactivity timer (indicating switching to the default BWP) and/or in response to receiving a DCI indicating BWP 904 as the active BWP. The UE may switch at a switching point 910 from active BWP 904 to BWP 906 in response to receiving a DCI indicating BWP 906 as the active BWP. The UE may switch at a switching point 912 from active BWP 906 to BWP 904 in response to an expiry of a BWP inactivity timer and/or in response to receiving a DCI indicating BWP 904 as the active BWP. The UE may switch at a switching point 914 from active BWP 904 to BWP 902 in response to receiving a DCI indicating BWP 902 as the active BWP.

If a UE is configured for a secondary cell with a default downlink BWP in a set of configured downlink BWPs and a timer value, UE procedures for switching BWPs on a secondary cell may be the same/similar as those on a primary cell. For example, the UE may use the timer value and the default downlink BWP for the secondary cell in the same/similar manner as the UE would use these values for a primary cell.

To provide greater data rates, two or more carriers can be aggregated and simultaneously transmitted to/from the same UE using carrier aggregation (CA). The aggregated carriers in CA may be referred to as component carriers (CCs). When CA is used, there are a number of serving cells for the UE, one for a CC. The CCs may have three configurations in the frequency domain.

FIG. 10A illustrates the three CA configurations with two CCs. In the intraband, contiguous configuration 1002, the two CCs are aggregated in the same frequency band (frequency band A) and are located directly adjacent to each other within the frequency band. In the intraband, non-contiguous configuration 1004, the two CCs are aggregated in the same frequency band (frequency band A) and are separated in the frequency band by a gap. In the interband configuration 1006, the two CCs are located in frequency bands (frequency band A and frequency band B).

In an example, up to 32 CCs may be aggregated. The aggregated CCs may have the same or different bandwidths, subcarrier spacing, and/or duplexing schemes (TDD or FDD). A serving cell for a UE using CA may have a downlink CC. For FDD, one or more uplink CCs may be optionally configured for a serving cell. The ability to aggregate more downlink carriers than uplink carriers may be useful, for example, when the UE has more data traffic in the downlink than in the uplink.

When CA is used, one of the aggregated cells for a UE may be referred to as a primary cell (PCell), The PCell may be the serving cell that the UE initially connects to at RRC connection establishment, reestablishment, and/or handover. The PCell may provide the UE with NAS mobility information and the security input. UEs may have different PCells. In the downlink, the carrier corresponding to the PCell may be referred to as the downlink primary CC (DL PCC). In the uplink, the carrier corresponding to the PCell may be referred to as the uplink primary CC (UL PCC). The other aggregated cells for the UE may be referred to as secondary cells (SCells). In an example, the SCells may be configured after the PCell is configured for the UE. For example, an SCell may be configured through an RRC Connection Reconfiguration procedure. In the downlink, the carrier corresponding to an SCell may be referred to as a downlink secondary CC (DL SCC). In the uplink, the carrier corresponding to the SCell may be referred to as the uplink secondary CC (UL SCC).

Configured SCells for a UE may be activated and deactivated based on, for example, traffic and channel conditions. Deactivation of an SCell may mean that PDCCH and PDSCH reception on the SCell is stopped and PUSCH, SRS, and CQI transmissions on the SCell are stopped. Configured SCells may be activated and deactivated using a MAC CE with respect to FIG. 4B. For example, a MAC CE may use a bitmap (e.g., one bit per SCell) to indicate which SCells (e.g., in a subset of configured SCells) for the UE are activated or deactivated. Configured SCells may be deactivated in response to an expiration of an SCell deactivation timer (e.g., one SCell deactivation timer per SCell),

Downlink control information, such as scheduling assignments and scheduling grants, for a cell may be transmitted on the cell corresponding to the assignments and grants, which is known as self-scheduling. The DCI for the cell may be transmitted on another cell, which is known as cross-carrier scheduling. Uplink control information (e.g., HARQ acknowledgments and channel state feedback, such as CQI, PMI, and/or RI) for aggregated cells may be transmitted on the PUCCH of the PCell. For a larger number of aggregated downlink CCs, the PUCCH of the PCell may become overloaded. Cells may be divided into multiple PUCCH groups.

FIG. 10B illustrates an example of how aggregated cells may be configured into one or more PUCCH groups. A PUCCH group 1010 and a PUCCH group 1050 may include one or more downlink CCs, respectively. In the example of FIG. 10B, the PUCCH group 1010 includes three downlink CCs: a PCell 1011, an SCell 1012, and an SCell 1013. The PUCCH group 1050 includes three downlink CCs in the present example: a PCell 1051, an SCell 1052, and an SCell 1053. One or more uplink CCs may be configured as a PCell 1021, an SCell 1022, and an SCell 1023. One or more other uplink CCs may be configured as a primary SCell (PSCell) 1061, an SCell 1062, and an SCell 1063. Uplink control information (UCI) related to the downlink CCs of the PUCCH group 1010, shown as UCI 1031, UCI 1032, and UCI 1033, may be transmitted in the uplink of the PCell 1021. Uplink control information (UCI) related to the downlink CCs of the PUCCH group 1050, shown as UCI 1071, UCI 1072, and UCI 1073, may be transmitted in the uplink of the PSCell 1061. In an example, if the aggregated cells depicted in FIG. 10B were not divided into the PUCCH group 1010 and the PUCCH group 1050, a single uplink PCell to transmit UCI relating to the downlink CCs, and the PCell may become overloaded. By dividing transmissions of UCI between the PCell 1021 and the PSCell 1061, overloading may be prevented.

A cell, comprising a downlink carrier and optionally an uplink carrier, may be assigned with a physical cell ID and a cell index. The physical cell ID or the cell index may identify a downlink carrier and/or an uplink carrier of the cell, for example, depending on the context in which the physical cell ID is used. A physical cell ID may be determined using a synchronization signal transmitted on a downlink component carrier. A cell index may be determined using RRC messages. In the disclosure, a physical cell ID may be referred to as a carrier ID, and a cell index may be referred to as a carrier index, For example, when the disclosure refers to a first physical cell ID for a first downlink carrier, the disclosure may mean the first physical cell ID is for a cell comprising the first downlink carrier. The same/similar concept may apply to, for example, a carrier activation. When the disclosure indicates that a first carrier is activated, the specification may mean that a cell comprising the first carrier is activated.

In CA, a multi-carrier nature of a PHY may be exposed to a MAC. In an example, a HARQ entity may operate on a serving cell. A transport block may be generated per assignment/grant per serving cell. A transport block and potential HARQ retransmissions of the transport block may be mapped to a serving cell.

In the downlink, a base station may transmit (e.g., unicast, multicast, and/or broadcast) one or more Reference Signals (RSs) to a UE (e.g., PSS, SSS, CSI-RS, DMRS, and/or PT-RS, as shown in FIG. 5A). In the uplink, the UE may transmit one or more RSs to the base station (e.g., DMRS, PT-RS, and/or SRS, as shown in FIG. 5B). The PSS and the SSS may be transmitted by the base station and used by the UE to synchronize the UE to the base station. The PSS and the SSS may be provided in a synchronization signal (SS) / physical broadcast channel (PBCH) block that includes the PSS, the SSS, and the PBCH. The base station may periodically transmit a burst of SS/PBCH blocks.

FIG. 11A illustrates an example of an SS/PBCH block's structure and location. A burst of SS/PBCH blocks may include one or more SS/PBCH blocks (e.g., 4 SS/PBCH blocks, as shown in FIG. 11A). Bursts may be transmitted periodically (e.g., every 2 frames or 20 ms). A burst may be restricted to a half-frame (e.g., a first half-frame having a duration of 5 ms). It will be understood that FIG. 11A is an example, and that these parameters (number of SS/PBCH blocks per burst, periodicity of bursts, position of burst within the frame) may be configured based on, for example: a carrier frequency of a cell in which the SS/PBCH block is transmitted; a numerology or subcarrier spacing of the cell; a configuration by the network (e.g., using RRC signaling); or any other suitable factor. In an example, the UE may assume a subcarrier spacing for the SS/PBCH block based on the carrier frequency being monitored, unless the radio network configured the UE to assume a different subcarrier spacing,

The SS/PBCH block may span one or more OFDM symbols in the time domain (e.g., 4 OFDM symbols, as shown in the example of FIG. 11A) and may span one or more subcarriers in the frequency domain (e.g., 240 contiguous subcarriers). The PSS, the SSS, and the PBCH may have a common center frequency. The PSS may be transmitted first and may span, for example, 1 OFDM symbol and 127 subcarriers. The SSS may be transmitted after the PSS (e.g., two symbols later) and may span 1 OFDM symbol and 127 subcarriers. The PBCH may be transmitted after the PSS (e.g., across the next 3 OFDM symbols) and may span 240 subcarriers.

The location of the SS/PBCH block in the time and frequency domains may not be known to the UE (e.g., if the UE is searching for the cell). To find and select the cell, the UE may monitor a carrier for the PSS. For example, the UE may monitor a frequency location within the carrier. If the PSS is not found after a certain duration (e.g., 20 ms), the UE may search for the PSS at a different frequency location within the carrier, as indicated by a synchronization raster. If the PSS is found at a location in the time and frequency domains, the UE may determine, based on a known structure of the SS/PBCH block, the locations of the SSS and the PBCH, respectively. The SS/PBCH block may be a cell-defining SS block (CD-SSB). In an example, a primary cell may be associated with a CD-SSB. The CD-SSB may be located on a synchronization raster. In an example, a cell selection/-search and/or reselection may be based on the CD-SSB.

The SS/PBCH block may be used by the UE to determine one or more parameters of the cell. For example, the UE may determine a physical cell identifier (PCI) of the cell based on the sequences of the PSS and the SSS, respectively, The UE may determine a location of a frame boundary of the cell based on the location of the SS/PBCH block. For example, the SS/PBCH block may indicate that it has been transmitted in accordance with a transmission pattern, wherein a SS/PBCH block in the transmission pattern is a known distance from the frame boundary.

The PBCH may use a QPSK modulation and may use forward error correction (FEC). The FEC may use polar coding. One or more symbols spanned by the PBCH may carry one or more DMRSs for demodulation of the PBCH. The PBCH may include an indication of a current system frame number (SFN) of the cell and/or a SS/PBCH block timing index. These parameters may facilitate time synchronization of the UE to the base station. The PBCH may include a master information block (MIB) used to provide the UE with one or more parameters. The MIB may be used by the UE to locate remaining minimum system information (RMSI) associated with the cell. The RMSI may include a System Information Block Type 1 (SIB1). The SIB1 may contain information needed by the UE to access the cell. The UE may use one or more parameters of the MIB to monitor PDCCH, which may be used to schedule PDSCH. The PDSCH may include the SIB1. The SIB1 may be decoded using parameters provided in the MIB. The PBCH may indicate an absence of SIB1. Based on the PBCH indicating the absence of SIB1, the UE may be pointed to a frequency. The UE may search for an SS/PBCH block at the frequency to which the UE is pointed.

The UE may assume that one or more SS/PBCH blocks transmitted with a same SS/PBCH block index are quasi co-located (QCLed) (e.g., having the same/similar Doppler spread, Doppler shift, average gain, average delay, and/or spatial Rx parameters). The UE may not assume QCL for SS/PBCH block transmissions having different SS/PBCH block indices.

SS/PBCH blocks (e.g., those within a half-frame) may be transmitted in spatial directions (e.g., using different beams that span a coverage area of the cell). In an example, a first SS/PBCH block may be transmitted in a first spatial direction using a first beam, and a second SS/PBCH block may be transmitted in a second spatial direction using a second beam.

In an example, within a frequency span of a carrier, a base station may transmit a plurality of SS/PBCH blocks. In an example, a first PCI of a first SS/PBCH block of the plurality of SS/PBCH blocks may be different from a second PCI of a second SS/PBCH block of the plurality of SS/PBCH blocks. The PCIs of SS/PBCH blocks transmitted in different frequency locations may be different or the same.

The CSI-RS may be transmitted by the base station and used by the UE to acquire channel state information (CSI). The base station may configure the UE with one or more CSI-RSs for channel estimation or any other suitable purpose. The base station may configure a UE with one or more of the same/similar CSI-RSs. The UE may measure the one or more CSI-RSs. The UE may estimate a downlink channel state and/or generate a CSI report based on the measuring of the one or more downlink CSI-RSs. The UE may provide the CSI report to the base station. The base station may use feedback provided by the UE (e.g., the estimated downlink channel state) to perform link adaptation.

The base station may semi-statically configure the UE with one or more CSI-RS resource sets. A CSI-RS resource may be associated with a location in the time and frequency domains and a periodicity. The base station may selectively activate and/or deactivate a CSI-RS resource. The base station may indicate to the UE that a CSI-RS resource in the CSI-RS resource set is activated and/or deactivated.

The base station may configure the UE to report CSI measurements. The base station may configure the UE to provide CSI reports periodically, aperiodically, or semi-persistently. For periodic CSI reporting, the UE may be configured with a timing and/or periodicity of a plurality of CSI reports. For aperiodic CSI reporting, the base station may request a CSI report. For example, the base station may command the UE to measure a configured CSI-RS resource and provide a CSI report relating to the measurements. For semi-persistent CSI reporting, the base station may configure the UE to transmit periodically, and selectively activate or deactivate the periodic reporting. The base station may configure the UE with a CSI-RS resource set and CSI reports using RRC signaling.

The CSI-RS configuration may comprise one or more parameters indicating, for example, up to 32 antenna ports. The UE may be configured to employ the same OFDM symbols for a downlink CSI-RS and a control resource set (CORESET) when the downlink CSI-RS and CORESET are spatially QCLed and resource elements associated with the downlink CSI-RS are outside of the physical resource blocks (PRBs) configured for the CORESET. The UE may be configured to employ the same OFDM symbols for downlink CSI-RS and SS/PBCH blocks when the downlink CSI-RS and SS/PBCH blocks are spatially QCLed and resource elements associated with the downlink CSI-RS are outside of PRBs configured for the SS/PBCH blocks.

Downlink DMRSs may be transmitted by a base station and used by a UE for channel estimation. For example, the downlink DMRS may be used for coherent demodulation of one or more downlink physical channels (e.g., PDSCH). An NR network may support one or more variable and/or configurable DMRS patterns for data demodulation. At least one downlink DMRS configuration may support a front-loaded DMRS pattern. A front-loaded DMRS may be mapped over one or more OFDM symbols (e.g., one or two adjacent OFDM symbols). A base station may semi-statically configure the UE with a number (e.g., a maximum number) of front-loaded DMRS symbols for PDSCH. A DMRS configuration may support one or more DMRS ports. For example, for single user-MIMO, a DMRS configuration may support up to eight orthogonal downlink DMRS ports per UE. For multiuser-MIMO, a DMRS configuration may support up to 4 orthogonal downlink DMRS ports per UE. A radio network may support (e.g., at least for CP-OFDM) a common DMRS structure for downlink and uplink, wherein a DMRS location, a DMRS pattern, and/or a scrambling sequence may be the same or different. The base station may transmit a downlink DMRS and a corresponding PDSCH using the same precoding matrix. The UE may use the one or more downlink DMRSs for coherent demodulation/channel estimation of the PDSCH.

In an example, a transmitter (e.g., a base station) may use a precoder matrices for a part of a transmission bandwidth. For example, the transmitter may use a first precoder matrix for a first bandwidth and a second precoder matrix for a second bandwidth. The first precoder matrix and the second precoder matrix may be different based on the first bandwidth being different from the second bandwidth. The UE may assume that a same precoding matrix is used across a set of PRBs. The set of PRBs may be denoted as a precoding resource block group (PRG),

A PDSCH may comprise one or more layers. The UE may assume that at least one symbol with DMRS is present on a layer of the one or more layers of the PDSCH. A higher layer may configure up to 3 DMRSs for the PDSCH.

Downlink PT-RS may be transmitted by a base station and used by a UE for phase-noise compensation. Whether a downlink PT-RS is present or not may depend on an RRC configuration. The presence and/or pattern of the downlink PT-RS may be configured on a UE-specific basis using a combination of RRC signaling and/or an association with one or more parameters employed for other purposes (e.g., modulation and coding scheme (MCS)), which may be indicated by DCI. When configured, a dynamic presence of a downlink PT-RS may be associated with one or more DCI parameters comprising at least MCS. An NR network may support a plurality of PT-RS densities defined in the time and/or frequency domains. When present, a frequency domain density may be associated with at least one configuration of a scheduled bandwidth. The UE may assume a same precoding for a DMRS port and a PT-RS port. A number of PT-RS ports may be fewer than a number of DMRS ports in a scheduled resource. Downlink PT-RS may be confined in the scheduled time/frequency duration for the UE. Downlink PT-RS may be transmitted on symbols to facilitate phase tracking at the receiver.

The UE may transmit an uplink DMRS to a base station for channel estimation. For example, the base station may use the uplink DMRS for coherent demodulation of one or more uplink physical channels. For example, the UE may transmit an uplink DMRS with a PUSCH and/or a PUCCH. The uplink DM-RS may span a range of frequencies that is similar to a range of frequencies associated with the corresponding physical channel. The base station may configure the UE with one or more uplink DMRS configurations. At least one DMRS configuration may support a front-loaded DMRS pattern. The front-loaded DMRS may be mapped over one or more OFDM symbols (e.g., one or two adjacent OFDM symbols). One or more uplink DMRSs may be configured to transmit at one or more symbols of a PUSCH and/or a PUCCH, The base station may semi-statically configure the UE with a number (e.g., maximum number) of front-loaded DMRS symbols for the PUSCH and/or the PUCCH, which the UE may use to schedule a single-symbol DMRS and/or a double-symbol DMRS. An NR network may support (e.g., for cyclic prefix orthogonal frequency division multiplexing (CP-OFDM)) a common DMRS structure for downlink and uplink, wherein a DMRS location, a DMRS pattern, and/or a scrambling sequence for the DMRS may be the same or different.

A PUSCH may comprise one or more layers, and the UE may transmit at least one symbol with DMRS present on a layer of the one or more layers of the PUSCH. In an example, a higher layer may configure up to three DMRSs for the PUSCH.

Uplink PT-RS (which may be used by a base station for phase tracking and/or phase-noise compensation) may or may not be present depending on an RRC configuration of the UE. The presence and/or pattern of uplink PT-RS may be configured on a UE-specific basis by a combination of RRC signaling and/or one or more parameters employed for other purposes (e.g., Modulation and Coding Scheme (MCS)), which may be indicated by DCI. When configured, a dynamic presence of uplink PT-RS may be associated with one or more DCI parameters comprising at least MCS. A radio network may support a plurality of uplink PT-RS densities defined in time/frequency domain. When present, a frequency domain density may be associated with at least one configuration of a scheduled bandwidth. The UE may assume a same precoding for a DMRS port and a PT-RS port. A number of PT-RS ports may be fewer than a number of DMRS ports in a scheduled resource. For example, uplink PT-RS may be confined in the scheduled time/frequency duration for the UE.

SRS may be transmitted by a UE to a base station for channel state estimation to support uplink channel dependent scheduling and/or link adaptation. SRS transmitted by the UE may allow a base station to estimate an uplink channel state at one or more frequencies. A scheduler at the base station may employ the estimated uplink channel state to assign one or more resource blocks for an uplink PUSCH transmission from the UE. The base station may semi-statically configure the UE with one or more SRS resource sets. For an SRS resource set, the base station may configure the UE with one or more SRS resources. An SRS resource set applicability may be configured by a higher layer (e.g., RRC) parameter. For example, when a higher layer parameter indicates beam management, an SRS resource in an SRS resource set of the one or more SRS resource sets (e.g., with the same/similar time domain behavior, periodic, aperiodic, and/or the like) may be transmitted at a time instant (e.g., simultaneously). The UE may transmit one or more SRS resources in SRS resource sets. An NR network may support aperiodic, periodic and/or semi-persistent SRS transmissions. The UE may transmit SRS resources based on one or more trigger types, wherein the one or more trigger types may comprise higher layer signaling (e.g., RRC) and/or one or more DCI formats. In an example, at least one DCI format may be employed for the UE to select at least one of one or more configured SRS resource sets. An SRS trigger type 0 may refer to an SRS triggered based on a higher layer signaling. An SRS trigger type 1 may refer to an SRS triggered based on one or more DCI formats. In an example, when PUSCH and SRS are transmitted in a same slot, the UE may be configured to transmit SRS after a transmission of a PUSCH and a corresponding uplink DMRS.

The base station may semi-statically configure the UE with one or more SRS configuration parameters indicating at least one of following: a SRS resource configuration identifier; a number of SRS ports; time domain behavior of an SRS resource configuration (e.g., an indication of periodic, semi-persistent, or aperiodic SRS); slot, mini-slot, and/or subframe level periodicity; offset for a periodic and/or an aperiodic SRS resource; a number of OFDM symbols in an SRS resource; a starting OFDM symbol of an SRS resource; an SRS bandwidth; a frequency hopping bandwidth; a cyclic shift; and/or an SRS sequence ID.

An antenna port is defined such that the channel over which a symbol on the antenna port is conveyed can be inferred from the channel over which another symbol on the same antenna port is conveyed. If a first symbol and a second symbol are transmitted on the same antenna port, the receiver may infer the channel (e.g., fading gain, multipath delay, and/or the like) for conveying the second symbol on the antenna port, from the channel for conveying the first symbol on the antenna port. A first antenna port and a second antenna port may be referred to as quasi co-located (QCLed) if one or more large-scale properties of the channel over which a first symbol on the first antenna port is conveyed may be inferred from the channel over which a second symbol on a second antenna port is conveyed. The one or more large-scale properties may comprise at least one of: a delay spread; a Doppler spread; a Doppler shift; an average gain; an average delay; and/or spatial Receiving (Rx) parameters.

Channels that use beamforming require beam management. Beam management may comprise beam measurement, beam selection, and beam indication, A beam may be associated with one or more reference signals. For example, a beam may be identified by one or more beamformed reference signals. The UE may perform downlink beam measurement based on downlink reference signals (e.g., a channel state information reference signal (CSI-RS)) and generate a beam measurement report. The UE may perform the downlink beam measurement procedure after an RRC connection is set up with a base station.

FIG. 11B illustrates an example of channel state information reference signals (CSI-RSs) that are mapped in the time and frequency domains. A square shown in FIG. 11B may span a resource block (RB) within a bandwidth of a cell. A base station may transmit one or more RRC messages comprising CSI-RS resource configuration parameters indicating one or more CSI-RSs. One or more of the following parameters may be configured by higher layer signaling (e.g., RRC and/or MAC signaling) for a CSI-RS resource configuration: a CSI-RS resource configuration identity, a number of CSI-RS ports, a CSI-RS configuration (e.g., symbol and resource element (RE) locations in a subframe), a CSI-RS subframe configuration (e.g., subframe location, offset, and periodicity in a radio frame), a CSI-RS power parameter, a CSI-RS sequence parameter, a code division multiplexing (CDM) type parameter, a frequency density, a transmission comb, quasi co-location (QCL) parameters (e.g., *QCL-scramblingidentity, crs-portscount, mbsfn-subframeconfiglist, csi-rs-configZPid, qcl-csi-rs-configNZPid*), and/or other radio resource parameters.

The three beams illustrated in FIG. 11B may be configured for a UE in a UE-specific configuration. Three beams are illustrated in FIG. 11B (beam #1, beam #2, and beam #3), more or fewer beams may be configured, Beam #1 may be allocated with CSI-RS 1101 that may be transmitted in one or more subcarriers in an RB of a first symbol. Beam #2 may be allocated with CSI-RS 1102 that may be transmitted in one or more subcarriers in an RB of a second symbol. Beam #3 may be allocated with CSI-RS 1103 that may be transmitted in one or more subcarriers in an RB of a third symbol. By using frequency division multiplexing (FDM), a base station may use other subcarriers in a same RB (for example, those that are not used to transmit CSI-RS 1101) to transmit another CSI-RS associated with a beam for another UE. By using time domain multiplexing (TDM), beams used for the UE may be configured such that beams for the UE use symbols from beams of other UEs.

CSI-RSs such as those illustrated in FIG. 11B (e.g., CSI-RS 1101, 1102, 1103) may be transmitted by the base station and used by the UE for one or more measurements. For example, the UE may measure a reference signal received power (RSRP) of configured CSI-RS resources. The base station may configure the UE with a reporting configuration and the UE may report the RSRP measurements to a network (for example, via one or more base stations) based on the reporting configuration. In an example, the base station may determine, based on the reported measurement results, one or more transmission configuration indication (TCI) states comprising a number of reference signals. In an example, the base station may indicate one or more TCI states to the UE (e.g., via RRC signaling, a MAC CE, and/or a DCI). The UE may receive a downlink transmission with a receive (Rx) beam determined based on the one or more TCI states. In an example, the UE may or may not have a capability of beam correspondence, If the UE has the capability of beam correspondence, the UE may determine a spatial domain filter of a transmit (Tx) beam based on a spatial domain filter of the corresponding Rx beam. If the UE does not have the capability of beam correspondence, the UE may perform an uplink beam selection procedure to determine the spatial domain filter of the Tx beam. The UE may perform the uplink beam selection procedure based on one or more sounding reference signal (SRS) resources configured to the UE by the base station. The base station may select and indicate uplink beams for the UE based on measurements of the one or more SRS resources transmitted by the UE.

In a beam management procedure, a UE may assess (e.g., measure) a channel quality of one or more beam pair links, a beam pair link comprising a transmitting beam transmitted by a base station and a receiving beam received by the UE. Based on the assessment, the UE may transmit a beam measurement report indicating one or more beam pair quality parameters comprising, e.g., one or more beam identifications (e.g., a beam index, a reference signal index, or the like), RSRP, a precoding matrix indicator (PMI), a channel quality indicator (CQI), and/or a rank indicator (RI),

FIG. 12A illustrates examples of three downlink beam management procedures: P1, P2, and P3. Procedure P1 may enable a UE measurement on transmit (Tx) beams of a transmission reception point (TRP) (or multiple TRPs), e.g., to support a selection of one or more base station Tx beams and/or UE Rx beams (shown as ovals in the top row and bottom row, respectively, of P1). Beamforming at a TRP may comprise a Tx beam sweep for a set of beams (shown, in the top rows of P1 and P2, as ovals rotated in a counterclockwise direction indicated by the dashed arrow). Beamforming at a UE may comprise an Rx beam sweep for a set of beams (shown, in the bottom rows of P1 and P3, as ovals rotated in a clockwise direction indicated by the dashed arrow). Procedure P2 may be used to enable a UE measurement on Tx beams of a TRP (shown, in the top row of P2, as ovals rotated in a counterclockwise direction indicated by the dashed arrow). The UE and/or the base station may perform procedure P2 using a smaller set of beams than is used in procedure P1, or using narrower beams than the beams used in procedure P1. This may be referred to as beam refinement. The UE may perform procedure P3 for Rx beam determination by using the same Tx beam at the base station and sweeping an Rx beam at the UE.

FIG. 12B illustrates examples of three uplink beam management procedures: U1, U2, and U3. Procedure U1 may be used to enable a base station to perform a measurement on Tx beams of a UE, e.g., to support a selection of one or more UE Tx beams and/or base station Rx beams (shown as ovals in the top row and bottom row, respectively, of U1). Beamforming at the UE may include, e.g., a Tx beam sweep from a set of beams (shown in the bottom rows of U1 and U3 as ovals rotated in a clockwise direction indicated by the dashed arrow). Beamforming at the base station may include, e.g., an Rx beam sweep from a set of beams (shown, in the top rows of U1 and U2, as ovals rotated in a counterclockwise direction indicated by the dashed arrow). Procedure U2 may be used to enable the base station to adjust its Rx beam when the UE uses a fixed Tx beam. The UE and/or the base station may perform procedure U2 using a smaller set of beams than is used in procedure P1, or using narrower beams than the beams used in procedure P1. This may be referred to as beam refinement. The UE may perform procedure U3 to adjust its Tx beam when the base station uses a fixed Rx beam.

A UE may initiate a beam failure recovery (BFR) procedure based on detecting a beam failure. The UE may transmit a BFR request (e.g., a preamble, a UCI, an SR, a MAC CE, and/or the like) based on the initiation of the BFR procedure. The UE may detect the beam failure based on a determination that a quality of beam pair link(s) of an associated control channel is unsatisfactory (e.g., having an error rate higher than an error rate threshold, a received signal power lower than a received signal power threshold, an expiration of a timer, and/or the like).

The UE may measure a quality of a beam pair link using one or more reference signals (RSs) comprising one or more SS/PBCH blocks, one or more CSI-RS resources, and/or one or more demodulation reference signals (DMRSs). A quality of the beam pair link may be based on one or more of a block error rate (BLER), an RSRP value, a signal to interference plus noise ratio (SINR) value, a reference signal received quality (RSRQ) value, and/or a CSI value measured on RS resources. The base station may indicate that an RS resource is quasi co-located (QCLed) with one or more DM-RSs of a channel (e.g., a control channel, a shared data channel, and/or the like). The RS resource and the one or more DMRSs of the channel may be QCLed when the channel characteristics (e.g., Doppler shift, Doppler spread, average delay, delay spread, spatial Rx parameter, fading, and/or the like) from a transmission via the RS resource to the UE are similar or the same as the channel characteristics from a transmission via the channel to the UE.

A network (e.g., a gNB and/or an ng-eNB of a network) and/or the UE may initiate a random access procedure. A UE in an RRC_IDLE state and/or an RRC_INACTIVE state may initiate the random access procedure to request a connection setup to a network. The UE may initiate the random access procedure from an RRC_CONNECTED state. The UE may initiate the random access procedure to request uplink resources (e.g., for uplink transmission of an SR when there is no PUCCH resource available) and/or acquire uplink timing (e.g., when uplink synchronization status is non-synchronized). The UE may initiate the random access procedure to request one or more system information blocks (SIBs) (e.g., other system information such as SIB2, SIB3, and/or the like). The UE may initiate the random access procedure for a beam failure recovery request. A network may initiate a random access procedure for a handover and/or for establishing time alignment for an SCell addition,

FIG. 13A illustrates a four-step contention-based random access procedure. Prior to initiation of the procedure, a base station may transmit a configuration message 1310 to the UE. The procedure illustrated in FIG. 13A comprises transmission of four messages: a Msg 1 1311, a Msg 2 1312, a Msg 3 1313, and a Msg 4 1314. The Msg 1 1311 may include and/or be referred to as a preamble (or a random access preamble). The Msg 2 1312 may include and/or be referred to as a random access response (RAR).

The configuration message 1310 may be transmitted, for example, using one or more RRC messages. The one or more RRC messages may indicate one or more random access channel (RACH) parameters to the UE. The one or more RACH parameters may comprise at least one of following: general parameters for one or more random access procedures (e.g., *RACH-configGeneral*); cell-specific parameters (e.g., *RACH-ConfigCommon*); and/or dedicated parameters (e.g., *RACH-configDedicated*). The base station may broadcast or multicast the one or more RRC messages to one or more UEs. The one or more RRC messages may be UE-specific (e.g., dedicated RRC messages transmitted to a UE in an RRC_CONNECTED state and/or in an RRC_INACTIVE state). The UE may determine, based on the one or more RACH parameters, a time-frequency resource and/or an uplink transmit power for transmission of the Msg 1 1311 and/or the Msg 3 1313. Based on the one or more RACH parameters, the UE may determine a reception timing and a downlink channel for receiving the Msg 2 1312 and the Msg 4 1314,

The one or more RACH parameters provided in the configuration message 1310 may indicate one or more Physical RACH (PRACH) occasions available for transmission of the Msg 1 1311. The one or more PRACH occasions may be predefined. The one or more RACH parameters may indicate one or more available sets of one or more PRACH occasions (e.g., *prach-ConfigIndex*). The one or more RACH parameters may indicate an association between (a) one or more PRACH occasions and (b) one or more reference signals. The one or more RACH parameters may indicate an association between (a) one or more preambles and (b) one or more reference signals. The one or more reference signals may be SS/PBCH blocks and/or CSI-RSs. For example, the one or more RACH parameters may indicate a number of SS/PBCH blocks mapped to a PRACH occasion and/or a number of preambles mapped to a SS/PBCH blocks.

The one or more RACH parameters provided in the configuration message 1310 may be used to determine an uplink transmit power of Msg 1 1311 and/or Msg 3 1313. For example, the one or more RACH parameters may indicate a reference power for a preamble transmission (e.g., a received target power and/or an initial power of the preamble transmission). There may be one or more power offsets indicated by the one or more RACH parameters. For example, the one or more RACH parameters may indicate: a power ramping step; a power offset between SSB and CSI-RS; a power offset between transmissions of the Msg 1 1311 and the Msg 3 1313; and/or a power offset value between preamble groups. The one or more RACH parameters may indicate one or more thresholds based on which the UE may determine at least one reference signal (e.g., an SSB and/or CSI-RS) and/or an uplink carrier (e.g., a normal uplink (NUL) carrier and/or a supplemental uplink (SUL) carrier).

The Msg 1 1311 may include one or more preamble transmissions (e.g., a preamble transmission and one or more preamble retransmissions). An RRC message may be used to configure one or more preamble groups (e.g., group A and/or group B). A preamble group may comprise one or more preambles. The UE may determine the preamble group based on a pathloss measurement and/or a size of the Msg 3 1313. The UE may measure an RSRP of one or more reference signals (e.g., SSBs and/or CSI-RSs) and determine at least one reference signal having an RSRP above an RSRP threshold (e.g., *rsrp-ThresholdSSB* and/or *rsrp-ThresholdCSI-RS*). The UE may select at least one preamble associated with the one or more reference signals and/or a selected preamble group, for example, if the association between the one or more preambles and the at least one reference signal is configured by an RRC message.

The UE may determine the preamble based on the one or more RACH parameters provided in the configuration message 1310. For example, the UE may determine the preamble based on a pathloss measurement, an RSRP measurement, and/or a size of the Msg 3 1313. As another example, the one or more RACH parameters may indicate: a preamble format; a maximum number of preamble transmissions; and/or one or more thresholds for determining one or more preamble groups (e.g., group A and group B). A base station may use the one or more RACH parameters to configure the UE with an association between one or more preambles and one or more reference signals (e.g., SSBs and/or CSI-RSs). If the association is configured, the UE may determine the preamble to include in Msg 1 1311 based on the association. The Msg 1 1311 may be transmitted to the base station via one or more PRACH occasions. The UE may use one or more reference signals (e.g., SSBs and/or CSI-RSs) for selection of the preamble and for determining of the PRACH occasion. One or more RACH parameters (e.g., *ra-ssb-OccasionMskindex* and/or *ra-OccasionList*) may indicate an association between the PRACH occasions and the one or more reference signals,

The UE may perform a preamble retransmission if no response is received following a preamble transmission. The UE may increase an uplink transmit power for the preamble retransmission. The UE may select an initial preamble transmit power based on a pathloss measurement and/or a target received preamble power configured by the network. The UE may determine to retransmit a preamble and may ramp up the uplink transmit power. The UE may receive one or more RACH parameters (e.g., *PREAMBLE_POWER_RAMPING_STEP*) indicating a ramping step for the preamble retransmission. The ramping step may be an amount of incremental increase in uplink transmit power for a retransmission. The UE may ramp up the uplink transmit power if the UE determines a reference signal (e.g., SSB and/or CSI-RS) that is the same as a previous preamble transmission. The UE may count a number of preamble transmissions and/or retransmissions (e.g., *PREAMBLE_TRANSMISSION_COUNTER*). The UE may determine that a random access procedure completed unsuccessfully, for example, if the number of preamble transmissions exceeds a threshold configured by the one or more RACH parameters (e.g., *preambleTransMax*).

The Msg 2 1312 received by the UE may include an RAR. In some scenarios, the Msg 2 1312 may include multiple RARs corresponding to multiple UEs. The Msg 2 1312 may be received after or in response to the transmitting of the Msg 1 1311. The Msg 2 1312 may be scheduled on the DL-SCH and indicated on a PDCCH using a random access RNTI (RA-RNTI). The Msg 2 1312 may indicate that the Msg 1 1311 was received by the base station. The Msg 2 1312 may include a time-alignment command that may be used by the UE to adjust the UE's transmission timing, a scheduling grant for transmission of the Msg 3 1313, and/or a Temporary Cell RNTI (TC-RNTI). After transmitting a preamble, the UE may start a time window (e.g., *ra-ResponseWindow*) to monitor a PDCCH for the Msg 2 1312. The UE may determine when to start the time window based on a PRACH occasion that the UE uses to transmit the preamble. For example, the UE may start the time window one or more symbols after a last symbol of the preamble (e.g., at a first PDCCH occasion from an end of a preamble transmission). The one or more symbols may be determined based on a numerology. The PDCCH may be in a common search space (e.g., a Type1-PDCCH common search space) configured by an RRC message. The UE may identify the RAR based on a Radio Network Temporary Identifier (RNTI). RNTIs may be used depending on one or more events initiating the random access procedure. The UE may use random access RNTI (RA-RNTI). The RA-RNTI may be associated with PRACH occasions in which the UE transmits a preamble. For example, the UE may determine the RA-RNTI based on: an OFDM symbol index; a slot index; a frequency domain index; and/or a UL carrier indicator of the PRACH occasions. An example of RA-RNTI may be as follows:

RA-RNTI= $1 + s_id + 14 \times t_id + 14 \times 80 \times f_id + 14 \times 80 \times 8 \times ul_carrier_id$, where s_id may be an index of a first OFDM symbol of the PRACH occasion (e.g., $0 \leq s_id < 14$), t_id may be an index of a first slot of the PRACH occasion in a system frame (e.g., $0 \leq t_id < 80$), f_id may be an index of the PRACH occasion in the frequency domain (e.g., $0 \leq f_id < 8$), and ul_carrier_id may be a UL carrier used for a preamble transmission (e.g., 0 for an NUL carrier, and 1 for an SUL carrier).

The UE may transmit the Msg 3 1313 in response to a successful reception of the Msg 2 1312 (e.g., using resources identified in the Msg 2 1312). The Msg 3 1313 may be used for contention resolution in, for example, the contention-based random access procedure illustrated in FIG. 13A. In some scenarios, a plurality of UEs may transmit a same preamble to a base station and the base station may provide an RAR that corresponds to a UE. Collisions may occur if the plurality of UEs interpret the RAR as corresponding to themselves. Contention resolution (e.g., using the Msg 3 1313 and the Msg 4 1314) may be used to increase the likelihood that the UE does not incorrectly use an identity of another the UE. To perform contention resolution, the UE may include a device identifier in the Msg 3 1313 (e.g., a C-RNTI if assigned, a TC-RNTI included in the Msg 2 1312, and/or any other suitable identifier).

The Msg 4 1314 may be received after or in response to the transmitting of the Msg 3 1313. If a C-RNTI was included in the Msg 3 1313, the base station will address the UE on the PDCCH using the C-RNTI. If the UE's unique C-RNTI is detected on the PDCCH, the random access procedure is determined to be successfully completed. If a TC-RNTI is included in the Msg 3 1313 (e.g., if the UE is in an RRC_IDLE state or not otherwise connected to the base station), Msg 4 1314 will be received using a DL-SCH associated with the TC-RNTI. If a MAC PDU is successfully decoded and a MAC PDU comprises the UE contention resolution identity MAC CE that matches or otherwise corresponds with the CCCH SDU sent (e.g., transmitted) in Msg 3 1313, the UE may determine that the contention resolution is successful and/or the UE may determine that the random access procedure is successfully completed,

The UE may be configured with a supplementary uplink (SUL) carrier and a normal uplink (NUL) carrier. An initial access (e.g., random access procedure) may be supported in an uplink carrier. For example, a base station may configure the UE with two separate RACH configurations: one for an SUL carrier and the other for an NUL carrier. For random access in a cell configured with an SUL carrier, the network may indicate which carrier to use (NUL or SUL). The UE may determine the SUL carrier, for example, if a measured quality of one or more reference signals is lower than a broadcast threshold. Uplink transmissions of the random access procedure (e.g., the Msg 1 1311 and/or the Msg 3 1313) may remain on the selected carrier. The UE may switch an uplink carrier during the random access procedure (e.g., between the Msg 1 1311 and the Msg 3 1313) in one or more cases. For example, the UE may determine and/or switch an uplink carrier for the Msg 1 1311 and/or the Msg 3 1313 based on a channel clear assessment (e.g., a listen-before-talk).

FIG. 13B illustrates a two-step contention-free random access procedure. Similar to the four-step contention-based random access procedure illustrated in FIG. 13A, a base station may, prior to initiation of the procedure, transmit a configuration message 1320 to the UE. The configuration message 1320 may be analogous in some respects to the configuration message 1310. The procedure illustrated in FIG. 13B comprises transmission of two messages: a Msg 1 1321 and a Msg 2 1322. The Msg 1 1321 and the Msg 2 1322 may be analogous in some respects to the Msg 1 1311 and a Msg 2 1312 illustrated in FIG. 13A, respectively. As will be understood from FIGS. 13A and 13B, the contention-free random access procedure may not include messages analogous to the Msg 3 1313 and/or the Msg 4 1314.

The contention-free random access procedure illustrated in FIG. 13B may be initiated for a beam failure recovery, other SI request, SCell addition, and/or handover. For example, a base station may indicate or assign to the UE the preamble to be used for the Msg 1 1321. The UE may receive, from the base station via PDCCH and/or RRC, an indication of a preamble (e.g., *ra-PreambleIndex*),

After transmitting a preamble, the UE may start a time window (e.g., *ra-ResponseWindow*) to monitor a PDCCH for the RAR. In the event of a beam failure recovery request, the base station may configure the UE with a separate time window and/or a separate PDCCH in a search space indicated by an RRC message (e.g., *recoverySearchSpaceId*). The UE may monitor for a PDCCH transmission addressed to a Cell RNTI (C-RNTI) on the search space. In the contention-free random access procedure illustrated in FIG. 13B, the UE may determine that a random access procedure successfully completes after or in response to transmission of Msg 1 1321 and reception of a corresponding Msg 2 1322. The UE may determine that a random access procedure successfully completes, for example, if a PDCCH transmission is addressed to a C-RNTI. The UE may determine that a random access procedure successfully completes, for example, if the UE receives an RAR comprising a preamble identifier corresponding to a preamble transmitted by the UE and/or the RAR comprises a MAC sub-PDU with the preamble identifier. The UE may determine the response as an indication of an acknowledgement for an SI request.

FIG. 13C illustrates another two-step random access procedure. Similar to the random access procedures illustrated in FIGS. 13A and 13B, a base station may, prior to initiation of the procedure, transmit a configuration message 1330 to the UE. The configuration message 1330 may be analogous in some respects to the configuration message 1310 and/or the configuration message 1320. The procedure illustrated in FIG. 13C comprises transmission of two messages: a Msg A 1331 and a Msg B 1332.

Msg A 1331 may be transmitted in an uplink transmission by the UE. Msg A 1331 may comprise one or more transmissions of a preamble 1341 and/or one or more transmissions of a transport block 1342. The transport block 1342 may comprise contents that are similar and/or equivalent to the contents of the Msg 3 1313 illustrated in FIG. 13A. The transport block 1342 may comprise UCI (e.g., an SR, a HARQ ACK/NACK, and/or the like). The UE may receive the Msg B 1332 after or in response to transmitting the Msg A 1331. The Msg B 1332 may comprise contents that are similar and/or equivalent to the contents of the Msg 2 1312 (e.g., an RAR) illustrated in FIGS. 13A and 13B and/or the Msg 4 1314 illustrated in FIG. 13A.

The UE may initiate the two-step random access procedure in FIG. 13C for licensed spectrum and/or unlicensed spectrum. The UE may determine, based on one or more factors, whether to initiate the two-step random access procedure. The one or more factors may be: a radio access technology in use (e.g., LTE, NR, and/or the like); whether the UE has valid TA or not; a cell size; the UE's RRC state; a type of spectrum (e.g., licensed vs. unlicensed); and/or any other suitable factors.

The UE may determine, based on two-step RACH parameters included in the configuration message 1330, a radio resource and/or an uplink transmit power for the preamble 1341 and/or the transport block 1342 included in the Msg A 1331. The RACH parameters may indicate a modulation and coding schemes (MCS), a time-frequency resource, and/or a power control for the preamble 1341 and/or the transport block 1342. A time-frequency resource for transmission of the preamble 1341 (e.g., a PRACH) and a time-frequency resource for transmission of the transport block 1342 (e.g., a PUSCH) may be multiplexed using FDM, TDM, and/or CDM. The RACH parameters may enable the UE to determine a reception timing and a downlink channel for monitoring for and/or receiving Msg B 1332.

The transport block 1342 may comprise data (e.g., delay-sensitive data), an identifier of the UE, security information, and/or device information (e.g., an International Mobile Subscriber Identity (IMSI)). The base station may transmit the Msg B 1332 as a response to the Msg A 1331. The Msg B 1332 may comprise at least one of following: a preamble identifier; a timing advance command; a power control command; an uplink grant (e.g., a radio resource assignment and/or an MCS); a UE identifier for contention resolution; and/or an RNTI (e.g., a C-RNTI or a TC-RNTI). The UE may determine that the two-step random access procedure is successfully completed if: a preamble identifier in the Msg B 1332 is matched to a preamble transmitted by the UE; and/or the identifier of the UE in Msg B 1332 is matched to the identifier of the UE in the Msg A 1331 (e.g., the transport block 1342).

A UE and a base station may exchange control signaling. The control signaling may be referred to as L1/L2 control signaling and may originate from the PHY layer (e.g., layer 1) and/or the MAC layer (e.g., layer 2). The control signaling may comprise downlink control signaling transmitted from the base station to the UE and/or uplink control signaling transmitted from the UE to the base station.

The downlink control signaling may comprise: a downlink scheduling assignment; an uplink scheduling grant indicating uplink radio resources and/or a transport format; a slot format information; a preemption indication; a power control command; and/or any other suitable signaling. The UE may receive the downlink control signaling in a payload transmitted by the base station on a physical downlink control channel (PDCCH). The payload transmitted on the PDCCH may be referred to as downlink control information (DCI). In some scenarios, the PDCCH may be a group common PDCCH (GC-PDCCH) that is common to a group of UEs.

A base station may attach one or more cyclic redundancy check (CRC) parity bits to a DCI in order to facilitate detection of transmission errors. When the DCI is intended for a UE (or a group of the UEs), the base station may scramble the CRC parity bits with an identifier of the UE (or an identifier of the group of the UEs). Scrambling the CRC parity bits with the identifier may comprise Modulo-2 addition (or an exclusive OR operation) of the identifier value and the CRC parity bits. The identifier may comprise a 16-bit value of a radio network temporary identifier (RNTI).

DCIs may be used for different purposes. A purpose may be indicated by the type of RNTI used to scramble the CRC parity bits. For example, a DCI having CRC parity bits scrambled with a paging RNTI (P-RNTI) may indicate paging information and/or a system information change notification. The P-RNTI may be predefined as "FFFE" in hexadecimal. A DCI having CRC parity bits scrambled with a system information RNTI (SI-RNTI) may indicate a broadcast transmission of the system information. The SI-RNTI may be predefined as "FFFF" in hexadecimal. A DCI having CRC parity bits scrambled with a random access RNTI (RA-RNTI) may indicate a random access response (RAR). A DCI having CRC parity bits scrambled with a cell RNTI (C-RNTI) may indicate a dynamically scheduled unicast transmission and/or a triggering of PDCCH-ordered random access. A DCI having CRC parity bits scrambled with a temporary cell RNTI (TC-RNTI) may indicate a contention resolution (e.g., a Msg 3 analogous to the Msg 3 1313 illustrated in FIG. 13A). Other RNTIs configured to the UE by a base station may comprise a Configured Scheduling RNTI (CS-RNTI), a Transmit Power Control-PUCCH RNTI (TPC-PUCCH-RNTI), a Transmit Power Control-PUSCH RNTI (TPC-PUSCH-RNTI), a Transmit Power Control-SRS RNTI (TPC-SRS-RNTI), an Interruption RNTI (INT-RNTI), a Slot Format Indication RNTI (SFI-RNTI), a Semi-Persistent CSI RNTI (SP-CSI-RNTI), a Modulation and Coding Scheme Cell RNTI (MCS-C-RNTI), and/or the like.

Depending on the purpose and/or content of a DCI, the base station may transmit the DCIs with one or more DCI formats. For example, DCI format 0_0 may be used for scheduling PUSCH in a cell. DCI format 0_0 may be a fallback DCI format (e.g., with compact DCI payloads). DCI format 0_1 may be used for scheduling PUSCH in a cell (e.g., with more DCI payloads than DCI format 0_0). DCI format 1_0 may be used for scheduling PDSCH in a cell. DCI format 1_0 may be a fallback DCI format (e.g., with compact DCI payloads). DCI format 1_1 may be used for scheduling PDSCH in a cell (e.g., with more DCI payloads than DCI format 1_0). DCI format 2_0 may be used for providing a slot format indication to a group of UEs. DCI format 2_1 may be used for notifying a group of UEs of a physical resource block and/or OFDM symbol where the UE may assume no transmission is intended to the UE. DCI format 2_2 may be used for transmission of a transmit power control (TPC) command for PUCCH or PUSCH. DCI format 2_3 may be used for transmission of a group of TPC commands for SRS transmissions by one or more UEs. DCI format(s) for new functions may be defined in future releases. DCI formats may have different DCI sizes, or may share the same DCI size.

After scrambling a DCI with a RNTI, the base station may process the DCI with channel coding (e.g., polar coding), rate matching, scrambling and/or QPSK modulation. A base station may map the coded and modulated DCI on resource elements used and/or configured for a PDCCH. Based on a payload size of the DCI and/or a coverage of the base station, the base station may transmit the DCI via a PDCCH occupying a number of contiguous control channel elements (CCEs). The number of the contiguous CCEs (referred to as aggregation level) may be 1, 2, 4, 8, 16, and/or any other suitable number. A CCE may comprise a number (e.g., 6) of resource-element groups (REGs). A REG may comprise a resource block in an OFDM symbol. The mapping of the coded and modulated DCI on the resource elements may be based on mapping of CCEs and REGs (e.g., CCE-to-REG mapping).

FIG. 14A illustrates an example of CORESET configurations for a bandwidth part. The base station may transmit a DCI via a PDCCH on one or more control resource sets (CORESETs). A CORESET may comprise a time-frequency resource in which the UE tries to decode a DCI using one or more search spaces. The base station may configure a CORESET in the time-frequency domain. In the example of FIG. 14A, a first CORESET 1401 and a second CORESET 1402 occur at the first symbol in a slot. The first CORESET 1401 overlaps with the second CORESET 1402 in the frequency domain. A third CORESET 1403 occurs at a third symbol in the slot. A fourth CORESET 1404 occurs at the seventh symbol in the slot. CORESETs may have a different number of resource blocks in frequency domain.

FIG. 14B illustrates an example of a CCE-to-REG mapping for DCI transmission on a CORESET and PDCCH processing. The CCE-to-REG mapping may be an interleaved mapping (e.g., for the purpose of providing frequency diversity) or a non-interleaved mapping (e.g., for the purposes of facilitating interference coordination and/or frequency-selective transmission of control channels). The base station may perform different or same CCE-to-REG mapping on different CORESETs. A CORESET may be associated with a CCE-to-REG mapping by RRC configuration. A CORESET may be configured with an antenna port quasi co-location (QCL) parameter. The antenna port QCL parameter may indicate QCL information of a demodulation reference signal (DMRS) for PDCCH reception in the CORESET.

The base station may transmit, to the UE, RRC messages comprising configuration parameters of one or more CORESETs and one or more search space sets. The configuration parameters may indicate an association between a search space set and a CORESET. A search space set may comprise a set of PDCCH candidates formed by CCEs at a given aggregation level. The configuration parameters may indicate: a number of PDCCH candidates to be monitored per aggregation level; a PDCCH monitoring periodicity and a PDCCH monitoring pattern; one or more DCI formats to be monitored by the UE; and/or whether a search space set is a common search space set or a UE-specific search space set. A set of CCEs in the common search space set may be predefined and known to the UE. A set of CCEs in the UE-specific search space set may be configured based on the UE's identity (e.g., C-RNTI),

As shown in FIG. 14B, the UE may determine a time-frequency resource for a CORESET based on RRC messages. The UE may determine a CCE-to-REG mapping (e.g., interleaved or non-interleaved, and/or mapping parameters) for the CORESET based on configuration parameters of the CORESET. The UE may determine a number (e.g., at most 10) of search space sets configured on the CORESET based on the RRC messages. The UE may monitor a set of PDCCH candidates according to configuration parameters of a search space set. The UE may monitor a set of PDCCH candidates in one or more CORESETs for detecting one or more DCIs. Monitoring may comprise decoding one or more PDCCH candidates of the set of the PDCCH candidates according to the monitored DCI formats. Monitoring may comprise decoding a DCI content of one or more PDCCH candidates with possible (or configured) PDCCH locations, possible (or configured) PDCCH formats (e.g., number of CCEs, number of PDCCH candidates in common search spaces, and/or number of PDCCH candidates in the UE-specific search spaces) and possible (or configured) DCI formats. The decoding may be referred to as blind decoding. The UE may determine a DCI as valid for the UE, in response to CRC checking (e.g., scrambled bits for CRC parity bits of the DCI matching a RNTI value). The UE may process information contained in the DCI (e.g., a scheduling assignment, an uplink grant, power control, a slot format indication, a downlink preemption, and/or the like).

The UE may transmit uplink control signaling (e.g., uplink control information (UCI)) to a base station. The uplink control signaling may comprise hybrid automatic repeat request (HARQ) acknowledgements for received DL-SCH transport blocks. The UE may transmit the HARQ acknowledgements after receiving a DL-SCH transport block. Uplink control signaling may comprise channel state information (CSI) indicating channel quality of a physical downlink channel. The UE may transmit the CSI to the base station. The base station, based on the received CSI, may determine transmission format parameters (e.g., comprising multi-antenna and beamforming schemes) for a downlink transmission. Uplink control signaling may comprise scheduling requests (SR). The UE may transmit an SR indicating that uplink data is available for transmission to the base station. The UE may transmit a UCI (e.g., HARQ acknowledgements (HARQ-ACK), CSI report, SR, and the like) via a physical uplink control channel (PUCCH) or a physical uplink shared channel (PUSCH). The UE may transmit the uplink control signaling via a PUCCH using one of several PUCCH formats.

There may be five PUCCH formats and the UE may determine a PUCCH format based on a size of the UCI (e.g., a number of uplink symbols of UCI transmission and a number of UCI bits). PUCCH format 0 may have a length of one or two OFDM symbols and may include two or fewer bits. The UE may transmit UCI in a PUCCH resource using PUCCH format 0 if the transmission is over one or two symbols and the number of HARQ-ACK information bits with positive or negative SR (HARQ-ACK/SR bits) is one or two. PUCCH format 1 may occupy a number between four and fourteen OFDM symbols and may include two or fewer bits. The UE may use PUCCH format 1 if the transmission is four or more symbols and the number of HARQ-ACK/SR bits is one or two. PUCCH format 2 may occupy one or two OFDM symbols and may include more than two bits. The UE may use PUCCH format 2 if the transmission is over one or two symbols and the number of UCI bits is two or more. PUCCH format 3 may occupy a number between four and fourteen OFDM symbols and may include more than two bits. The UE may use PUCCH format 3 if the transmission is four or more symbols, the number of UCI bits is two or more and PUCCH resource does not include an orthogonal cover code. PUCCH format 4 may occupy a number between four and fourteen OFDM symbols and may include more than two bits. The UE may use PUCCH format 4 if the transmission is four or more symbols, the number of UCI bits is two or more and the PUCCH resource includes an orthogonal cover code.

The base station may transmit configuration parameters to the UE for a plurality of PUCCH resource sets using, for example, an RRC message. The plurality of PUCCH resource sets (e.g., up to four sets) may be configured on an uplink BWP of a cell. A PUCCH resource set may be configured with a PUCCH resource set index, a plurality of PUCCH resources with a PUCCH resource being identified by a PUCCH resource identifier (e.g., *pucch-Resourceid*), and/or a number (e.g. a maximum number) of UCI information bits the UE may transmit using one of the plurality of PUCCH resources in the PUCCH resource set. When configured with a plurality of PUCCH resource sets, the UE may select one of the plurality of PUCCH resource sets based on a total bit length of the UCI information bits (e.g., HARQ-ACK, SR, and/or CSI). If the total bit length of UCI information bits is two or fewer, the UE may select a first PUCCH resource set having a PUCCH resource set index equal to "0". If the total bit length of UCI information bits is greater than two and less than or equal to a first configured value, the UE may select a second PUCCH resource set having a PUCCH resource set index equal to "1". If the total bit length of UCI information bits is greater than the first configured value and less than or equal to a second configured value, the UE may select a third PUCCH resource set having a PUCCH resource set index equal to "2". If the total bit length of UCI information bits is greater than the second configured value and less than or equal to a third value (e.g., 1406), the UE may select a fourth PUCCH resource set having a PUCCH resource set index equal to "3".

After determining a PUCCH resource set from a plurality of PUCCH resource sets, the UE may determine a PUCCH resource from the PUCCH resource set for UCI (HARQ-ACK, CSI, and/or SR) transmission. The UE may determine the PUCCH resource based on a PUCCH resource indicator in a DCI (e.g., with a DCI format 1_0 or DCI for 1_1) received on a PDCCH. A three-bit PUCCH resource indicator in the DCI may indicate one of eight PUCCH resources in the PUCCH resource set. Based on the PUCCH resource indicator, the UE may transmit the UCI (HARQ-ACK, CSI and/or SR) using a PUCCH resource indicated by the PUCCH resource indicator in the DCI.

FIG. 15 illustrates an example of a wireless device 1502 in communication with a base station 1504 in accordance with embodiments of the present disclosure. The wireless device 1502 and base station 1504 may be part of a mobile communication network, such as the mobile communication network 100 illustrated in FIG. 1A, the mobile communication network 150 illustrated in FIG. 1B, or any other communication network. Only one wireless device 1502 and one base station 1504 are illustrated in FIG. 15, but it will be understood that a mobile communication network may include more than one UE and/or more than one base station, with the same or similar configuration as those shown in FIG. 15.

The base station 1504 may connect the wireless device 1502 to a core network (not shown) through radio communications over the air interface (or radio interface) 1506. The communication direction from the base station 1504 to the wireless device 1502 over the air interface 1506 is known as the downlink, and the communication direction from the wireless device 1502 to the base station 1504 over the air interface is known as the uplink. Downlink transmissions may be separated from uplink transmissions using FDD, TDD, and/or some combination of the two duplexing techniques.

In the downlink, data to be sent to the wireless device 1502 from the base station 1504 may be provided to the processing system 1508 of the base station 1504. The data may be provided to the processing system 1508 by, for example, a core network. In the uplink, data to be sent to the base station 1504 from the wireless device 1502 may be provided to the processing system 1518 of the wireless device 1502. The processing system 1508 and the processing system 1518 may implement layer 3 and layer 2 OSI functionality to process the data for transmission. Layer 2 may include an SDAP layer, a PDCP layer, an RLC layer, and a MAC layer, for example, with respect to FIG. 2A, FIG. 2B, FIG. 3, and FIG. 4A. Layer 3 may include an RRC layer as with respect to FIG. 2B.

After being processed by processing system 1508, the data to be sent to the wireless device 1502 may be provided to a transmission processing system 1510 of base station 1504. Similarly, after being processed by the processing system 1518, the data to be sent to base station 1504 may be provided to a transmission processing system 1520 of the wireless device 1502. The transmission processing system 1510 and the transmission processing system 1520 may implement layer 1 OSI functionality. Layer 1 may include a PHY layer with respect to FIG. 2A, FIG. 2B, FIG. 3, and FIG. 4A. For transmit processing, the PHY layer may perform, for example, forward error correction coding of transport channels, interleaving, rate matching, mapping of transport channels to physical channels, modulation of physical channel, multiple-input multiple-output (MIMO) or multi-antenna processing, and/or the like.

At the base station 1504, a reception processing system 1512 may receive the uplink transmission from the wireless device 1502. At the wireless device 1502, a reception processing system 1522 may receive the downlink transmission from base station 1504. The reception processing system 1512 and the reception processing system 1522 may implement layer 1 OSI functionality. Layer 1 may include a PHY layer with respect to FIG. 2A, FIG. 2B, FIG. 3, and FIG. 4A. For receive processing, the PHY layer may perform, for example, error detection, forward error correction decoding, deinterleaving, demapping of transport channels to physical channels, demodulation of physical channels, MIMO or multi-antenna processing, and/or the like.

As shown in FIG. 15, a wireless device 1502 and the base station 1504 may include multiple antennas. The multiple antennas may be used to perform one or more MIMO or multi-antenna techniques, such as spatial multiplexing (e.g., single-user MIMO or multi-user MIMO), transmit/receive diversity, and/or beamforming. In other examples, the wireless device 1502 and/or the base station 1504 may have a single antenna.

The processing system 1508 and the processing system 1518 may be associated with a memory 1514 and a memory 1524, respectively. Memory 1514 and memory 1524 (e.g., one or more non-transitory computer readable mediums) may store computer program instructions or code that may be executed by the processing system 1508 and/or the processing system 1518 to carry out one or more of the functionalities discussed in the present application. Although not shown in FIG. 15, the transmission processing system 1510, the transmission processing system 1520, the reception processing system 1512, and/or the reception processing system 1522 may be coupled to a memory (e.g., one or more non-transitory computer readable mediums) storing computer program instructions or code that may be executed to carry out one or more of their respective functionalities,

The processing system 1508 and/or the processing system 1518 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. The processing system 1508 and/or the processing system 1518 may perform at least one of signal coding/processing, data processing, power control, input/output processing, and/or any other functionality that may enable the wireless device 1502 and the base station 1504 to operate in a wireless environment.

The processing system 1508 and/or the processing system 1518 may be connected to one or more peripherals 1516 and one or more peripherals 1526, respectively. The one or more peripherals 1516 and the one or more peripherals 1526 may include software and/or hardware that provide features and/or functionalities, for example, a speaker, a microphone, a keypad, a display, a touchpad, a power source, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, and/or the like). The processing system 1508 and/or the processing system 1518 may receive user input data from and/or provide user output data to the one or more peripherals 1516 and/or the one or more peripherals 1526. The processing system 1518 in the wireless device 1502 may receive power from a power source and/or may be configured to distribute the power to the other components in the wireless device 1502. The power source may comprise one or more sources of power, for example, a battery, a solar cell, a fuel cell, or any combination thereof. The processing system 1508 and/or the processing system 1518 may be connected to a GPS chipset 1517 and a GPS chipset 1527, respectively. The GPS chipset 1517 and the GPS chipset 1527 may be configured to provide geographic location information of the wireless device 1502 and the base station 1504, respectively,

FIG. 16A illustrates an example structure for uplink transmission. A baseband signal representing a physical uplink shared channel may perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements; generation of complex-valued time-domain Single Carrier-Frequency Division Multiple Access (SC-FDMA) or CP-OFDM signal for an antenna port; and/or the like. In an example, when transform precoding is enabled, a SC-FDMA signal for uplink transmission may be generated. In an example, when transform precoding is not enabled, a CP-OFDM signal for uplink transmission may be generated by FIG. 16A. These functions are illustrated as examples and it is anticipated that other mechanisms may be implemented in various embodiments,

FIG. 16B illustrates an example structure for modulation and up-conversion of a baseband signal to a carrier frequency. The baseband signal may be a complex-valued SC-FDMA or CP-OFDM baseband signal for an antenna port and/or a complex-valued Physical Random Access Channel (PRACH) baseband signal. Filtering may be employed prior to transmission.

FIG. 16C illustrates an example structure for downlink transmissions. A baseband signal representing a physical downlink channel may perform one or more functions. The one or more functions may comprise: scrambling of coded bits in a codeword to be transmitted on a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements; generation of complex-valued time-domain OFDM signal for an antenna port; and/or the like. These functions are illustrated as examples and it is anticipated that other mechanisms may be implemented in various embodiments,

FIG. 16D illustrates another example structure for modulation and up-conversion of a baseband signal to a carrier frequency. The baseband signal may be a complex-valued OFDM baseband signal for an antenna port. Filtering may be employed prior to transmission.

A wireless device may receive from a base station one or more messages (e.g., RRC messages) comprising configuration parameters of a plurality of cells (e.g., primary cell, secondary cell). The wireless device may communicate with at least one base station (e.g., two or more base stations in dual connectivity) via the plurality of cells. The one or more messages (e.g., as a part of the configuration parameters) may comprise parameters of physical, MAC, RLC, PCDP, SDAP. and RRC layers for configuring the wireless device. For example, the configuration parameters may comprise parameters for configuring physical and MAC layer channels, bearers, etc. For example, the configuration parameters may comprise parameters indicating values of timers for physical, MAC, RLC, PCDP, SDAP. RRC layers, and/or communication channels.

A timer may begin running once it is started and continue running until it is stopped or until it expires. A timer may be started if it is not running or restarted if it is running. A timer may be associated with a value (e.g., the timer may be started or restarted from a value or may be started from zero and expire once it reaches the value). The duration of a timer may not be updated until the timer is stopped or expires (e.g., due to BWP switching). A timer may be used to measure a time period/window for a process. When the specification refers to an implementation and procedure related to one or more timers, it will be understood that there are multiple ways to implement the one or more timers. For example, it will be understood that one or more of the multiple ways to implement a timer may be used to measure a time period/window for the procedure. For example, a random access response window timer may be used for measuring a window of time for receiving a random access response. In an example, instead of starting and expiry (or expiration) of a random access response window timer, the time difference between two time stamps may be used. When a timer is restarted, a process for measurement of time window may be restarted. Other example implementations may be provided to restart a measurement of a time window.

A base station may transmit one or more MAC PDUs to a wireless device. In an example, a MAC PDU may be a bit string that is byte aligned (e.g., aligned to a multiple of eight bits) in length. In an example, bit strings may be represented by tables in which the most significant bit is the leftmost bit of the first line of the table, and the least significant bit is the rightmost bit on the last line of the table. More generally, the bit string may be read from left to right and then in the reading order of the lines. In an example, the bit order of a parameter field within a MAC PDU is represented with the first and most significant bit in the leftmost bit and the last and least significant bit in the rightmost bit.

In an example, a MAC SDU may be a bit string that is byte aligned (e.g., aligned to a multiple of eight bits) in length. In an example, a MAC SDU may be included in a MAC PDU from the first bit onward. A MAC CE may be a bit string that is byte aligned (e.g., aligned to a multiple of eight bits) in length. A MAC subheader may be a bit string that is byte aligned (e.g., aligned to a multiple of eight bits) in length. In an example, a MAC subheader may be placed immediately in front of a corresponding MAC SDU, MAC CE, or padding. A MAC entity may ignore the value of reserved bits in a DL MAC PDU.

In an example, a MAC PDU may comprise one or more MAC subPDUs. A MAC subPDU of the one or more MAC subPDUs may comprise: a MAC subheader only (including padding); a MAC subheader and a MAC SDU; a MAC subheader and a MAC CE; a MAC subheader and padding, or a combination thereof. The MAC SDU may be of variable size. A MAC subheader may correspond to a MAC SDU, a MAC CE, or padding.

In an example, when a MAC subheader corresponds to a MAC SDU, a variable-sized MAC CE, or padding, the MAC subheader may comprise: an R field with a one-bit length; an F field with a one-bit length; an LCID field with a multi-bit length; an L field with a multi-bit length, or a combination thereof.

FIG. 17A shows an example of a MAC subheader with an R field, an F field, an LCID field, and an L field. In the example MAC subheader of FIG. 17A, the LCID field may be six bits in length, and the L field may be eight bits in length. FIG. 17B shows an example of a MAC subheader with an R field, an F field, an LCID field, and an L field. In the example MAC subheader shown in FIG. 17B, the LCID field may be six bits in length, and the L field may be sixteen bits in length. When a MAC subheader corresponds to a fixed sized MAC CE or padding, the MAC subheader may comprise: an R field with a two-bit length and an LCID field with a multi-bit length. FIG. 17C shows an example of a MAC subheader with an R field and an LCID field. In the example MAC subheader shown in FIG. 17C, the LCID field may be six bits in length, and the R field may be two bits in length.

FIG. 18A shows an example of a DL MAC PDU. Multiple MAC CEs, such as MAC CE 1 and 2, may be placed together. A MAC subPDU, comprising a MAC CE, may be placed before: a MAC subPDU comprising a MAC SDU, or a MAC subPDU comprising padding. FIG. 18B shows an example of a UL MAC PDU. Multiple MAC CEs, such as MAC CE 1 and 2, may be placed together. In an embodiment, a MAC subPDU comprising a MAC CE may be placed after all MAC subPDUs comprising a MAC SDU. In addition, the MAC subPDU may be placed before a MAC subPDU comprising padding.

In an example, a MAC entity of a base station may transmit one or more MAC CEs to a MAC entity of a wireless device. FIG. 19 shows an example of multiple LCIDs that may be associated with the one or more MAC CEs. The one or more MAC CEs comprise at least one of: a SP ZP CSI-RS Resource Set Activation/Deactivation MAC CE, a PUCCH spatial relation Activation/Deactivation MAC CE, a SP SRS Activation/Deactivation MAC CE, a SP CSI reporting on PUCCH Activation/Deactivation MAC CE, a TCI State Indication for UE-specific PDCCH MAC CE, a TCI State Indication for UE-specific PDSCH MAC CE, an Aperiodic CSI Trigger State Subselection MAC CE, a SP CSI-RS/CSI-IM Resource Set Activation/Deactivation MAC CE, a wireless device contention resolution identity MAC CE, a timing advance command MAC CE, a DRX command MAC CE, a Long DRX command MAC CE, an SCell activation/deactivation MAC CE (1 Octet), an SCell activation/deactivation MAC CE (4 Octet), and/or a duplication activation/deactivation MAC CE. In an example, a MAC CE, such as a MAC CE transmitted by a MAC entity of a base station to a MAC entity of a wireless device, may have an LCID in the MAC subheader corresponding to the MAC CE. Different MAC CE may have different LCID in the MAC subheader corresponding to the MAC CE. For example, an LCID given by 111011 in a MAC subheader may indicate that a MAC CE associated with the MAC subheader is a long DRX command MAC CE.

In an example, the MAC entity of the wireless device may transmit to the MAC entity of the base station one or more MAC CEs. FIG. 20 shows an example of the one or more MAC CEs. The one or more MAC CEs may comprise at least one of: a short buffer status report (BSR) MAC CE, a beam failure recovery (BFR) MAC CE, a truncated BFR MAC CE, a truncated enhanced BFR MAC CE, a long BSR MAC CE, a C-RNTI MAC CE, a configured grant confirmation MAC CE, a single entry PHR MAC CE, a multiple entry PHR MAC CE, a short truncated BSR, and/or a long truncated BSR etc. In an example, a MAC CE may have an LCID in the MAC subheader corresponding to the MAC CE. Different MAC CE may have different LCID in the MAC subheader corresponding to the MAC CE. For example, an LCID given by 43 in a MAC subheader may indicate that a MAC CE associated with the MAC subheader is a truncated enhanced BFR MAC CE.

In carrier aggregation (CA), two or more component carriers (CCs) may be aggregated. A wireless device may simultaneously receive or transmit on one or more CCs, depending on capabilities of the wireless device, using the technique of CA. In an embodiment, a wireless device may support CA for contiguous CCs and/or for non-contiguous CCs. CCs may be organized into cells. For example, CCs may be organized into one primary cell (PCell) and one or more secondary cells (SCells). When configured with CA, a wireless device may have one RRC connection with a network. During an RRC connection establishment/re-establishment/handover, a cell providing NAS mobility information may be a serving cell. During an RRC connection re-establishment/handover procedure, a cell providing a security input may be a serving cell. In an example, the serving cell may denote a PCell. In an example, a base station may transmit, to a wireless device, one or more messages comprising configuration parameters of a plurality of one or more SCells, depending on capabilities of the wireless device.

When configured with CA, a base station and/or a wireless device may employ an activation/deactivation mechanism of an SCell to improve battery or power consumption of the wireless device. When a wireless device is configured with one or more SCells, a base station may activate or deactivate at least one of the one or more SCells. Upon configuration of an SCell, the SCell may be deactivated unless an SCell state associated with the SCell is set to "activated" or "dormant".

A wireless device may activate/deactivate an SCell in response to receiving an SCell Activation/Deactivation MAC CE (e.g., as shown in FIG. 21A and/or FIG. 21B which will be described later in this specification). In an example, a base station may transmit, to a wireless device, one or more messages comprising an SCell timer (e.g., *sCellDeactivationTimer)*. In an example, a wireless device may deactivate an SCell in response to an expiry of the SCell timer.

When a wireless device receives an SCell Activation/Deactivation MAC CE activating an SCell, the wireless device may activate the SCell. In response to the activating the SCell, the wireless device may perform operations comprising SRS transmissions on the SCell; CQI/PMI/RI/CRI reporting for the SCell; PDCCH monitoring on the SCell; PDCCH monitoring for the SCell; and/or PUCCH transmissions on the SCell. In response to the activating the SCell, the wireless device may start or restart a first SCell timer (e.g., *sCellDeactivationTimer*) associated with the SCell. The wireless device may start or restart the first SCell timer in the slot when the SCell Activation/Deactivation MAC CE activating the SCell has been received. In an example, in response to the activating the SCell, the wireless device may (re-)initialize one or more suspended configured uplink grants of a configured grant Type 1 associated with the SCell according to a stored configuration. In an example, in response to activating the SCell, the wireless device may trigger PHR.

When a wireless device receives an SCell Activation/Deactivation MAC CE deactivating an activated SCell, the wireless device may deactivate the activated SCell. In an example, when a first SCell timer (e.g., *sCellDeactivationTimer*) associated with an activated SCell expires, the wireless device may deactivate the activated SCell. In response to the deactivating the activated SCell, the wireless device may stop the first SCell timer associated with the activated SCell. In an example, in response to the deactivating the activated SCell, the wireless device may clear one or more configured downlink assignments and/or one or more configured uplink grants of a configured uplink grant Type 2 associated with the activated SCell. In an example, in response to the deactivating the activated SCell, the wireless device may: suspend one or more configured uplink grants of a configured uplink grant Type 1 associated with the activated SCell; and/or flush HARQ buffers associated with the activated SCell.

When an SCell is deactivated, a wireless device may not perform operations comprising: transmitting SRS on the SCell; reporting CQI/PMI/RI/CRI for the SCell; transmitting on UL-SCH on the SCell; transmitting on RACH on the SCell; monitoring at least one first PDCCH on the SCell; monitoring at least one second PDCCH for the SCell; and/or transmitting a PUCCH on the SCell. When at least one first PDCCH on an activated SCell indicates an uplink grant or a downlink assignment, a wireless device may restart a first SCell timer (e.g., *sCellDeactivationTimer)* associated with the activated SCell. In an example, when at least one second PDCCH on a serving cell (e.g., a PCell or an SCell configured with PUCCH, i.e., PUCCH SCell) scheduling the activated SCell indicates an uplink grant or a downlink assignment for the activated SCell, a wireless device may restart the first SCell timer (e.g., *sCellDeactivationTimer*) associated with the activated SCell. In an example, when an SCell is deactivated, if there is an ongoing random access procedure on the SCell, a wireless device may abort the ongoing random access procedure on the SCell.

FIG. 21A shows an example of an SCell Activation/Deactivation MAC CE of one octet. A first MAC PDU subheader with a first LCID (e.g., '111010' as shown in FIG. 19) may identify the SCell Activation/Deactivation MAC CE of one octet. The SCell Activation/Deactivation MAC CE of one octet may have a fixed size. The SCell Activation/Deactivation MAC CE of one octet may comprise a single octet. The single octet may comprise a first number of C-fields (e.g., seven) and a second number of R-fields (e.g., one).

FIG. 21B shows an example of an SCell Activation/Deactivation MAC CE of four octets. A second MAC PDU subheader with a second LCID (e.g., '111001' as shown in FIG. 19) may identify the SCell Activation/Deactivation MAC CE of four octets. The SCell Activation/Deactivation MAC CE of four octets may have a fixed size. The SCell Activation/Deactivation MAC CE of four octets may comprise four octets. The four octets may comprise a third number of C-fields (e.g., 31) and a fourth number of R-fields (e.g., 1).

In FIG. 21A and/or FIG. 21B, a $C_i$ field may indicate an activation/deactivation status of an SCell with an SCell index i if an SCell with SCell index i is configured. In an example, when the $C_i$ field is set to one, an SCell with an SCell index i may be activated. In an example, when the $C_i$ field is set to zero, an SCell with an SCell index i may be deactivated. In an example, if there is no SCell configured with SCell index i, the wireless device may ignore the $C_i$ field. In FIG. 21A and FIG. 21B, an R field may indicate a reserved bit. The R field may be set to zero.

A base station may configure a wireless device with uplink (UL) bandwidth parts (BWPs) and downlink (DL) BWPs to enable bandwidth adaptation (BA) on a PCell. If carrier aggregation is configured, the base station may further configure the wireless device with at least DL BWP(s) (i.e., there may be no UL BWPs in the UL) to enable BA on an SCell. For the PCell, an initial active BWP may be a first BWP used for initial access. For the SCell, a first active BWP may be a second BWP configured for the wireless device to operate on the SCell upon the SCell being activated. In paired spectrum (e.g., FDD), a base station and/or a wireless device may independently switch a DL BWP and an UL BWP. In unpaired spectrum (e.g., TDD), a base station and/or a wireless device may simultaneously switch a DL BWP and an UL BWP.

In an example, a base station and/or a wireless device may switch a BWP between configured BWPs by means of a DCI or a BWP inactivity timer. When the BWP inactivity timer is configured for a serving cell, the base station and/or the wireless device may switch an active BWP to a default BWP in response to an expiry of the BWP inactivity timer associated with the serving cell. The default BWP may be configured by the network. In an example, for FDD systems, when configured with BA, one UL BWP for each uplink carrier and one DL BWP may be active at a time in an active serving cell. In an example, for TDD systems, one DL/UL BWP pair may be active at a time in an active serving cell. Operating on the one UL BWP and the one DL BWP (or the one DL/UL pair) may improve wireless device battery consumption. BWPs other than the one active UL BWP and the one active DL BWP that the wireless device may work on may be deactivated. On deactivated BWPs, the wireless device may: not monitor PDCCH; and/or not transmit on PUCCH, PRACH, and UL-SCH,

In an example, a serving cell may be configured with at most a first number (e.g., four) of BWPs. In an example, for an activated serving cell, there may be one active BWP at any point in time. In an example, a BWP switching for a serving cell may be used to activate an inactive BWP and deactivate an active BWP at a time. In an example, the BWP switching may be controlled by a PDCCH indicating a downlink assignment or an uplink grant. In an example, the BWP switching may be controlled by a BWP inactivity timer (e.g., *bwp-InactivityTimer*). In an example, the BWP switching may be controlled by a MAC entity in response to initiating a Random Access procedure. Upon addition of an SpCell or activation of an SCell, one BWP may be initially active without receiving a PDCCH indicating a downlink assignment or an uplink grant. The active BWP for a serving cell may be indicated by RRC and/or PDCCH. In an example, for unpaired spectrum, a DL BWP may be paired with a UL BWP, and BWP switching may be common for both UL and DL.

FIG. 22 shows an example of BWP switching on a cell (e.g., PCell or SCell). In an example, a wireless device may receive, from a base station, at least one RRC message comprising parameters of a cell and one or more BWPs associated with the cell. The RRC message may comprise: RRC connection reconfiguration message (e.g., *RRCReconfiguration*); RRC connection reestablishment message (e.g., *RRCReestablishment*); and/or RRC connection setup message (e.g., *RRCSetup*). Among the one or more BWPs, at least one BWP may be configured as the first active BWP (e.g., BWP 1), one BWP as the default BWP (e.g., BWP 0). The wireless device may receive a command (e.g., RRC message, MAC CE or DCI) to activate the cell at an nth slot. In case the cell is a PCell, the wireless device may not receive the command activating the cell, for example, the wireless device may activate the PCell once the wireless device receives RRC message comprising configuration parameters of the PCell. The wireless device may start monitoring a PDCCH on BWP 1 in response to activating the cell.

In an example, the wireless device may start (or restart) a BWP inactivity timer (e.g., *bwp-InactivityTimer*) at an $m^{th}$ slot in response to receiving a DCI indicating DL assignment on BWP 1. The wireless device may switch back to the default BWP (e.g., BWP 0) as an active BWP when the BWP inactivity timer expires, at $s^{th}$ slot. The wireless device may deactivate the cell and/or stop the BWP inactivity timer when the *sCellDeactivationTimer* expires (e.g., if the cell is a SCell). In response to the cell being a PCell, the wireless device may not deactivate the cell and may not apply the *sCellDeactivationTimer* on the PCell.

In an example, a MAC entity may apply normal operations on an active BWP for an activated serving cell configured with a BWP comprising: transmitting on UL-SCH; transmitting on RACH; monitoring a PDCCH; transmitting PUCCH; receiving DL-SCH; and/or (re-) initializing any suspended configured uplink grants of configured grant Type 1 according to a stored configuration, if any.

In an example, on an inactive BWP for each activated serving cell configured with a BWP, a MAC entity may: not transmit on UL-SCH; not transmit on RACH; not monitor a PDCCH; not transmit PUCCH; not transmit SRS, not receive DL-SCH; clear any configured downlink assignment and configured uplink grant of configured grant Type 2; and/or suspend any configured uplink grant of configured Type 1.

In an example, if a MAC entity receives a PDCCH for a BWP switching of a serving cell while a Random Access procedure associated with this serving cell is not ongoing, a wireless device may perform the BWP switching to a BWP indicated by the PDCCH. In an example, if a bandwidth part indicator field is configured in DCI format 1_1, the bandwidth part indicator field value may indicate the active DL BWP, from the configured DL BWP set, for DL receptions. In an example, if a bandwidth part indicator field is configured in DCI format 0_1, the bandwidth part indicator field value may indicate the active UL BWP, from the configured UL BWP set, for UL transmissions.

In an example, for a primary cell, a wireless device may be provided by a higher layer parameter Default-DL-BWP a default DL BWP among the configured DL BWPs. If a wireless device is not provided a default DL BWP by the higher layer parameter Default-DL-BWP, the default DL BWP is the initial active DL BWP. In an example, a wireless device may be provided by higher layer parameter *bwp-InactivityTimer*, a timer value for the primary cell. If configured, the wireless device may increment the timer, if running, every interval of 1 millisecond for frequency range 1 or every 0.5 milliseconds for frequency range 2 if the wireless device may not detect a DCI format 1_1 for paired spectrum operation or if the wireless device may not detect a DCI format 1_1 or DCI format 0_1 for unpaired spectrum operation during the interval.

In an example, if a wireless device is configured for a secondary cell with higher layer parameter *Default-DL-BWP* indicating a default DL BWP among the configured DL BWPs and the wireless device is configured with higher layer parameter *bwp-InactivityTimer* indicating a timer value, the wireless device procedures on the secondary cell may be same as on the primary cell using the timer value for the secondary cell and the default DL BWP for the secondary cell.

In an example, if a wireless device is configured by higher layer parameter *Active-BWP-DL-SCell* a first active DL BWP and by higher layer parameter *Active-BWP-UL-SCell* a first active UL BWP on a secondary cell or carrier, the wireless device may use the indicated DL BWP and the indicated UL BWP on the secondary cell as the respective first active DL BWP and first active UL BWP on the secondary cell or carrier,

In an example, a set of PDCCH candidates for a wireless device to monitor is defined in terms of PDCCH search space sets. A search space set comprises a CSS set or a USS set. A wireless device monitors PDCCH candidates in one or more of the following search spaces sets: a Type0-PDCCH CSS set configured by *pdcch-ConfigSIB1* in *MIB* or by *searchSpaceSIB1* in *PDCCH-ConfigCommon* or by *searchSpaceZero* in *PDCCH-ConfigCommon* for a DCI format with CRC scrambled by a SI-RNTI on the primary cell of the MCG, a Type0A-PDCCH CSS set configured by searchSpaceOtherSystemInformation in PDCCH-ConfigCommon for a DCI format with CRC scrambled by a SI-RNTI on the primary cell of the MCG, a Type1-PDCCH CSS set configured by *ra-SearchSpace* in *PDCCH-ConfigCommon* for a DCI format with CRC scrambled by a RA-RNTI, a MsgB-RNTI, or a TC-RNTI on the primary cell, a Type2-PDCCH CSS set configured by *pagingSearchSpace* in *PDCCH-ConfigCommon* for a DCI format with CRC scrambled by a P-RNTI on the primary cell of the MCG, a Type3-PDCCH CSS set configured by *SearchSpace* in *PDCCH-Config* with *searchSpaceType* = *common* for DCI formats with CRC scrambled by INT-RNTI, SFI-RNTI, TPC-PUSCH-RNTI, TPC-PUCCH-RNTI, TPC-SRS-RNTI, CI-RNTI, or PS-RNTI and, only for the primary cell, C-RNTI, MCS-C-RNTI, or CS-RNTI(s), and a USS set configured by *SearchSpace* in *PDCCH-Config* with *searchSpaceType* = *ue-Specific* for DCI formats with CRC scrambled by C-RNTI, MCS-C-RNTI, SP-CSI-RNTI, CS-RNTI(s), SL-RNTI, SL-CS-RNTI, or SL-L-CS-RNTI.

In an example, a wireless device determines a PDCCH monitoring occasion on an active DL BWP based on one or more PDCCH configuration parameters (e.g., based on example embodiment of FIG. 27 which will be described later) comprising: a PDCCH monitoring periodicity, a PDCCH monitoring offset, and a PDCCH monitoring pattern within a slot. For a search space set (SS s), the wireless device determines that a PDCCH monitoring occasion(s) exists in a slot with number $n_{s,f}^{\mu}$ in a frame with number $n_f$ if $\left(n_f \cdot N_{\text{slot}}^{\text{frame},\mu} + n_{s,f}^{\mu} - o_s\right) mod\ k_s = 0$. $N_{\text{slot}}^{\text{frame},\mu}$ is a number of slots in a frame when numerology $\mu$ is configured, $o_S$ is a slot offset indicated in the PDCCH configuration parameters (e.g., based on example embodiment of FIG. 27). $k_S$ is a PDCCH monitoring periodicity indicated in the PDCCH configuration parameters (e.g., based on example embodiment of FIG. 27). The wireless device monitors PDCCH candidates for the search space set for $T_S$ consecutive slots, starting from slot $n_{s,f}^{\mu}$, and does not monitor PDCCH candidates for search space set s for the next $k_S$ - $T_S$ consecutive slots. In an example, a USS at CCE aggregation level $L \in \{1, 2, 4, 8, 16\}$ is defined by a set of PDCCH candidates for CCE aggregation level *L.*

In an example, a wireless device decides, for a search space set *S* associated with CORESET *p*, CCE indexes for aggregation level *L* corresponding to PDCCH candidate $m_{s,n_{CI}}$ of the search space set in slot $n_{s,f}^{\mu}$ for an active DL BWP of a serving cell corresponding to carrier indicator field value $n_{CI}$ as

$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) mod \lfloor N_{CCE,p}/L \rfloor \right\} + i$, where $Y_{p,n_{s,f}^{\mu}} = 0$ for any CSS; $Y_{p,n_{s,f}^{\mu}} = \left(A_p \cdot Y_{p,n_{s,f}^{\mu}-1}\right) mod\ D$ for a USS, $Y_{p,-1} = n_{RNTI} \neq 0$, $A_p = 39827$ for $p\ mod\ 3 = 0$, $A_p = 39829$ for $p\ mod\ 3 = 1$, $A_p = 39839$ for $p\ mod\ 3 = 2$, and $D = 65537$; $i = 0, \cdots, L - 1$; $N_{CCE,p}$ is the number of CCEs, numbered from 0 to $N_{CCE,p} - 1$, in CORESET p; $n_{CI}$ is the carrier indicator field value if the wireless device is configured with a carrier indicator field by *CrossCarrierSchedulingConfig* for the serving cell on which PDCCH is monitored; otherwise, including for any CSS, $n_{CI} = 0$; $m_{s,n_{CI}} = 0, \ldots, M_{s,n_{CI}}^{(L)} - 1$, where $M_{s,n_{CI}}^{(L)}$ is the number of PDCCH candidates the wireless device is configured to monitor for aggregation level $L$ of a search space set s for a serving cell corresponding to $n_{CI}$; for any CSS, $M_{s,max}^{(L)} = M_{s,0}^{(L)}$; for a USS, $M_{s,max}^{(L)}$ is the maximum of $M_{s,n_{CI}}^{(L)}$ over all configured $n_{CI}$ values for a CCE aggregation level $L$ of search space set $s$; and the RNTI value used for $n_{RNTI}$ is the C-RNTI.

In an example, a wireless device may monitor a set of PDCCH candidates according to configuration parameters of a search space set comprising a plurality of search spaces (SSs). The wireless device may monitor a set of PDCCH candidates in one or more CORESETs for detecting one or more DCIs. A CORESET may be configured based on the example embodiment of FIG. 26 which will be described later. Monitoring may comprise decoding one or more PDCCH candidates of the set of the PDCCH candidates according to the monitored DCI formats. Monitoring may comprise decoding a DCI content of one or more PDCCH candidates with possible (or configured) PDCCH locations, possible (or configured) PDCCH formats (e.g., number of CCEs, number of PDCCH candidates in common SSs, and/or number of PDCCH candidates in the UE-specific SSs) and possible (or configured) DCI formats. The decoding may be referred to as blind decoding. The possible DCI formats may be based on example embodiments of FIG. 23.

FIG. 23 shows examples of DCI formats which may be used by a base station to transmit control information to a wireless device or used by the wireless device for PDCCH monitoring. *Different* DCI formats may comprise different DCI fields and/or have different DCI payload sizes. Different DCI formats may have different signaling purposes. In an example, DCI format 0_0 may be used to schedule PUSCH in one cell. DCI format 0_1 may be used to schedule one or multiple PUSCH in one cell or indicate CG-DFI (configured grant-Downlink Feedback Information) for configured grant PUSCH, etc. The DCI format(s) which the wireless device may monitor in a SS may be configured,

FIG. 24A shows an example of configuration parameters of a master information block (MIB) of a cell (e.g., PCell). In an example, a wireless device, based on receiving primary synchronization signal (PSS) and/or secondary synchronization signal (SSS), may receive a MIB via a PBCH. The configuration parameters of a MIB may comprise six bits (*systemFrameNumber*) of system frame number (SFN), subcarrier spacing indication (*subCarrierSpacingCommon*), a frequency domain offset (*ssb-SubcarrierOffset*) between SSB and overall resource block grid in number of subcarriers, an indication (*cellBarred*) indicating whether the cell is bared, a DMRS position indication (*dmrs-TypeA-Position*) indicating position of DMRS, parameters of CORESET and SS of a PDCCH (*pdcch-ConfigSIB1)* comprising a common CORESET, a common search space and necessary PDCCH parameters, etc.

In an example, a *pdcch-ConfigSIB1* may comprise a first parameter (e.g., *controlResourceSetZero*) indicating a common ControlResourceSet (CORESET) with ID #0 (e.g., CORESET#0) of an initial BWP of the cell. *controlResourceSetZero* may be an integer between 0 and 15. Each integer between 0 and 15 may identify a configuration of CORESET#0.

FIG. 24B shows an example of a configuration of CORESET#0. As shown in FIG. 24B, based on a value of the integer of *controlResourceSetZero*, a wireless device may determine a SSB and CORESET#0 multiplexing pattern, a number of RBs for CORESET#0, a number of symbols for CORESET#0, an RB offset for CORESET#0.

In an example, a *pdcch-ConfigSIB1* may comprise a second parameter (e.g., *searchSpaceZero*) indicating a common search space with ID #0 (e.g., SS#0) of the initial BWP of the cell. *searchSpaceZero* may be an integer between 0 and 15. Each integer between 0 and 15 may identify a configuration of SS#0.

FIG. 24C shows an example of a configuration of SS#0. As shown in FIG. 24C, based on a value of the integer of *searchSpaceZero*, a wireless device may determine one or more parameters (e.g., *O*, *M*) for slot determination of PDCCH monitoring, a first symbol index for PDCCH monitoring and/or a number of search spaces per slot.

In an example, based on receiving a MIB, a wireless device may monitor PDCCH via SS#0 of CORESET#0 for receiving a DCI scheduling a system information block 1 (SIB1). A SIB1 message may be implemented based on the example embodiment of FIG. 25. The wireless device may receive the DCI with CRC scrambled with a system information radio network temporary identifier (SI-RNTI) dedicated for receiving the SIB1,

FIG. 25 shows an example of RRC configuration parameters of system information block (SIB). A SIB (e.g., *SIB1)* may be transmitted to all wireless devices in a broadcast way. The SIB may contain information relevant when evaluating if a wireless device is allowed to access a cell, information of paging configuration and/or scheduling configuration of other system information. A SIB may contain radio resource configuration information that is common for all wireless devices and barring information applied to a unified access control. In an example, a base station may transmit to a wireless device (or a plurality of wireless devices) one or more SIB information. As shown in FIG. 25, parameters of the one or more SIB information may comprise: one or more parameters (e.g., *cellSelectionInfo*) for cell selection related to a serving cell, one or more configuration parameters of a serving cell (e.g., in *ServingCellConfigCommonSIB* IE), and one or more other parameters. The *ServingCellConfigCommonSIB* IE may comprise at least one of: common downlink parameters (e.g., in *DownlinkConfigCommonSIB* IE) of the serving cell, common uplink parameters (e.g., in *UplinkConfigCommonSIB* IE) of the serving cell, and other parameters.

In an example, a *DownlinkConfigCommonSIB* IE may comprise parameters of an initial downlink BWP (*initialDownlinkBWP* IE) of the serving cell (e.g., SpCell). The parameters of the initial downlink BWP may be comprised in a *BWP-DownlinkCommon* IE (as shown in FIG. 26). The *BWP-DownlinkCommon* IE may be used to configure common parameters of a downlink BWP of the serving cell. The base station may configure the *locationAndBandwidth* so that the initial downlink BWP contains the entire CORESET#0 of this serving cell in the frequency domain. The wireless device may apply the *locationAndBandwidth* upon reception of this field (e.g., to determine the frequency position of signals described in relation to this *locationAndBandwidth*) but it keeps CORESET#0 until after reception of *RRCSetup*/*RRCResume*/*RRCReestablishment.*

In an example, the *DownlinkConfigCommonSIB* IE may comprise parameters of a paging channel configuration. The parameters may comprise a paging cycle value (*T*, by *defaultPagingCycle* IE), a parameter (*nAndPagingFrameOffset* IE) indicating total number *N*) of paging frames (PFs) and paging frame offset (*PF_offset*) in a paging DRX cycle, a number (Ns) for total paging occasions (POs) per PF, a first PDCCH monitoring occasion indication parameter (*firstPDCCH-MonitoringOccasionofPO* IE) indicating a first PDCCH monitoring occasion for paging of each PO of a PF. The wireless device, based on parameters of a PCCH configuration, may monitor PDCCH for receiving paging message.

In an example, the parameter *first-PDCCH-MonitoringOccasionOfPO* may be signaled in *SIB1* for paging in initial DL BWP. For paging in a DL BWP other than the initial DL BWP, the parameter *first-PDCCH-MonitoringOccasionOfPO* may be signaled in the corresponding BWP configuration.

FIG. 26 shows an example of RRC configuration parameters (e.g., *BWP-DownlinkCommon* IE) in a downlink BWP of a serving cell. A base station may transmit to a wireless device (or a plurality of wireless devices) one or more configuration parameters of a downlink BWP (e.g., initial downlink BWP) of a serving cell.

As shown in FIG. 26, the one or more configuration parameters of the downlink BWP may comprise: one or more generic BWP parameters of the downlink BWP, one or more cell specific parameters for PDCCH of the downlink BWP (e.g., in *pdcch-ConfigCommon* IE), one or more cell specific parameters for the PDSCH of this BWP (e.g., in *pdsch-ConfigCommon* IE), and one or mor other parameters.

*A pdcch-ConfigCommon* IE may comprise parameters of COESET #0 (e.g., *controlResourceSetZero*) which may be used in any common or UE-specific search spaces.

A value of the *controlResourceSetZero* may be interpreted like the corresponding bits in *MIB pdcch-ConfigSIB1,*

A *pdcch-ConfigCommon* IE may comprise parameters (e.g., in *commonControlResourceSet*) of an additional common control resource set which may be configured and used for any common or UE-specific search space. If the network configures this field, it uses a *ControlResourceSetId* other than 0 for this *ControlResourceSet.*

The network configures the *commonControlResourceSet* in *SIB1* so that it is contained in the bandwidth of CORESET#0. A *pdcch-ConfigCommon* IE may comprise parameters (e.g., in *commonSearchSpaceList*) of a list of additional common search spaces.

Parameters of a search space may be implemented based on the example of FIG. 27 which will be described later. A *pdcch-ConfigCommon* IE may indicate, from a list of search spaces, a search space for paging (e.g., *pagingSearchSpace*)*,* a search space for random access procedure (e.g., *ra-SearchSpace*)*,* a search space for SIB1 message (e.g., *searchSpaceSIB1*)*,* a common search space#0 (e.g., *searchSpaceZero*)*,* and one or more other search spaces.

As shown in FIG. 26, a control resource set (CORESET) may be associated with a CORESET index (e.g., *ControlResourceSetId*).

A CORESET may be implemented based on example embodiments described above with respect to FIG. 14A and/or FIG. 14B.

The CORESET index with a value of 0 may identify a common CORESET configured in *MIB* and in *ServingCellConfigCommon* (*controlResourceSetZero*) and may not be used in the *ControlResourceSet* IE.

The CORESET index with other values may identify CORESETs configured by dedicated signaling or in *SIB1.* The *controlResourceSetId* is unique among the BWPs of a serving cell. A CORESET may be associated with coresetPoolIndex indicating an index of a CORESET pool for the CORESET.

A CORESET may be associated with a time duration parameter (e.g., *duration*) indicating contiguous time duration of the CORESET in number of symbols.

In an example, as shown in FIG. 26, configuration parameters of a CORESET may comprise at least one of: frequency resource indication (e.g., *frequencyDomainResources*), a CCE-REG mapping type indicator (e.g., *cce-REG-Mapping Type*), a plurality of TCI states, an indicator indicating whether a TCI is present in a DCI, and the like.

FIG. 27 shows an example of configuration of a search space (e.g., *SearchSpace* IE).

In an example, one or more search space configuration parameters of a search space may comprise at least one of: a search space ID (*searchSpaceId*), a control resource set ID (*controlResourceSetId*), a monitoring slot periodicity and offset parameter (*monitoringSlotPeriodicityAndOffset*), a search space time duration value (*duration*), a monitoring symbol indication (*monitoringSymbolsWithinSlot*), a number of candidates for an aggregation level (*nrofCandidates*), and/or a SS type indicating a common SS type or a UE-specific SS type (*searchSpaceType*),

The monitoring slot periodicity and offset parameter may indicate slots (e.g., in a radio frame) and slot offset (e.g., relative to a starting of a radio frame) for PDCCH monitoring.

The monitoring symbol indication may indicate on which symbol(s) of a slot a wireless device may monitor PDCCH on the SS. The control resource set ID may identify a control resource set on which a SS may be located,

In an example, a base station may transmit one or more SSBs periodically to a wireless device, or a plurality of wireless devices,

A wireless device (in RRC_IDLE state, RRC_INACTIVE state, or RRC_CONNECTED state) may use the one or more SSBs for time and frequency synchronization with a cell of the base station.

An SSB, comprising a primary synchronization signal (PSS), a secondary synchronization signal (SSS), a physical broadcast channel (PBCH), and a PBCH DM-RS, may be transmitted based on example embodiments described above with respect to FIG. 11A.

An SSB may occupy a number (e.g., 4) of OFDM symbols as shown in FIG. 11A. The base station may transmit one or more SSBs in a SSB burst, e.g., to enable beam-sweeping for PSS/SSS and PBCH.

An SSB burst comprises a set of SSBs, each SSB potentially transmitted on a different beam. SSBs in the SSB burst may be transmitted in time-division multiplexing fashion,

In an example, an SSB burst may always be confined to a 5ms window and is either located in first-half or in the second half of a 10ms radio frame. In this specification, an SSB burst may be equivalently referred to as a transmission window (e.g., 5ms) in which the set of SSBs are transmitted,

In an example, the base station may indicate a transmission periodicity of SSB via RRC message (e.g., *ssb-PeriodicityServingCell* in *ServingCellConfigCommonSIB* of *SIB1* message, or *ServingCellConfigCommon* of a serving cell).

A candidate value of the transmission periodicity may be in a range of {5ms, 10ms, 20ms, 40ms, 80ms, 160ms}. The maximum number of candidate SSBs ($L_{max}$) within an SSB burst depends upon the carrier frequency/band of the cell.

In an example, $L_{max}$=4 if $f_c$<=3GHz, wherein $f_c$ is the carrier frequency of the cell. $L_{max}$=8 if 3GHz<$f_c$<=6GHz. $L_{max}$=64 if $f_c$>=6GHz, etc.

In an example, a starting OFDM symbol index of a candidate SSB (occupying 4 OFDM symbols) within a SSB burst (5ms) may depend on a subcarrier spacing (SCS) and a carrier frequency band of the cell.

FIG. 28 shows an example of starting OFDM symbol index determination,

As shown in FIG. 28, starting OFDM symbol indexes of SSBs in a SSB burst, for a cell configured with 15 kHz and carrier frequency fc<3GHz ($L_{max}$=4), are 2, 8, 16, and 22, OFDM symbols in a half-frame are indexed with the first symbol of the first slot being indexed as 0.

Starting OFDM symbol indexes of SSBs in a SSB burst, for a cell configured with 15 kHz and carrier frequency 3GHz<fc<6GHz ($L_{max}$=8), are 2, 8, 16, 22, 30, 36, 44 and 50, etc.

In an example, when the base station is not transmitting the SSBs with beam forming, the base station may transmit only one SSB by using the first SSB starting position.

FIG. 29 shows an example of SSB transmission of a cell by a base station.

In the example of FIG. 29, a SCS of the cell is 15 kHz, and the cell is configured with 3GHz<fc<=6GHz.

Based on the example of FIG. 29, maximum number of candidate SSBs in a SSB burst is 8 (Lmax=8),

As shown in FIG. 29, SSB#1 starts at symbol#2 of 70 symbols in 5ms, SSB#2 starts at symbol#8, SSB#3 starts at symbol#16, SSB#4 starts at symbol#22, SSB#5 starts at symbol#30, SSB#6 starts at symbol#36, SSB#7 starts at symbol#44, and SSB#8 starts at symbol 50.

The SSB burst is transmitted in the first half (not the second half as shown in FIG. 29) of a radio frame with 10 ms.

In an example, the SSB bust (also for each SSB of the SSB burst) may be transmitted in a periodicity,

In the example of FIG. 29, a default periodicity of a SSB burst is 20 ms, e.g., before a wireless device receives a SIB1 message for initial access of the cell.

The base station, with 20 ms transmission periodicity of SSB (or SSB burst), may transmit the SSB burst in the first 5 ms of each 20 ms.

The base station does not transmit the SSB burst in the rest 15 ms of the each 20 ms.

In an example, a base station may transmit RRC messages (e.g., SIB1 and/or *ServingCellConfigCom-*

*mon* IE) indicating cell specific configuration parameters of SSB transmission of a serving cell (e.g., a PCell or a SCell),

The cell specific configuration parameters may comprise a value for a transmission periodicity (ssb-*PeriodicityServingCell*) of a SSB burst, locations of a number of SSBs (e.g., active SSBs), of a plurality of candidate SSBs, comprised in the SSB burst. The plurality of candidate SSBs may be implemented based on example embodiments described above with respect to FIG. 28.

The cell specific configuration parameters may comprise position indication of a SSB in a SSB burst (e.g., *ssb-PositionsinBurst*). The position indication may comprise a first bitmap (e.g., *groupPresence*) and a second bitmap (e.g., *inOneGroup*) indicating locations of a number of SSBs comprised in a SSB burst.

In an example, a base station may transmit a Master Information Block (MIB) on PBCH, to indicate configuration parameters (for CORESET#0) for a wireless device monitoring PDCCH for receiving a SIB1 message.

The base station may transmit a MIB message with a transmission periodicity of 80 millisecond (ms). The same MIB message may be repeated (according to SSB periodicity) within the 80 ms. Contents of a MIB message are same over 80 ms period. The same MIB is transmitted over all SSBs within a SS burst.

In an example, PBCH may indicate that there is no associated SIB1, in which case a wireless device may be pointed to another frequency from where to search for an SSB that is associated with a SIB1 as well as a frequency range where the wireless device may assume no SSB associated with SIB1 is present. The indicated frequency range may be confined within a contiguous spectrum allocation of the same operator in which SSB is detected.

In an example, a base station may transmit a SIB1 message with a periodicity of 160 ms. The base station may transmit the same SIB1 message with variable transmission repetition periodicity within 160 ms.

The default transmission repetition periodicity of SIB1 is 20 ms.

The base station may determine an actual transmission repetition periodicity based on network implementation.

In an example, for SSB and CORESET multiplexing pattern 1, SIB1 repetition transmission period is 20 ms. For SSB and CORESET multiplexing pattern 2/3, SIB1 transmission repetition period is the same as the SSB period.

SIB1 may comprise information regarding the availability and scheduling (e.g., mapping of SIBs to SI message, periodicity, SI-window size) of other SIBs, an indication whether one or more SIBs are only provided on-demand and in which case, configuration parameters needed by a wireless device to perform an SI request.

In an example, a base station may transmit SSBs over each serving cell (e.g., a PCell or an SCell) of multiple serving cells configured for a wireless device.

The base station may transmit SSBs over some serving cells of the multiple serving cells and may not transmit SSBs over other serving cells of the multiple serving cells.

A serving cell without SSBs may be referred to as an SSB-less serving cell.

A serving cell with SSBs always transmitted by the base station may be referred to as an always-on-SSB serving cell.

In addition to always-on SSB and SSB-less, a base station may transmit SSBs over a serving cell based on indication from a wireless device, or from another base station, and/or triggered by the base station itself (e.g., by transmitting a SCell activation/deactivation MAC CE).

When there is no indication from the wireless device or from another base station or there is no trigger from the base station, the base station may stop transmitting the SSBs. The SSBs transmitted/stopped upon a request may be referred to as on-demand SSBs.

FIG. 30 shows examples of a variety of SSB transmissions.

In an example, a base station may configure a serving cell (e.g., a PCell or a SCell, Cell 1 in FIG. 30) with always-on SSBs, in which case, the base station keeps transmitting the SSBs with periodicity (e.g., *ssb-PeriodicityServingCell*) based on configuration parameters of the SSBs.

The SSBs may be transmitted in a way that a number (e.g., indicated by *ssb-PositionsInBurst*) of SSBs are comprised in a SSB burst and the SSB burst is transmitted periodically according to the periodicity, e.g., according to example of FIG. 29.

In an example, the always-on SSBs may be mandatorily configured on a PCell, and optionally configured on a SCell. The wireless device may obtain time and/or frequency synchronization (and/or beam alignment) with the serving cell based on the periodically transmitted SSBs. Always transmitting SSBs may increase power consumption of the base station.

As shown in FIG. 30, a base station may configure a serving cell (e.g., a SCell, Cell 2 in FIG. 30) without SSB transmission, e.g., in order to reduce power consumption of the serving cell. The wireless device may refer to another serving cell (e.g., a PCell or PSCell, or a SCell, Cell 1 in FIG. 30) for obtaining time and/or frequency synchronization with this serving cell.

The PCell/PSCell/SCell used as the reference (e.g., or a SSB reference cell) of SSBs of this serving cell may be configured by RRC messages (e.g., *ServingCellConfigCommon IE,* e.g., based on example embodiments of FIG. 33 which will be explained later) of the serving cell.

The SSB reference cell may be intra-band (in the same frequency band) deployed with this serving cell or may be inter-band (in different frequency bands) deployed with this serving cell.

The SSB-less configuration for a serving cell may be limited to cases when there is always a SSB reference cell in carrier aggregation (CA) or dual connectivity (DC) deployment and/or when the time/frequency synchronization error between the SSB reference cell and the serving cell is within a threshold, and/or they are deployed in the same frequency range (FR).

Allowing a serving cell without SSB transmissions may reduce power consumption of the base station.

As shown in FIG. 30, a base station may configure a serving cell (e.g., a SCell, e.g., Cell 3) with on-demand SSB transmissions, e.g., in order to provide SSBs for time/frequency synchronization and/or parallelly reduce power consumption of the serving cell especially when there is no SSB reference cell for this serving cell (e.g., due to a single cell deployment, or time/frequency synchronization error between the SSB reference cell and this serving cell being greater than the threshold).

There are multiple ways of providing the on-demand SSBs for this serving cell.

As a first way (as shown in FIG. 30) of providing the on-demand SSBs for a serving cell, the base station may trigger to transmit the on-demand SSB based on receiving an uplink wake up signal (WUS) from a wireless device.

The WUS may be based on existing technologies (e.g., a preamble, an SRS, and/or a SR, etc.), or a new signal designed specifically for the on-demand SSB request. The wireless device may trigger the transmission of the WUS based on traffic loading and/or power level of the wireless device.

In an example, the wireless device may trigger the transmission of the WUS based on channel measurement of discovery reference signals (DRSs) (if configured) of the serving cell.

In an example, a DRS may be a simplified SSB with only PSS and without SSS or PBCH, a simplified SSB with only SSS and without PSS or PBCH, or a CSI-RS, or a position RS, or a newly defined RS specifically for the on-demand SSB request, or a low-power synchronization signal (LP-SSB) based on on-off-keying (OOK) modulation different from OFDM-based SSBs.

Before triggering the on-demand SSB for the serving cell, the base station may (optionally) transmit the DRSs for facilitating the wireless device to perform the channel measurement (which may be used by the wireless device to determine whether to trigger the transmission of the WUS).

When receiving the WUS (e.g., indicating wakeup), the base station may start to transmit the on-demand SSBs. When receiving the WUS (e.g., indicating go-to-sleep) or when not receiving the WUS indicating wakeup on a WUS occasion, the base station may stop (or skip) transmitting the on-demand SSBs.

Allowing the wireless device to request on-demand SSB transmissions (or request stopping the on-demand transmissions) may enable the base station to stop SSBs transmissions for power/energy saving when there is no wireless device active in this serving cell.

As a second way (as shown in FIG. 30) of providing the on-demand SSBs for a serving cell, the base station may trigger to transmit the on-demand SSB by transmitting an on-demand SSB trigger.

In an example, the on-demand SSB trigger may be different from a SCell activation/deactivation MAC CE.

In an example, the on-demand SSB trigger may be comprised in a SCell activation/deactivation MAC CE indicating both an activation of the SCell and the transmissions of on-demand SSBs via the SCell. The base station may activate the SCell for a wireless device by transmitting a SCell activation/deactivation MAC CE (e.g., based on examples of FIG. 21A and/or FIG. 21B.).

Before the on-demand SSBs are triggered, the base station may skip (or may stop/refrain from) transmitting the on-demand SSBs.

After the on-demand SSBs are triggered, the base station may start transmitting the on-demand SSBs.

In an example, the base station may determine when/whether to activate the SCell (together with the on-demand SSB transmissions) based on traffic load/request of wireless device(s) and/or requests from another base station via backhaul link.

In an example, the DRSs described above may be optionally transmitted by the base station. The wireless device may transmit channel measurements of the serving cell based on the DRSs to help the base station to decide when/whether to activate the serving cell.

FIG. 31 shows examples of a variety of SCell activation mechanisms.

In an example, a wireless device may activate a SCell based on always-on SSBs. The SCell activation with always-on SSBs may be different from a fast SCell activation with tracking reference signal (TRS),

A TRS may be an aperiodic CSI-RS based on RRC configuration of the SCell.

As shown in FIG. 31, when configured with always-on SSBs, the delay (e.g., SCell activation delay) within which the wireless device is required to be able to activate the deactivated SCell depends upon the specified conditions.

Upon receiving SCell activation command (e.g., SCell Activation MAC CE) in slot n, the wireless device is required to transmit valid CSI report and apply actions related to the activation command for the SCell being activated no later than in slot

$$n+\frac{T_{HARQ}+T_{activation_time}+T_{CSI_Reporting}}{NR\ slot\ length}.$$

$T_{HARQ}$ (in ms) is the timing between DL data transmission of the MAC CE and acknowledgement transmission corresponding to the reception of the MAC CE.

$T_{activation_time}$ is the SCell activation delay in millisecond with a value determined based on a value of $T_{FirstSSB}$, $T_{rs}$ and $T_{FirstSSB_MAX}$ and whether the SCell is known or unknown and/or whether the SCell belongs to FR1 or FR2 (e.g., according to 3GPP TS 38.133 section 8.3.2 SCell Activation delay requirement for deactivated SCell). $T_{FirstSSB}$ is the time to the end of the first complete SSB burst indicated by the SMTC, or within 5ms if SMTC is not configured, after slot $n + \frac{T_{HARQ}+3ms}{NR\ slot\ length}$.

As shown in FIG. 31, when configured with TRS (e.g., A-TRS, A-CSI-RS), the delay (e.g., SCell activation delay) within which the wireless device is required to activate the deactivated SCell depends upon the specified conditions.

If the wireless device is allocated A-TRS for fast SCell activation, the wireless device is not required to use the SSB of the target SCell.

Upon receiving SCell activation command (e.g., SCell Activation MAC CE) in slot n, the wireless device is required to transmit valid CSI report and apply actions related to the activation command for the SCell being activated no later than in slot $n + \frac{T_{HARQ}+T_{activation_time}+T_{CSI_Reporting}}{NR\ slot\ length}$, where $T_{HARQ}$ (in ms) is the timing between DL data transmission and acknowledgement, $T_{activation_time}$ is the SCell activation delay in millisecond with a value determined based on a value of $T_{FirstATRS}$, $T_{gap}$ and $T_{ATRS}$ and whether the SCell is known or unknown and/or whether the SCell belongs to FR1 or FR2 (e.g., according to 3GPP TS 38.133 section 8.3.16 Fast SCell Activation delay requirement for deactivated SCell). $T_{FirstATRS}$ is the time to the end of the first complete CSI-RS burst for SCell activation after slot $n + \frac{T_{HARQ}+3ms}{NR\ slot\ length}$, where the CSI-RS burst is defined as four CSI-RS resources in two consecutive slots,

In an example, an SCell in FR1 is (considered by the wireless device) known if it has been meeting the following conditions, otherwise SCell in FR1 is unknown:

- During the period equal to max(5*measCycleSCell, 5*DRX cycles) for FR1 before the reception of the SCell activation command:
- the wireless device has sent a valid measurement report for the SCell being activated and
- the SSB measured remains detectable according to the cell identification conditions.
- the SSB measured during the period equal to max(5**measCycleSCell*, 5*DRX cycles) also remains detectable during the SCell activation delay according to the cell identification conditions.

*measCycleSCell* may be configured in RRC measurement configuration parameters of the SCell. The length of a DRX cycle may be configured in RRC messages.

For the first SCell activation in FR2 bands, the SCell is known if it has been meeting the following conditions, otherwise, the first SCell in FR2 band is unknown:

- During the period equal to 4s for UE supporting power class 1/5 and 3s for a wireless device supporting power class 2/3/4 before the wireless device receives the last activation command for PDCCH TCI, PDSCH TCI (when applicable) and semi-persistent CSI-RS for CQI reporting (when applicable):
- the wireless device has sent a valid L3-RSRP measurement report with SSB index, and
- SCell activation command is received after L3-RSRP reporting and no later than the time when UE receives MAC-CE command for TCI activation
- During the period from L3-RSRP reporting to the valid CQI reporting, the reported SSBs with indexes remain detectable according to the cell identification conditions specified, and the TCI state is selected based on one of the latest reported SSB indexes.

In the example of FIG. 31, the SCell activation delay for a SCell configured with always-on SSBs may be longer than the SCell activation delay for a SCell configured with TRS.

FIG. 32A and FIG. 32B show examples of a SCell activation/deactivation MAC CE for fast SCell activation,

A base station may transmit to a wireless device a (Enhanced, compared to the SCell Activation/Deactivation MAC CE described above with respect to FIG. 21A) SCell Activation/Deactivation MAC CE for fast SCell activation,

In the example of FIG. 32A, the Enhanced SCell Activation/Deactivation MAC CE with one octet $C_i$ field is identified by a MAC subheader with eLCID. It has a variable size and consists of seven C-fields, one R-field and zero or more TRS $ID_j$ fields in ascending order based on the *SCellIndex* for SCells indicated by the $C_i$ field(s) to be activated. The Enhanced SCell Activation/Deactivation MAC CE of with one octet $C_i$ field is defined as shown in FIG. 32A.

In the example of FIG. 32B, the Enhanced SCell Activation/Deactivation MAC CE with four octet $C_i$ field is identified by a MAC subheader with eLCID. It has a variable size and consists of 31 C-fields, one R-field and zero or more TRS $ID_j$ fields in ascending order based on the *SCellIndex* for SCells indicated by the $C_i$ field(s) to be activated. The Enhanced SCell Activation/Deactivation MAC CE with four octet $C_i$ field is defined as shown in FIG. 32B.

In the examples of FIG. 32A and FIG. 32B, for the $C_i$ field, if there is an SCell configured for the MAC entity with *SCellIndex* i, this field indicates the activation/-deactivation status of the SCell with *SCellIndex* i, else the MAC entity shall ignore the $C_i$ field. The $C_i$ field is set to 1 to indicate that the SCell with *SCellIndex* i shall be activated and that a TRS $ID_j$ field is included for the SCell. The $C_i$ field is set to 0 to indicate that the SCell with *SCellIndex* i shall be deactivated and that no TRS ID field is included for this SCell.

In the examples of FIG. 32A and FIG. 32B, for the TRS $ID_j$ field, if TRS $ID_j$ is set to a non-zero value, it indicates the corresponding TRS addressed by *scellActivationRS-Id* is activated. If TRS $ID_j$ is set to zero, it indicates that no TRS is used for the corresponding SCell.

In the examples of FIG. 32A and FIG. 32B, the R field is a reserved bit, set to 0.

In the examples of FIG. 32A and FIG. 32B, a TRS indicated by TRS ID is one of a plurality of TRSs (each TRS has a TRS ID) configured for the SCell. The base station transmits to the wireless device RRC messages comprising configuration parameters of the plurality of TRSs of the SCell.

In an example, in response to receiving the Enhanced SCell Activation/Deactivation MAC CE (as described above with respect to FIG. 32A and/or FIG. 32B), the wireless device may activate/deactivate one or more SCells and utilize the TRS (for CSI measurement and/or SCell activation) indicated by the MAC CE.

FIG. 33 shows an example of SSB configurations for a SCell.

In an example, a wireless device may receive from a base station one or more RRC messages (e.g., *RRCReconfiguration* IE). The one or more RRC messages may comprise configuration parameters (e.g., comprised in *CellGroupConfig* IE, as shown in FIG. 33) of cell group. The configuration parameters of a cell group may comprise SCell configuration parameters of a plurality of SCells (e.g., *sCellToAddModList* IE).

In the example of FIG. 33, the SCell configuration parameters of each SCell may comprise a SCell index (*sCellIndex*), cell common parameters (comprised in *ServingCellConfigComm* IE) of the SCell, cell parameters (comprised in *ServingCellConfig* IE) dedicated for the UE of the SCell, and/or a SSB measurement timing configuration (SMTC) (e.g., *smtc*) for a L3 beam/cell measurement associated with radio resource management (RRM) procedures.

In an example, a *smtc* is associated with a *periodicityAndOffset* and a *duration.*

The *smtc* indicates SSB periodicity/offset/duration configuration of target cell for an NR SCell addition. The base station (or the network) sets the *periodicityAndOffset* to indicate the same periodicity as *ssb-periodicityServingCell* in *sCellConfigCommon.*

The *smtc* is based on the timing of the SpCell of associated cell group. In case of inter-RAT handover to NR, the timing reference is the NR PCell.

In case of intra-NR PCell change (standalone NR) or NR PSCell change (EN-DC), the timing reference is the target SpCell. If the *smtc* field is absent and *absoluteFrequencySSB* is included, the wireless device uses the SMTC in the *measObjectNR* having the same SSB frequency and subcarrier spacing, as configured before the reception of the RRC message,

If the SCell is an SSB-less SCell (i.e., the IE *absoluteFrequencySSB* in *ServingCellConfigCommon* is absent), the *smtc* field is absent.

In an example, for a cell measurement, a wireless device may set up the first SMTC in accordance with the received *periodicityAndOffset* parameter (comprising a value of Offset and a value of *Periodicity*) of SMTC (e.g., SSB-MTC as shown in FIG. 33).

The first subframe of each SMTC occasion occurs at a system frame number (SFN) and subframe of the NR SpCell meeting the following condition, wherein a structure of a frame and a structure of a subframe may be implemented based on example of FIG. 7:

$$\text{SFN mod } T = (\text{FLOOR}(\textit{Offset}/10));$$
if the *Periodicity* is larger than *sf5:*
$$\text{subframe} = \textit{Offset} \bmod 10;$$
else:
$$\text{subframe} = \textit{Offset} \text{ or } (\textit{Offset} + 5);$$
$$\text{with } T = \text{CEIL}(\textit{Periodicity}/10).$$

In an example, the base station (or the network) may configure the wireless device in RRC_CONNECTED to derive RSRP, RSRQ and SINR measurement results per cell associated to NR measurement objects based on parameters configured in a *measObject* (e.g. maximum number of beams to be averaged and beam consolidation thresholds) and in a *reportConfig* (*rsType* to be measured, SS/PBCH block or CSI-RS). *measObject* and/or *reportConfig* is configured by the base station for the wireless device in one or more RRC messages.

In the example of FIG. 33, the cell common parameters of the SCell may comprise downlink common configuration parameters (e.g., comprised in *DownlinkConfigCommon* IE), SSB burst configuration (ssb-*PositionsInBurst*), SSB periodicity (*ssb-periodicityServingCell*), SSB subcarrier spacing (*ssbSubcarrrierSpacing*) and SSB transmission power (*ss-PBCH-BlockPower*).

In the example of FIG. 33, the downlink common configuration parameters of the SCell may comprise downlink frequency information (e.g., comprised in *FrequencyInfoDL*), configuration parameters of initial downlink BWP etc. The downlink frequency information of the SCell may comprise a parameter (*absoluteFrequencySSB*) indicating the frequency of the SSB to be used for this SCell.

If the parameter (*absoluteFrequencySSB*) is absent, the wireless device obtains timing reference from the SpCell or an SCell if applicable as described in TS 38.213, or from the SpCell or an SCell indicated by reference Cell, or from the "default cell" if the reference Cell is absent.

In the example of FIG. 33, the parameter is an ARFCN (absolute radio frequency channel number) value (AFRCN-ValueNR) specified for NR system. The downlink frequency information of the SCell may comprise a parameter (*absoluteFrequencyPointA*) indicating the absolute frequency position of the reference resource block (Common RB 0) of the SCell.

In the example of FIG. 33, the downlink frequency information of the SCell may comprise a parameter (*referenceCell*) indicating a reference cell, e.g., the cell which provides the timing reference and AGC source for this SCell, if this SCell is an SSB-less SCell. If the reference cell is an SCell or PSCell, it should be an activated SCell or activated PSCell. If this field (*referenceCell*) is absent, a "default cell" is the reference cell.

FIG. 34 shows an example of on-demand SSB transmissions for a SCell, e.g., based on and/or in addition to the examples of FIG. 30.

In an example, on-demand SSB transmissions may be used by a base station for network energy saving (operation/configuration/mode/state) on a SCell. When there are no/less active wireless devices in a SCell, the base station may stop always-on SSB transmissions via the SCell or may not transmit/configure the always-on SSB transmissions.

In an example, on-demand SSB transmissions may be equivalently referred to as adaptive SSB transmissions with a SSB transmission periodicity adaptation, e.g., when the SCell is in an activated state, where the base station may transmit a command indicating an adaption of the SSB transmission periodicity.

In this specification, the on-demand SSB trigger may be referred to as an indication of SSB periodicity adaption or adaptation when the SCell is in an activated state.

In an example, when the base station determines to activate the SCell for a wireless device, the base station may trigger on-demand SSB transmissions for the wireless device.

In an example, when a wireless device determines to trigger the on-demand SSB transmissions for a SCell, the wireless device may transmit uplink signals indicating a trigger of the on-demand SSB transmission on the SCell.

In the example of FIG. 34, on-demand SSBs may be transmitted on an SCell from time instance A to time instance B. The wireless device may receive, in a slot, from a base station a signaling/command indicating/triggering transmissions of the on-demand SSBs.

In an example, the time instance A when the on-demand SSBs are transmitted/start to be transmitted via the SCell may be determined as at least one of: a number (T) of slots after the slot where the wireless device receives the signaling/command from the base station to trigger the on-demand SSB transmissions or transmits HARQ-ACK corresponding to the signaling/command; the slot where the base station provides/transmits the signaling/command to trigger the on-demand SSB transmissions; the time when the current scenario (e.g., a first scenario during which the SCell is configured to the wireless device but before the wireless device receives a SCell activation command) transitions to the next scenario (e.g., a second scenario during which the UE has received the SCell activation command); or the first transmission occasion of on-demand SSB burst T slots after the slot where the wireless device receives the signaling/command from the base station to trigger the on-demand SSB transmissions or transmits HARQ-ACK corresponding to the signaling/command.

In an example, the time instance B may be determined based on examples of FIG. 36 which will be described later in this specification.

In the example of FIG. 34, the on-demand SSBs may be transmitted in different cases (e.g., case 1, case 2), in terms of whether always-on SSBs are transmitted via the SCell.

In the example of FIG. 34, the base station may transmit always-on SSBs (e.g., legacy SSBs) periodically on the SCell regardless of whether the SCell is in an activated state or in a deactivated state if the always-on SSBs are configured on the SCell.

In the example of FIG. 34, for on-demand SSBs configured with case 1, the base station does not transmit always-on SSBs via the SCell before the SCell is activated or before the on-demand SSBs are transmitted. The base station transmits the on-demand SSBs (e.g., with periodicity P2) from time instance A to time instance B. After the on-demand SSBs are completed, e.g., at time instance B, the base station may stop the on-demand SSB transmission.

In the example of FIG. 34, for on-demand SSBs configured with case 2, the base station transmits always-on SSBs (e.g., with periodicity P1) via the SCell regardless of whether the on-demand SSBs are transmitted or not and/or regardless of whether the SCell is in the activated state or in the deactivated state. The base station transmits the on-demand SSBs (e.g., with periodicity P2) from time instance A to time instance B. After the on-demand SSBs are completed, e.g., at time instance B, the base station may stop the on-demand SSB transmission and continue the always-on SSBs transmissions.

In the example of FIG. 34, the time instance A on which the on-demand SSBs are transmitted on the SCell may be based on an on-demand SSB triggering/command/signaling.

In an example, the on-demand SSB triggering/-command/signaling may be a RRC message, a MAC CE and/or a DCI.

In an example, depending on whether the wireless device receives the on-demand SSB triggering/command/signaling before or after the wireless device receives a SCell activation command, there may be two scenarios,

FIG. 35 shows an example of on-demand SSB transmission scenarios for a SCell, e.g., based on examples of FIG. 34. In the example of FIG. 35, the legacy SSBs are illustrated as a purpose of comparison with the on-demand SSBs.

In the example of FIG. 35, in a first scenario (Scenario 1) of on-demand SSB triggering, after a SCell is configured (e.g., by RRC messages) and before the SCell is activated, the base station transmits the on-demand SSB triggering/command/signaling indicating transmission of the on-demand SSBs via the SCell before the wireless device receives, and/or the base station transmits, a SCell Activation/deactivation MAC CE (or a SCell activation command) indicating an activation of the SCell. The wireless device, based on the on-demand SSBs (with a transmission periodicity P1), may perform downlink synchronization, AGC tuning and/or L3 measurement/report for the SCell.

In an example, the on-demand SSBs may be transmitted with shorter periodicity than the legacy/always-on SSBs on the SCell. Based on the L3 measurement/report of the SCell, the base station may transmit the SCell activation/deactivation MAC CE indicating the activation of the SCell.

In an example, the wireless device may determine that the SCell is a known cell based on the L3 measurement/report obtained on the on-demand SSBs of the SCell and when the wireless device receives the MAC CE.

In an example, the wireless device may determine whether a SCell is a known cell or a unknow cell based on examples of FIG. 31.

In an example, the wireless device may activate the SCell with a shorter SCell activation delay based on determining that the SCell is a known cell. During the SCell activation delay, the wireless device may continue using the on-demand SSBs for L1 CSI report.

After the wireless device transmits a valid L1 CSI report, based on the on-demand SSBs, of the SCell to the base station, the wireless device completes the SCell activation after which the SCell is considered, by the wireless device, in the activated state.

Receiving the on-demand SSB command/trigger and/or the on-demand SSBs, before the SCell activation command is received, may enable the wireless device to reduce SCell activation delay.

In the example of FIG. 35, in a second scenario (Scenario 2) of on-demand SSB triggering, after a SCell is configured (e.g., by RRC messages), the base station transmits the on-demand SSB triggering/command/signaling, together with a SCell activation command and/or after the SCell activation command, indicating transmission of the on-demand SSBs via the SCell. The wireless device, based on receiving the SCell activation command the on-demand SSB triggering/command/signaling, may perform downlink synchronization, AGC tuning and/or L3 measurement/report based on the on-demand SSBs, for the activation of the SCell.

In an example, the on-demand SSBs may be transmitted with shorter periodicity than the legacy/always-on SSBs on the SCell. In an example, before receiving the SCell activation command, the wireless device may determine that the SCell is an unknow SCell (e.g., if no always-on SSBs are configured for the SCell). Based on the L3 measurement/report of the SCell, the wireless device may determine that the SCell is a known cell based on the L3 measurement/report obtained on the on-demand SSBs of the SCell.

In an example, the wireless device may activate the SCell with a longer SCell activation delay compared with scenario 1. During the SCell activation delay, the wireless device may continue using the on-demand SSBs for L1 CSI report. After the wireless device transmits valid L1 CSI report, based on the on-demand SSBs, of the SCell to the base station, the wireless device completes the SCell activation after which the SCell is in the activated state.

Receiving the on-demand SSB command/trigger together with the SCell activation command may enable the wireless device to reduce power consumption of L1/L3 measurement for the SCell.

In an example, different scenarios (e.g., Scenario 1 and Scenario 2 as shown in FIG. 35) may be applied by the base station for different purposes,

In an example, the base station may use Scenario 1 for on-demand SSB triggering for a SCell when the base station is able to predict/estimate a time for the SCell activation, e.g., based on traffic pattern of the wireless device, power limitation of the wireless device, moving speed of the wireless device, location of the wireless device, etc.

In an example, the base station may use Scenario 2 for on-demand SSB triggering for a SCell when the base station is not able to predict/estimate a time for the SCell activation.

FIG. 36 shows an example of on-demand SSB transmissions for a SCell, e.g., based on examples of FIG. 34 and/or FIG. 35. The base station and/or the wireless device may determine, based on multiple options (e.g., option 1, option 1A, option 2, option 3, option 4, etc.), the time duration, of on-demand SSB transmission, between time instance A and time instance B during which the on-demand SSBs are transmitted on a SCell.

In the example of FIG. 36, in option 1, the base station, after transmitting the on-demand SSB trigger (e.g., after the time gap), may start to transmit the on-demand SSBs with a periodicity (P1) from time instance A. The base station may keep transmitting the on-demand SSBs after the on-demand SSB trigger.

In the example of FIG. 36, in option 1A, the base station, after transmitting the on-demand SSB trigger (e.g., after the time gap), may transmit the on-demand SSBs with a periodicity (P1) from time instance A to time instance B. The base station and/or the wireless device determine the time instance B based on an indication (e.g., on-demand SSB turn-off indication) from the base station indicating that the on-demand SSBs are stopped on the SCell. The base station may stop the on-demand SSBs from time instance B.

In the example of FIG. 36, in option 2, the base station, after transmitting the on-demand SSB trigger (e.g., after the time gap), may transmit the on-demand SSBs from time instance A to time instance B. The base station and/or the wireless device determine the time instance B based on a time duration indicated by the on-demand SSB trigger. The base station may stop the on-demand SSBs from time instance B.

In the example of FIG. 36, in option 3, the base station, after transmitting the on-demand SSB trigger (e.g., after the time gap), may transmit the on-demand SSBs from time instance A to time instance B. The base station and/or the wireless device determine the time instance B based on a total number of transmissions of the on-demand SSBs/SSB bursts indicated by the on-demand SSB trigger. The base station may stop the on-demand SSBs from time instance B.

In the example of FIG. 36, in option 4, the base station, after transmitting the on-demand SSB trigger (e.g., after the time gap), may transmit the on-demand SSBs from time instance A to time instance B. The base station and/or the wireless device may determine the time instance B based on option 1A/2/3. The base station may stop the on-demand SSBs from time instance B and transmit second SSBs (e.g., another set of SSBs) with different periodicity, e.g., P2. This case may be referred to as an SSB periodicity adaptation (e.g., from P1 to P2).

Examples of FIG. 34, FIG. 35 and/or FIG. 36 may be combined for different purposes, e.g., trade-off/-balance among network energy saving of the base station, L3 measurement accuracy, SCell activation delay and/or power consumption of the wireless device. In an example, Case 1 of FIG. 34 may be combined with Scenario 1 of FIG. 35 (and/or with option 1A/2/3 of FIG. 36) to reduce both power consumption of the base station and/or the wireless device and/or SCell activation delay. Case 2 of FIG. 34 may be combined with Scenario 2 of FIG. 35 (and/or with option 1A/2/3 of FIG. 36) to improve L3 measurement accuracy of the wireless device and/or reduce power consumption of the wireless device, etc.

FIG. 37 shows an example of on-demand SSB transmissions for a SCell, e.g., based on one or more examples of FIG. 34, FIG. 35 and/or FIG. 36.

In the example of FIG. 37, a wireless device receives from a base station configuration of on-demand SSBs (OD-SSBs) of a SCell. The configuration may be received in one or more (RRC) messages. The one or more messages may comprise configuration parameters of always-on SSBs (AO-SSBs) or may not comprise the configuration parameters of the AO-SSBs, The configuration parameters of the AO-SSBs may be implemented based on examples of FIG. 25 and/or FIG. 33.

In an example, a SCell may be implemented based on examples of FIG. 10A, FIG. 10B, FIG. 21A, FIG. 21B, and/or FIG. 22. Configuration parameters of the SCell may be received by the wireless device from the base station in one or more RRC messages, e.g., based on examples of FIG. 33.

In this specification, AO-SSB may be referred to and/or may be equivalent to always-on SSB, legacy SSB, periodic SSB, RRC-configured SSB, etc. The AO-SSB is transmitted periodically upon the AO-SSB configured by an RRC message.

In this specification, OD-SSB may be referred to on-demand SSB, new SSB, aperiodic/semi-persistent SSB, (RRC-configured and) DCI/MAC CE-triggered SSB, etc. The OD-SSB is transmitted, upon triggered, within a time duration.

In this specification, one or more SSBs may be equivalent to or may be referred to as a SSB burst. A periodicity of a SSB (with the same SSB index) may be equivalent to a periodicity of a SSB burst.

In an example, the wireless device receives one or more RRC messages comprising configuration of L3 measurement for the SCell.

In an example, the configuration of L3 measurement for the SCell may be identified by an entry of *MeasIdToAddMod* IE.

In an example, the configuration of L3 measurement for the SCell may be associated with a measurement object (configured in *MeasObjectNR* IE), and/or a measurement report (configured in *ReportConfig* IE).

In an example, the measurement object may comprise a measCycleSCell defining a number of subframes for a measurement cycle used only when the SCell is configured on the frequency indicated by the *measObjectNR* and when the SCell is in a deactivated state.

In an example, the configuration of L3 measurement for the SCell may be comprised in a *smtc* of the SCell.

In an example, a *smtc* of the SCell indicates AO-SSB periodicity/offset/duration configuration of a target/reference cell for NR SCell addition. The network sets the *periodicityAndOffset* to indicate the same periodicity as *ssb-periodicityServingCell* in *sCellConfigCommon.*

The *smtc* is based on the timing of the SpCell of associated cell group. In case of inter-RAT handover to NR, the timing reference is the NR PCell. In case of intra-NR PCell change (standalone NR) or NR PSCell change (EN-DC), the timing reference is the target SpCell.

If the *smtc* field is absent and *absoluteFrequencySSB* is included, the wireless device uses the SMTC in the *measObjectNR* having the same SSB frequency and subcarrier spacing, as configured before the reception of the RRC message,

If the SCell is an SSB-less SCell (i.e., the IE *absoluteFrequencySSB* in *ServingCellConfigCommon* is absent), the *smtc* field is absent.

In an example, when the AO-SSBs are configured for the SCell (e.g., based on Case 2 of FIG. 34), the wireless device may perform L3 measurement (e.g., L3 beam/cell level RSRP/RSRQ/SINR based on filtered L1 RSRP/RSRQ/SINR value of the SCell) over the AO-SSBs of the SCell, when the L3 measurement is configured for the SCell.

In an example, the AO-SSBs may not be configured on the SCell (based on Case 1 of FIG. 34).

In an example, a SCell without configured AO-SSBs is referred to as an SSB-less SCell, e.g., based on examples of FIG. 30 (where Cell 2 is an SSB-less SCell),

In the example of FIG. 37, after the SCell is configured, the wireless device skips (does not perform) L3 measurement for the SCell if AO-SSBs are not configured for the SCell (e.g., when the SCell is in the deactivated state).

In an example, the wireless device determines that the SCell is an unknow SCell based on no AO-SSBs being transmitted on the SCell and/or no available L3 measurement obtained for the SCell, before the wireless device receives the OD-SSBs on the SCell.

In the example of FIG. 37, before the wireless device receives a SCell activation command (e.g., a corresponding bit with value "1" comprised in a SCell activation/deactivation MAC CE), the wireless device receives an OD-SSB trigger indicating transmissions of the OD-SSBs.

In this specification, an OD-SSB trigger may be equivalently referred to as a command, an indication, an activation, a signaling, an adaptation indication, etc., for triggering the OD-SSBs or adjusting transmission periodicity of SSBs.

In an example, the OD-SSB trigger may be a MAC CE/DCI/RRC message,

In an example, the OD-SSB trigger may be transmitted before the SCell Activation/deactivation MAC CE (as shown in FIG. 37), together with the SCell Activation/deactivation MAC CE (as shown in Scenario 2 of FIG. 35), or after the SCell Activation/deactivation MAC CE (not shown in FIG. 37).

In an example, the OD-SSB trigger when transmitted after the SCell is activated may be equivalently referred to as an SSB adaptation indication. The SSB adaptation indication may indicate a change/adjustment of a periodicity of SSBs (e.g., AO-SSBs, or OD-SSBs).

In an example, based on receiving the OD-SSB trigger, the wireless device starts to downlink-synchronize with the base station using the OD-SSBs, perform AGC (Automatic Gain control) tuning and/or perform L3 measurement over the OD-SSBs of the SCell. Based on the L3 measurement, the wireless device may transmit a L3 measurement report (e.g., according to the *ReportConfig* IE and/or the *measObjectNR* configured by the one or more RRC messages),

In the example of FIG. 37, the wireless device receives the SCell activation command for the SCell, e.g., after transmitting the L3 measurement report, obtained based on the OD-SSBs, for the SCell.

The wireless device may conduct actions for the SCell activation, e.g., continuing synchronizing/AGC tuning/L3 measurement using the OD-SSBs, performing L1 measurement using the OD-SSBs, etc. The wireless device completes the SCell activation, e.g., when the wireless device transmits a valid L1 CSI report based on the L1 measurement using the OD-SSBs. A valid L1 CSI report may be a CSI report with a CQI/RSRP value being greater than a threshold.

When the wireless device completes the SCell activation, the wireless device starts to communicate with the base station (e.g., transmission/reception of PDCCH/PDSCH/PUCCH/PUSCH, etc.) via the SCell.

In an example, the wireless device may perform the L1 measurement and transmit L1 CSI report for the SCell activation based on examples of FIG. 38 which will be described later in this specification.

In this specification, a bit, associated with a SCell, of a SCell activation/deactivation MAC CE, being set to "1" may be referred to as a SCell activation command.

In this specification, a bit, associated with a SCell, of a SCell activation/deactivation MAC CE, being set to "0" may be referred to as a SCell deactivation command.

In the example of FIG. 37, the time gap between receiving the SCell activation command and completing the SCell activation (upon/after transmitting a valid L1 CSI report for the SCell) may be referred to as a transition time, a SCell activation delay, etc.

Based on the examples of FIG. 37, the wireless device, using the OD-SSBs triggered/transmitted before the wireless device receiving the SCell activation command, may reduce the SCell activation delay, since the wireless device has already obtained L3 measurement of the SCell (and/or synchronized with the base station, adjusted AGC parameters of the receiver of the wireless device, etc.) and/or has already determined that the SCell is a known cell, based on the OD-SSBs before receiving the SCell activation command. The examples of FIG. 37 may reduce SCell activation delay for the wireless device.

In addition, the examples may also reduce power consumption of the base station (by not transmitting AO-SSBs at all and/or by transmitting OD-SSBs only before the base station transmits the SCell activation command).

FIG. 38 shows an example of OD-SSB transmissions when carrier aggregation (CA) is deployed.

In the example of FIG. 38, a wireless device may be configured with multiple cells comprising a PCell and a plurality of SCells, The base station may transmit, at T1, an OD-SSB trigger via a PCell or an activated SCell, e.g., Cell 1 in FIG. 38, indicating transmission of OD-SSBs via an SCell (which has not been activated and will be activated later) (e.g., Cell 2 in FIG. 38). The OD-SSB trigger may be implemented based on examples of FIG. 37.

In the example of FIG. 38, when multiple BWPs are configured on Cell 1, the OD-SSB trigger may be transmitted in a first BWP (BWP 1) of Cell 1, when BWP 1 is an activated BWP of Cell 1.

In the example of FIG. 38, when multiple BWPs are configured on Cell 2, the OD-SSBs may be configured on one of the multiple BWPs of Cell 2 (e.g., BWP 2 in FIG. 38).

In an example, BWP 2 may be same as an initial DL BWP, or a first active DL BWP of Cell 2.

In an example, BWP 2 may be same as a BWP of Cell 2 on which AO-SSBs are transmitted if A-SSBs are configured on Cell 2.

In an example, the wireless device may not synchronize (in time domain and/or in frequency domain, on downlink and/or on uplink) with BWP 2/Cell 2 after Cell 2 is configured by the base station, and before Cell 2 is activated.

In the example of FIG. 38, the wireless device may transmit, at T2, HARQ-ACK feedback/information corresponding to the OD-SSB trigger. The wireless device may transmit HARQ-ACK feedback/information via the PCell or the activated SCell.

In an example, the base station may not need a confirmation (or the HARQ-ACK feedback/information) for the OD-SSB trigger, e.g., when the OD-SSB trigger is a broadcast signaling (e.g., a group-common DCI). In this case, the wireless device does not transmit the HARQ-ACK feedback/information at T2.

In the example of FIG. 38, the wireless device, based on receiving the OD-SSB trigger, determines an OD-SSB transmission time duration (from time instance A to time instance B) during which the OD-SSBs are transmitted via BWP 2 of Cell 2. The wireless device may determine the OD-SSB transmission time duration based on examples of FIG. 36.

In the example of FIG. 38, during the OD-SSB transmission time duration of the OD-SSBs, the wireless device performs downlink synchronization (e.g., by blindly detecting the OD-SSBs to find frame/subframe/-slot boundary) of BWP 2/Cell 2, AGC adjustment and/or L3 beam/cell measurement based on the OD-SSBs.

In the example of FIG. 38, the wireless device may transmit L3 beam/cell measurement report of Cell 2 to the base station via a PCell or an activated SCell (e.g., Cell 1 in FIG. 38).

In the example of FIG. 38, upon receiving the L3 beam/cell measurement report of Cell 2, the base station may determine to activate Cell 2 and may transmit an SCell activation command (e.g., a SCell activation/deactivation MAC CE) to the wireless device. The wireless device, after activating the SCell based on the SCell activation command, may use Cell 2 to communicate with the base station.

In the example of FIG. 38, the OD-SSB transmission time duration may be long enough so that the wireless device may complete the AGC adjustment, downlink synchronization and/or L3 beam/cell measurement using the OD-SSBs within the OD-SSB transmission time duration.

In existing technologies, a base station and/or a wireless device may determine a starting point (time instance A) of an OD-SSB transmission time duration as one of the following options: a number (T) of slots after the slot where the wireless device receives the OD-SSB trigger or transmits HARQ-ACK corresponding to the OD-SSB trigger; the slot where the base station provides/transmits the OD-SSB trigger; the time when the wireless device receives an SCell activation command; or the first transmission occasion of on-demand SSB burst T slots after the slot where the wireless device receives the OD-SSB trigger or transmits HARQ-ACK corresponding to the OD-SSB trigger.

However, there is no prior art disclosing how the base station and/or the wireless device determines a value of T. Existing technologies may result in misalignment of the base station and/or the wireless device regarding the starting point of the OD-SSB transmission time duration. Existing technologies may result in too-early OD-SSB transmission or too-late OD-SSB transmission, which may increase power consumption of the base station and/or the wireless device and/or increase SCell activation delay.

FIG. 39 shows an example issue of OD-SSB transmission on a SCell.

In the example of FIG. 39, a wireless device may be configured with multiple cells comprising a PCell and a plurality of SCells,

The base station may transmit, at T1, an OD-SSB trigger via a PCell or an activated SCell, e.g., Cell 1 in FIG. 39, indicating transmission of OD-SSBs via an SCell (which has not been activated and will be activated later) (e.g., Cell 2 in FIG. 39). The OD-SSB trigger may be implemented based on examples of FIG. 37 and/or FIG. 38.

In the example of FIG. 39, when multiple BWPs are configured on Cell 1, the OD-SSB trigger may be transmitted in a first BWP (BWP 1) of Cell 1, when BWP 1 is an activated BWP of Cell 1.

In an example, BWP 1 may be associated with a first subcarrier spacing (SCS) (SCS 1). A SCS may be implemented based on examples of FIG. 7.

In the example of FIG. 39, when multiple BWPs are configured on Cell 2, the OD-SSBs may be configured on one of the multiple BWPs of Cell 2 (e.g., BWP 2 in FIG. 39).

In an example, BWP 2 may be same as an initial DL BWP, or a first active DL BWP of Cell 2.

In an example, BWP 2 may be same as a BWP of Cell 2 on which AO-SSBs are transmitted if A-SSBs are configured on Cell 2.

In an example, BWP 2 may be associated with a second SCS (SCS 2). SCS 2 of BWP 2 of Cell 2 may be different from SCS 1 of BWP 1 of Cell 1.

In an example, the wireless device may not synchronize (in time domain and/or in frequency domain, on downlink and/or on uplink) with BWP 2/Cell 2 after Cell 2 is configured by the base station, and before Cell 2 is activated.

In the example of FIG. 39, the wireless device may transmit, at T2, HARQ-ACK feedback/information corresponding to the OD-SSB trigger. The wireless device may transmit HARQ-ACK feedback/information via the PCell or the activated SCell, based on examples of FIG. 38.

In the example of FIG. 39, the wireless device may not transmit the HARQ-ACK feedback/information based on examples of FIG. 38.

In the example of FIG. 39, the wireless device, based on receiving the OD-SSB trigger, determines an OD-SSB transmission time duration (from time instance A to time instance B) during which the OD-SSBs are transmitted via BWP 2 of Cell 2.

In the example of FIG. 39, the base station may determine the starting point (A) of the OD-SSB transmission time duration as a number (T) of slots after the base station transmits the OD-SSB trigger or after the wireless device transmits the HARQ-ACK feedback.

However, the wireless device may not be ready to receive the OD-SSBs starting from point A of the OD-SSB transmission time duration, for which the base station may not be aware of, when the base station determines a value of T.

In an example, the wireless device may take a time gap to get ready for the OD-SSB reception on Cell 2.

Different from existing technologies for defining a time gap, e.g., for applications of a (unified) TCI state update/indication, a PDCCH skipping indication, a SSSG switching indication, a cell DTX/DRX activation/deactivation command of a SCell, etc., where the time gap is determined and/or used on/for an activated BWP/cell or a synchronized serving cell, the time gap for OD-SSB reception may be used by the wireless device for RF tuning, ramping up receiver and AGC adjustment, etc. for Cell 2 when Cell 2 has not been activated yet.

Different from existing technologies for defining a time gap of a SCell activation where the length of the time gap is determined based on how long the wireless device takes to obtain a valid L1 CSI report for the SCell as shown in FIG. 31, the time gap for OD-SSB reception on a SCell may be used by the wireless device for RF tuning, ramping up receiver and AGC adjustment, L3 measurement, etc. for Cell 2 when Cell 2 has not been activated yet, and/or may not be used by the wireless device for obtaining a valid L1 CSI report if the wireless device has not received a SCell activation command,

Existing technologies of determining a time gap for applying a command/indication may not be applicable for the receptions of OD-SSBs of a SCell.

In a first scenario (as shown in FIG. 39), if the value of T is determined such that the wireless device is not ready for receiving OD-SSBs from point A (or T3 in FIG. 39), the base station may waste power consumption of the OD-SSBs from T3 to T4, after which the wireless device gets ready for the receptions. This situation may be referred to as a too-early OD-SSB transmission.

In a second scenario (not shown in FIG. 39), if the value of T is determined such that the wireless device gets ready for receiving OD-SSBs earlier than point A, the wireless device may waste power consumption for monitoring OD-SSBs, since the base station has not started the OD-SSB transmissions yet. This situation may be referred to as a too-later OD-SSB transmission.

Existing technologies may increase power consumption of a wireless device and/or a base station and/or SCell activation delay when OD-SSBs are triggered on an SCell.

Embodiments of the present disclosure are related to an approach for solving the problems described above. These and other features of the present disclosure are described further below.

One or more examples embodiments may comprise receiving, by a wireless device, at a first time interval and via an active BWP of a serving cell, a command triggering transmissions of OD-SSBs via a SCell. The wireless device determines a number of symbols/slots as a (minimum) time gap (or a time threshold) between the reception or an application of the command and a starting of receiving at least one of the OD-SSBs via the SCell, wherein the number is determined based on at least one of a SCS of the OD-SSBs (or AO-SSBs if configured) of the SCell, a SCS of a BWP of the SCell on which the OD-SSBs are transmitted, a SCS of the active BWP of the serving cell, a processing capability of the wireless device, a frequency range of the SCell, and/or whether the SCell is in a deactivated state. The wireless device receives, starting at a third time interval occurring at the time gap after the first time interval, the at least one of the OD-SSBs of the SCell.

One or more example embodiments comprise receiving, by a wireless device, one or more RRC messages comprising configuration parameters of OD-SSBs of a SCell. The wireless device receives, at a first time interval and an active BWP of a serving cell, a command triggering transmissions of the OD-SSBs via the SCell. The wireless device determines a number of symbols/-slots as a (minimum) time gap (or a time threshold) between the reception of the command and a starting of receiving at least one of the OD-SSBs via the SCell, wherein the number is determined based on at least one of: a SCS of the OD-SSBs (or AO-SSBs if configured) of the SCell, a SCS of a BWP of the SCell on which the OD-SSBs are transmitted, a SCS of the active BWP of the serving cell, a processing capability of the wireless device, a frequency range of the SCell, and/or whether the SCell is in a deactivated state. The wireless device receives, starting at a third time interval occurring at the time gap after the first time interval, the at least one of the OD-SSBs.

One or more example embodiments comprise receiving, by a wireless device, one or more RRC messages comprising configuration parameters of OD-SSBs of a SCell. The wireless device receives, at a first time interval, a command indicating transmissions, from a second time interval, of the OD-SSBs of the SCell. The wireless device determines a number of symbols/slots as a (minimum) time gap (or a time threshold) for a starting of receiving at least one of the OD-SSBs via the SCell, wherein the number is determined based on at least one of: a first SCS of the OD-SSBs (or AO-SSBs if configured) of the SCell, a second SCS of a BWP of the SCell on which the OD-SSBs are transmitted, a third SCS of an active BWP of an active cell on which the command is received, a fourth SCS of an uplink BWP of an active cell on which a HARQ-ACK feedback, corresponding to the command, is transmitted, a processing capability of the wireless device, a frequency range of the SCell, and/or whether the SCell is in a deactivated state. The wireless device receives, starting at a third time interval, the at least one of the OD-SSBs, wherein the third time interval occurs at the latest of: the number of symbols/-slots after the first time interval, and the second time interval.

In an example embodiment, the wireless device determines that a symbol/slot format/length of each of the number of symbols/slots of the determined time gap (or threshold) is for/based on (or corresponds to) at least one of: a first SCS of the OD-SSBs (or AO-SSBs if configured) of the SCell, a second SCS of a BWP of the SCell on which the OD-SSBs are transmitted, a third SCS of an active BWP of an active cell on which the command is received, and/or a fourth SCS of an uplink BWP of an active cell on which a HARQ-ACK feedback, corresponding to the command, is transmitted,

In an example embodiment, the wireless device determines that a symbol/slot format/length of each of the number of symbols/slots of the determined time gap is for/based on (or corresponds to) the minimum value of: a first SCS of the OD-SSBs (or AO-SSBs if configured) of the SCell, a second SCS of a BWP of the SCell on which the OD-SSBs are transmitted, a third SCS of an active BWP of an active cell on which the command is received, and/or a fourth SCS of an uplink BWP of an active cell on which a HARQ-ACK feedback, corresponding to the command, is transmitted,

In an example embodiment, the wireless device determines that a symbol/slot format/length of each of the number of symbols/slots of the determined time gap is for/based on (or corresponds to) the maximum value of: a first SCS of the OD-SSBs (or AO-SSBs if configured) of the SCell, a second SCS of a BWP of the SCell on which the OD-SSBs are transmitted, a third SCS of an active BWP of an active cell on which the command is received, and/or a fourth SCS of an uplink BWP of an active cell on which a HARQ-ACK feedback, corresponding to the command, is transmitted,

Based on the one or more example embodiments, the wireless device and/or the wireless device align on a determination of the time gap between an OD-SSB trigger/command and a starting point of receptions of OD-SSBs on a SCell,

In an example, the time gap may be determined as different numbers of symbols/slots for different values of a numerology/SCS of a BWP of the SCell, the OD-SSBs (or AO-SSBs if configured), an activated BWP of a serving cell on which the OD-SSB trigger is transmitted, etc. For example, a larger SCS value may require more symbols/slots in the time gap, for the wireless device processing, than a smaller SCS.

In an example, the time gap may be determined as different numbers of symbols/slots for different wireless device process capabilities, etc. For example, a lower wireless device processing capability (e.g., if the wireless device supports a UE processing capability type 1) may require more symbols/slots in the time gap, for a higher wireless device processing capability (e.g., if the wireless device supports a UE processing capability type 2).

In an example, the time gap may be determined as different numbers of symbols/slots for different frequency ranges (FR1 or FR2). For example, OD-SSB reception, upon triggered, on a SCell deployed in FR2 may require more symbols/slots in the time gap, for a SCell deployed in FR1.

In an example, the time gap may be determined as different numbers of symbols/slots for a SCell in activated state and in deactivated state. For example, OD-SSB reception, upon triggered, on a SCell in the deactivated state may require more symbols/slots in the time gap, for a SCell in the activated state.

In an example, the base station and/or the wireless device may determine that the time gap is smaller/shorter than the existing SCell activation delay (determined for an unknow SCell or a known SCell), e.g., based on L1 CSI report no being required for OD-SSB receptions upon triggered on the SCell in the deactivated state.

In an example, the base station and/or the wireless device may determine that the time gap is greater/longer than the existing TCI (transmission configuration indication) state indication/update application time, PDCCH skipping indication application time, SSSG (search space set group) switching application time, DCP (DCI with CRC scrambled by PS-RNTI for DRX based UE power saving operation) application time, etc., based on the OD-SSB receptions being performed on a SCell in a deactivated state.

Example embodiments may align the base station and the wireless device regarding when the OD-SSBs may be transmitted on a SCell by the base station and when the OD-SSBs may be measured/monitored on the SCell by the wireless device upon triggered by an OD-SSB command from another serving cell. Example embodiments may improve power consumption of the wireless device and/or the base station and/or reduce SCell activation delay of the SCell.

One or more example embodiments comprise receiving, by a wireless device from a base station one or more first RRC messages comprising a request of a wireless device radio access capability information. The wireless device transmits to the base station, one or more second RRC messages comprising the wireless device radio access capability information,

In an example embodiment, the one or more second RRC messages comprise one or more first parameters indicating that the wireless device supports a triggering, by a command, of transmissions of OD-SSBs via a SCell and/or one or more second parameters indicating a (minimum) time gap, supported by the wireless device, between the reception of the command and a starting of receptions of the OD-SSBs.

In an example embodiment, the one or more first parameters are per frequency range indicated, wherein the one or more first parameters comprise: a first parameter indicating that the wireless device supports a triggering, by a command, of transmissions of OD-SSBs via one or more SCells operating in a first frequency range (FR1) and a second parameter indicating that the wireless device supports a triggering, by a command, of transmissions of OD-SSBs via one or more SCells operating in a second frequency range (FR2).

In an example embodiment, the one or more first parameters are indicated separately for a SCell in an activated state and the SCell in a deactivated state, wherein the one or more second parameters comprise: a first parameter indicating that the wireless device supports a triggering, by a command, of transmissions of OD-SSBs via a SCell in an activated state and a second parameter indicating that the wireless device supports a triggering, by a command, of transmissions of OD-SSBs via the SCell in a deactivated state.

In an example embodiment, the one or more second parameters are per frequency range indicated, wherein the one or more second parameters comprise: a first parameter indicating a first (minimum) time gap, supported by the wireless device, between the reception of the command and a starting of receptions of the OD-SSBs on a SCell operating in a first frequency range (FR1), and/or a second parameter indicating a second (minimum) time gap, supported by the wireless device, between the reception of the command and a starting of receptions of the OD-SSBs on a SCell operating in a second frequency range (FR2).

In an example embodiment, the one or more second parameters are indicated separately for a SCell in an activated state and the SCell in a deactivated state, wherein the one or more second parameters comprise: a first parameter indicating a first (minimum) time gap, supported by the wireless device, between the reception of the command and a starting of receptions of the OD-SSBs on a SCell in an activated state, and/or a second parameter indicating a second minimum time gap, supported by the wireless device, between the reception of the command and a starting of receptions of the OD-SSBs on a SCell in a deactivated state.

Example embodiments, based on wireless device capability report indicating whether OD-SSBs are supported by the wireless device and/or the minimum/-supported time gap between an OD-SSB trigger and a starting of OD-SSB reception on a SCell, may align the base station and the wireless device regarding when the OD-SSBs may be transmitted on the SCell by the base station and when the OD-SSBs may be measured/monitored on the SCell by the wireless device upon triggered by an OD-SSB command from another serving cell. Example embodiments may allow/enable the base station to accordingly configure a proper starting point of the OD-SSB transmissions on the SCell based on the wireless device's report/indication. Example embodiments may improve power consumption of the wireless device and/or the base station and/or reduce SCell activation delay of the SCell.

FIG. 40 illustrates an example as per an aspect of an embodiment of the present disclosure,

In the example of FIG. 40, a wireless device may be configured by a base station with multiple cells comprising a PCell and a plurality of SCells for CA operation,

In an example, the wireless device may receive from the base station one or more RRC messages comprising configuration parameters of the PCell and the plurality of SCells, e.g., based on examples of FIG. 10A, FIG. 10B and/or FIG. 22.

In an example, the one or more RRC messages may comprise configuration parameters of OD-SSBs of a SCell (e.g., Cell 2). The OD-SSBs may be implemented based on examples of FIG. 37 and/or FIG. 38. The SCell may be configured with AO-SSBs or may not be configured with AO-SSBs according to FIG. 37.

In the example of FIG. 40, the base station may transmit to the wireless device, at T1, an OD-SSB trigger via a PCell or an activated SCell (e.g., Cell 1 in FIG. 40), indicating transmission of OD-SSBs via the SCell (which has not been activated and will be activated later) (e.g., Cell 2 in FIG. 40). The OD-SSB trigger may be implemented based on examples of FIG. 37 and/or FIG. 38.

In the example of FIG. 40, when multiple BWPs are configured on Cell 1, the OD-SSB trigger may be transmitted in a first BWP (BWP 1) of Cell 1, when BWP 1 is an activated BWP of Cell 1.

In an example, a BWP may be implemented based on examples of FIG. 22.

In an example, BWP 1 may be associated with a first subcarrier spacing (SCS) (SCS 1). A SCS may be implemented based on examples of FIG. 7.

In the example of FIG. 40, when multiple BWPs are configured on Cell 2, the OD-SSBs may be configured on one of the multiple BWPs of Cell 2 (e.g., BWP 2 in FIG. 40).

In an example, BWP 2 may be same as an initial DL BWP, or a first active DL BWP of Cell 2.

In an example, BWP 2 may be same as a BWP of Cell 2 on which AO-SSBs are transmitted if A-SSBs are configured on Cell 2.

In an example, BWP 2 may be associated with a second SCS (SCS 2). SCS 2 of BWP 2 of Cell 2 may be different from SCS 1 of BWP 1 of Cell 1.

In an example, the wireless device may not synchronize (in time domain and/or in frequency domain, on downlink and/or on uplink) with BWP 2/Cell 2 after Cell 2 is configured by the base station, and before Cell 2 is activated upon receiving a SCell activation command (e.g., at T5 of FIG. 40).

In the example of FIG. 40, the wireless device may transmit, at T2, HARQ-ACK feedback/information corresponding to the OD-SSB trigger. The wireless device may transmit HARQ-ACK feedback/information via the PCell or the activated SCell, based on examples of FIG. 38.

In the example of FIG. 40, the wireless device may not transmit the HARQ-ACK feedback/information for the OD-SSB trigger based on examples of FIG. 38.

In the example of FIG. 40, the wireless device, based on receiving the OD-SSB trigger, determines an OD-SSB transmission time duration (from time instance A to time instance B) during which the OD-SSBs are transmitted via BWP 2 of Cell 2.

In the example of FIG. 40, the wireless device may determine the starting point (A) for starting to receive the OD-SSBs via Cell 2 after the base station transmits the OD-SSB trigger or after the wireless device transmits the HARQ-ACK feedback.

In the example of FIG. 40, the wireless device starts to receive/monitor/detect the OD-SSBs on Cell 2 at a time gap after T1 where the wireless device receives the OD-SSB trigger, where the time gap is equal to or greater than a time threshold,

In an example embodiment, the time threshold may be determined based on at least one of: a SCS of OD-SSBs (or AO-SSBs if configured) of Cell 2, a SCS of BWP 2 of Cell 2 on which the OD-SSBs are received by the wireless device and/or transmitted by the base station, a SCS of BWP 1 of Cell 1 on which the OD-SSB trigger is received, a wireless device process capability of the wireless device, a frequency range of Cell 2 (and/or Cell 1), and/or an activation status (activated or deactivated) of Cell 2.

In an example embodiment, the wireless device and/or the base station may determine the time threshold based on a SCS of OD-SSBs (or AO-SSBs if configured) of Cell 2. The time threshold may be per SCS configured/indicated/predefined/preconfigured according to the SCS of the OD-SSBs (or AO-SSBs if configured) of Cell 2 (e.g., based on examples of FIG. 41 which will be described later in this specification). In an example, a longer time threshold may be configured with the larger SCS value. Using the SCS of OD-SSBs (or AO-SSBs if configured) of Cell 2 for the time threshold determination may be beneficial for fast detection of the OD-SSBs when the wireless device has synchronized with the base station on Cell 2. Based on example embodiments, the base station and/or the wireless device may align on when the OD-SSBs are monitored by the wireless device.

In an example embodiment, the wireless device may determine the time threshold based on a SCS of BWP 2 of Cell 2 on which the OD-SSBs are received by the wireless device and/or transmitted by the base station. The time threshold may be per SCS configured/indicated/predefined/preconfigured according to the SCS of BWP 2 of Cell 2 (e.g., based on examples of FIG. 41 which will be described later in this specification). In an example, a longer time threshold may be configured with the larger SCS value. The SCS of BWP 2 may not be same as the SCS of the OD-SSBs. Using the SCS of BWP 2 for determining the time threshold may be beneficial for fast detection of the OD-SSBs when the wireless device has synchronized with the base station on Cell 2 (or BWP 2 of Cell 2). Example embodiments may align the base station and the wireless device regarding when the OD-SSBs are monitored by the wireless device on BWP 2 of Cell 2.

In an example embodiment, the wireless device may determine the time threshold based on a SCS of BWP 1 of Cell 1 on which the OD-SSB trigger is received. The time threshold may be per SCS configured/indicated/predefined/preconfigured according to the SCS of BWP 1 of Cell 1 (e.g., based on examples of FIG. 41 which will be described later in this specification). In an example, a longer time threshold may be configured with the larger SCS value. The SCS of BWP 1 may not be same as the SCS of the OD-SSBs of BWP 2 or the SCS of BWP 2 of Cell 2. Using the SCS of BWP 1 for determining the time threshold may be beneficial for accurately locating the starting of OD-SSB transmission/reception when the wireless device has not yet synchronized with Cell 2 (or BWP 2 of Cell 2) and when the wireless device has synchronized with Cell 1 (or BWP 1 of Cell 1). Example embodiments may align the base station and the wireless device regarding when the OD-SSBs are monitored by the wireless device on BWP2 of Cell 2.

In an example embodiment, the wireless device may determine the time threshold based on a wireless device process capability of the wireless device. The time threshold may be per wireless device process capability configured/indicated/predefined/preconfigured according to the wireless device process capability of the wireless device. In an example, a longer time threshold may be configured with a lower wireless device process capability (e.g., wireless device process capability Type 1) than a higher wireless device processing capability (e.g., wireless device process capability Type 2). Using wireless device process capability for determining the time threshold may be beneficial for locating the starting of OD-SSB transmission/reception according to the wireless device's process capability. Example embodiments may align the base station and wireless devices regarding when the OD-SSBs are monitored by the wireless devices on BWP2 of Cell 2 considering different wireless device process capabilities for different wireless devices.

In an example embodiment, the wireless device may determine the time threshold based on a frequency range of Cell 2 (and/or Cell 1). The time threshold may be per frequency range configured/indicated/predefined/preconfigured according to a frequency range of Cell 2 (and/or Cell 1). In an example, a shorter time threshold may be configured with a lower frequency range (e.g., FR1) than a higher frequency range (e.g., FR2). Using a frequency range of a serving cell associated with OD-SSB transmissions for determining the time threshold may be beneficial for locating the starting of OD-SSB transmission/reception according to the wireless device's process time for different frequency ranges. Example embodiments may align the base station and wireless devices regarding when the OD-SSBs are monitored by the wireless devices on BWP2 of Cell 2 considering different frequency ranges for different serving cells.

In an example embodiment, the wireless device may determine the time threshold based on an activation status of Cell 2. The time threshold may be per SCell activation status configured/indicated/predefined/preconfigured according to an activation status of Cell 2. In an example, a shorter time threshold may be configured with the SCell in activated state than the SCell in a deactivated state. Using an activation status of a serving cell associated with OD-SSB transmissions for determining the time threshold may be beneficial for locating the starting of OD-SSB transmission/reception according to the wireless device's process time for different SCell activation status. Example embodiments may align the base station and wireless devices regarding when the OD-SSBs are monitored by the wireless devices on BWP2 of Cell 2 considering different activation status for different serving cells.

In an example embodiment, the wireless device determines the time threshold as a number of symbols/-slots.

In an example embodiment, the wireless device determines that a symbol/slot format/length of each of the number of symbols/slots of the time threshold is for/-based on (or corresponds to) at least one of: a first SCS of the OD-SSBs (or AO-SSBs if configured) of Cell 2, a second SCS of BWP 2 of Cell 2 on which the OD-SSBs are transmitted, a third SCS of BWP 1 of Cell 1 on which the OD-SSB trigger is received, and/or a fourth SCS of an uplink BWP of an active cell on which a HARQ-ACK feedback, corresponding to the OD-SSB triggered, is transmitted by the wireless device.

In an example embodiment, the wireless device determines that a symbol/slot format/length of each of the number of symbols/slots of the time threshold is for/-based on (or corresponds to) the minimum value of: a first SCS of the OD-SSBs (or AO-SSBs if configured) of Cell 2, a second SCS of BWP 2 of Cell 2 on which the OD-SSBs are transmitted, a third SCS of BWP 1 of Cell 1 on which the OD-SSB trigger is received, and/or a fourth SCS of an uplink BWP of an active cell on which a HARQ-ACK feedback, corresponding to the OD-SSB trigger, is transmitted by the wireless device.

In an example embodiment, the wireless device determines that a symbol/slot format/length of each of the number of symbols/slots of the time threshold is for/-based on (or corresponds to) the maximum value of: a first SCS of the OD-SSBs (or AO-SSBs if configured) of Cell 2, a second SCS of BWP 2 of Cell 2 on which the OD-SSBs are transmitted, a third SCS of BWP 1 of Cell 1 on which the OD-SSB trigger is received, and/or a fourth SCS of an uplink BWP of an active cell on which a HARQ-ACK feedback, corresponding to the OD-SSB triggered, is transmitted by the wireless device.

In the example of FIG. 40, based on the determined time gap (or the time threshold), the wireless device may start monitoring/detecting/measuring the OD-SSBs in a slot (e.g., T3 in FIG. 40) occurring at least the time gap after T1 when the wireless device receives the OD-SSB trigger.

In an example, the wireless device does not monitor/detect/measure the OD-SSBs on BWP 2 of Cell 2 before T3 or does not consider that OD-SSBs are available or transmitted by the base station before T3.

In an example, the time gap is counted or starts from the next slot of a slot on which the wireless device receives the OD-SSB trigger.

In the example of FIG. 40, based on receiving/-monitoring/measuring the OD-SSBs from T3, the wireless device may obtain downlink synchronization with the base station on Cell 2 and L3 beam/cell measurement of Cell 2. The wireless device may transmit an L3 report based on the L3 beam/cell measurement of Cell 2.

In the example of FIG. 40, the base station may transmit a SCell activation command, at T5, indicating an activation of Cell 2.

In an example, the wireless device, based on receiving the SCell activation command, may perform L1 CSI measurement/report for Cell 2 according to examples of FIG. 37.

In an example, the wireless device may complete the SCell activation procedure based on transmitting, at T6 as shown in FIG. 40, a valid L1 CSI report for Cell 2 according to examples of FIG. 37.

In the example of FIG. 40, the wireless device, after completing the SCell activation procedure, may start to use Cell 2 to communicate with the base station for uplink transmissions and/or downlink receptions (Tx/Rx).

Based on the one or more example embodiments of FIG. 40, the base station and/or the wireless device align on a determination of the time gap (or a time threshold) between an OD-SSB trigger/command and a starting point of receptions of OD-SSBs on a SCell.

In an example, the base station and/or the wireless device may determine that the time gap is smaller/shorter than the existing SCell activation delay (determined for an unknow SCell or a known SCell), e.g., based on L1 CSI report no being required for OD-SSB receptions upon triggered on the SCell in the deactivated state.

In an example, the base station and/or the wireless device may determine that the time gap is greater/longer than the existing TCI (transmission configuration indication) state indication/update application time, PDCCH skipping indication application time, SSSG (search space set group) switching application time, DCP (DCI with CRC scrambled by PS-RNTI for DRX based UE power saving operation) application time, etc.,

based on the OD-SSB receptions being performed on a SCell in a deactivated state.

Example embodiments of FIG. 40 may be modified to consider an uplink transmission time for HARQ-ACK information corresponding to the OD-SSB trigger. In an example, the time gap (or the time threshold) may be applied, not from T1 when the wireless device receives the OD-SSB trigger, from T2 when the wireless device transmits or completes transmission of the HARQ-ACK corresponding to the OD-SSB trigger. In this case, the wireless device starts to monitor/measure/detect the OD-SSBs at a slot occurring the time threshold after T2. The time threshold may be implemented based on the examples of FIG. 40.

Example embodiments may align the base station and the wireless device regarding when the OD-SSBs may be transmitted on a SCell by the base station and when the OD-SSBs may be measured/monitored on the SCell by the wireless device upon triggered by an OD-SSB command from another serving cell. Example embodiments may improve power consumption of the wireless device and/or the base station and/or reduce SCell activation delay of the SCell.

In an example embodiment, the minimum time gap (or the time threshold) as described in FIG. 40 may be based on a wireless device's indication (e.g., the wireless device capability information).

In an example embodiment, a wireless device may receive from a base station one or more first RRC messages comprising a request of a wireless device radio access capability information.

In an example embodiment, the wireless device may transmit to the base station, one or more second RRC messages comprising the wireless device radio access capability information.

In an example embodiment, the one or more second RRC messages comprise one or more first parameters indicating that the wireless device supports a triggering, by a command, of transmissions of OD-SSBs via a SCell and/or one or more second parameters indicating a (minimum) time gap, supported by the wireless device, between the reception of the command and a starting of receptions of the OD-SSBs.

In an example embodiment, the one or more first parameters are per frequency range indicated, wherein the one or more first parameters comprise: a parameter indicating that the wireless device supports a triggering, by a command, of transmissions of OD-SSBs via one or more SCells operating in a first frequency range (FR1) and a parameter indicating that the wireless device supports a triggering, by a command, of transmissions of OD-SSBs via one or more SCells operating in a second frequency range (FR2).

In an example embodiment, the one or more first parameters are indicated separately for a SCell in an activated state and the SCell in a deactivated state, wherein the one or more second parameters comprise: a parameter indicating that the wireless device supports a triggering, by a command, of transmissions of OD-SSBs via a SCell in an activated state and a parameter indicating that the wireless device supports a triggering, by a command, of transmissions of OD-SSBs via the SCell in a deactivated state.

In an example embodiment, the one or more second parameters are per frequency range indicated, wherein the one or more second parameters comprise: a parameter indicating a first (minimum) time gap, supported by the wireless device, between the reception of the command and a starting of receptions of the OD-SSBs on a SCell operating in a first frequency range (FR1), and/or a parameter indicating a second (minimum) time gap, supported by the wireless device, between the reception of the command and a starting of receptions of the OD-SSBs on a SCell operating in a second frequency range (FR2).

In an example embodiment, the one or more second parameters are indicated separately for a SCell in an activated state and the SCell in a deactivated state, wherein the one or more second parameters comprise: a parameter indicating a first (minimum) time gap, supported by the wireless device, between the reception of the command and a starting of receptions of the OD-SSBs on a SCell in an activated state, and/or a parameter indicating a second minimum time gap, supported by the wireless device, between the reception of the command and a starting of receptions of the OD-SSBs on a SCell in a deactivated state.

In an example embodiment, the one or more second RRC messages comprise one or more third parameters indicating a maximum number of SCells on which the wireless device supports triggering, by one or more commands (OD-SSB triggers), of (simultaneous or parallel) transmissions of OD-SSBs on the SCells. The one or more third parameters may be indicated per frequency band or per frequency range. The wireless device does not expect to receive the one or more commands indicating/triggering OD-SSB transmissions on SCells with a number more than the indicated maximum number. The base station does not transmit the one or more commands indicating/triggering OD-SSB transmissions on SCells with a number more than the indicated maximum number. Example embodiments may reduce implementation complexity of the wireless device for supporting the OD-SSB transmission on SCells.

Example embodiments, based on wireless device capability report indicating whether OD-SSBs are supported by the wireless device and/or the minimum/-supported time gap between an OD-SSB trigger and a starting of OD-SSB reception on a SCell, may align the base station and the wireless device regarding when the OD-SSBs may be transmitted on the SCell by the base station and when the OD-SSBs may be measured/monitored on the SCell by the wireless device upon triggered by an OD-SSB command from another serving cell. Example embodiments may allow/enable the base station to accordingly configure a proper starting point of the OD-SSB transmissions on the SCell based on the wireless device's report/indication. Example embodiments may improve power consumption of the wireless device and/or the base station and/or reduce SCell activation delay of the SCell.

In an example embodiment, the wireless device may not expect to receive (or may not receive), within the minimum/supported time gap, two continuous OD-SSB triggers (e.g., DCIs/MAC CEs) triggering OD-SSBs (with the same SSB configuration or with different SSB configurations) on the same SCell. The base station may not transmit, within the minimum/supported time gap, two continuous OD-SSB triggers (e.g., DCIs/MAC CEs) triggering OD-SSBs (with the same SSB configuration or with different SSB configurations) on the same SCell. Example embodiments may reduce implementation complexity of the wireless device and/or the base station.

FIG. 41 illustrates an example as per an aspect of an embodiment of the present disclosure, e.g., based on example embodiments of FIG. 40.

In the example of FIG. 41, the wireless device determines a minimum time gap (or a time threshold) for receiving OD-SSBs of a SCell upon receiving an OD-SSB trigger on another serving cell. The minimum time gap may be per SCS determined/indicated/configured.

In the example of FIG. 41, the wireless device may determine G1 as the minimum time gap for receiving OD-SSBs of a SCell upon receiving an OD-SSB trigger on another serving cell when the numerology (corresponding to a SCS) (*u*) is equal to 0. The numerology/SCS may be the one of BWP 1 of Cell 1, or BWP 2 of Cell 2, or the one of OD-SSBs of Cell 2, based on examples of FIG. 40.

Similarly, the wireless device determines G2 for *u* equal to 1, G3 for u equal to 2, etc.

In an example, the value of G1, G2, G3... may be predefined/preconfigured.

In an example, the value of G1, G2, G3... may be predefined/preconfigured per wireless device processing capability.

In an example, the value of G1, G2, G3... may be predefined/preconfigured per frequency range.

In an example, the value of G1, G2, G3 may be in unit of symbol/slot or in unit of millisecond.

In an example, the value of G2 may be greater than the value of G1.

In an example, the value of G3 may be greater than the value of G1.

In an example, the value of G1, G2, G3 may be set to one of {10, 15, 20, 25, 30, 35, ...,}.

Based on examples of FIG. 41, the wireless device and the base station align on when the wireless device starts OD-SSB monitoring/measurement/detection upon the OD-SSBs triggered.

Based on example embodiments of FIG. 40 and/or FIG. 41, a wireless device receives from a base station, at a first time interval and via an active BWP of a serving cell, a command triggering transmissions of OD-SSBs via a SCell. The wireless device determines a number of symbols/slots as a time gap between the reception of the command and a starting of receiving at least one of the on-demand SSBs via the SCell. The number is determined based on at least one of: a SCS of the OD-SSBs (or AO-SSBs if configured) of the SCell, a SCS of a BWP of the SCell on which the OD-SSBs are transmitted, a SCS of the active BWP of the serving cell, a processing capability of the wireless device, a frequency range of the SCell, and/or whether the SCell is in a deactivated state. The wireless device receives, starting at a third time interval occurring at the time gap after the first time interval, the at least one of the on-demand SSBs on the SCell.

Based on example embodiments of FIG. 40 and/or FIG. 41, a wireless device receives from a base station one or more RRC messages comprising configuration parameters of OD-SSBs of a SCell. The wireless device receives at a first time interval and via an active BWP of a serving cell, a command triggering transmissions of the on-demand SSBs via the SCell. The wireless device determines a number of symbols/slots as a time gap between the reception of the command and a starting of receiving at least one of the on-demand SSBs via the SCell. The number is determined based on at least one of: a SCS of the OD-SSBs (or AO-SSBs if configured) of the SCell, a SCS of a BWP of the SCell on which the OD-SSBs are transmitted, a SCS of the active BWP of the serving cell, a processing capability of the wireless device, a frequency range of the SCell, and/or whether the SCell is in a deactivated state. The wireless device receives, starting at a third time interval occurring at the time gap after the first time interval, the at least one of the on-demand SSBs on the SCell.

Based on example embodiments of FIG. 40 and/or FIG. 41, a wireless device receives from a base station, one or more RRC messages comprising configuration parameters of OD-SSBs of a SCell. The wireless device receives at a first time interval, a command triggering transmissions, from a second time interval, of the on-demand SSBs via the SCell. The wireless device determines a number of symbols/slots as a time gap between the reception of the command and a starting of receiving at least one of the on-demand SSBs via the SCell. The number is determined based on at least one of: a first SCS of the OD-SSBs (or AO-SSBs if configured) of the SCell, a second SCS of a BWP of the SCell on which the OD-SSBs are transmitted, a third SCS of an active BWP of an active cell on which the command is received, a fourth SCS of an uplink BWP of an active cell on which a HARQ-ACK feedback, corresponding to the command, is transmitted, a processing capability of the wireless device, a frequency range of the SCell, and/or whether the SCell is in a deactivated state. The wireless device receives, starting at a third time interval and via the SCell, the at least one of the OD-SSBs, wherein the third time interval occurring at the latest of: the number of symbols/slots after the first time interval, and the second time interval.

According to an example embodiment, the first SCS is configured for the OD-SSBs in a serving cell configuration of the SCell.

According to an example embodiment, the second SCS is configured for the BWP of the SCell in a BW configuration of the BWP of the SCell.

According to an example embodiment, the time gap is determined in unit of symbol/slot, where the symbol/slot is according to/based on for at least one of: a first SCS of the OD-SSBs of the SCell, a second SCS of a BWP of the SCell on which the OD-SSBs are transmitted, a third SCS of an active BWP of an active cell on which the command is received and/or a fourth SCS of an uplink BWP of an active cell on which a HARQ-ACK feedback, corresponding to the command, is transmitted.

According to an example embodiment, the time gap is in unit of symbol/slot, where the symbol/slot is according to/based on a minimum value of: a first SCS of the OD-SSBs (or AO-SSBs if configured) of the SCell, a second SCS of a BWP of the SCell on which the OD-SSBs are transmitted, a third SCS of an active BWP of an active cell on which the command is received and/or a fourth SCS of an uplink BWP of an active cell on which a HARQ-ACK feedback, corresponding to the command, is transmitted.

According to an example embodiment, the time gap is in unit of symbol/slot, where the symbol/slot is according to/based on a maximum value of: a first SCS of the OD-SSBs (or AO-SSBs if configured) of the SCell, a second SCS of a BWP of the SCell on which the OD-SSBs are transmitted, a third SCS of an active BWP of an active cell on which the command is received and/or a fourth SCS of an uplink BWP of an active cell on which a HARQ-ACK feedback, corresponding to the command, is transmitted.

Based on example embodiments of FIG. 40 and/or FIG. 41, a wireless device receives from a base station one or more first RRC messages comprising a request of or for a wireless device radio access capability information. The wireless device transmits to the base station, one or more second RRC messages comprising the wireless device radio access capability information. The one or more second RRC messages comprise one or more first parameters indicating that the wireless device supports a triggering, by a command, of transmissions of on-demand SSBs via a SCell and/or one or more second parameters indicating a minimum time gap, supported by the wireless device, between the reception of the command and a starting of receptions of the on-demand SSBs.

According to an example embodiment, the one or more first parameters are per frequency range indicated. The one or more first parameters comprise a first parameter indicating that the wireless device supports a triggering, by a command, of transmissions of on-demand SSBs via a SCell operating in a first frequency range. The one or more first parameters comprise a second parameter indicating that the wireless device supports a triggering, by a command, of transmissions of on-demand SSBs via a SCell operating in a second frequency range. The first frequency range is different from the second frequency range. The first parameter and the second parameter are indicated separately and/or independently.

According to an example embodiment, the one or more first parameters are indicated separately for a SCell in an activated state and the SCell in a deactivated state. The one or more second parameters comprise a first parameter indicating that the wireless device supports a triggering, by a command, of transmissions of on-demand SSBs via a SCell in an activated state. The one or more second parameters comprise a second parameter indicating the wireless device supports a triggering, by a command, of transmissions of on-demand SSBs via the SCell in a deactivated state. The first parameter and the second parameter are indicated separately and/or independently.

According to an example embodiment, the one or more second parameters are per frequency range indicated. The one or more second parameters comprise a first parameter indicating a first minimum time gap, supported by the wireless device, between the reception of the command and a starting of receptions of the on-demand SSBs on a SCell operating in a first frequency range. The one or more second parameters comprise a second parameter indicating a second minimum time gap, supported by the wireless device, between the reception of the command and a starting of receptions of the on-demand SSBs on a SCell operating in a second frequency range. The first frequency range is different from the second frequency range. The first parameter and the second parameter are indicated separately and/or independently.

According to an example embodiment, the one or more second parameters are indicated separately for a SCell in an activated state and the SCell in a deactivated state. The one or more second parameters comprise a first parameter indicating a first minimum time gap, supported by the wireless device, between the reception of the command and a starting of receptions of the on-demand SSBs on a SCell in an activated state. The one or more second parameters comprise a second parameter indicating a second minimum time gap, supported by the wireless device, between the reception of the command and a starting of receptions of the on-demand SSBs on a SCell in a deactivated state. The first parameter and the second parameter are indicated separately and/or independently.

In existing technologies of OD-SSB transmission, a base station may transmit an OD-SSB trigger (e.g., a DCI/MAC CE) via a serving cell (e.g., a PCell or an activated SCell) indicating a time duration on which OD-SSBs are transmitted on a SCell for a wireless device as shown in FIG. 38. In general, the base station and the wireless device need alignment on how long the time duration is, specifically the alignment on what's the unit of the time duration if the OD-SSB trigger indicates a number, e.g., in unit of millisecond, symbol, slot, subframe, frame, etc.

In an example, the unit of the time duration indicated in the OD-SSB trigger may be millisecond. However, in this case, the number of bits used for indicating an actual value in millisecond may be large, since the actual value may range from a fraction of a millisecond (e.g., 0.125 millisecond) to hundreds/thousands of milliseconds (e.g., 100 milliseconds, 1000 milliseconds).

In an example, the unit of the time duration indicated in the OD-SSB trigger may be slot. However, given that different slot formats (corresponding to different subcarrier spacings (SCSs) may be implemented on different cells, BWPs and/or OD-SSBs, there may be misalignment between the base station and the wireless device regarding which slot format is the reference slot format for determining the time duration if the time duration is indicated in unit of slot.

FIG. 42 shows an example issue of OD-SSB transmission on a SCell.

In the example of FIG. 42, BWP 1/Cell 1 with SCS 1 may be the BWP on which the base station transmits, and/or the wireless device receives, an OD-SSB trigger indicating an OD-SSB transmission time duration (from time instance A to time instance B) indicated as a number in unit of slot/subframe/frame. The base station may transmit the OD-SSBs on BWP2 of Cell 2 with SCS 2. Cell 2 may be in a deactivated state.

Based on existing technologies, the wireless device and/or the base station may not align on how long exactly the time duration is. In an example, the base station may use the SCS of BWP 1 of Cell 1 as the SCS reference for determining the time duration while the wireless device may use the SCS of BWP2 of Cell 2 as the SCS reference for determining the time duration. In another example, the base station may use the SCS of BWP 2 of Cell 2 as the SCS reference for determining the time duration while the wireless device may use the SCS of BWP 1 of Cell 1 as the SCS reference for determining the time duration. Misalignment between the base station and the wireless device regarding the length of the time duration may result in increased power consumption of the base station and/or the wireless device, increased SCell activation delay, etc.

In the example of FIG. 42, the wireless device has already synchronized with BWP 1 of Cell 1 in time domain, e.g., knowing where a symbol/slot/frame boundary of a system frame (e.g., slot 1, slot 2, ... of SFNx, ... SFN(x+1), etc.,) of BWP 1/Cell 1 is.

However, in the example of FIG. 42, the wireless device may not synchronize with BWP 2 of Cell 2 in time domain, e.g., when there is no AO-SSBs configured on Cell 2, or when the wireless device is not monitoring the AO-SSBs configured with large periodicity on Cell 2. In such a case, the wireless device does not know where a symbol/slot/frame boundary of a system frame of BWP 2/Cell 2 is.

In an example, the wireless device may complete synchronization with BWP 2 of Cell 2 when the wireless device detects at least one SSB on BWP 2 of Cell 2. The wireless device may obtain the symbol/slot/-frame boundary upon the synchronization is completed.

In an example, the wireless device may use the SCS of BWP2 of Cell 2 as the SCS reference to determine the time duration of OD-SSB transmissions on BWP 2 of Cell 2. However, given that the wireless device obtains the slot boundary after blindly monitoring the OD-SSBs and detecting at least one OD-SSB, it is uncertain when the wireless device obtains the slot boundary of BWP 2 of Cell 2. In this case, using SCS of BWP 2 of Cell 2 as the SCS reference for determining the time duration of OD-SSB transmission on BWP 2 of Cell 2 may cause misalignment between the base station and the wireless device since the base station does not know when the wireless device obtains the slot boundary of BWP 2 of Cell 2.

Existing technologies may increase power consumption of a wireless device and/or a base station and/or SCell activation delay when OD-SSBs are triggered on an SCell.

Embodiments of the present disclosure are related to an approach for solving the problems described above. These and other features of the present disclosure are described further below.

One or more example embodiments comprising a wireless device receiving from a base station and via a BWP, associated with a first SCS, of a first cell, a command indicating a number of slots for transmissions of OD-SSBs via a second cell associated with a second SCS, wherein the number of slots is for/according to/-based on the first SCS of the BWP.

One or more example embodiments comprising a wireless device receiving from a base station and via a first BWP, associated with a first SCS of a first cell, one or more OD-SSBs within a number of slots for/according to/based on a second SCS of a second BWP, of a second cell, on which a command triggering the one or more OD-SSBs is received.

One or more example embodiments comprising a wireless device receiving from a base station one or more RRC messages comprising configuration parameters of OD-SSBs of a first BWP of a first cell. The first BWP is associated with a first SCS. The OD-SSBs are associated with a second SCS. The wireless device receives, via a second BWP of a second cell, a command indicating a number of slots for transmissions of the OD-SSBs via the first cell in a deactivated state, wherein the number of slots is for/according to/based on a third SCS of the second BWP. The wireless device receives, via the first BWP of the first cell in the deactivated state, a first SSB of the OD-SSBs within the number of slots for/according to/based on the third SCS of the second BWP. The wireless device transmits an uplink signal based on receiving the first SSB.

One or more example embodiments comprising a wireless device receiving from a base station one or more RRC messages comprising configuration parameters of OD-SSBs of a first BWP of a first cell. The first BWP is associated with a first SCS. The OD-SSBs are associated with a second SCS. The wireless device receives, via a second BWP of a second cell, a command indicating a number of slots for transmissions of the OD-SSBs via the first cell in a deactivated state, wherein the second BWP is associated with a third SCS. The wireless device receives, via the first BWP of the first cell in the deactivated state, a first SSB of the OD-SSBs within the number of slots wherein a length of each slot is determined based on/according to/for the third SCS of the second BWP. The wireless device transmits an uplink signal based on receiving the first SSB.

FIG. 43 illustrates an example as per an aspect of an embodiment of the present disclosure.

In an example, a wireless device receives from a base station one or more RRC messages comprising configuration parameters of a PCell and a plurality of SCells, based on examples of FIG. 40. The PCell and the plurality of SCells may comprise Cell 1 and Cell 2 of FIG. 43.

In an example, the base station may transmit an OD-SSB trigger on Cell 1 for Cell 2 based on examples of FIG. 40.

In the example of FIG. 43, BWP 1/Cell 1 with SCS 1 may be the BWP on which the base station transmits, and/or the wireless device receives, the OD-SSB trigger indicating an OD-SSB transmission time duration (from time instance A to time instance B) indicated as a number in unit of slot/subframe/frame. The base station may transmit the OD-SSBs on BWP2 of Cell 2 with SCS 2. Cell 2 may be in a deactivated state.

In the example of FIG. 43, the wireless device has already synchronized with BWP 1 of Cell 1 in time domain, e.g., knowing where a symbol/slot/frame boundary of a system frame (e.g., slot 1, slot 2, ... of SFNx, ... SFN(x+1), etc.,) of BWP 1/Cell 1 is.

In the example of FIG. 43, the wireless device may not synchronize with BWP 2 of Cell 2 in time domain, e.g., when there are no AO-SSBs configured on Cell 2, or when the wireless device is not monitoring the AO-SSBs configured with large periodicity on Cell 2.

In the example of FIG. 43, the base station and the wireless device determine to use the SCS (SCS 1) of BWP 1 of Cell 1 as the SCS reference for determining the length of the OD-SSB transmission time duration.

In the example of FIG. 43, the base station and the wireless device determine to use the SCS (SCS 1) of BWP 1 of Cell 1 as the SCS reference for determining the starting point (e.g., time instance/point A) of the OD-SSB transmission time duration. The wireless device may determine the starting point of the OD-SSB transmission time duration based on example embodiments of FIG. 41.

In an example, when SCS 1 of BWP 1 of Cell 1 is 15KHz in which case a slot is 1 millisecond, SCS 2 of BWP 2 of Cell 2 is 60KHz in which case a slot is 0.25 millisecond, and the OD-SSB trigger indicates 20 slots as the OD-SB transmission time duration, the wireless device and the base station determine that the total length of 20 slots, by using SCS 1, is 20 milliseconds (=20*1), instead of 5 milliseconds (=20*0.25) by using SCS 2. The wireless device and the base station determine that the 20 slots of OD-SSB transmission time duration starts at a first symbol of a slot (e.g., slot 2 of BWP 1/Cell 1 in FIG. 43) of a frame on BWP 1 of Cell 1.

Based on the examples of FIG. 43, the wireless device and/or the base station, using the SCS of BWP 1 of Cell 1 to determine a location (starting point and/or length) of an OD-SSB transmission time duration of BWP 2 of Cell 2. Example embodiments may reduce power consumption of the wireless device and/or the base station and/or reduce SCell activation delay.

Otherwise, if the wireless device does not use the example embodiments, the wireless device may use the SCS 2 of BWP2 of Cell 2 as the SCS reference to determine the time duration of OD-SSB transmissions on BWP 2 of Cell 2. Before the wireless device completes downlink synchronization on BWP of Cell 2, the wireless device may not obtain/know the slot boundary of a slot of BWP 2 of Cell 2. It is uncertain when the wireless device obtains the slot boundary of BWP 2 of Cell 2. In this case, using SCS of BWP 2 of Cell 2 as the SCS reference for determining the time duration of OD-SSB transmission on BWP 2 of Cell 2 may cause misalignment between the base station and the wireless device since the base station does not know when the wireless device obtains the slot boundary of BWP 2 of Cell 2. Existing technologies may increase power consumption of the wireless device and the base station and/or increase SCell activation delay.

In the example of FIG. 43, based on the determined OD-SSB transmission time duration, the wireless device monitors/detects/measures the OD-SSBs (on possible OD-SSB transmission occasions) on BWP 2 of Cell 2, e.g., based on examples of FIG. 38.

In an example, when the OD-SSB transmission time duration ends, the wireless device stops monitoring/detecting/measuring the OD-SSBs on BWP 2 of Cell 2.

Based on examples of FIG. 43, FIG. 41 and/or FIG. 40, a wireless device receives from a base station and via a BWP, associated with a first SCS, of a first cell, a command indicating a number of slots for transmissions of OD-SSBs via a second cell associated with a second SCS, wherein the number of slots is for/according to/-based on the first SCS of the BWP.

According to an example embodiment, the wireless device receives one or more RRC messages comprising configuration parameters of OD-SSBs of a second BWP of the second cell. The configuration parameters indicate that the second BWP is associated with the second SCS. The configuration parameters indicate that the OD-SSBs are associated with a third SCS.

According to an example embodiment, the second SCS is configured for the second BWP of the second cell in a BWP configuration of the second BWP of the second cell. The second BWP may be a first activated downlink BWP or an initial downlink BWP of a plurality of BWPs of the second cell.

According to an example embodiment, the third SCS is configured for the OD-SSBs in a serving cell configuration of the second cell.

According to an example embodiment, the third SCS may be same as a SCS of AO-SSBs of the second cell.

According to an example embodiment, the third SCS may be different from a SCS of AO-SSBs of the second cell.

According to an example embodiment, the first SCS is configured for the BWP of the first cell in a BWP configuration of the BWP of the first cell.

According to an example embodiment, the wireless device receives, via the second BWP, associated with the second SCS, of the second cell, the OD-SSBs within the number of slots for/according to/based on the first SCS of the BWP of the first cell.

According to an example embodiment, the first cell is a PCell or an activated SCell.

According to an example embodiment, the second cell is an SCell in a deactivated state.

Based on examples of FIG. 43, FIG. 41 and/or FIG. 40, a wireless device receives from a base station and via a first BWP, associated with a first SCS of a first cell, one or more OD-SSBs within a number of slots for/according to/based on a second SCS of a second BWP, of a second cell, on which a command triggering the one or more OD-SSBs is received.

According to an example embodiment, the wireless device receives one or more RRC messages comprising configuration parameters of OD-SSBs of a first BWP of the first cell. The configuration parameters indicate that the first BWP is associated with the first SCS. The configuration parameters indicate that the OD-SSBs are associated with a third SCS.

According to an example embodiment, the first SCS is configured for the first BWP of the first cell in a BWP configuration of the first BWP of the first cell.

According to an example embodiment, the third SCS is configured for the OD-SSBs in a serving cell configuration of the first cell.

According to an example embodiment, the third SCS may be same as a SCS of AO-SSBs of the first cell.

According to an example embodiment, the third SCS may be different from a SCS of AO-SSBs of the first cell.

According to an example embodiment, the second SCS is configured for the second BWP of the second cell in a BWP configuration of the second BWP of the second cell.

According to an example embodiment, the second cell is a PCell or an activated SCell.

According to an example embodiment, the first cell is a SCell in a deactivated state.

Based on examples of FIG. 43, FIG. 41 and/or FIG. 40, a wireless device receives from a base station and via a first BWP, associated with a first SCS of a first cell, one or more OD-SSBs within a number of slots for/according to/based on at least one of: the first SCS of the first BWP, a second SCS of a second BWP, of a second cell, on which a command triggering the one or more OD-SSBs is received, and/or a third SCS associated with the OD-SSBs.

According to an example embodiment, the wireless device determines a time duration of the number of slots according to the second SCS of the second BWP of the second cell based on the first cell being in a deactivated state.

According to an example embodiment, the wireless device determines a time duration of the number of slots according to the second SCS of the second BWP of the second cell based on always-on SSBs not being configured for the first cell.

According to an example embodiment, the wireless device determines a time duration of the number of slots according to the first SCS of the first BWP of the first cell based on the first cell being in an activated state.

According to an example embodiment, the wireless device determines a time duration of the number of slots according to the third SCS of the OD-SSBs based on the first cell being in an activated state and the third SCS being configured for the OD-SSBs.

According to an example embodiment, the second cell is a PCell or an activated SCell.

According to an example embodiment, the first cell is a SCell.

Based on examples of FIG. 43, FIG. 41 and/or FIG. 40, a wireless device receives from a base station one or more RRC messages comprising configuration parameters of OD-SSBs of a first BWP of a first cell. The first BWP is associated with a first SCS. The OD-SSBs are associated with a second SCS. The wireless device receives, via a second BWP of a second cell, a command indicating a number of slots for transmissions of the OD-SSBs via the first cell in a deactivated state, wherein the number of slots is for a third SCS of the second BWP. The wireless device receives, via the first BWP of the first cell in the deactivated state, a first SSB of the OD-SSBs within the number of slots for the third SCS of the second BWP. The wireless device transmits an uplink signal based on receiving the first SSB.

Based on examples of FIG. 43, FIG. 41 and/or FIG. 40, a wireless device receives from a base station one or more RRC messages comprising configuration parameters of OD-SSBs of a first BWP of a first cell. The first BWP is associated with a first SCS. The OD-SSBs are associated with a second SCS. The wireless device receives, via a second BWP of a second cell, a command indicating a number of slots for transmissions of the OD-SSBs via the first cell in a deactivated state, wherein the second BWP is associated with a third SCS. The wireless device receives, via the first BWP of the first cell in the deactivated state, a first SSB of the OD-SSBs within the number of slots wherein a length of each slot is determined based on/according to/based on/for the third SCS of the second BWP. The wireless device transmits an uplink signal based on receiving the first SSB.

According to an example embodiment, the number of slots indicated by the command is from a list of duration values.

According to an example embodiment, each entry of the list of duration values indicates a respective number of slots.

According to an example embodiment, the list of duration values, or each of the duration values themselves, are configured by the base station in one or more RRC messages.

According to an example embodiment, each entry of the list of duration values is configured, for the second SCS, based on a corresponding value of a second list of duration values configured for a fourth SCS and a scale factor determined based on the second SCS and the fourth SCS.

According to an example embodiment, the command comprises a bit field with a length determined based on the total number of valid duration values of the list.

According to an example embodiment, the wireless device determines that the length of each slot is according to the third SCS of the second BWP of the second cell based on the first cell being in a deactivated state.

According to an example embodiment, the wireless device determines that the length of each slot is according to the third SCS of the second BWP of the second cell based on always-on SSBs not being configured for the first cell.

According to an example embodiment, the command comprises a DCI and/or a MAC CE.

Based on examples of FIG. 43, FIG. 41 and/or FIG. 40, a wireless device receives from a base station, one or more RRC messages comprising: a first configuration of always-on SSBs of a cell wherein the first configuration indicates a first periodicity, and/or one or more second configurations of on-demand/adaptive SSBs of the cell, each of the one or more second configurations being associated with a non-zero value of a configuration index and a respective periodicity value. The wireless device receives a command comprising a field. The field being set to a zero value indicates the first configuration. The field being set to a non-zero value indicating one of the one or more second configurations. The wireless device monitors/receives, based on a value of the field of the command, one or more SSBs on the cell.

In existing technologies of OD-SSB transmissions on a SCell, a base station may transmit an OD-SSB trigger indicating a total number (N, e.g., as shown in FIG. 36 for Option 3) of OD-SSB transmission times. The base station may stop the OD-SSB transmissions upon the OD-SB transmission times reaching the total number.

However, a wireless device, when indicated with the total number N for the OD-SSB transmissions, may not align with the base station when the total number of OD-SSB transmissions are completed.

In an example, the wireless device may miss-detect one or more SSBs of the total number N of OD-SSB transmissions, e.g., when the RSRP measurement of the one or more SSBs are not good enough (e.g., higher than a threshold), when the wireless device does not detect a PCI index based on the one or more SSBS, when the wireless device skips monitoring occasions for the one or more SSBs due to the monitoring occasions overlapping with other high-priority signals/channels (e.g., AO-SSBs/MIB/SIB1/SIB2/..., etc.,) or overlapping with measurement gap configured for radio resource management (RRM), etc. The wireless device, due to the miss-detection, may misalign with the base station regarding when the OD-SSB transmissions are completed.

FIG. 44 shows an example issue of OD-SSB transmission on a SCell.

In the example of FIG. 44, the wireless device may be indicated by a base station a command (or an OD-SSB trigger), at T1, indicating a number (N) of OD-SSB transmissions on a SCell (e.g., Cell 2 of FIG. 42 and/or FIG. 43). Different from FIG. 42 and/or FIG. 43, the OD-SSB trigger indicates a number of OD-SSB transmissions, not a number of slots.

In the example of FIG. 44, the wireless device may transmit or may not transmit, at T2, a HARQ-ACK corresponding to the command, based on examples of FIG. 38.

In the example of FIG. 44, the wireless device determines that the number of OD-SSB transmissions start from point A (or T3), based on examples of FIG. 40.

In the example of FIG. 44, the wireless device may miss-detect a second transmission (2nd Tx of OD-SSBs) of the OD-SSBs. The wireless device may miss-detect the second transmission due to overlapping with other high-priority DL signals/channels and/or due to RSRP of the OD-SSBs monitoring in the second transmission occasion of OD-SSBs not being good enough (or not being higher than a threshold for the detection).

In the example of FIG. 44, the wireless device does not count the miss-detected 2nd Tx of OD-SSBs. The wireless device, at T6 where the base station completes the total number (N) of OD-SSB transmissions, may determine that the total number of OD-SSB transmissions have not completed. The wireless device may continue monitoring the OD-SSBs which may not come any more.

Existing technologies may increase power consumption of the wireless device and/or SCell activation delay.

One or more example embodiments comprising starting, by a wireless device, a counter based on/after receiving a command indicating a number of occasions of OD-SSBs of a cell. The wireless device increments/increases the counter regardless of whether receiving an OD-SSB or not on each occasion of the number of occasions. Based on a value of the counter being equal to or greater than the number, the wireless device stops monitoring/receiving/detecting the OD-SSBs of the cell and/or monitors/receives/detects second RSs of the cell.

One or more example embodiments comprising starting, by a wireless device, a counter based on/after receiving a command indicating a number of occasions of OD-SSBs of a cell. The wireless device increments/increases the counter based on receiving an OD-SSB or not receiving the OD-SSB on each occasion of the number of occasions. Based on a value of the counter being equal to or greater than the number, the wireless device stops monitoring/receiving/detecting the OD-SSBs of the cell and/or monitors/receives/detects second RSs of the cell.

One or more example embodiments comprising starting, by a wireless device, a counter based on/after receiving a command indicating a number of occasions of OD-SSBs of a cell. The wireless device increments/increases the counter based on receiving a first OD-SSB on a first occasion of the number of occasions. The wireless device increments/increases the counter based on not receiving a second OD-SSB on a second occasion of the number of occasions. Based on a value of the counter being equal to or greater than the number, the wireless device stops monitoring/receiving/detecting the OD-SSBs of the cell and/or monitors/receives/detects second RSs of the cell.

One or more example embodiments comprising receiving, by a wireless device, via a first cell, a command indicating a number of transmission occasions of OD-SSBs of a second cell. The wireless device starts a counter based on/after receiving the command. The wireless device increments/increases the counter based on not receiving/monitoring (or based on skipping monitoring) the OD-SSBs in a first OD-SSB transmission occasion of the transmission occasions. The wireless device increments/increases the counter based on receiving the OD-SSBs in a second OD-SSB transmission occasion of the transmission occasions. Based on a value of the counter being equal to or greater than the number, the wireless device stops monitoring/receiving/detecting the OD-SSBs of the cell and/or monitors/receives/detects second RSs of the cell.

FIG. 45 illustrates an example as per an aspect of an embodiment of the present disclosure.

In the example of FIG. 45, the wireless device may be indicated by a base station a command (or an OD-SSB trigger), at T1, indicating a number (N) of OD-SSB transmissions on a SCell (e.g., Cell 2 of FIG. 42 and/or FIG. 43). Different from FIG. 42 and/or FIG. 43, the OD-SSB trigger indicates a number of OD-SSB transmissions, not a number of slots.

In the example of FIG. 45, the wireless device may transmit or may not transmit, at T2, a HARQ-ACK corresponding to the command, based on examples of FIG. 38.

In the example of FIG. 45, the wireless device determines that the number of OD-SSB transmissions start from point A (or T3), based on examples of FIG. 40.

In the example of FIG. 45, the wireless device may miss-detect a second transmission (2nd Tx of OD-SSBs) of the OD-SSBs. The wireless device may miss-detect the second transmission due to overlapping with other high-priority DL signals/channels and/or due to RSRP of the OD-SSBs monitoring in the second transmission occasion of OD-SSBs not being good enough (or not being higher than a threshold for the detection).

In the example of FIG. 45, the wireless device counts the miss-detected 2nd Tx of OD-SSBs.

In an example, the wireless device may maintain a counter for the OD-SSB transmissions. The wireless device may set the counter to an initial value (e.g., 0) when receiving the command at T1. The wireless device may increase the counter by 1 for each OD-SSB transmission occasion regardless of whether the wireless device receives/detects the OD-SSB in the OD-SSB transmission occasion.

In the example of FIG. 45, the wireless device, at T6 where the counter reaches N, may determine that the total number of OD-SSB transmissions have completed. The wireless device may stop monitoring the OD-SSBs.

By implementing examples of FIG. 45, a wireless device determines when the OD-SSB transmissions are completed based on a total number of configured OD-SSB transmission occasions, not based on a number of actual received OD-SSB transmissions. Example embodiments may align the base station and the wireless device regarding when the OD-SSB transmissions are completed. Example embodiments may reduce power consumption of the wireless device and/or SCell activation delay.

Based on example embodiments of FIG. 45, FIG. 41 and/or FIG. 40, a wireless device starts a counter based on/after receiving a command indicating a number of occasions of OD-SSBs of a cell. The wireless device increments/increases the counter regardless of whether receiving an OD-SSB or not on each occasion of the number of occasions. Based on a value of the counter being equal to or greater than the number, the wireless device stops monitoring/receiving/detecting the OD-SSBs of the cell and/or monitors/receives/detects second RSs of the cell.

Based on example embodiments of FIG. 45, FIG. 41 and/or FIG. 40, a wireless device starts a counter based on/after receiving a command indicating a number of occasions of OD-SSBs of a cell. The wireless device increments/increases the counter based on receiving an OD-SSB or not receiving the OD-SSB on each occasion of the number of occasions. Based on a value of the counter being equal to or greater than the number, the wireless device stops monitoring/receiving/detecting the OD-SSBs of the cell and/or monitors/receives/detects second RSs of the cell.

Based on example embodiments of FIG. 45, FIG. 41 and/or FIG. 40, a wireless device starts a counter based on/after receiving a command indicating a number of occasions of OD-SSBs of a cell. The wireless device increments/increases the counter based on receiving a first OD-SSB on a first occasion of the number of occasions. The wireless device increments/increases the counter based on not receiving a second OD-SSB on a second occasion of the number of occasions. Based on a value of the counter being equal to or greater than the number, the wireless device stops monitoring/receiving/detecting the OD-SSBs of the cell and/or monitors/receives/detects second RSs of the cell.

Based on example embodiments of FIG. 45, FIG. 41 and/or FIG. 40, a wireless device receives, via a first cell, a command indicating a number of transmission occasions of OD-SSBs of a second cell. The wireless device starts a counter based on/after receiving the command. The wireless device increments/increases the counter based on not receiving/monitoring (or based on skipping monitoring) the OD-SSBs in a first OD-SSB transmission occasion of the transmission occasions. The wireless device increments/increases the counter based on receiving the OD-SSBs in a second OD-SSB transmission occasion of the transmission occasions. Based on a value of the counter being equal to or greater than the number, the wireless device stops monitoring/receiving/detecting the OD-SSBs of the cell and/or monitors/receives/detects second RSs of the cell.

Clause 1. A method comprising: receiving, by a wireless device, one or more radio resource control (RRC) messages comprising configuration parameters of on-demand synchronization signal blocks (OD-SSBs) of a secondary cell (SCell); receiving, at a first time interval and via an active downlink bandwidth part (BWP) of a serving cell, a medium access control control element (MAC CE) indicating an activation of the OD-SSBs of the SCell, wherein the SCell is in deactivated state; and receiving, via the SCell being in the deactivated state and starting at a third time interval occurring at least a time gap after the first time interval, the at least one of the OD-SSBs, wherein the time gap is a number of slots based on a subcarrier spacing (SCS) of an active uplink BWP on which the wireless device transmits a hybrid automatic repeat request acknowledgment (HARQ ACK) corresponding to the MAC CE indicating the activation of the OD-SSBs of the SCell.

Clause 2. A method comprising: receiving, by a wireless device, at a first time interval, a command indicating an activation of on-demand synchronization signal blocks (OD-SSBs) of a first cell; and receiving, via the first cell and from at least a time gap after the first time interval, one or more of the OD-SSBs, wherein the time gap is the number of slots based on a subcarrier spacing (SCS) of an uplink bandwidth part (BWP), of a second cell, on which the wireless device transmits a hybrid automatic repeat request acknowledgment (HARQ-ACK) information corresponding to the command.

Clause 3. The method of any preceding clause, wherein the cell is a primary cell (PCell).

Clause 4. The method of any preceding clause, wherein the command is a medium access control control element (MAC CE).

Clause 5. The method of any preceding clause, wherein the command is a downlink control information (DCI).

Clause 6. The method of any preceding clause, further comprising transmitting the HARQ-ACK information, via the uplink BWP of the second cell, corresponding to the command.

Clause 7. The method of any preceding clause, wherein the wireless device transmits the HARQ-ACK information via the uplink BWP of the second cell based on the uplink BWP being an active BWP of the second cell.

Clause 8. The method of any preceding clause, wherein the time gap comprises a number of slot, where a duration of the slot is based on the SCS of the uplink BWP of the second cell.

Clause 9. The method of any preceding clause, wherein the first cell is different from the second cell.

Clause 10. The method of any preceding clause, wherein the time gap is determined as: a first number of slots based on the SCS of the uplink BWP being configured as a first value; and a sec number of slots based on the SCS of the uplink BWP being configured as a second value.

Clause 11. The method of clause 10, wherein the first number is different from the second number based on the first value being different from the second value.

Clause 12. The method of any preceding clause, wherein the wireless device receives the command via an active downlink BWP of a third cell.

Clause 13. The method of clause 12, wherein the first cell is different from the third cell.

Clause 14. The method of clause 12, wherein the active downlink BWP of the third cell is associated with a second SCS.

Clause 15. The method of any preceding clause, wherein the wireless device receives the one or more of the OD-SSBs via a downlink BWP of the first cell.

Clause 16. The method of clause 15, wherein the downlink BWP of the first cell is associated with a third SCS.

Clause 17. The method of any preceding clause, wherein the cell is a secondary cell (SCell).

Clause 18. The method of clause 17, wherein the SCell is activated based on receiving a second MAC CE indicating an activation of the SCell, wherein the second MAC CE is different from the MAC CE indicating the activation of the OD-SSBs of the SCell.

Clause 19. The method of clause 18, wherein the second MAC CE indicating the activation of the SCell is received after or together with the MAC CE indicating the activation of the OD-SSBs of the SCell.

Clause 20. The method of clause 19, wherein the second MAC CE comprises a bit field, corresponding to the SCell, being set to a first value indicating the activation of the SCell.

Clause 21. The method of any preceding clause0, wherein the wireless device determines that the on-demand SSBs are deactivated on the SCell based on at least one of: receiving a third MAC CE indicating that the on-demand SSBs are deactivated on the SCell; a deactivation of the SCell; a number of OD-SSB transmissions reaching the maximum/total number configured in the configuration parameters of the OD-SSBs.

Clause 22. The method of any preceding clause, further comprising receiving one or more radio resource control (RRC) messages comprising configuration parameters of OD-SSBs of the cell.

Clause 23. The method of clause 22, wherein the one or more RRC messages further comprise: configuration parameters of a PCell; and one or more configuration parameters of one or more SCells comprising the SCell.

Clause 24. The method of any preceding clause2, wherein the configuration parameters of the OD-SSBs comprise at least one of: a fourth SCS of the OD-SSBs; and a transmission power of the OD-SSBs.

Clause 25. The method of clause 22, wherein the configuration parameters of the OD-SSBs comprise at least one of: a transmission periodicity of a SSB burst comprising the OD-SSBs; a transmission offset of the SSB burst; a number of SSBs per SSB burst of the OD-SSBs; and a maximum/total number of transmissions of the OD-SSBs.

Clause 26. The method of clause 25, further comprising based on the configuration parameters of the OD-SSBs comprising the maximum/total number of transmissions of the OD-SSBs: starting a counter based on receiving, starting at the third time interval, a first SSB of the OD-SSBs; incrementing the counter regardless of whether receiving an OD-SSB or not on a transmission occasion corresponding to the OD-SSB; and deactivating the OD-SSBs on the cell, based on a value of the counter being equal to or greater than the maximum/total number.

Clause 27. The method of clause 25, further comprising starting a counter associated with OD-SSB receptions based on the configuration parameters of the OD-SSBs comprising the maximum/total number of transmissions of the OD-SSBs.

Clause 28. The method of clause 27, wherein the wireless device starts the counter based on receiving, starting at the third time interval, a first SSB of the OD-SSBs.

Clause 29. The method of clause 28, wherein the wireless device incrementing the counter based on receiving an OD-SSB in an OD-SSB transmission occasion corresponding to the OD-SSB.

Clause 30. The method of clause 28, wherein the wireless device incrementing the counter based on regardless of whether receiving an OD-SSB in an OD-SSB transmission occasion corresponding to the OD-SSB or not.

Clause 31. The method of clause 28, wherein the wireless device incrementing the counter based on not monitoring an OD-SSB transmission occasion corresponding to an OD-SSB.

Clause 32. The method of clause 28, wherein the wireless device incrementing the counter based on skipping monitoring or not being able to monitor an OD-SSB transmission occasion corresponding to an OD-SSB.

Clause 33. The method of clause 28, wherein the wireless device deactivates the OD-SSBs on the cell, based on a value of the counter being equal to or greater than the maximum/total number.

Clause 34. The method of any preceding clause, wherein the wireless device receives from a base station one or more first RRC messages comprising a request of a wireless device radio access capability information.

Clause 35. The method of clause 34, further comprising transmitting, by the wireless device to the base station, one or more second RRC messages comprising the wireless device radio access capability information.

Clause 36. The method of clause 35, wherein the one or more second RRC messages comprise one or more parameters indicating that the wireless device supports a triggering, by the MAC CE, of transmissions of the OD-SSBs via the SCell.

Clause 37. The method of clause 36, wherein the one or more parameters indicate a maximum/total number of SCells on which the wireless device supports an activation, by the MAC CE, of transmissions of OD-SSBs on the SCells.

Clause 38. The method of clause 37, wherein the one or more parameters indicate the maximum/total number of SCells per frequency band or per frequency range.

Clause 39. The method of clause 36, wherein the one or more parameters are per frequency range indicated, wherein the one or more parameters comprise: first parameters indicating that the wireless device supports triggering, by the MAC CE, of transmissions of the OD-SSBs via the SCell operating in a first frequency range; and second parameters indicating that the wireless device supports a triggering, by the MAC CE, of transmissions of the OD-SSBs via the SCell operating in a second frequency range.

Clause 40. The method of clause 39, wherein the first parameters are indicated separately for a SCell in an activated state and the SCell in a deactivated state, wherein the first parameters comprise: a parameter indicating that the wireless device supports an activation, by the MAC CE, of transmissions of the OD-SSBs via a SCell in an activated state for the first frequency range; and a parameter indicating that the wireless device supports an activation, by the MAC CE, of transmissions of the OD-SSBs via the SCell in a deactivated state for the first frequency range.

Clause 41. The method of clause 40, wherein the second parameters are indicated separately for a SCell in an activated state and the SCell in a deactivated state, wherein the second parameters comprise: a parameter indicating that the wireless device supports an activation, by the MAC CE, of transmissions of the OD-SSBs via a SCell in an activated state for the second frequency range; and a parameter indicating that the wireless device supports an activation, by the MAC CE, of transmissions of the OD-SSBs via the SCell in a deactivated state for the second frequency range.

Clause 42. The method of any preceding clause, wherein the wireless device receives the MAC CE indicating the activation of the OD-SSBs of the SCell, which the SCell is in a deactivated state.

Clause 43. The method of any preceding clause, wherein the wireless device receives the MAC CE indicating the activation of the OD-SSBs of the SCell, before the SCell is activated.

Clause 44. The method of any preceding clause, wherein the wireless device receives the at least one OD-SSBs via the SCell before the SCell is activated.

Clause 45. The method of any preceding clause, wherein the wireless device receives the at least one OD-SSBs for an activation of the SCell, wherein the activation of the SCell is triggered based on receiving the SCell activation/deactivation MAC CE indicating the activation of the SCell.

Clause 46. An apparatus comprising: one or more processors; and memory storing instructions that, when executed by the one or more processors, cause the apparatus to perform the method of any one of clauses 1 to 45.

Clause 47. A non-transitory computer-readable medium comprising instructions that, when executed by one or more processors of an apparatus, cause the apparatus to perform the method of any one of clauses 1 to 45.

## Claims

**1.** A method comprising:

receiving, by a wireless device, at a first time interval, a command indicating an activation of on-demand synchronization signal blocks (OD-SSBs) of a first cell; and
receiving, via the first cell and from at least a time gap after the first time interval, one or more of the OD-SSBs, wherein the time gap is a number of slots based on a subcarrier spacing (SCS) of an uplink bandwidth part (BWP), of a second cell, on which the wireless device transmits a hybrid automatic repeat request acknowledgment (HARQ-ACK) information corresponding to the command.

**2.** The method of claim 1, wherein the cell is a primary cell (PCell).

**3.** The method of any one of claims 1 to 2, wherein the command is a medium access control control element (MAC CE).

**4.** The method of any one of claims 1 to 3, wherein the command is a downlink control information (DCI).

**5.** The method of any one of claims 1 to 4, further comprising transmitting the HARQ-ACK information, via the uplink BWP of the second cell, corresponding to the command.

**6.** The method of any one of claims 1 to 5, wherein the wireless device transmits the HARQ-ACK information via the uplink BWP of the second cell based on the uplink BWP being an active BWP of the second cell.

**7.** The method of any one of claims 1 to 6, wherein the time gap is determined as:

a first number of slots based on the SCS of the uplink BWP being configured as a first value; and
a sec number of slots based on the SCS of the uplink BWP being configured as a second value.

**8.** The method of any one of claims 1 to 7, wherein the wireless device receives the command via an active downlink BWP of a third cell.

**9.** The method of any one of claims 1 to 8, wherein the wireless device receives the one or more of the OD-SSBs via a downlink BWP of the first cell.

**10.** The method of claim 9, wherein the downlink BWP of the first cell is associated with a third SCS.

**11.** The method of any one of claims 1 or 3 to 11, wherein the cell is a secondary cell (SCell).

**12.** The method of claim 11, wherein the SCell is activated based on receiving a second MAC CE indicating an activation of the SCell, wherein the second MAC CE is different from the MAC CE indicating the activation of the OD-SSBs of the SCell.

**13.** The method of claim 12, wherein the second MAC CE indicating the activation of the SCell is received after or together with the MAC CE indicating the activation of the OD-SSBs of the SCell.

**14.** An apparatus comprising:

one or more processors; and
memory storing instructions that, when executed by the one or more processors, cause the apparatus to perform the method of any one of claims 1 to 13.

**15.** A non-transitory computer-readable medium comprising instructions that, when executed by one or more processors of an apparatus, cause the apparatus to perform the method of any one of claims 1 to 13.

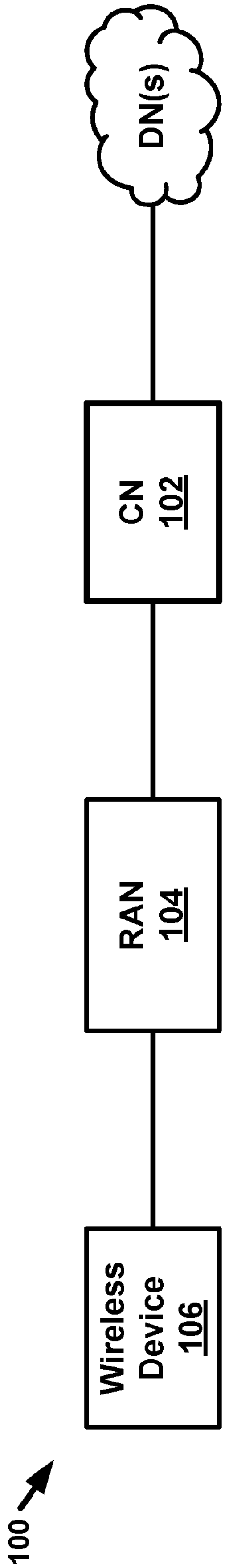
100
Wireless Device 106
RAN 104
CN 102
DN(s)

FIG. 1A

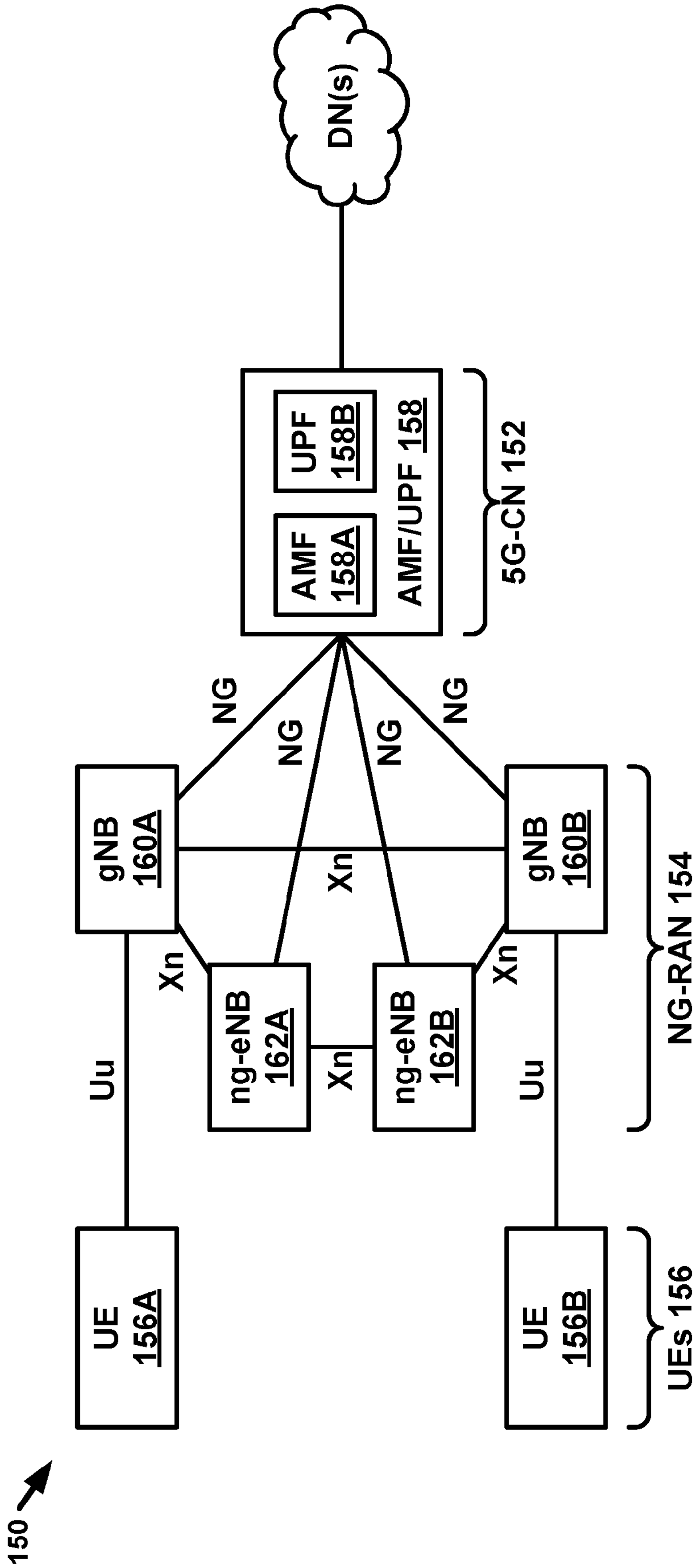
150
UE 156A
UE 156B
UEs 156
Uu
Uu
gNB 160A
gNB 160B
ng-eNB 162A
ng-eNB 162B
Xn
Xn
Xn
Xn
NG
NG
NG
NG
NG-RAN 154
AMF 158A
UPF 158B
AMF/UPF 158
5G-CN 152
DN(s)

FIG. 1B

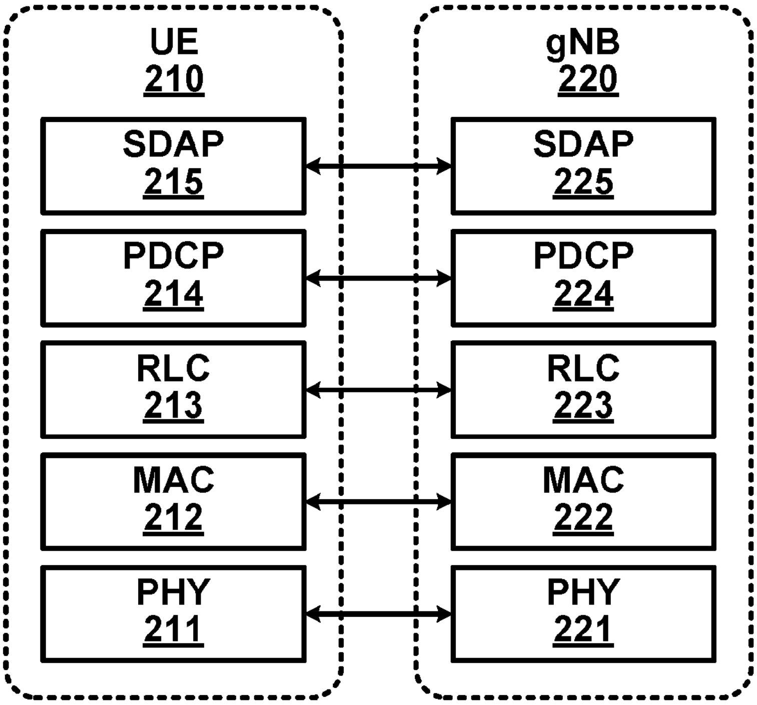
UE
210
SDAP
215
PDCP
214
RLC
213
MAC
212
PHY
211
gNB
220
SDAP
225
PDCP
224
RLC
223
MAC
222
PHY
221

FIG. 2A

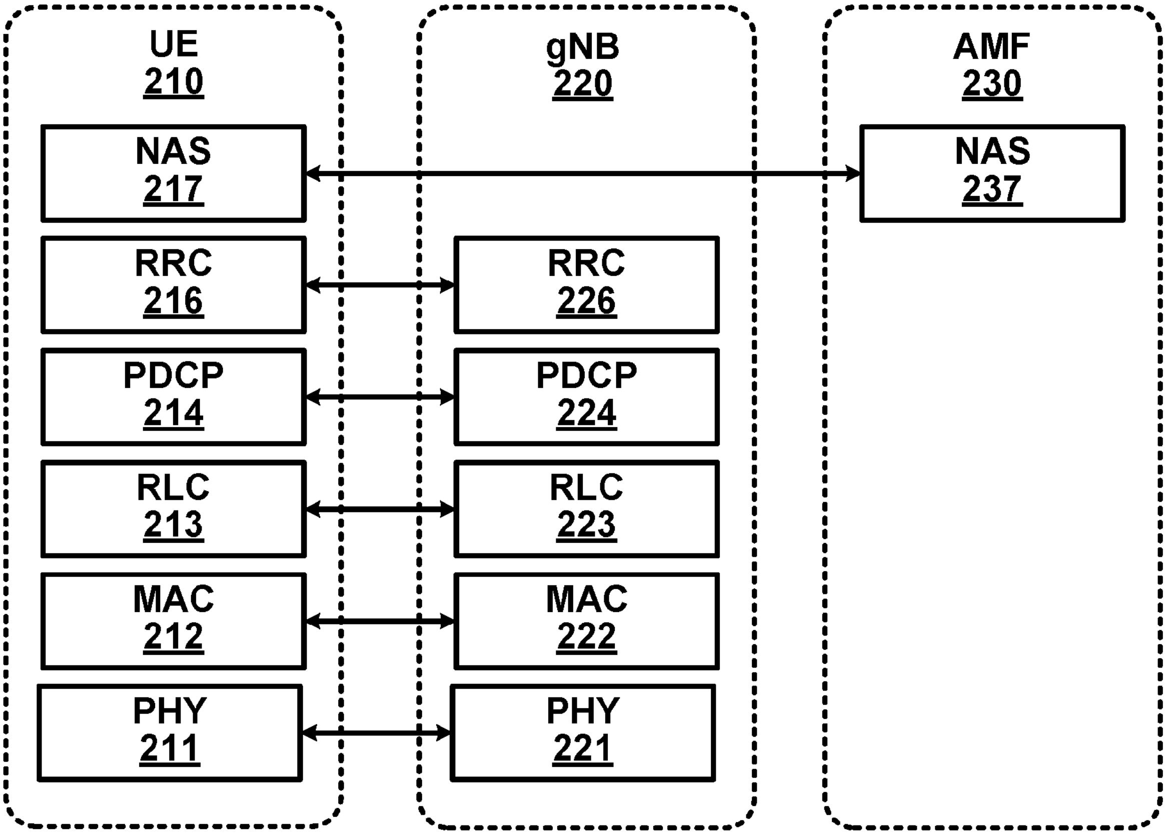
UE
210
NAS
217
RRC
216
PDCP
214
RLC
213
MAC
212
PHY
211
gNB
220
RRC
226
PDCP
224
RLC
223
MAC
222
PHY
221
AMF
230
NAS
237

FIG. 2B

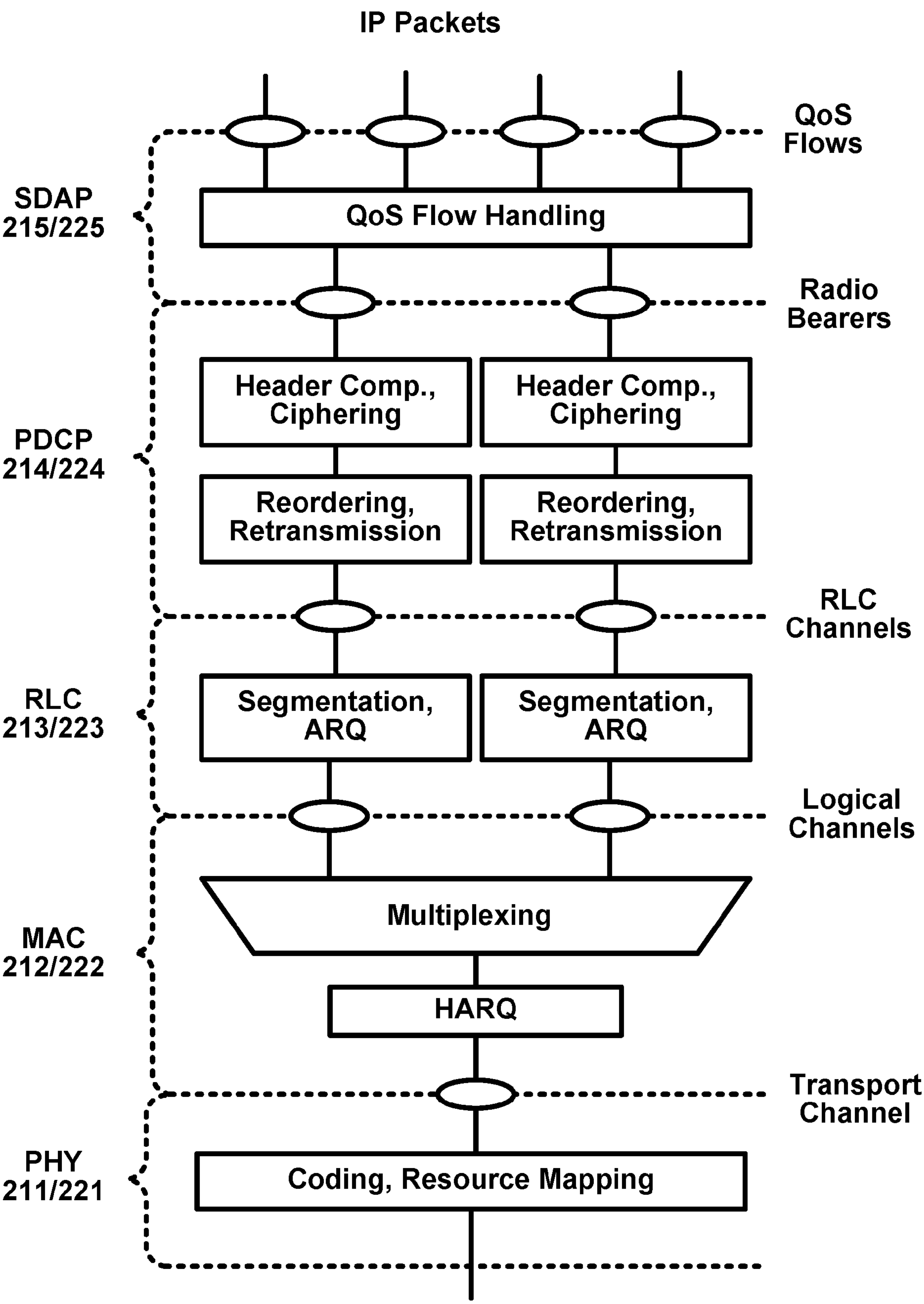
IP Packets
QoS Flows
SDAP 215/225
QoS Flow Handling
Radio Bearers
PDCP 214/224
Header Comp., Ciphering
Header Comp., Ciphering
Reordering, Retransmission
Reordering, Retransmission
RLC Channels
RLC 213/223
Segmentation, ARQ
Segmentation, ARQ
Logical Channels
MAC 212/222
Multiplexing
HARQ
Transport Channel
PHY 211/221
Coding, Resource Mapping

FIG. 3

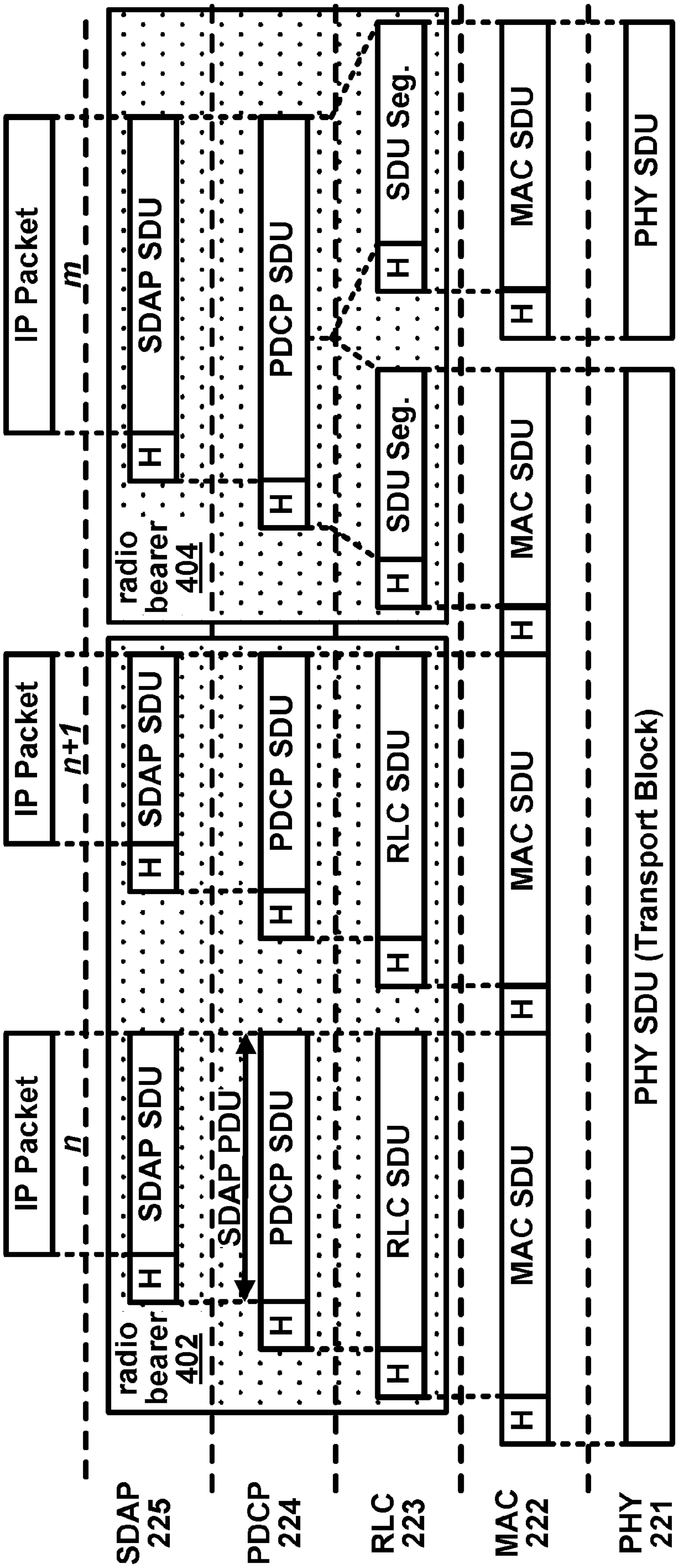
IP Packet
n
IP Packet
n+1
IP Packet
m
SDAP
225
PDCP
224
RLC
223
MAC
222
PHY
221
radio
bearer
402
radio
bearer
404
H
SDAP SDU
SDAP PDU
PDCP SDU
RLC SDU
SDU Seg.
MAC SDU
PHY SDU (Transport Block)
PHY SDU

FIG. 4A

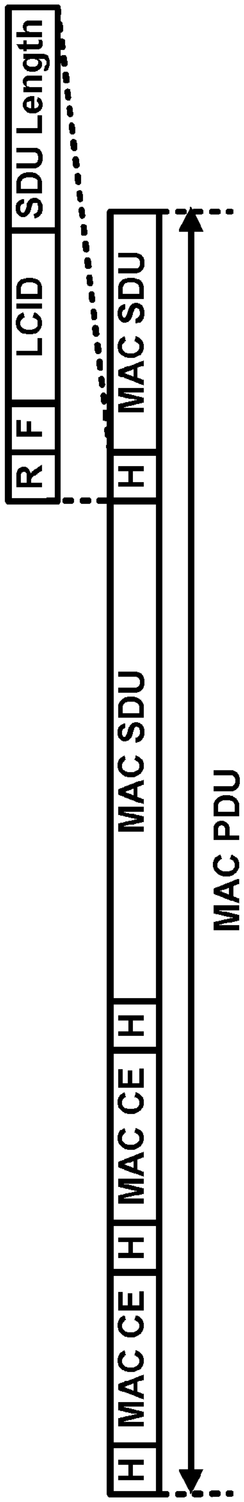
R
F
LCID
SDU Length
H
MAC CE
MAC SDU
MAC PDU

FIG. 4B

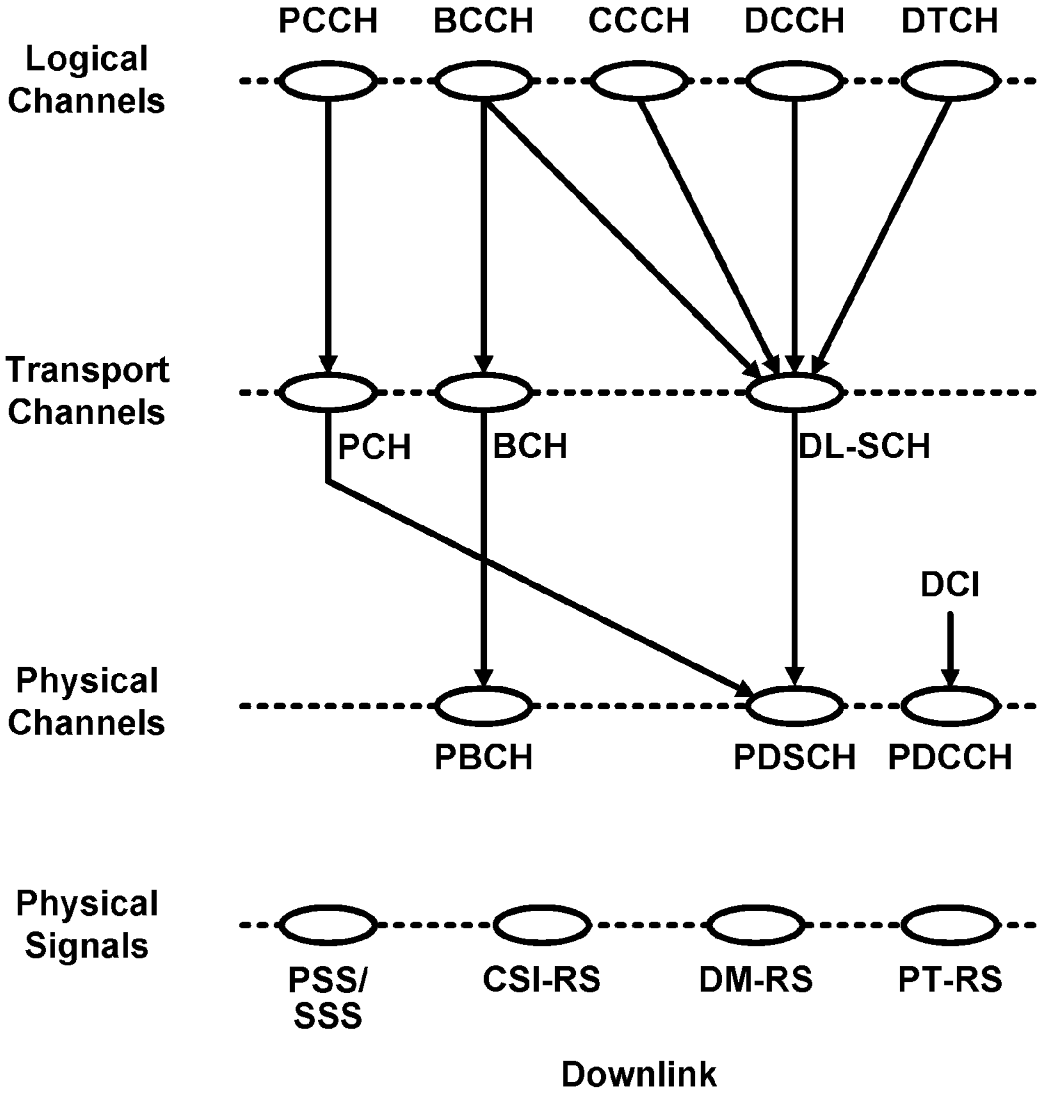
Logical Channels
Transport Channels
Physical Channels
Physical Signals
PCCH
BCCH
CCCH
DCCH
DTCH
PCH
BCH
DL-SCH
DCI
PBCH
PDSCH
PDCCH
PSS/ SSS
CSI-RS
DM-RS
PT-RS
Downlink

FIG. 5A

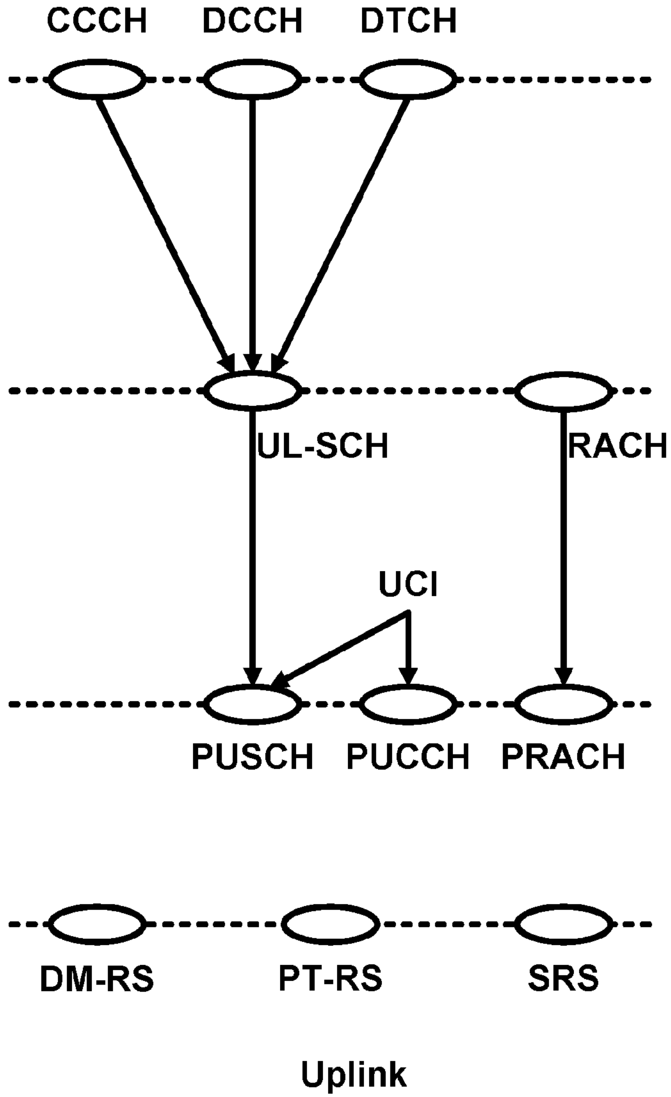
CCCH
DCCH
DTCH
UL-SCH
RACH
UCI
PUSCH
PUCCH
PRACH
DM-RS
PT-RS
SRS
Uplink

FIG. 5B

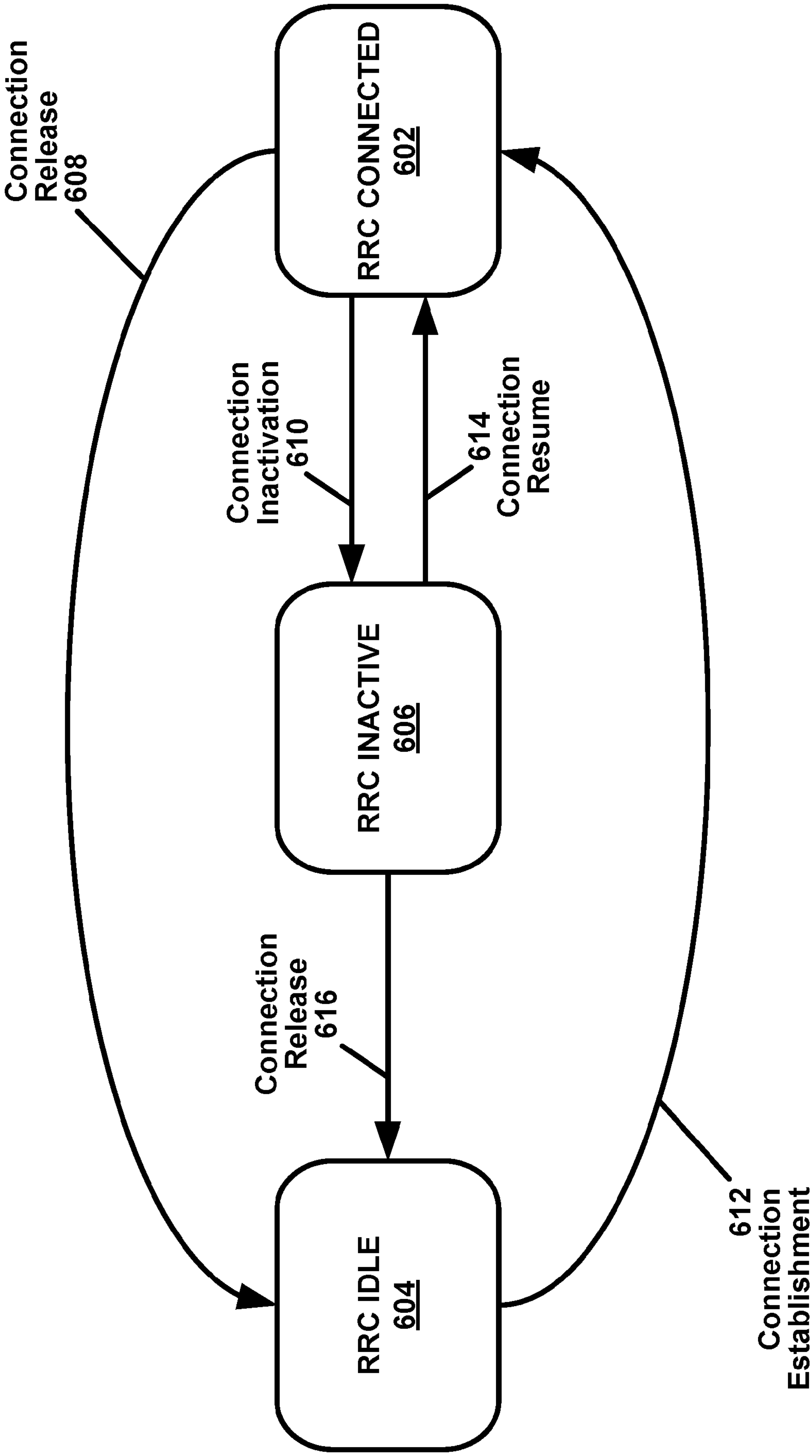
RRC CONNECTED
602
RRC INACTIVE
606
RRC IDLE
604
Connection Release 608
Connection Inactivation 610
614 Connection Resume
Connection Release 616
612 Connection Establishment

FIG. 6

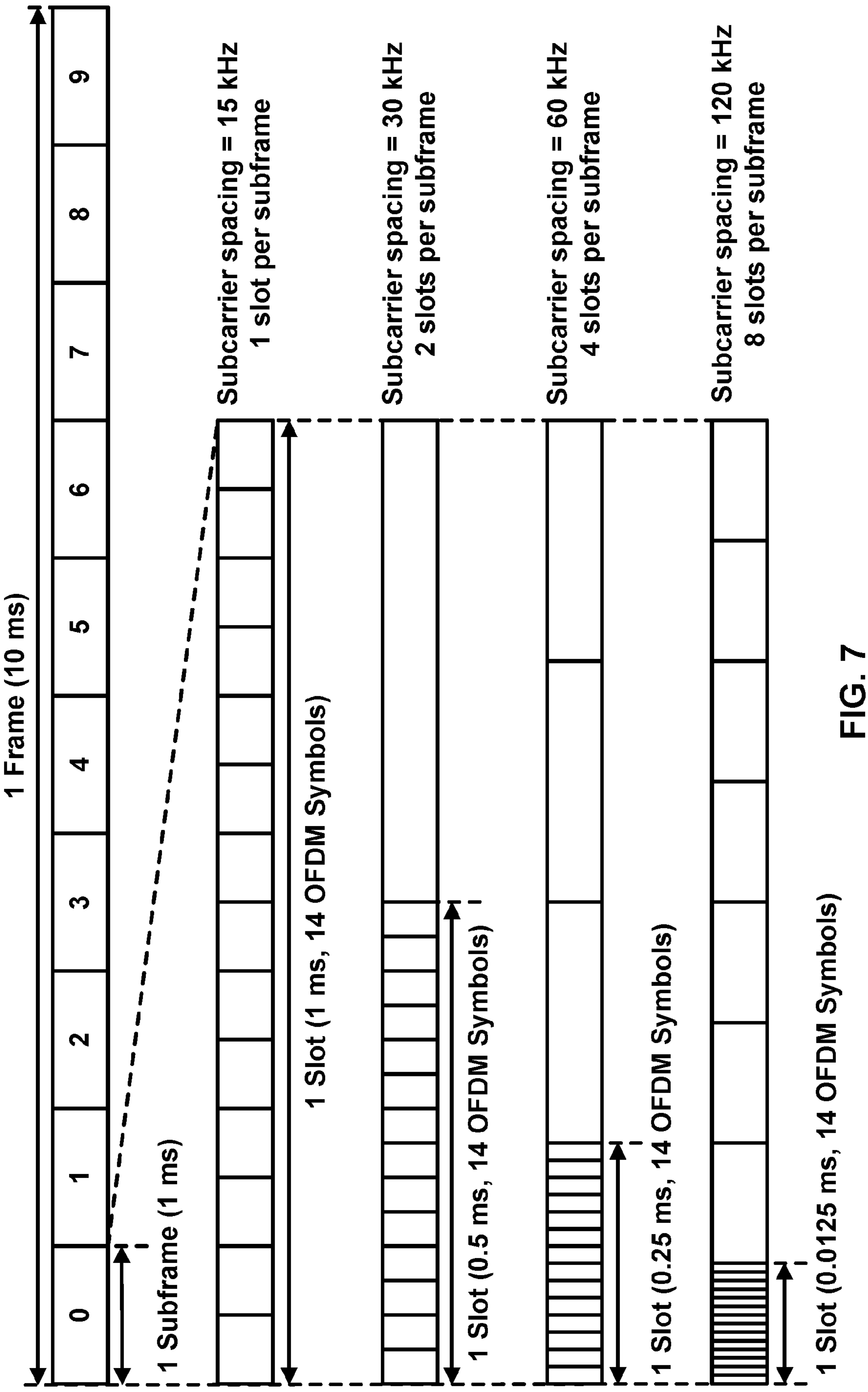
1 Frame (10 ms)
0
1
2
3
4
5
6
7
8
9
1 Subframe (1 ms)
Subcarrier spacing = 15 kHz
1 slot per subframe
1 Slot (1 ms, 14 OFDM Symbols)
Subcarrier spacing = 30 kHz
2 slots per subframe
1 Slot (0.5 ms, 14 OFDM Symbols)
Subcarrier spacing = 60 kHz
4 slots per subframe
1 Slot (0.25 ms, 14 OFDM Symbols)
Subcarrier spacing = 120 kHz
8 slots per subframe
1 Slot (0.0125 ms, 14 OFDM Symbols)

FIG. 7

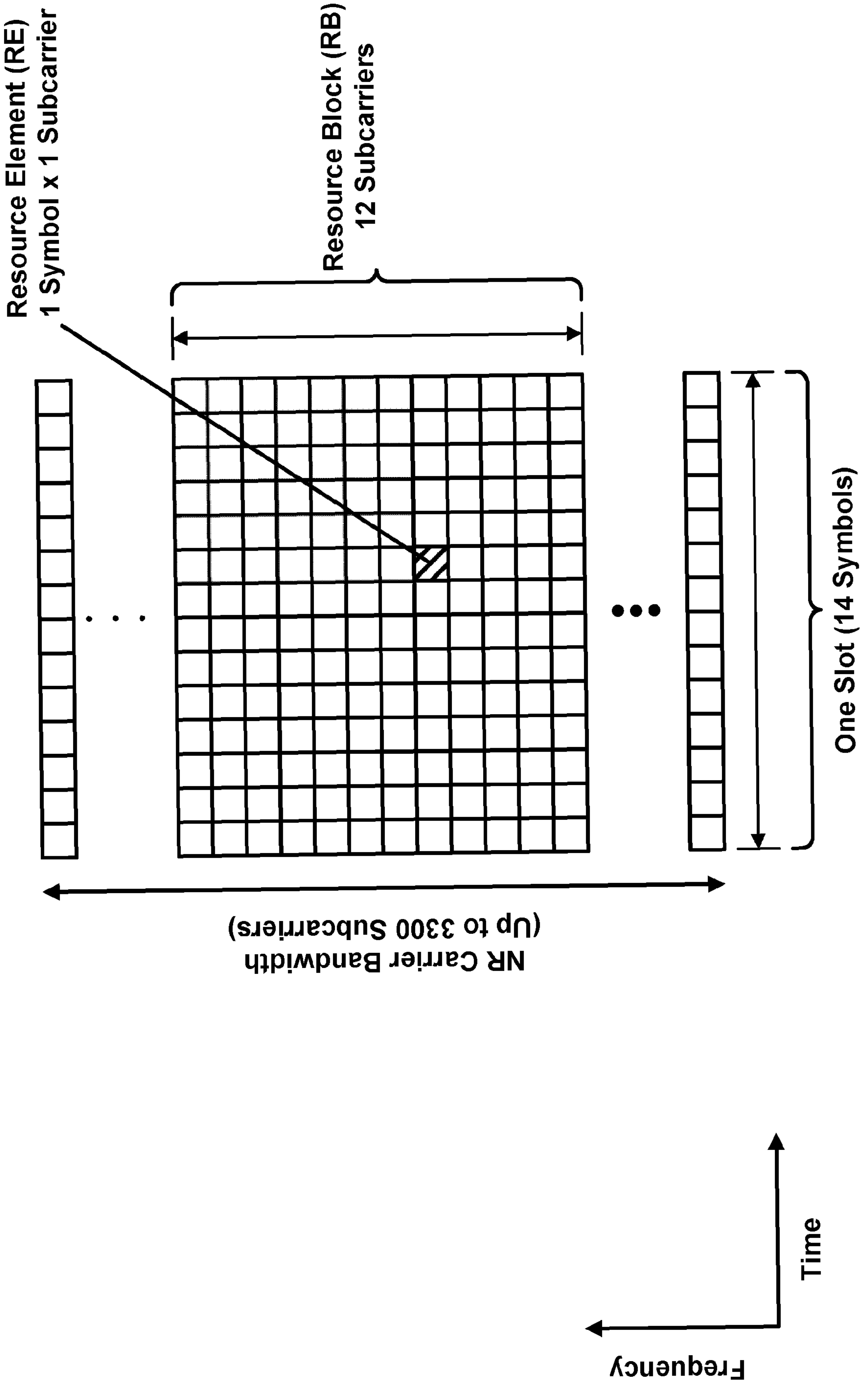
Resource Element (RE)
1 Symbol x 1 Subcarrier
Resource Block (RB)
12 Subcarriers
One Slot (14 Symbols)
NR Carrier Bandwidth
(Up to 3300 Subcarriers)
Time
Frequency

FIG. 8

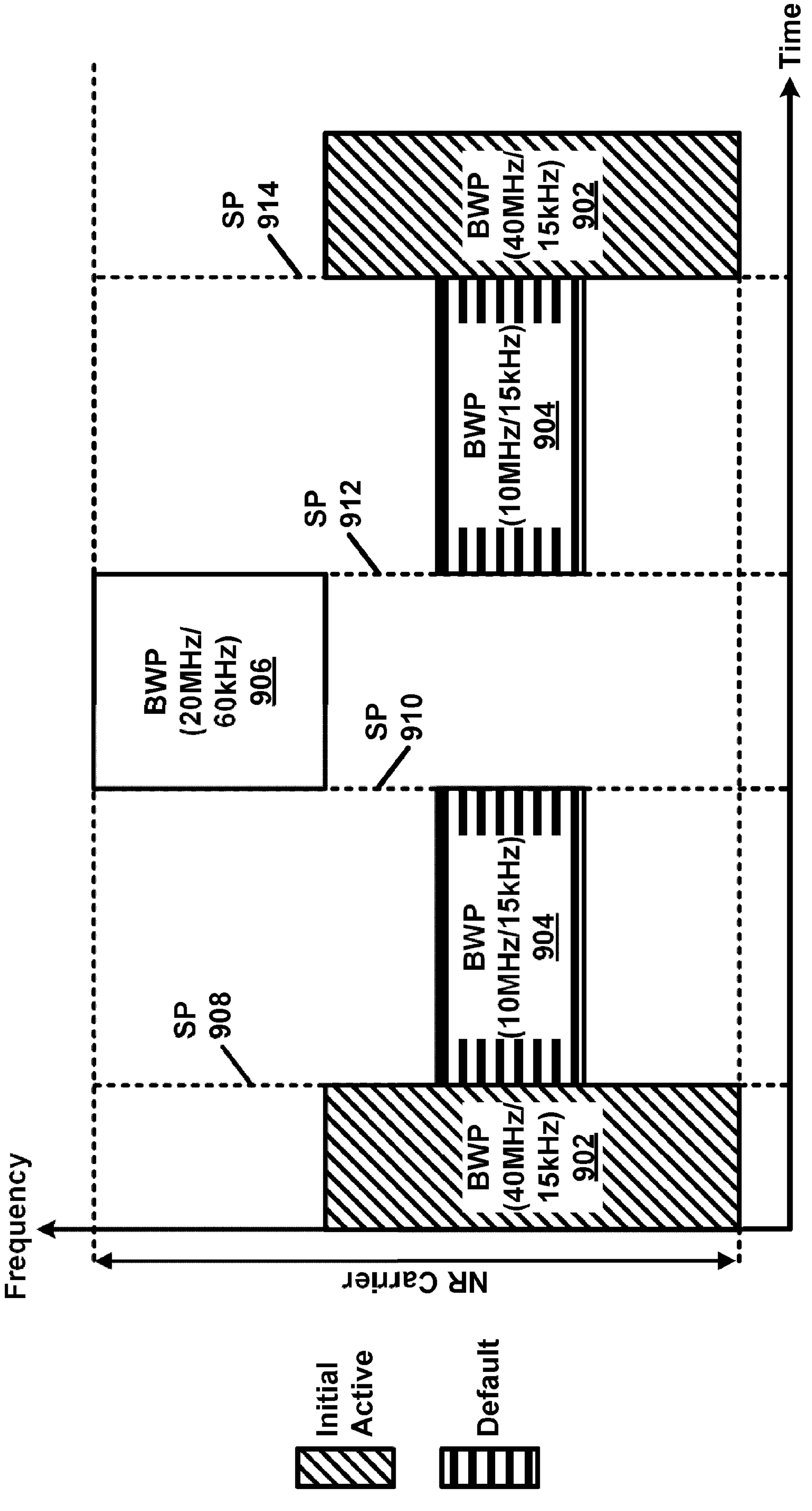
Time
Frequency
NR Carrier
SP 908
SP 910
SP 912
SP 914
BWP (40MHz/ 15kHz) 902
BWP (10MHz/15kHz) 904
BWP (20MHz/ 60kHz) 906
BWP (10MHz/15kHz) 904
BWP (40MHz/ 15kHz) 902
Initial Active
Default

FIG. 9

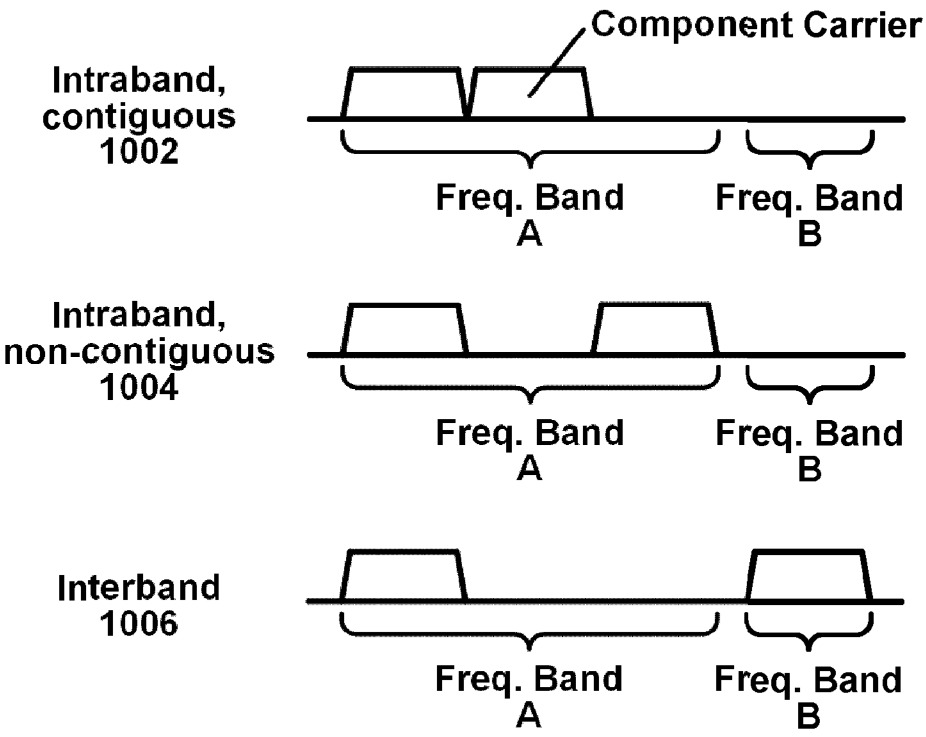


FIG. 10A

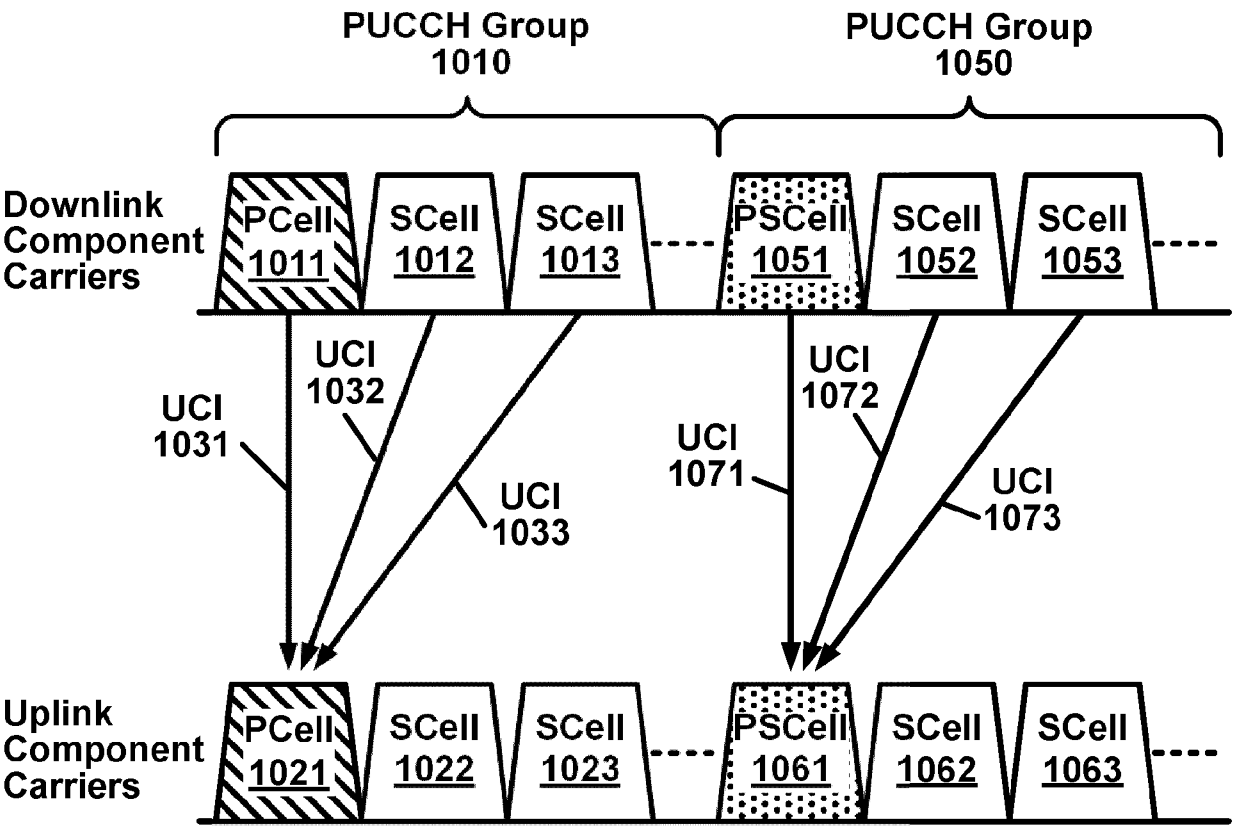


FIG. 10B

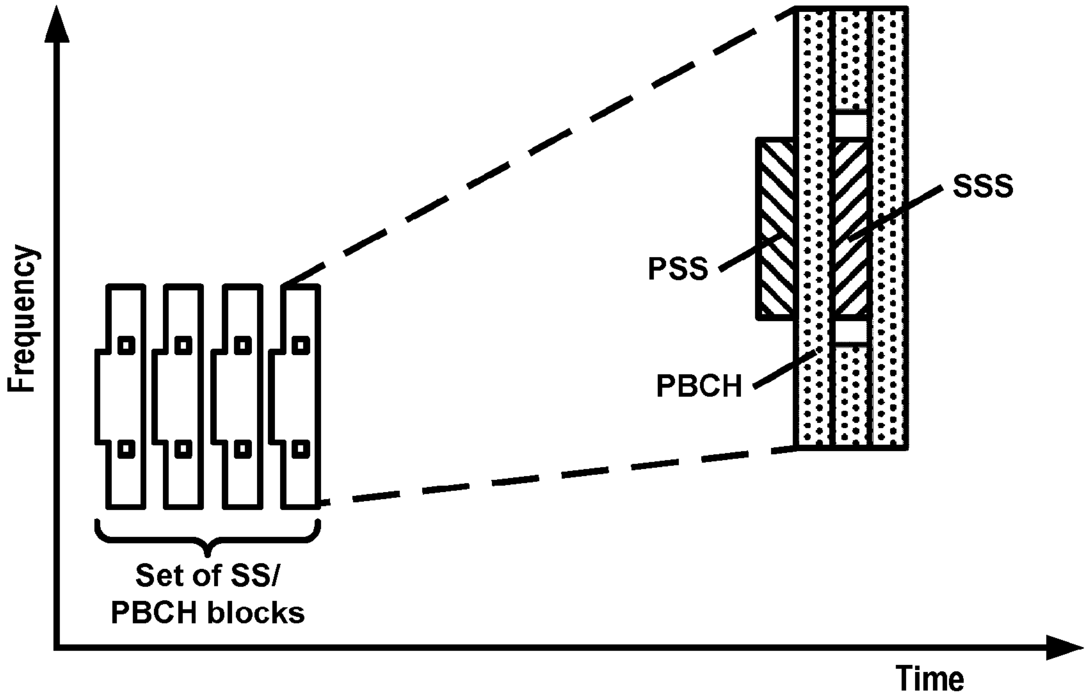


FIG. 11A

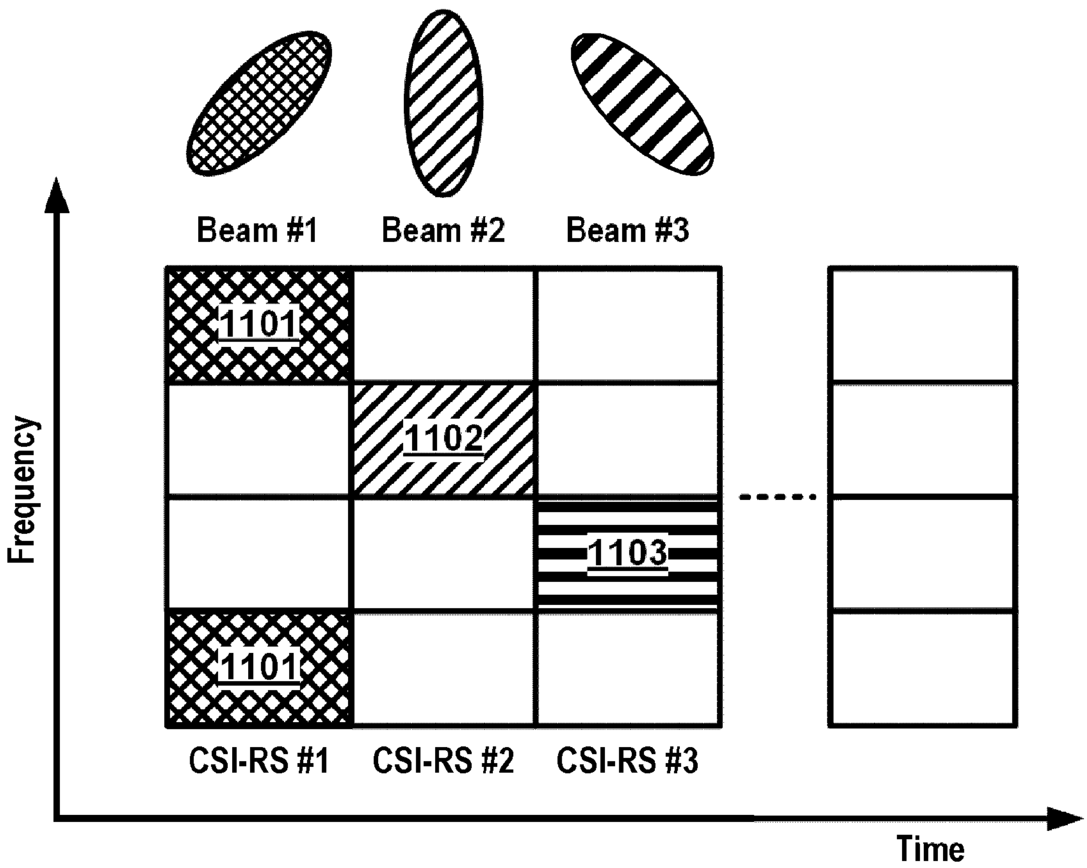


FIG. 11B

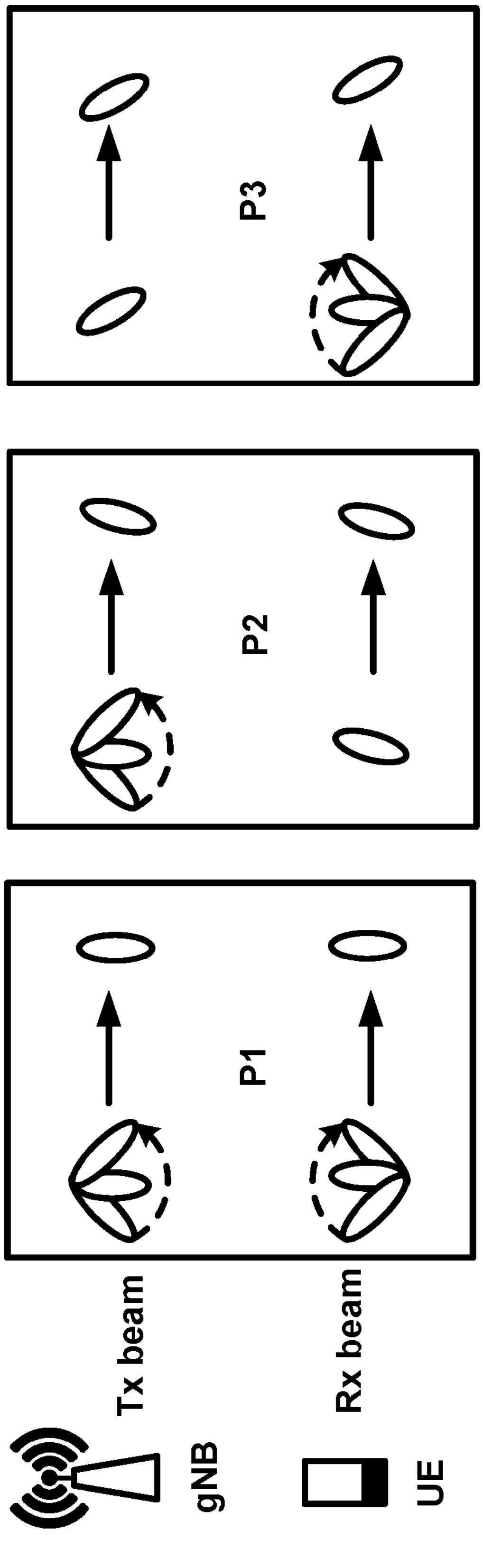


FIG. 12A

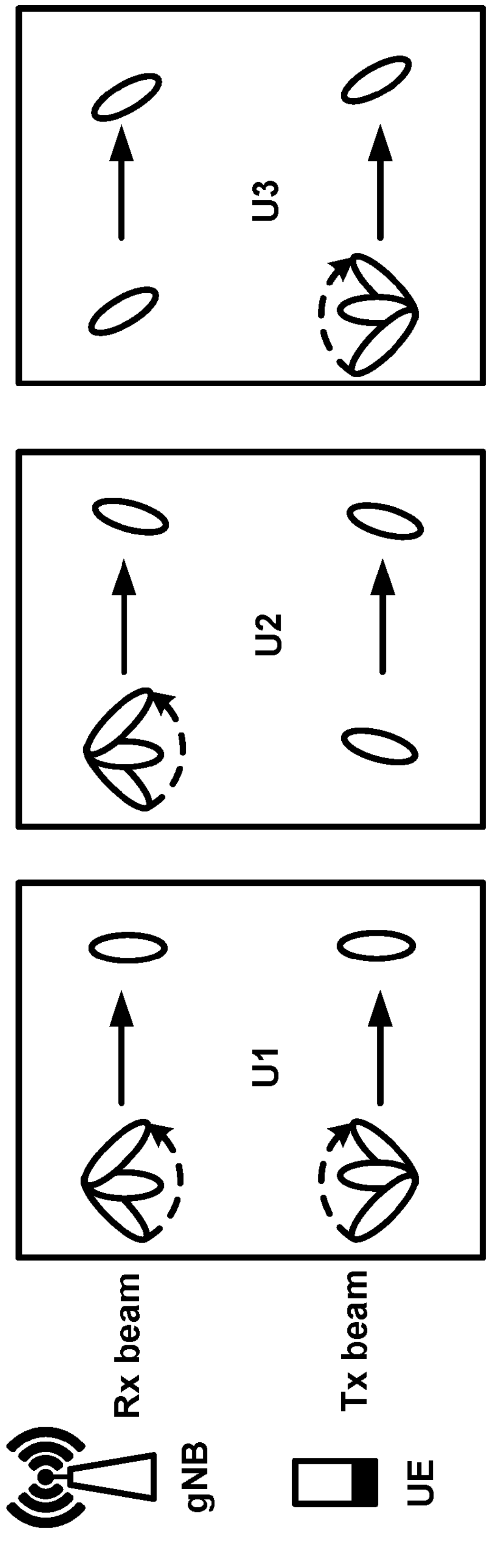


FIG. 12B

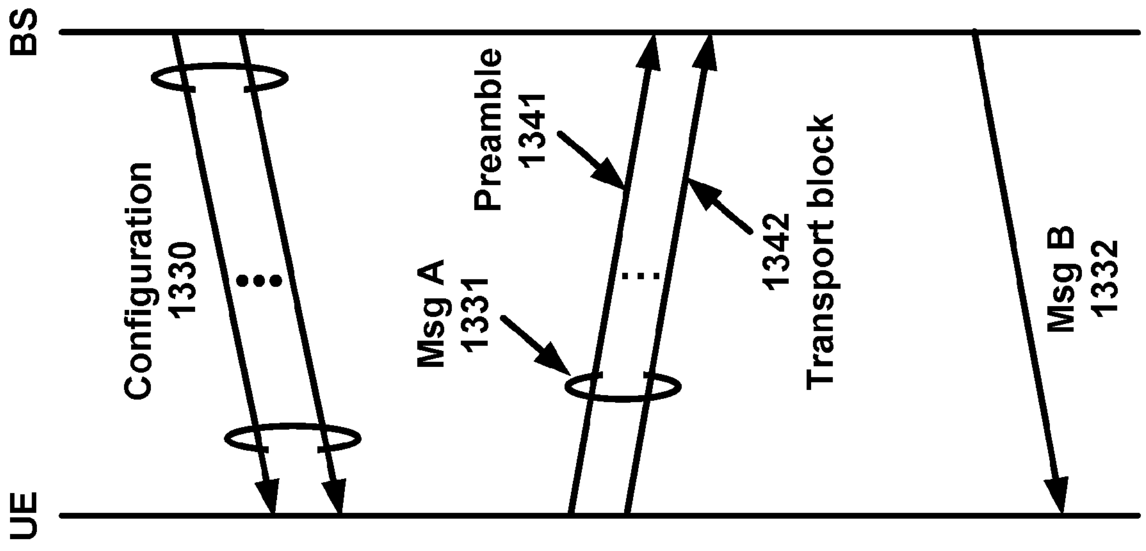


FIG. 13C

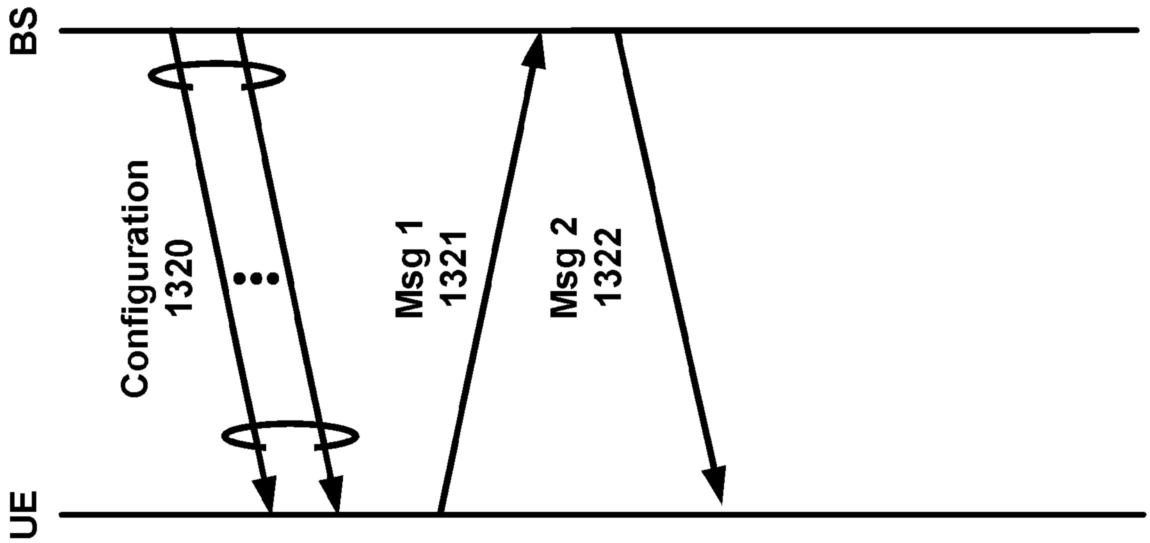


FIG. 13B

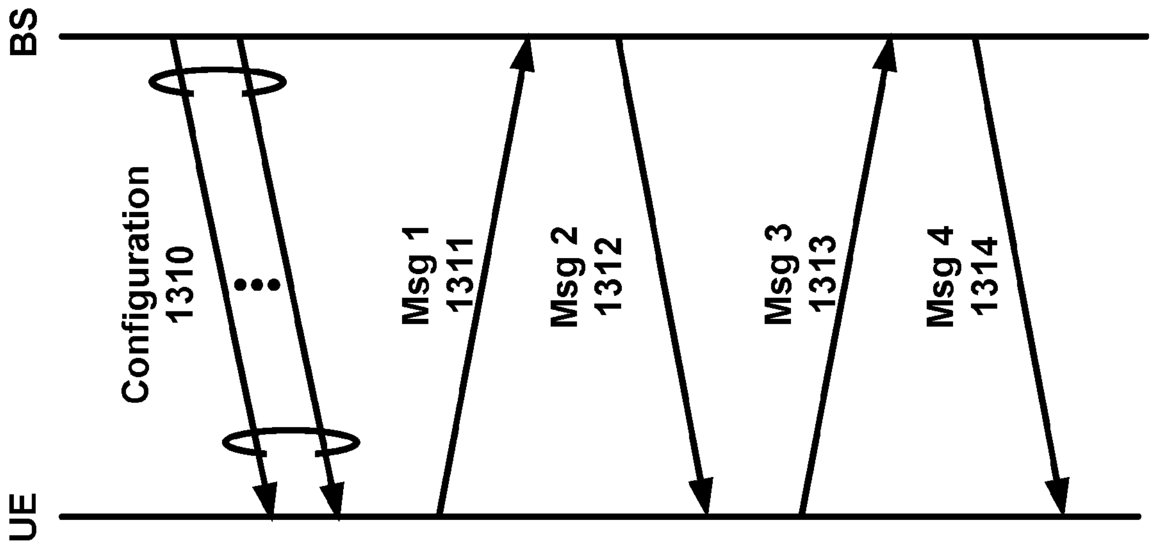


FIG. 13A

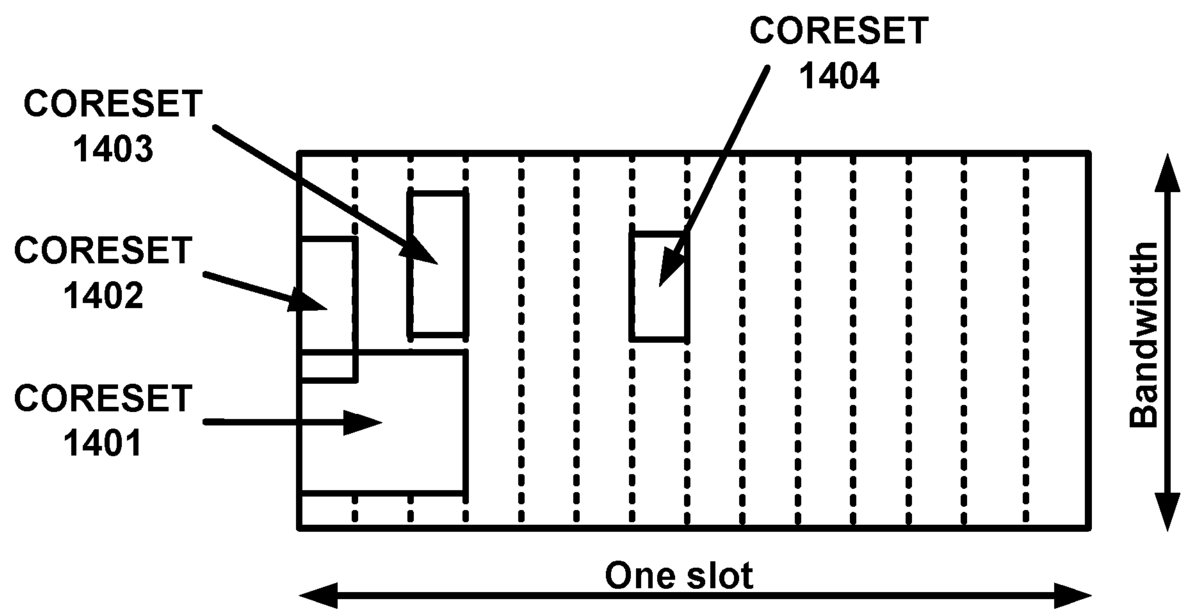


FIG. 14A

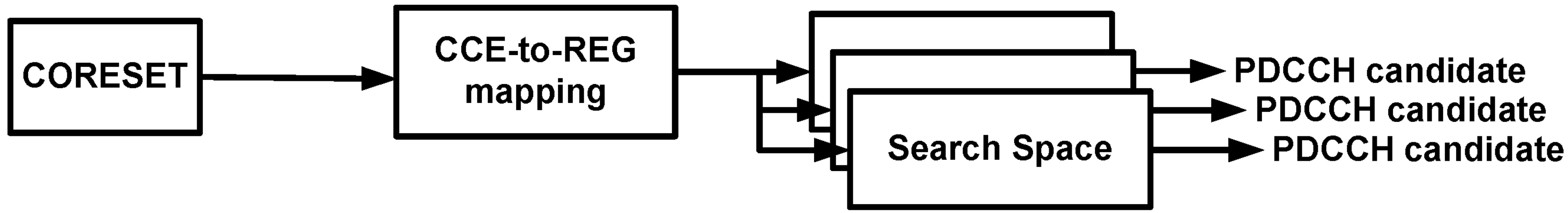


FIG. 14B

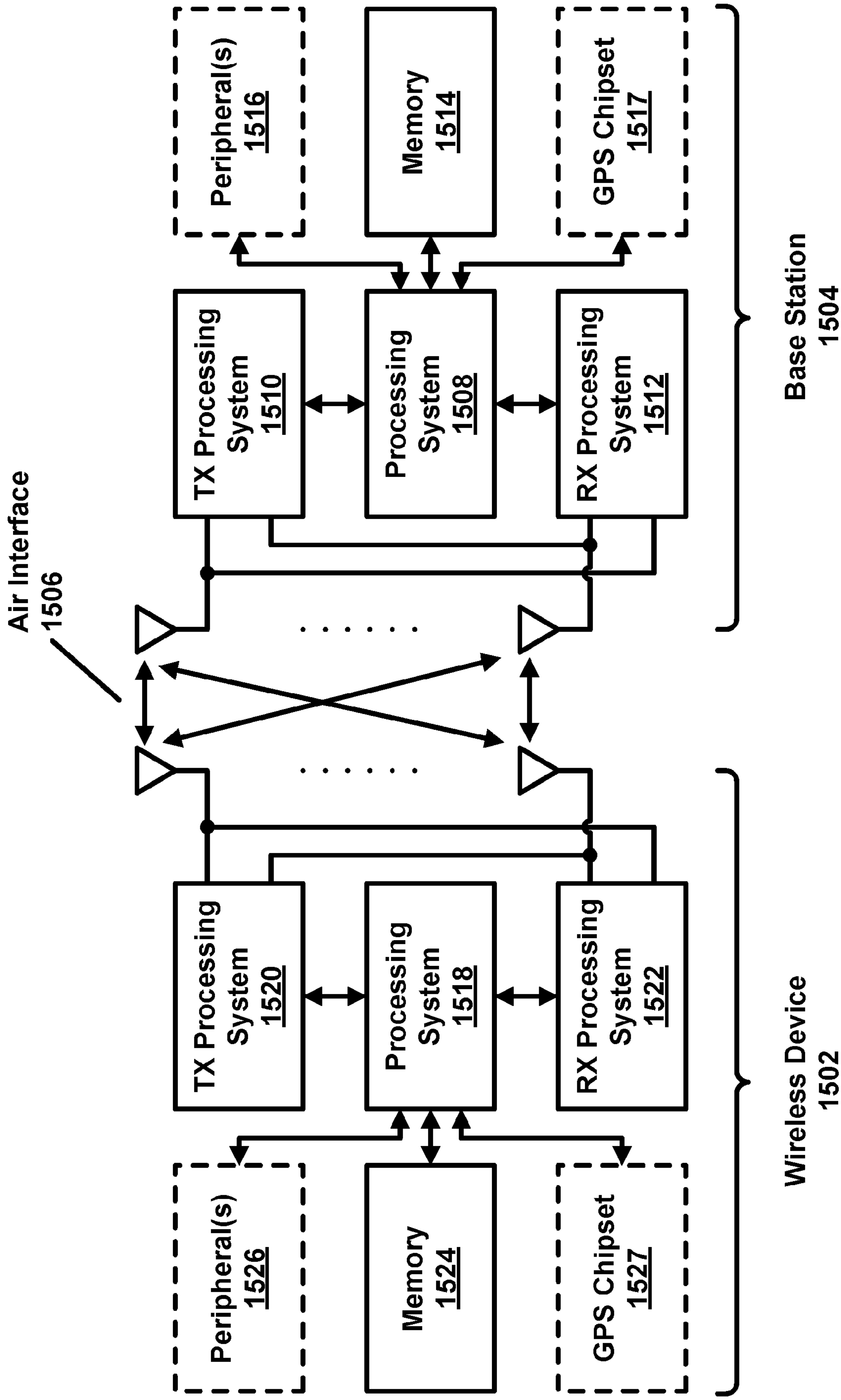
Air Interface
1506
Peripheral(s)
1516
Memory
1514
GPS Chipset
1517
TX Processing System
1510
Processing System
1508
RX Processing System
1512
Base Station
1504
TX Processing System
1520
Processing System
1518
RX Processing System
1522
Peripheral(s)
1526
Memory
1524
GPS Chipset
1527
Wireless Device
1502

FIG. 15

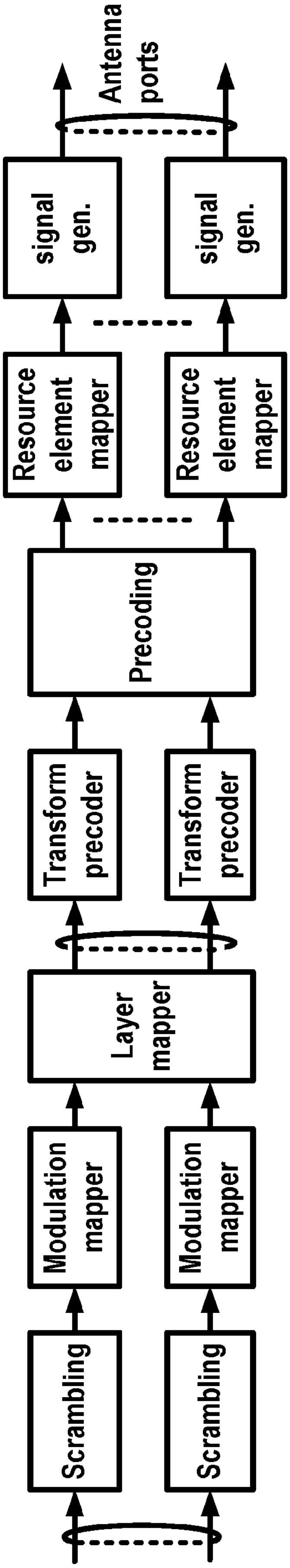


FIG. 16A

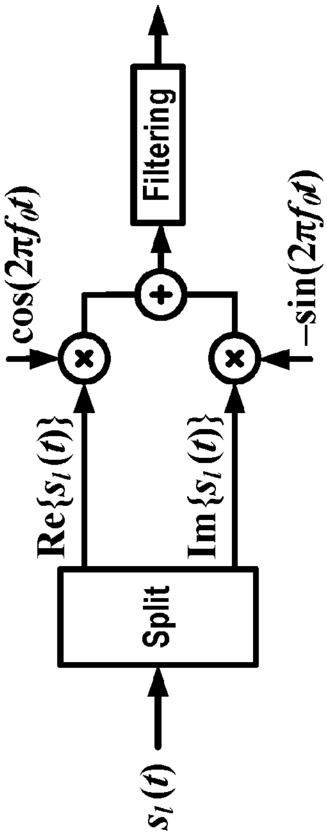


FIG. 16B

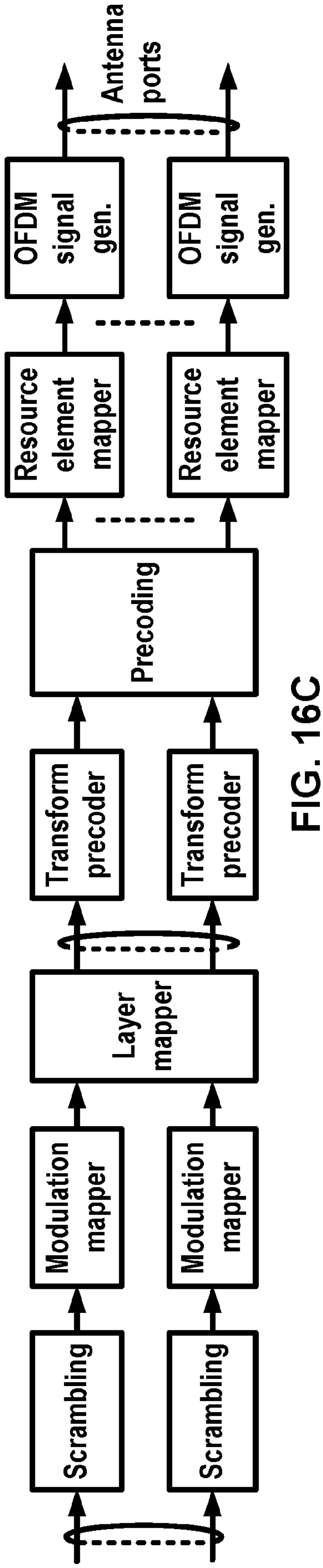


FIG. 16C

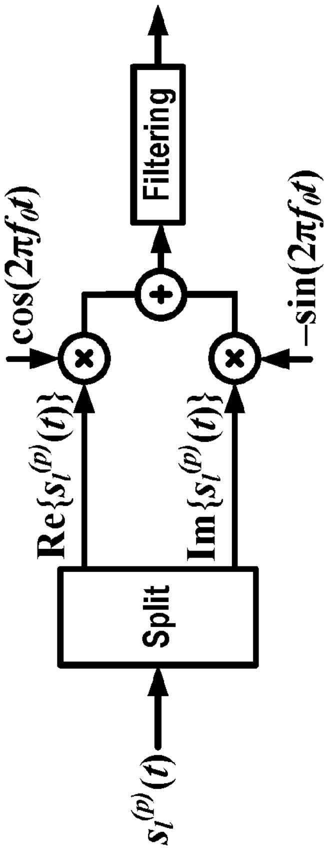


FIG. 16D

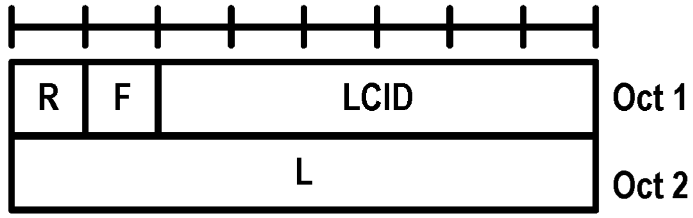


FIG. 17A

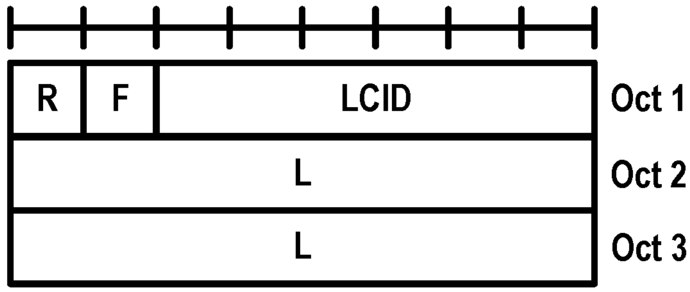


FIG. 17B

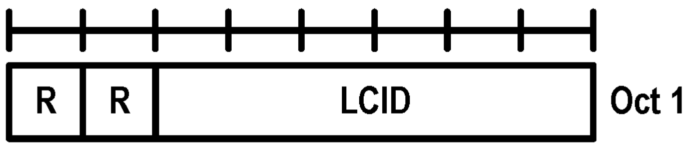


FIG. 17C

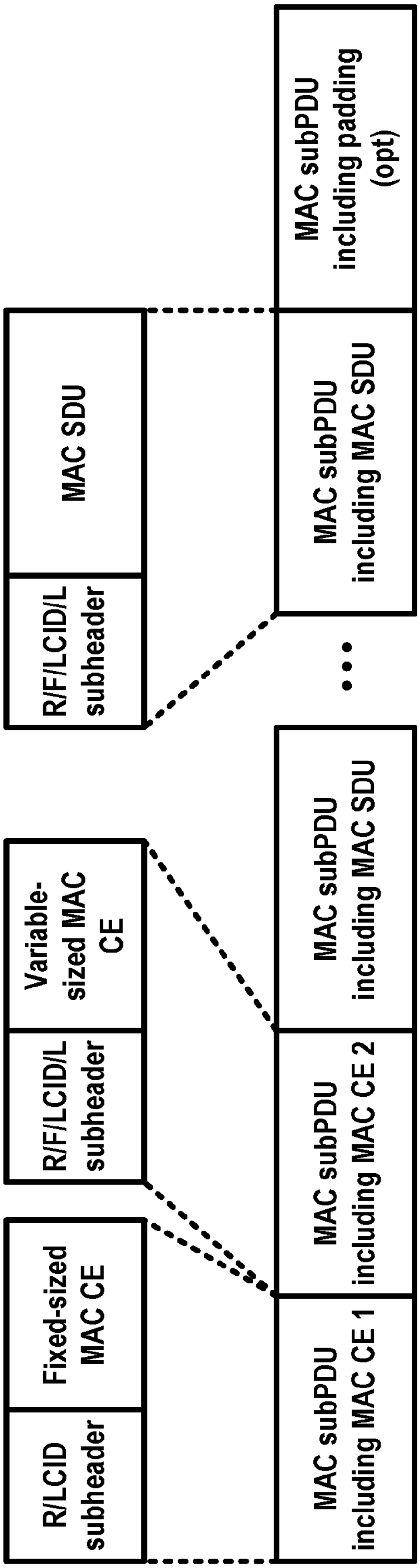


FIG. 18A

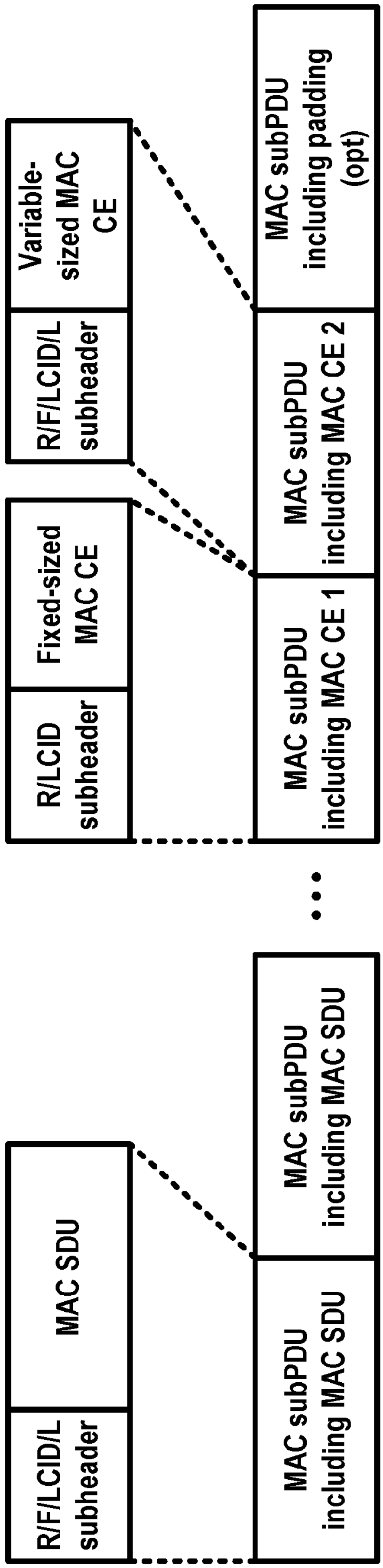


FIG. 18B

| Index | LCID values |
|---|---|
| 000000 | CCCH |
| 000001-100000 | Identity of a logical channel |
| 100001-101111 | Reserved |
| 110000 | SP ZP CSI-RS Resource Set Act./Deact. |
| 110001 | PUCCH spatial relation Act./Deact. |
| 110010 | SP SRS Act./Deact. |
| 110011 | SP CSI reporting on PUCCH Act./Deact. |
| 110100 | TCI State Indication for UE-specific PDCCH |
| 110101 | TCI State Indication for UE-specific PDSCH |
| 110110 | Aperiodic CSI Trigger State Subselection |
| 110111 | SP CSI-RS/CSI-IM Resource Set Act./Deact. |
| 111000 | Duplication Activation/deactivation |
| 111001 | SCell activation/deactivation (4 Octet) |
| 111010 | SCell activation/deactivation (1 Octet) |
| 111011 | Long DRX Command |
| 111100 | DRX Command |
| 111101 | Timing Advance Command |
| 111110 | UE Contention Resolution Identity |
| 111111 | Padding |

FIG. 19

| Index | LCID values |
|---|---|
| 000000 | CCCH |
| 000001-100000 | Identity of a logical channel |
| 100001-110110 | Reserved |
| 110111 | Configured Grant Confirmation |
| 111000 | Multiple Entry PHR |
| 111001 | Single Entry PHR |
| 111010 | C-RNTI |
| 111011 | Short Truncated BSR |
| 111100 | Long Truncated BSR |
| 111101 | Short BSR |
| 111110 | Long BSR |
| 111111 | Padding |

FIG. 20

| | | | | | | | | |
|---|---|---|---|---|---|---|---|---|
| $C_7$ | $C_6$ | $C_5$ | $C_4$ | $C_3$ | $C_2$ | $C_1$ | R | Oct 1 |

FIG. 21A

| | | | | | | | | |
|---|---|---|---|---|---|---|---|---|
| $C_7$ | $C_6$ | $C_5$ | $C_4$ | $C_3$ | $C_2$ | $C_1$ | R | Oct 1 |
| $C_{15}$ | $C_{14}$ | $C_{13}$ | $C_{12}$ | $C_{11}$ | $C_{10}$ | $C_9$ | $C_8$ | Oct 2 |
| $C_{23}$ | $C_{22}$ | $C_{21}$ | $C_{20}$ | $C_{19}$ | $C_{18}$ | $C_{17}$ | $C_{16}$ | Oct 3 |
| $C_{31}$ | $C_{30}$ | $C_{29}$ | $C_{28}$ | $C_{27}$ | $C_{26}$ | $C_{25}$ | $C_{24}$ | Oct 4 |

FIG. 21B

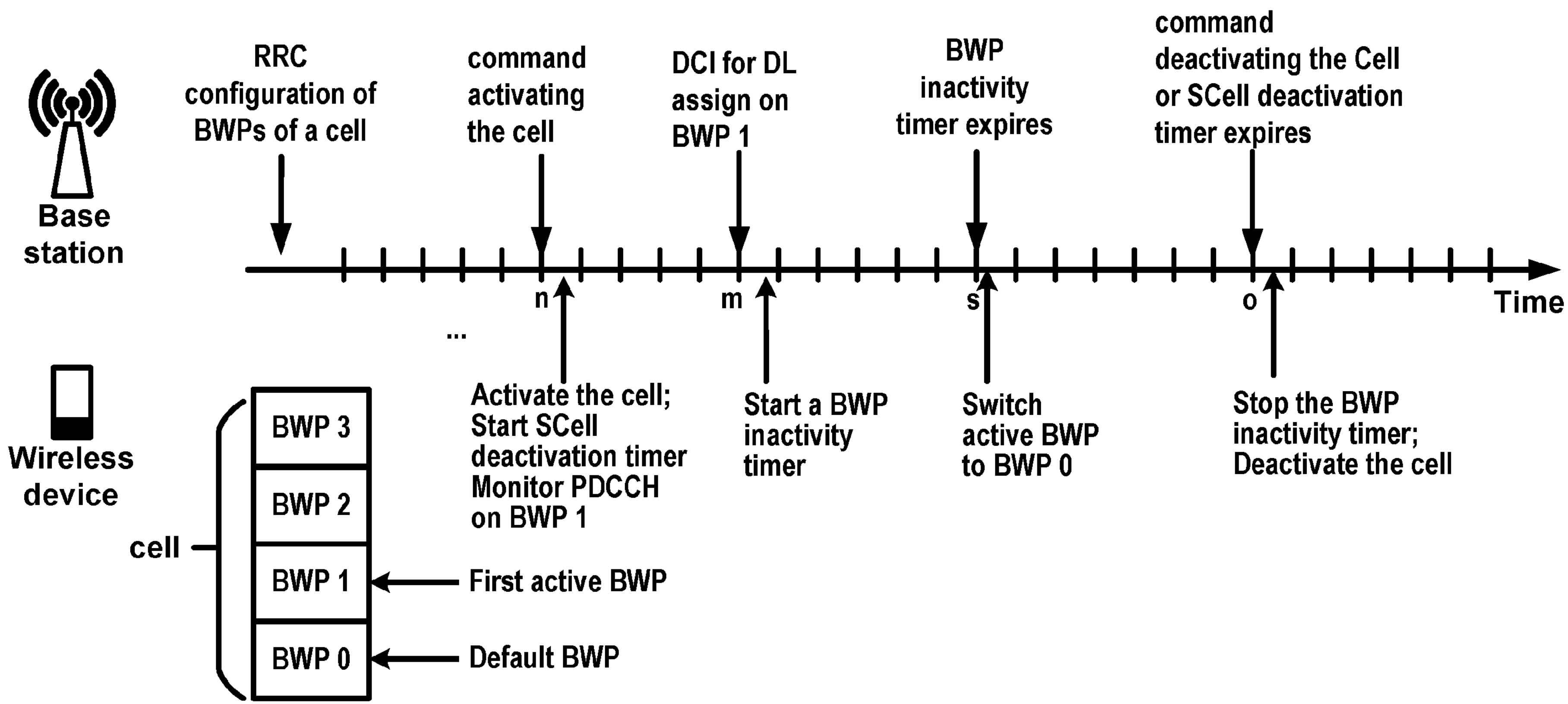
Base station
Wireless device
RRC configuration of BWPs of a cell
command activating the cell
DCI for DL assign on BWP 1
BWP inactivity timer expires
command deactivating the Cell or SCell deactivation timer expires
n
m
s
o
Time
...
Activate the cell; Start SCell deactivation timer Monitor PDCCH on BWP 1
Start a BWP inactivity timer
Switch active BWP to BWP 0
Stop the BWP inactivity timer; Deactivate the cell
cell
BWP 3
BWP 2
BWP 1
BWP 0
First active BWP
Default BWP

FIG. 22

| DCI format | Usage |
|---|---|
| 0_0 | Scheduling of PUSCH in one cell |
| 0_1 | Scheduling of one or multiple PUSCH in one cell, or indicating CG-DFI for configured grant PUSCH |
| 0_2 | Scheduling of PUSCH in one cell |
| 1_0 | Scheduling of PDSCH in one cell |
| 1_1 | Scheduling of PDSCH in one cell, and/or triggering one shot HARQ-ACK codebook feedback |
| 1_2 | Scheduling of PDSCH in one cell |
| 2_0 | Notifying a group of UEs of the slot format, available RB sets, COT duration and search space set group switching |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |
| 2_4 | Notifying a group of UEs of the PRB(s) and OFDM symbol(s) where UE cancels the corresponding UL transmission from the UE |
| 2_5 | Notifying the availability of soft resources |
| 2_6 | Notifying the power saving information outside DRX Active Time for one or more UEs |
| 2_7 | Notifying Paging early indication and TRS availability indication for one or more UEs |
| 3_0 | Scheduling of NR sidelink in one cell |
| 3_1 | Scheduling of LTE sidelink in one cell |
| 4_0 | Schedulng of PDSCH with CRC scrambled by MCCH-RNTI/G-RNTI for broadcast |
| 4_1 | Schedulng of PDSCH with CRC scrambled by G-RNTI/G-CS-RNTI for multicast |
| 4_2 | Schedulng of PDSCH with CRC scrambled by G-RNTI/G-CS-RNTI for multicast |

FIG. 23

```
MIB ::=                         SEQUENCE {
   systemFrameNumber                BIT STRING (SIZE (6)),
   subCarrierSpacingCommon          ENUMERATED {scs15or60, scs30or120},
   ssb-SubcarrierOffset             INTEGER (0..15),
   dmrs-TypeA-Position              ENUMERATED {pos2, pos3},
   pdcch-ConfigSIB1                 PDCCH-ConfigSIB1,
   cellBarred                       ENUMERATED {barred, notBarred},
   intraFreqReselection             ENUMERATED {allowed, notAllowed},
   spare                            BIT STRING (SIZE (1))}

PDCCH-ConfigSIB1 ::=            SEQUENCE {
   controlResourceSetZero           ControlResourceSetZero,
   searchSpaceZero                  SearchSpaceZero}
```

FIG. 24A

| Index | SS/PBCH block and CORESET multiplexing pattern | Number of RBs per coreset | Number of Symbols per coreset | Offset (RBs) |
|---|---|---|---|---|
| 0 | 1 | 24 | 2 | 0 |
| 1 | 1 | 24 | 2 | 2 |
| 2 | 1 | 24 | 2 | 4 |
| 3 | 1 | 24 | 3 | 0 |
| 4 | 1 | 24 | 3 | 2 |
| 5 | 1 | 24 | 3 | 4 |
| 6 | 1 | 48 | 1 | 12 |
| 7 | 1 | 48 | 1 | 16 |
| ... | ... | ... | ... | ... |

FIG. 24B

| Index | *O* | Number of search space sets per slot | *M* | First symbol index |
|---|---|---|---|---|
| 0 | 0 | 1 | 1 | 0 |
| 1 | 0 | 2 | 1/2 | {0, if *i* is even}, {*N*, if is odd} |
| 2 | 2 | 1 | 1 | 0 |
| 3 | 2 | 2 | 1/2 | {0, if *i* is even}, {*N*, if *i* is odd} |
| 4 | 5 | 1 | 1 | 0 |
| 5 | 5 | 2 | 1/2 | {0, if *i* is even}, *N*, if *i* is odd |
| 6 | 7 | 1 | 1 | 0 |
| 7 | 7 | 2 | 1/2 | {0, if *i* is even}, {*N*, if *i* is odd} |
| ... | ... | ... | ... | ... |

FIG. 24C

```
SIB1 ::=        SEQUENCE {
    cellSelectionInfo                SEQUENCE {
        q-RxLevMin                       Q-RxLevMin,
        q-RxLevMinOffset                   INTEGER (1..8) ...}
    cellAccessRelatedInfo             CellAccessRelatedInfo,
    connEstFailureControl             ConnEstFailureControl
    si-SchedulingInfo                SI-SchedulingInfo
    servingCellConfigCommon              ServingCellConfigCommonSIB
    ims-EmergencySupport               ENUMERATED {true}
    eCallOverIMS-Support              ENUMERATED {true}
    ue-TimersAndConstants              UE-TimersAndConstants
    uac-BarringInfo                  SEQUENCE { ...}
    useFullResumeID                     ENUMERATED {true}
    lateNonCriticalExtension            OCTET STRING
    nonCriticalExtension              SIB1-v16xy-IEs  }

ServingCellConfigCommonSIB ::=     SEQUENCE {
    downlinkConfigCommon               DownlinkConfigCommonSIB,
    uplinkConfigCommon                UplinkConfigCommonSIB
    supplementaryUplink               UplinkConfigCommonSIB
    n-TimingAdvanceOffset              ENUMERATED { n0, n25600, n39936 }
    ssb-PositionsInBurst             SEQUENCE {
        inOneGroup                    BIT STRING (SIZE (8)),
        groupPresence                   BIT STRING (SIZE (8)) },
    ssb-PeriodicityServingCell         ENUMERATED {ms5, ms10, ms20, ms40, ms80, ms160},
    tdd-UL-DL-ConfigurationCommon       TDD-UL-DL-ConfigCommon
    ss-PBCH-BlockPower                 INTEGER (-60..50),
    ...,}

DownlinkConfigCommonSIB ::=     SEQUENCE {
    frequencyInfoDL              FrequencyInfoDL-SIB,
    initialDownlinkBWP            BWP-DownlinkCommon,
    bcch-Config                   BCCH-Config,
    pcch-Config                   PCCH-Config,  ...}

PCCH-Config ::=           SEQUENCE {
    defaultPagingCycle               PagingCycle,
    nAndPagingFrameOffset               CHOICE {
        oneT                          NULL,
        halfT                        INTEGER (0..1), ...},
    ns                          ENUMERATED {four, two, one},
    firstPDCCH-MonitoringOccasionOfPO   CHOICE {
        sCS15KHZoneT       SEQUENCE (SIZE (1..maxPO-perPF)) OF INTEGER (0..139),...}
    ...,
    [[   nrofPDCCH-MonitoringOccasionPerSSB-InPO-r16  INTEGER (2..4)  ]]
}
```

**FIG. 25**

```
BWP-DownlinkCommon ::=            SEQUENCE {
   genericParameters               BWP,
   pdcch-ConfigCommon              SetupRelease { PDCCH-ConfigCommon }
   pdsch-ConfigCommon              SetupRelease { PDSCH-ConfigCommon }
   ...}
PDCCH-ConfigCommon ::=            SEQUENCE {
   controlResourceSetZero          ControlResourceSetZero
   commonControlResourceSet          ControlResourceSet
   searchSpaceZero                 SearchSpaceZero
   commonSearchSpaceList             SEQUENCE (SIZE(1..4)) OF SearchSpace
   searchSpaceSIB1                 SearchSpaceId
   searchSpaceOtherSystemInformation   SearchSpaceId
   pagingSearchSpace                SearchSpaceId
   ra-SearchSpace                  SearchSpaceId
    [[
   firstPDCCH-MonitoringOccasionOfPO   CHOICE {
      sCS15KHZoneT    SEQUENCE (SIZE (1..maxPO-perPF)) OF INTEGER (0..139),
      ...
   }OPTIONAL    -- Cond OtherBWP
    ]]
   ...,}
PDCCH-ServingCellConfig ::=       SEQUENCE {
   slotFormatIndicator             SetupRelease { SlotFormatIndicator }...,
   [[
   availabilityIndicator-r16       SetupRelease {AvailabilityIndicator-r16}
   searchSpaceSwitchTimer-r16        INTEGER (1..80)
   ]]
}

SearchSpaceSwitchConfig-r16 ::=    SEQUENCE {
   cellGroupsForSwitchList-r16       SEQUENCE(SIZE (1..4)) OF CellGroupForSwitch-r16
   searchSpaceSwitchDelay-r16        INTEGER (10..52)
}
CellGroupForSwitch-r16 ::= SEQUENCE(SIZE (1..16)) OF ServCellIndex

ControlResourceSet ::=            SEQUENCE {
   controlResourceSetId             ControlResourceSetId,
   frequencyDomainResources           BIT STRING (SIZE (45)),
   duration                    INTEGER (1..maxCoReSetDuration),
   cce-REG-MappingType               CHOICE {
      interleaved                 SEQUENCE {
         reg-BundleSize               ENUMERATED {n2, n3, n6},
         interleaverSize              ENUMERATED {n2, n3, n6},
         shiftIndex                INTEGER(0..maxNrofPhysicalResourceBlocks-1)},
      nonInterleaved               NULL},
   precoderGranularity             ENUMERATED {sameAsREG-bundle, allContiguousRBs},
   pdcch-DMRS-ScramblingID              INTEGER (0..65535)
   ...,  }
```

**FIG. 26**

```
SearchSpace ::=                    SEQUENCE {
   searchSpaceId                      SearchSpaceId,
   controlResourceSetId                  ControlResourceSetId
   monitoringSlotPeriodicityAndOffset      CHOICE {
      sl1                          NULL,
      sl2                          INTEGER (0..1),...}
   duration                        INTEGER (2..2559)
   monitoringSymbolsWithinSlot            BIT STRING (SIZE (14))
   nrofCandidates                     SEQUENCE {
      aggregationLevel1                    ENUMERATED {n0, n1, n2, ... n8},
      aggregationLevel2                    ENUMERATED {n0, n1, n2, ... n8},
      ...}
   searchSpaceType                     CHOICE {
      common                         SEQUENCE {
         dci-Format0-0-AndFormat1-0          SEQUENCE {...}
         dci-Format2-0                    SEQUENCE {
            nrofCandidates-SFI                SEQUENCE {
               aggregationLevel1                ENUMERATED {n1, n2}
               aggregationLevel2                ENUMERATED {n1, n2}...},
            ...}
         dci-Format2-1                    SEQUENCE {...}
...
      },
      ue-Specific                         SEQUENCE {
         dci-Formats       ENUMERATED {formats0-0-And-1-0, formats0-1-And-1-1},
         ...,}
   }
 }

SearchSpaceExt-r16 ::=              SEQUENCE {
   controlResourceSetId-r16             ControlResourceSetId-r16
   searchSpaceType-r16                 SEQUENCE {
      common-r16                      SEQUENCE {
         dci-Format2-4-r16                 SEQUENCE {
            nrofCandidates-CI-r16               SEQUENCE {
               aggregationLevel1-r16               ENUMERATED {n1, n2}...},...}
         dci-Format2-5-r16                SEQUENCE {
            nrofCandidates-IAB-r16              SEQUENCE {
               aggregationLevel1-r16               ENUMERATED {n1, n2}...},...}
         dci-Format2-6-r16                 SEQUENCE {...}
         ...}
   }
   searchSpaceGroupIdList-r16        SEQUENCE (SIZE (1.. 2)) OF INTEGER (0..1)
   freqMonitorLocations-r16                BIT STRING (SIZE (5))
}

SearchSpaceSwitchTrigger-r16 ::=   SEQUENCE {
   servingCellId-r16              ServCellIndex,
   positionInDCI-r16
INTEGER(0..maxSFI-DCI-PayloadSize-1)
}
```

FIG. 27

| SCS | OFDM starting Symbols of the candidate SSBs | fc<=3GHz, Lmax=4 | 3GHz<fc<=6GHz, Lmax=8 | fc>6GHz, Lmax=64 |
|---|---|---|---|---|
| CaseA: 15 KHz | {2,8}+14n | n=0,1 | n=0,1,2,3 | Not Applicable (NA) |
| CaseB: 30 KHz | {4,8,16,20}+28n | n=0 | n=0,1 | NA |
| CaseC: 30 KHz | {2,8}+14n | n=0,1 | n=0,1,2,3 | NA |
| CaseD: 120 KHz | {4,8,16,20}+28n | NA | NA | n=0,1,2,3,5,6,7,8,10,11,12,13,15,16,17,18 |
| CaseE: 240 KHz | {8,12,16,20,32,36,40,44} + 56n | NA | NA | n=0,1,2,3,5,6,7,8 |

FIG. 28

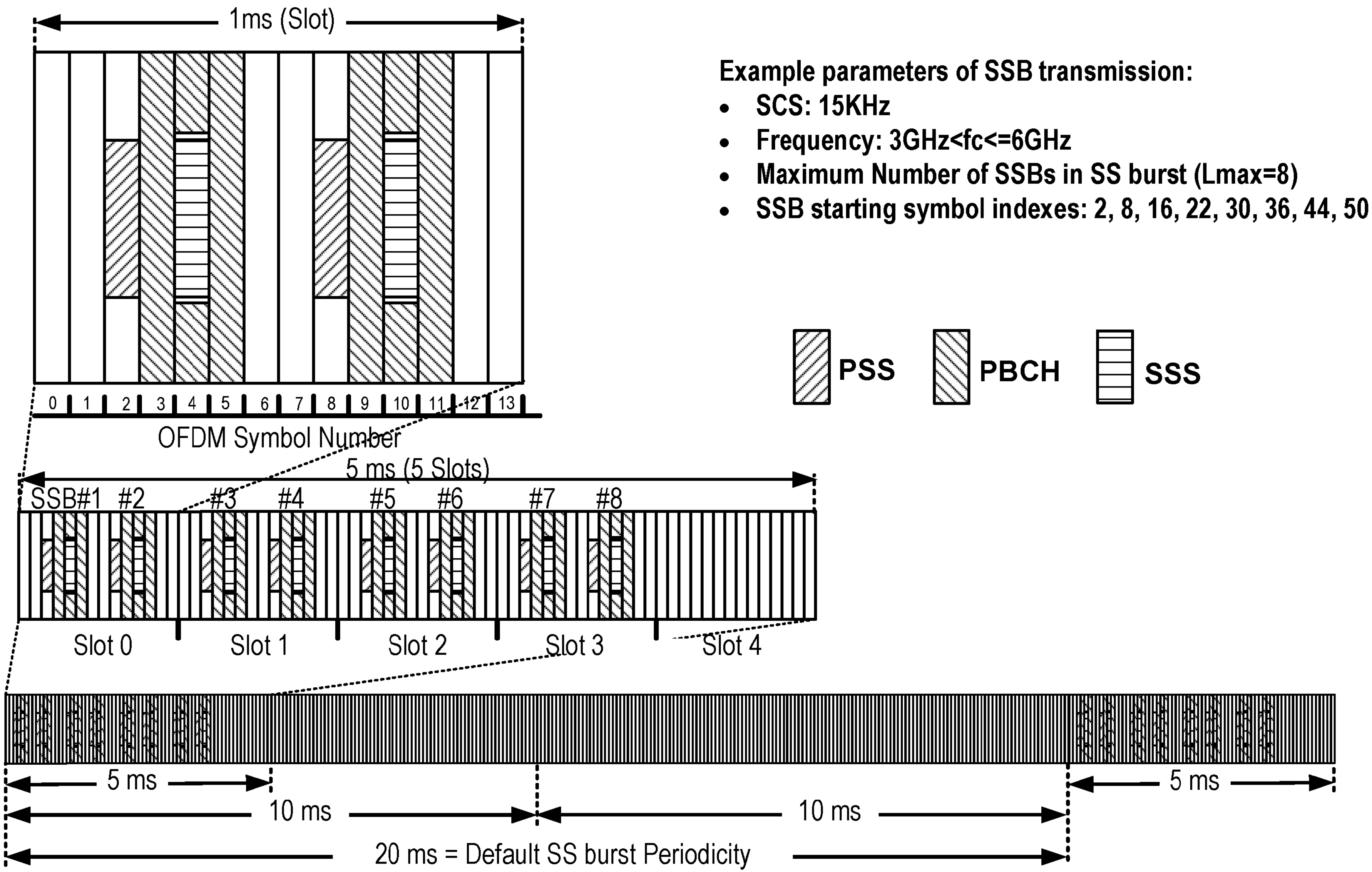
1ms (Slot)
0 1 2 3 4 5 6 7 8 9 10 11 12 13
OFDM Symbol Number
Example parameters of SSB transmission:
• SCS: 15KHz
• Frequency: 3GHz<fc<=6GHz
• Maximum Number of SSBs in SS burst (Lmax=8)
• SSB starting symbol indexes: 2, 8, 16, 22, 30, 36, 44, 50
PSS
PBCH
SSS
5 ms (5 Slots)
SSB#1 #2 #3 #4 #5 #6 #7 #8
Slot 0
Slot 1
Slot 2
Slot 3
Slot 4
5 ms
10 ms
10 ms
5 ms
20 ms = Default SS burst Periodicity

FIG. 29

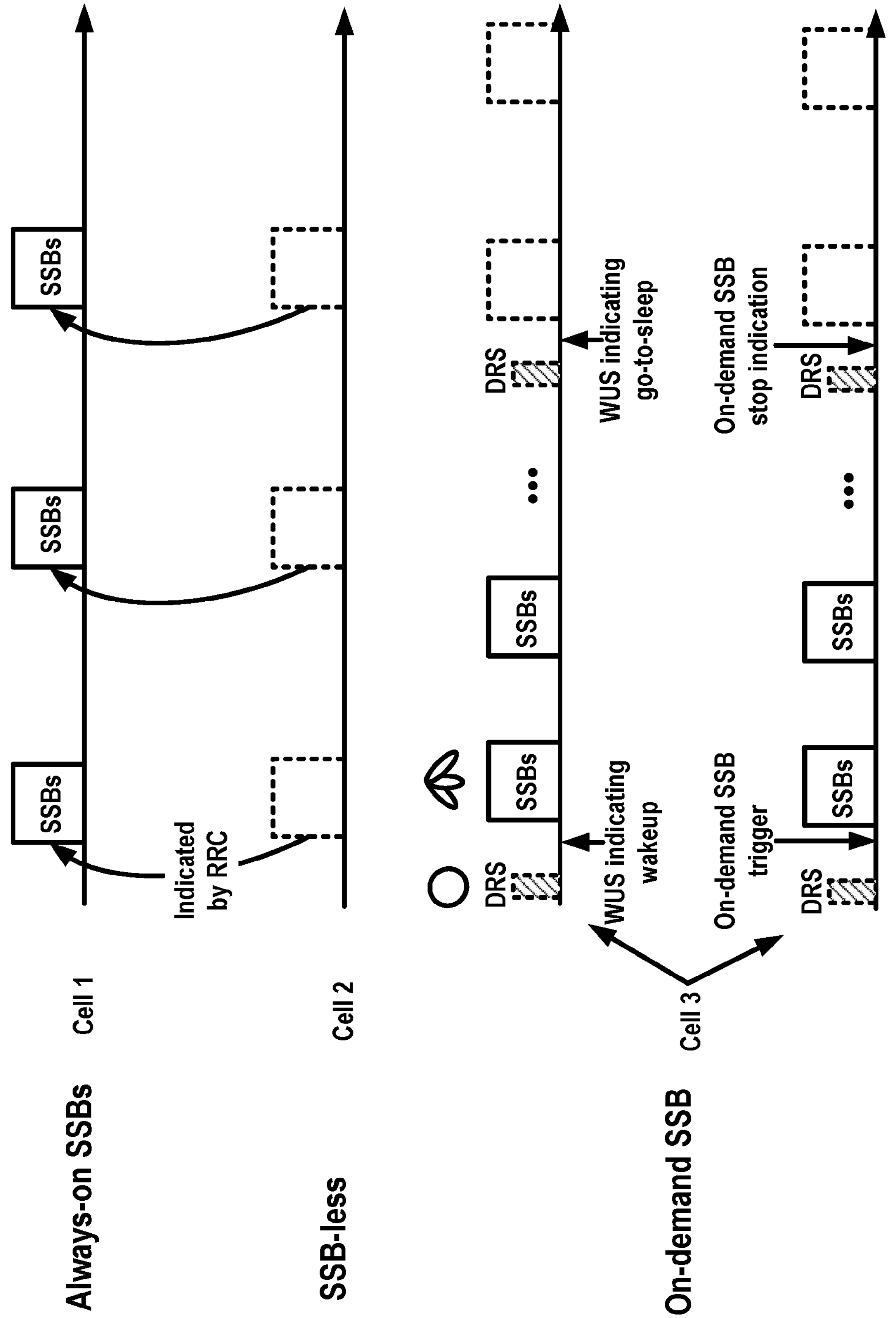
Always-on SSBs
Cell 1
SSBs
SSBs
SSBs
Indicated by RRC
SSB-less
Cell 2
On-demand SSB
Cell 3
DRS
WUS indicating wakeup
SSBs
SSBs
DRS
WUS indicating go-to-sleep
On-demand SSB trigger
DRS
SSBs
SSBs
DRS
On-demand SSB stop indication

FIG. 30

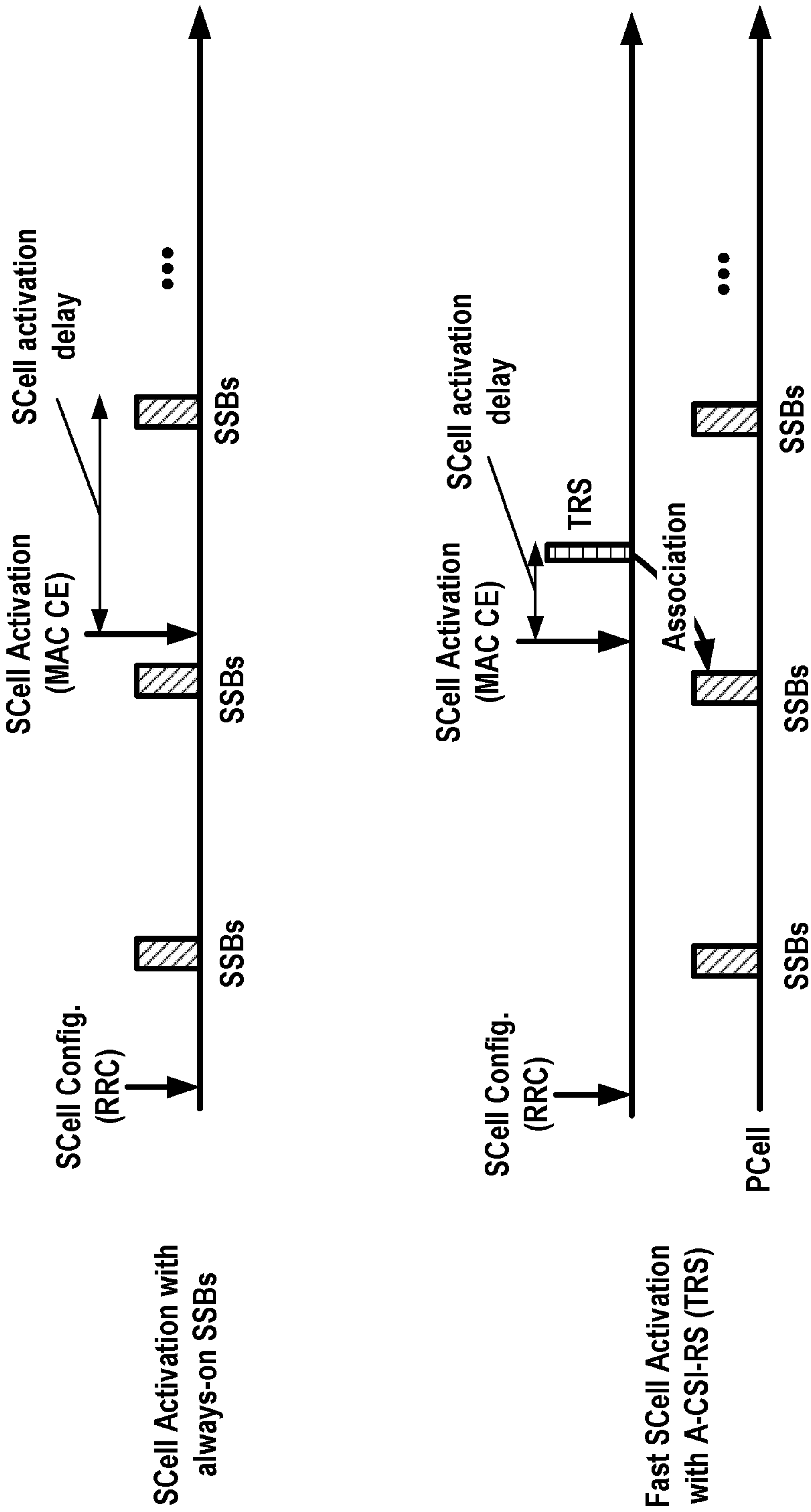
SCell Activation with always-on SSBs
SCell Config. (RRC)
SSBs
SCell Activation (MAC CE)
SSBs
SCell activation delay
SSBs
Fast SCell Activation with A-CSI-RS (TRS)
SCell Config. (RRC)
SCell Activation (MAC CE)
SCell activation delay
TRS
Association
PCell
SSBs
SSBs
SSBs

FIG. 31

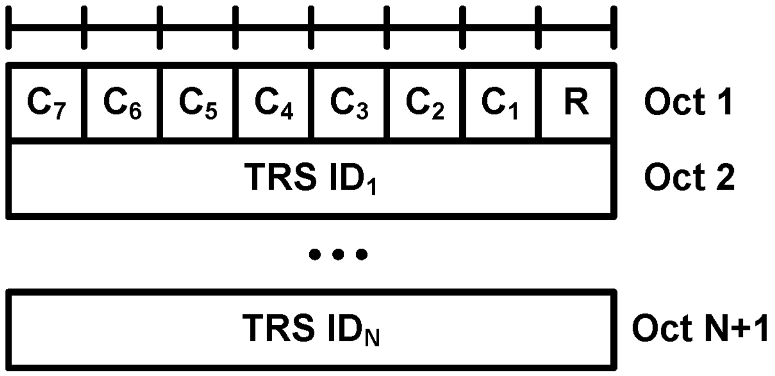


FIG. 32A

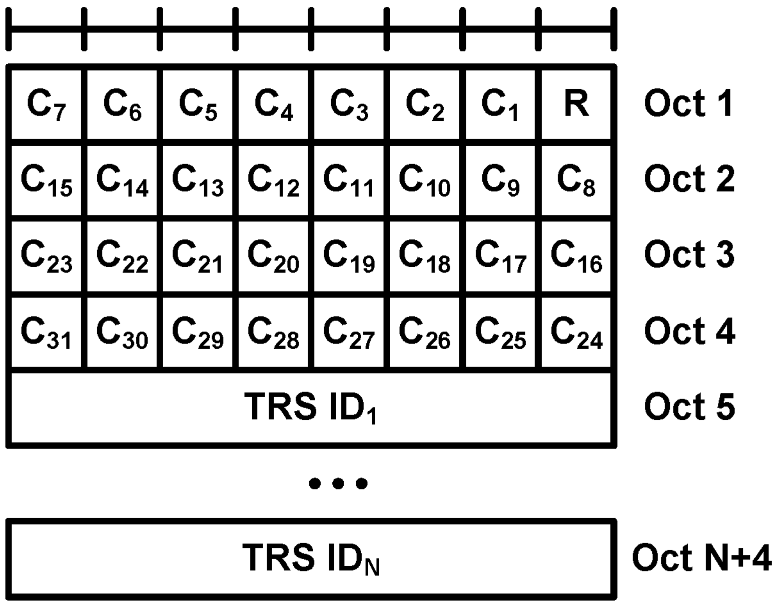


FIG. 32B

```
CellGroupConfig ::=                SEQUENCE {
   cellGroupId                     CellGroupId,
   mac-CellGroupConfig             MAC-CellGroupConfig
   physicalCellGroupConfig         PhysicalCellGroupConfig
   spCellConfig                    SpCellConfig
   sCellToAddModList               SEQUENCE (SIZE (1..maxNrofSCells)) OF SCellConfig
   sCellToReleaseList              SEQUENCE (SIZE (1..maxNrofSCells)) OF SCellIndex
     ...}

SCellConfig ::=              SEQUENCE {
   sCellIndex                 SCellIndex,
   sCellConfigCommon          ServingCellConfigCommon
   sCellConfigDedicated       ServingCellConfig
   ...,
   sCellState-r16             ENUMERATED {activated}
   secondaryDRX-GroupConfig-r16    ENUMERATED {true}
   smtc                       SSB-MTC, ...}


  SSB-MTC ::=                    SEQUENCE {
     periodicityAndOffset            CHOICE {
        sf5                      INTEGER (0..4),
        sf10                     INTEGER (0..9),
        sf20                     INTEGER (0..19),
        sf40                     INTEGER (0..39),
        sf80                     INTEGER (0..79),
        sf160                    INTEGER (0..159)
     },
     duration                    ENUMERATED { sf1, sf2, sf3, sf4, sf5 }
  }

ServingCellConfigCommon ::=       SEQUENCE {
   physCellId                    PhysCellId
   downlinkConfigCommon          DownlinkConfigCommon
   ssb-PositionsInBurst          CHOICE {...}
   ssb-periodicityServingCell    ENUMERATED { ... }
   ssbSubcarrierSpacing          SubcarrierSpacing
   ss-PBCH-BlockPower            INTEGER (-60..50),
   ...,}

DownlinkConfigCommon ::=      SEQUENCE {
   frequencyInfoDL            FrequencyInfoDL
   initialDownlinkBWP         BWP-DownlinkCommon
   ...,}

 FrequencyInfoDL ::=            SEQUENCE {

    absoluteFrequencySSB          ARFCN-ValueNR  OPTIONAL,   -- Cond SpCellAdd
    frequencyBandList           MultiFrequencyBandListNR,
    absoluteFrequencyPointA       ARFCN-ValueNR,
     ...
    referenceCell-r18    ServCellIndex    -- Cond SSBlessSCell
 }
```

FIG. 33

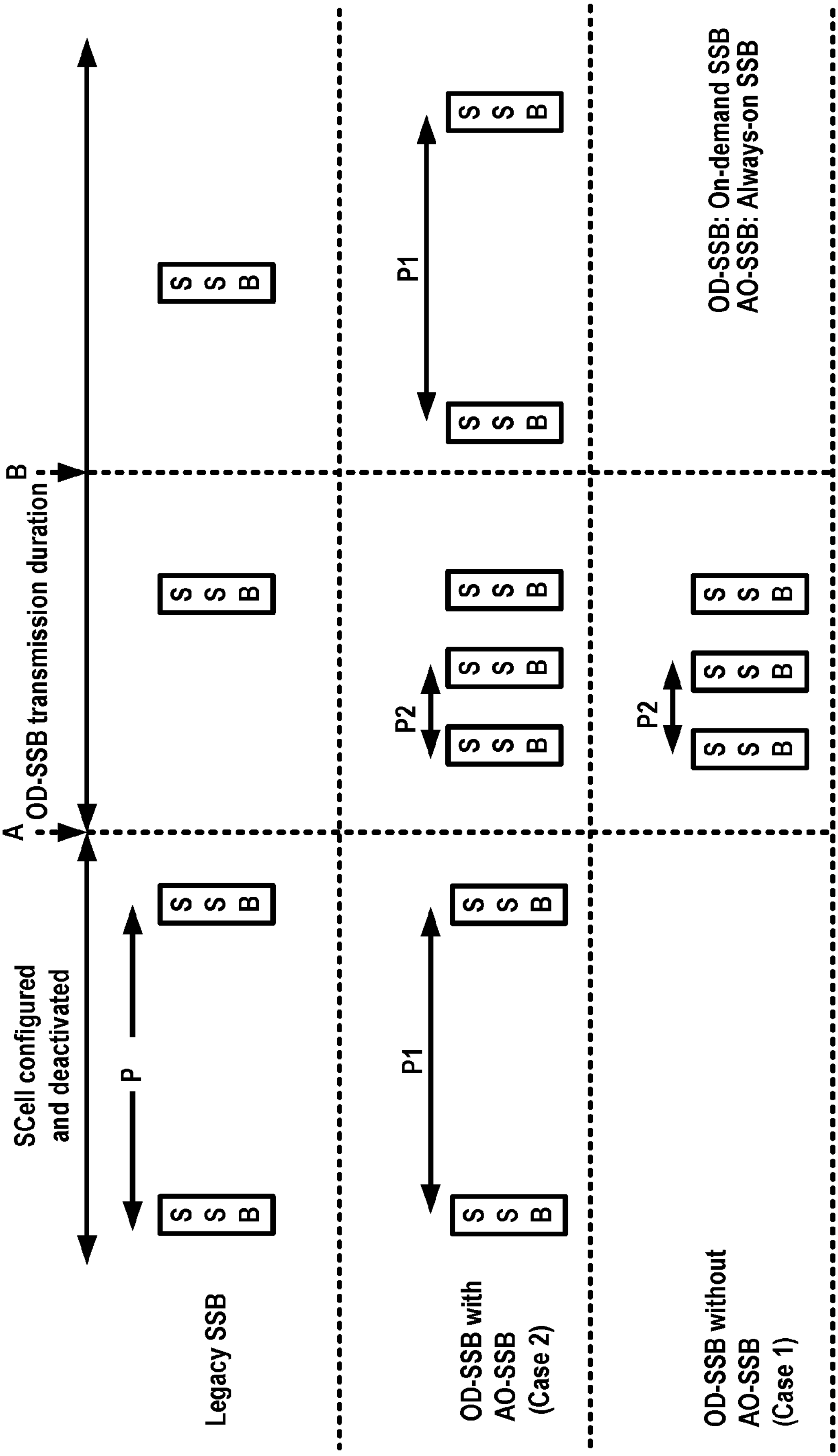

SCell configured and deactivated
A
OD-SSB transmission duration
B
Legacy SSB
P
SSB
OD-SSB with AO-SSB (Case 2)
P1
P2
OD-SSB without AO-SSB (Case 1)
OD-SSB: On-demand SSB
AO-SSB: Always-on SSB


FIG. 34

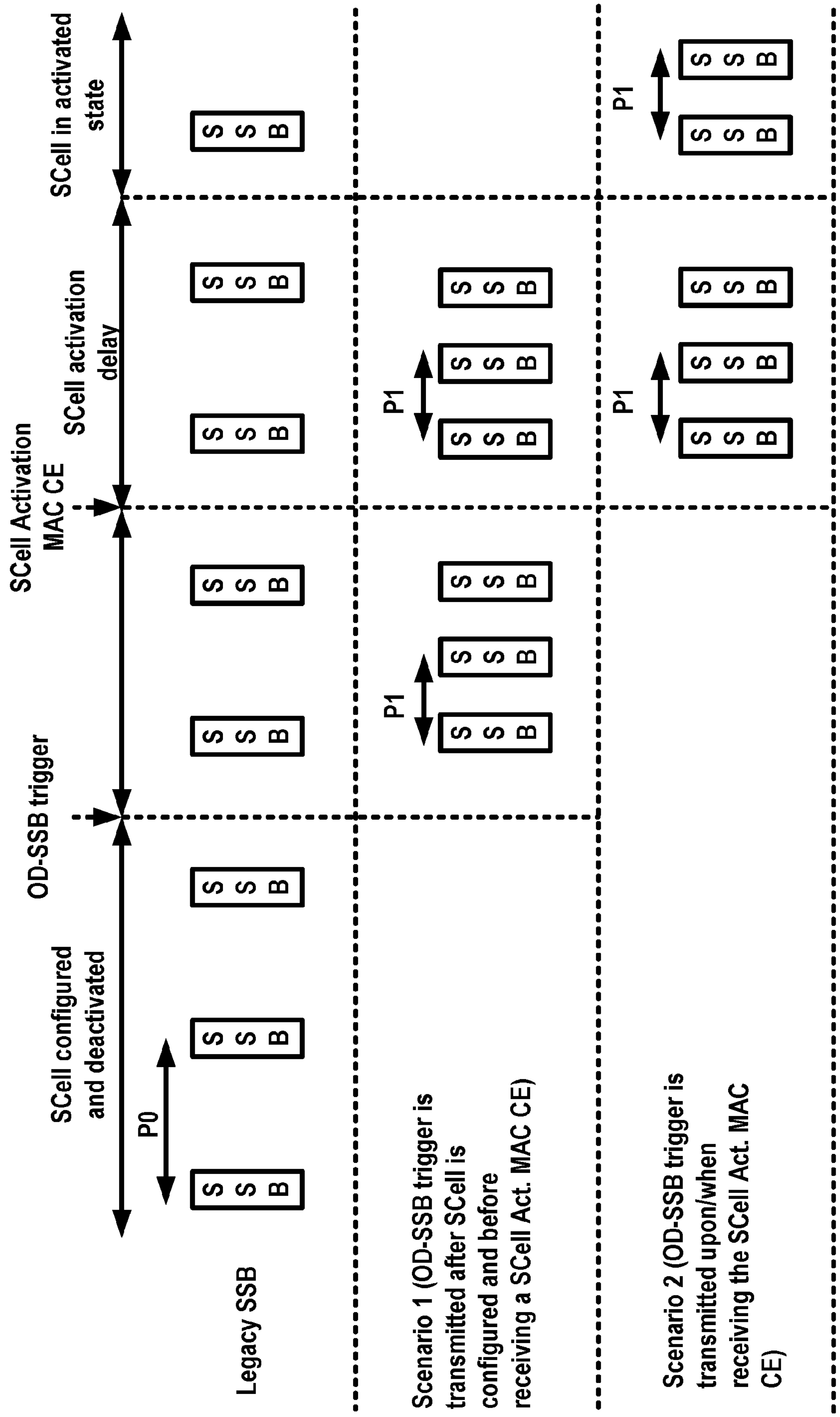
SCell configured and deactivated
OD-SSB trigger
SCell Activation MAC CE
SCell activation delay
SCell in activated state
Legacy SSB
P0
P1
SSB
Scenario 1 (OD-SSB trigger is transmitted after SCell is configured and before receiving a SCell Act. MAC CE)
Scenario 2 (OD-SSB trigger is transmitted upon/when receiving the SCell Act. MAC CE)

FIG. 35

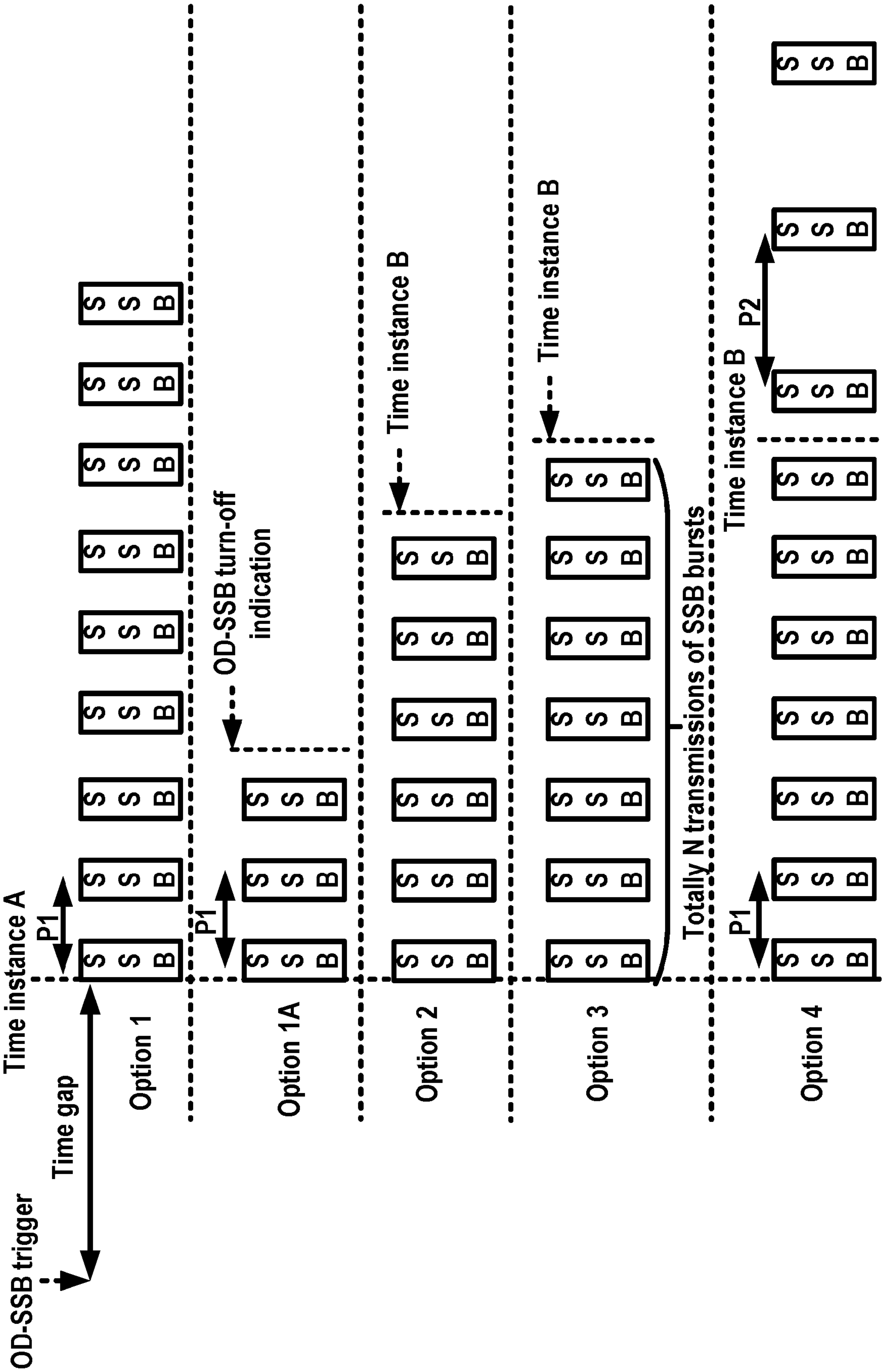
OD-SSB trigger
Time gap
Time instance A
P1
Option 1
S S B
Option 1A
OD-SSB turn-off indication
Option 2
Time instance B
Option 3
Totally N transmissions of SSB bursts
Option 4
P2

FIG. 36

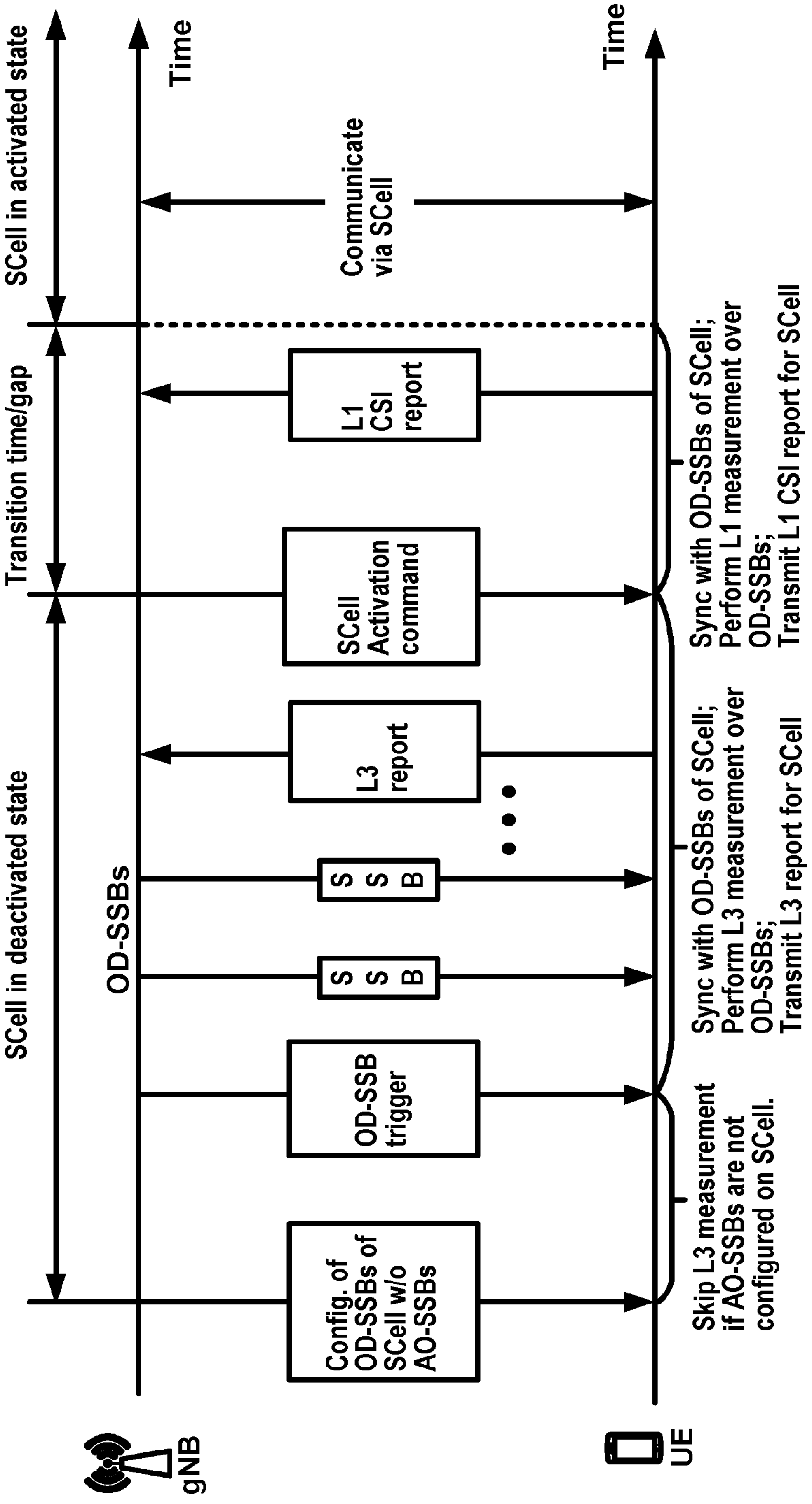
SCell in deactivated state
Transition time/gap
SCell in activated state
OD-SSBs
Time
gNB
UE
Config. of OD-SSBs of SCell w/o AO-SSBs
OD-SSB trigger
SSB
SSB
L3 report
SCell Activation command
L1 CSI report
Communicate via SCell
Skip L3 measurement if AO-SSBs are not configured on SCell.
Sync with OD-SSBs of SCell; Perform L3 measurement over OD-SSBs; Transmit L3 report for SCell
Sync with OD-SSBs of SCell; Perform L1 measurement over OD-SSBs; Transmit L1 CSI report for SCell

FIG. 37

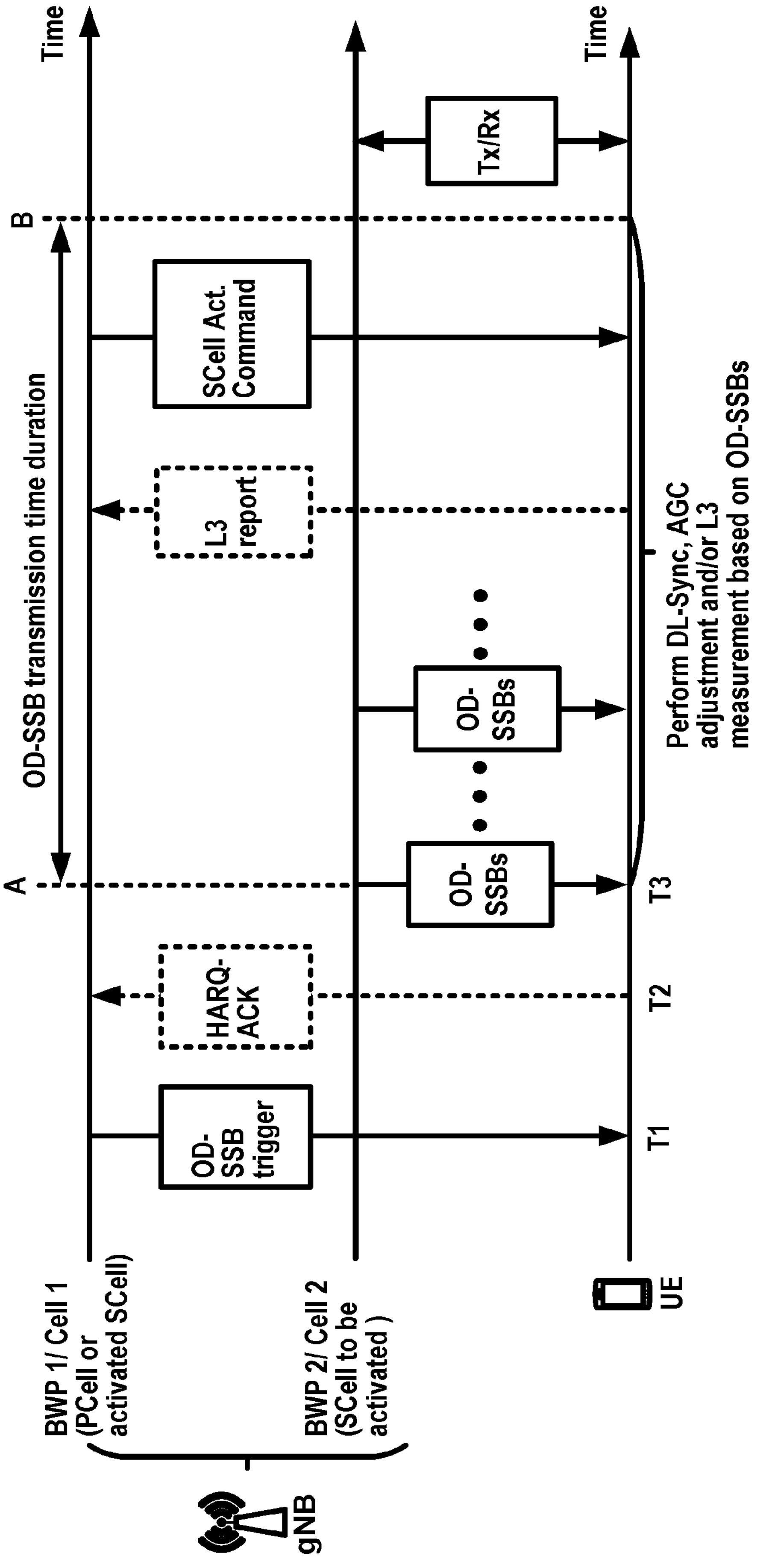
gNB
BWP 1/ Cell 1 (PCell or activated SCell)
BWP 2/ Cell 2 (SCell to be activated )
UE
Time
Time
OD-SSB trigger
HARQ-ACK
OD-SSBs
OD-SSBs
L3 report
SCell Act. Command
Tx/Rx
A
B
OD-SSB transmission time duration
T1
T2
T3
Perform DL-Sync, AGC adjustment and/or L3 measurement based on OD-SSBs

FIG. 38

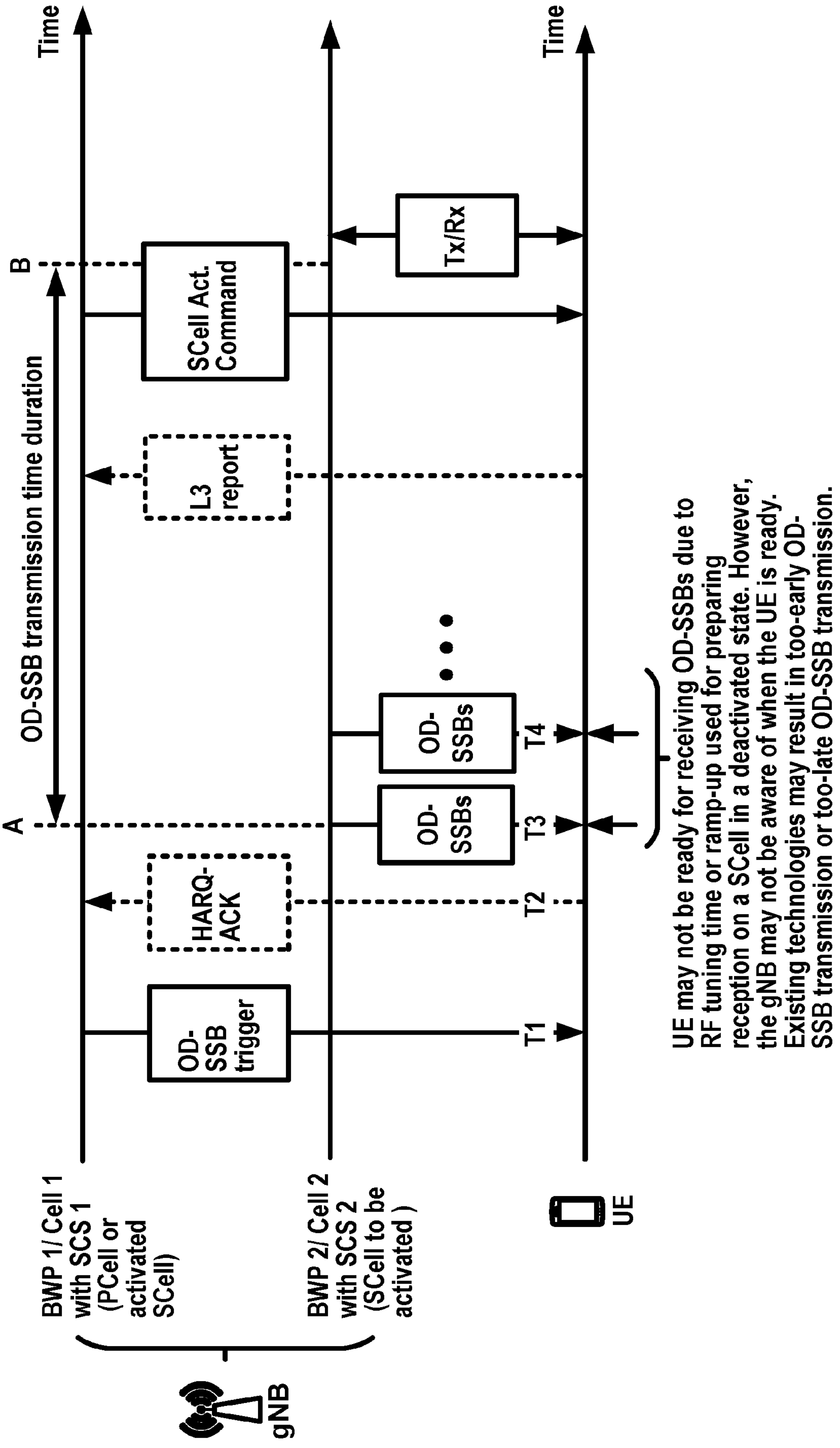
Time
Time
B
A
OD-SSB transmission time duration
SCell Act. Command
L3 report
HARQ-ACK
OD-SSB trigger
OD-SSBs
OD-SSBs
Tx/Rx
T1
T2
T3
T4
BWP 1/ Cell 1 with SCS 1 (PCell or activated SCell)
BWP 2/ Cell 2 with SCS 2 (SCell to be activated )
gNB
UE
UE may not be ready for receiving OD-SSBs due to RF tuning time or ramp-up used for preparing reception on a SCell in a deactivated state. However, the gNB may not be aware of when the UE is ready. Existing technologies may result in too-early OD-SSB transmission or too-late OD-SSB transmission.

FIG. 39

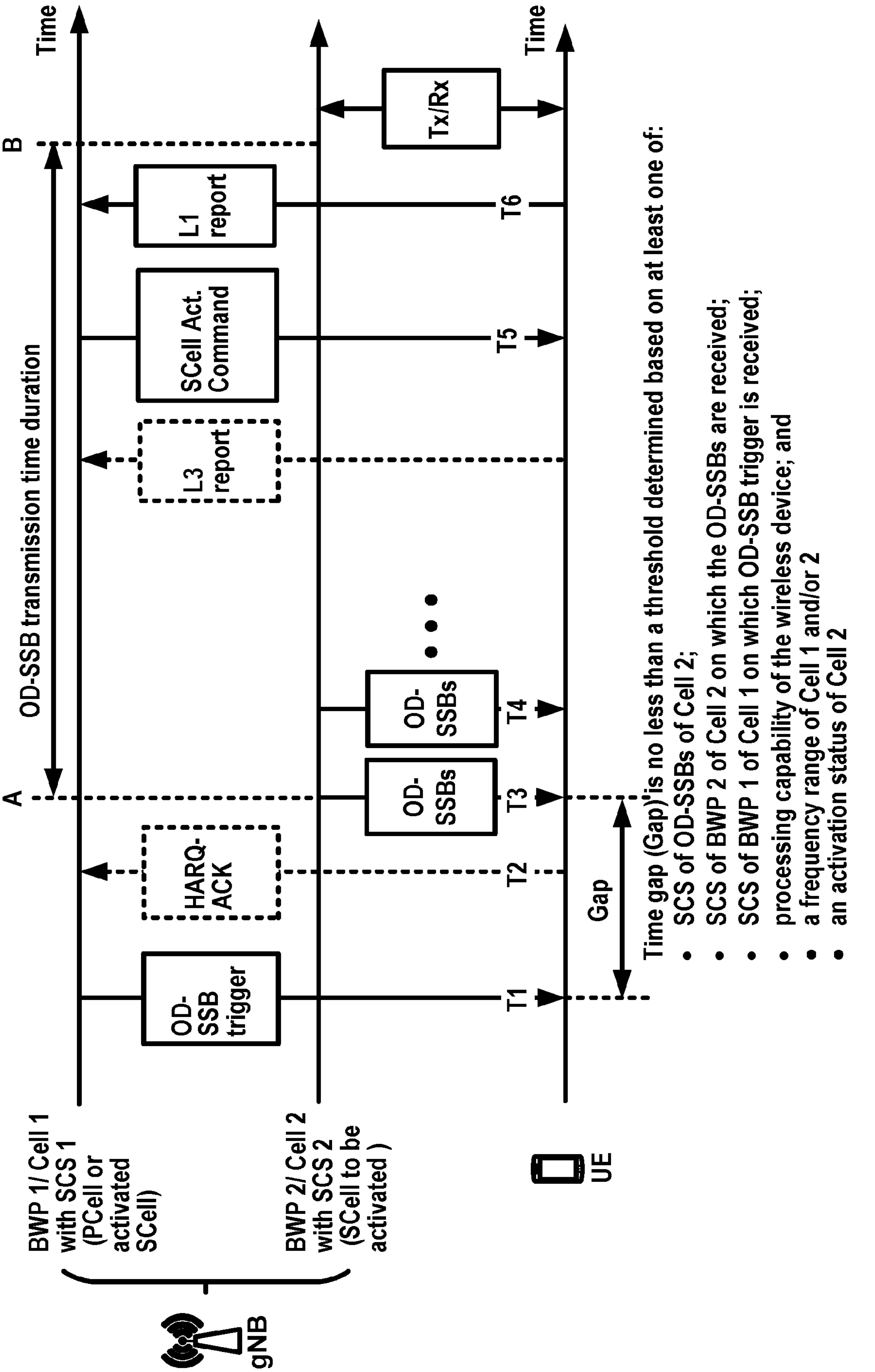
gNB
BWP 1/ Cell 1 with SCS 1 (PCell or activated SCell)
BWP 2/ Cell 2 with SCS 2 (SCell to be activated )
UE
Time
Time
OD-SSB trigger
HARQ-ACK
OD-SSBs
OD-SSBs
L3 report
SCell Act. Command
L1 report
Tx/Rx
T1
T2
T3
T4
T5
T6
A
B
OD-SSB transmission time duration
Gap
Time gap (Gap) is no less than a threshold determined based on at least one of:
• SCS of OD-SSBs of Cell 2;
• SCS of BWP 2 of Cell 2 on which the OD-SSBs are received;
• SCS of BWP 1 of Cell 1 on which OD-SSB trigger is received;
• processing capability of the wireless device; and
• a frequency range of Cell 1 and/or 2
• an activation status of Cell 2

FIG. 40

| *u* | Minimum time gap between a reception of an OD-SSB trigger and a starting of reception of OD-SSBs on a SCell |
|---|---|
| 0 | G1 |
| 1 | G2 |
| 2 | G3 |
| ... | ... |

FIG. 41

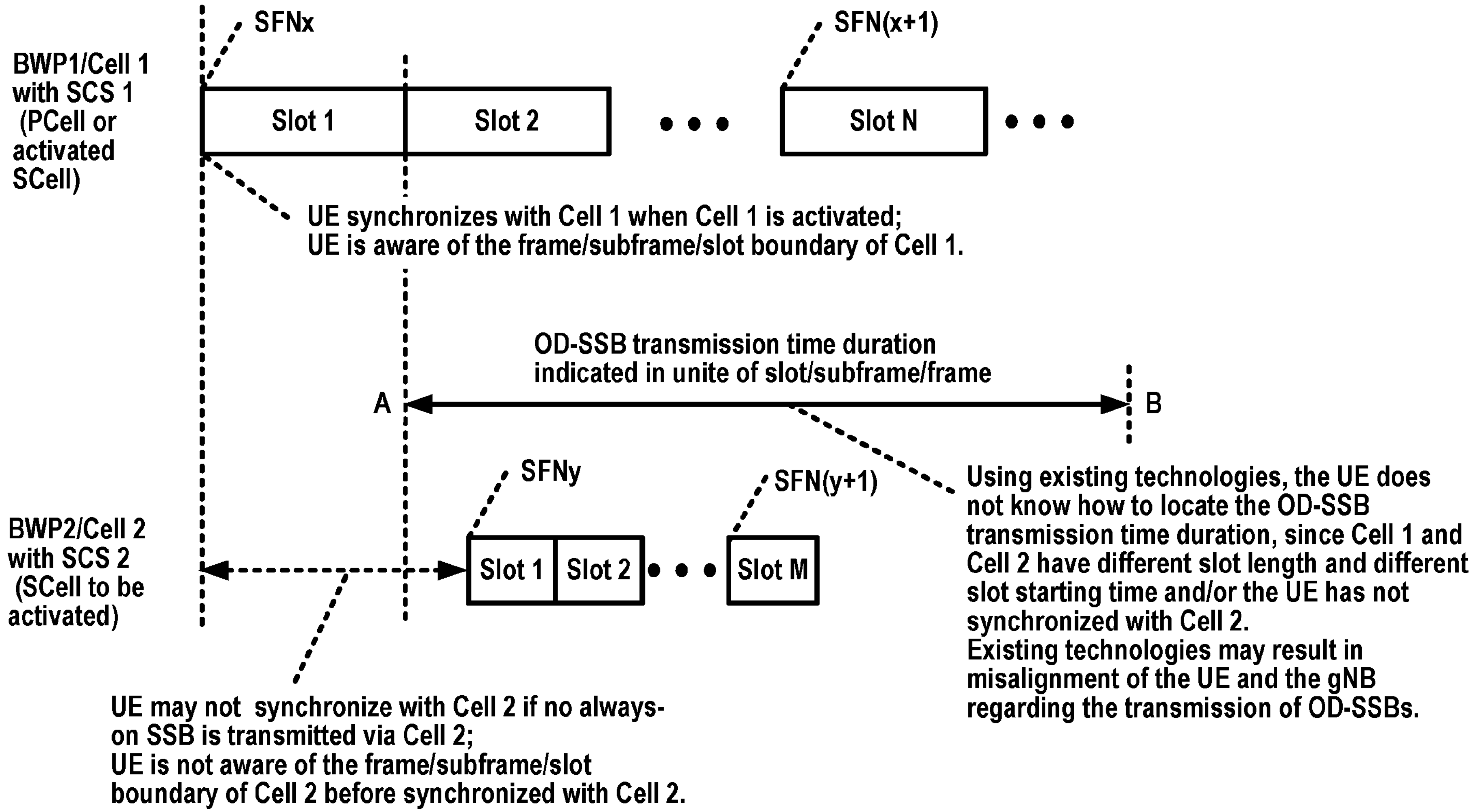
BWP1/Cell 1
with SCS 1
(PCell or
activated
SCell)
SFNx
SFN(x+1)
Slot 1
Slot 2
Slot N
UE synchronizes with Cell 1 when Cell 1 is activated;
UE is aware of the frame/subframe/slot boundary of Cell 1.
OD-SSB transmission time duration
indicated in unite of slot/subframe/frame
A
B
BWP2/Cell 2
with SCS 2
(SCell to be
activated)
SFNy
SFN(y+1)
Slot 1
Slot 2
Slot M
Using existing technologies, the UE does not know how to locate the OD-SSB transmission time duration, since Cell 1 and Cell 2 have different slot length and different slot starting time and/or the UE has not synchronized with Cell 2.
Existing technologies may result in misalignment of the UE and the gNB regarding the transmission of OD-SSBs.
UE may not synchronize with Cell 2 if no always-on SSB is transmitted via Cell 2;
UE is not aware of the frame/subframe/slot boundary of Cell 2 before synchronized with Cell 2.

FIG. 42

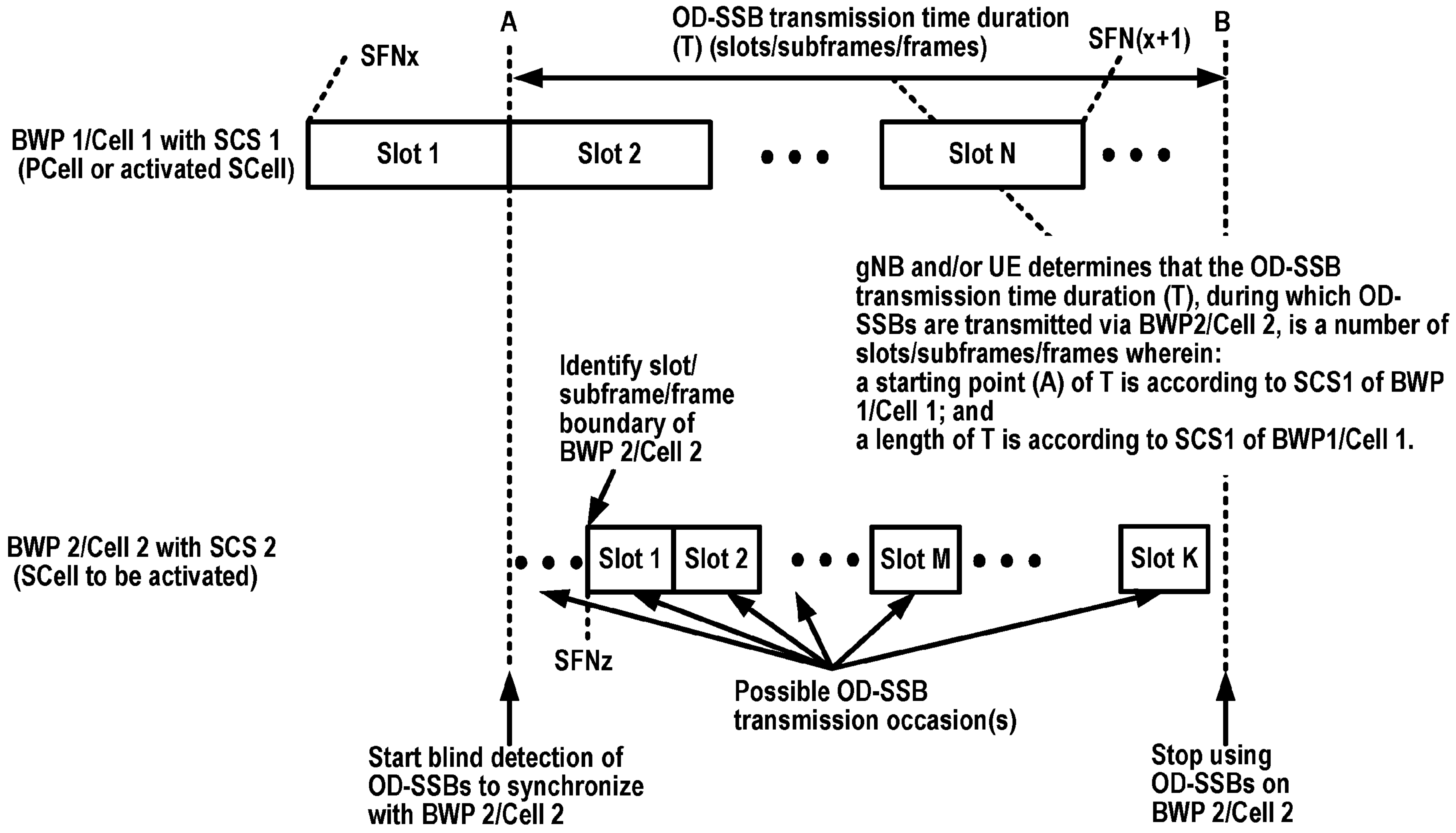
OD-SSB transmission time duration (T) (slots/subframes/frames)
A
B
SFNx
SFN(x+1)
BWP 1/Cell 1 with SCS 1 (PCell or activated SCell)
Slot 1
Slot 2
Slot N
gNB and/or UE determines that the OD-SSB transmission time duration (T), during which OD-SSBs are transmitted via BWP2/Cell 2, is a number of slots/subframes/frames wherein:
a starting point (A) of T is according to SCS1 of BWP 1/Cell 1; and
a length of T is according to SCS1 of BWP1/Cell 1.
Identify slot/ subframe/frame boundary of BWP 2/Cell 2
BWP 2/Cell 2 with SCS 2 (SCell to be activated)
Slot 1
Slot 2
Slot M
Slot K
SFNz
Possible OD-SSB transmission occasion(s)
Start blind detection of OD-SSBs to synchronize with BWP 2/Cell 2
Stop using OD-SSBs on BWP 2/Cell 2

FIG. 43

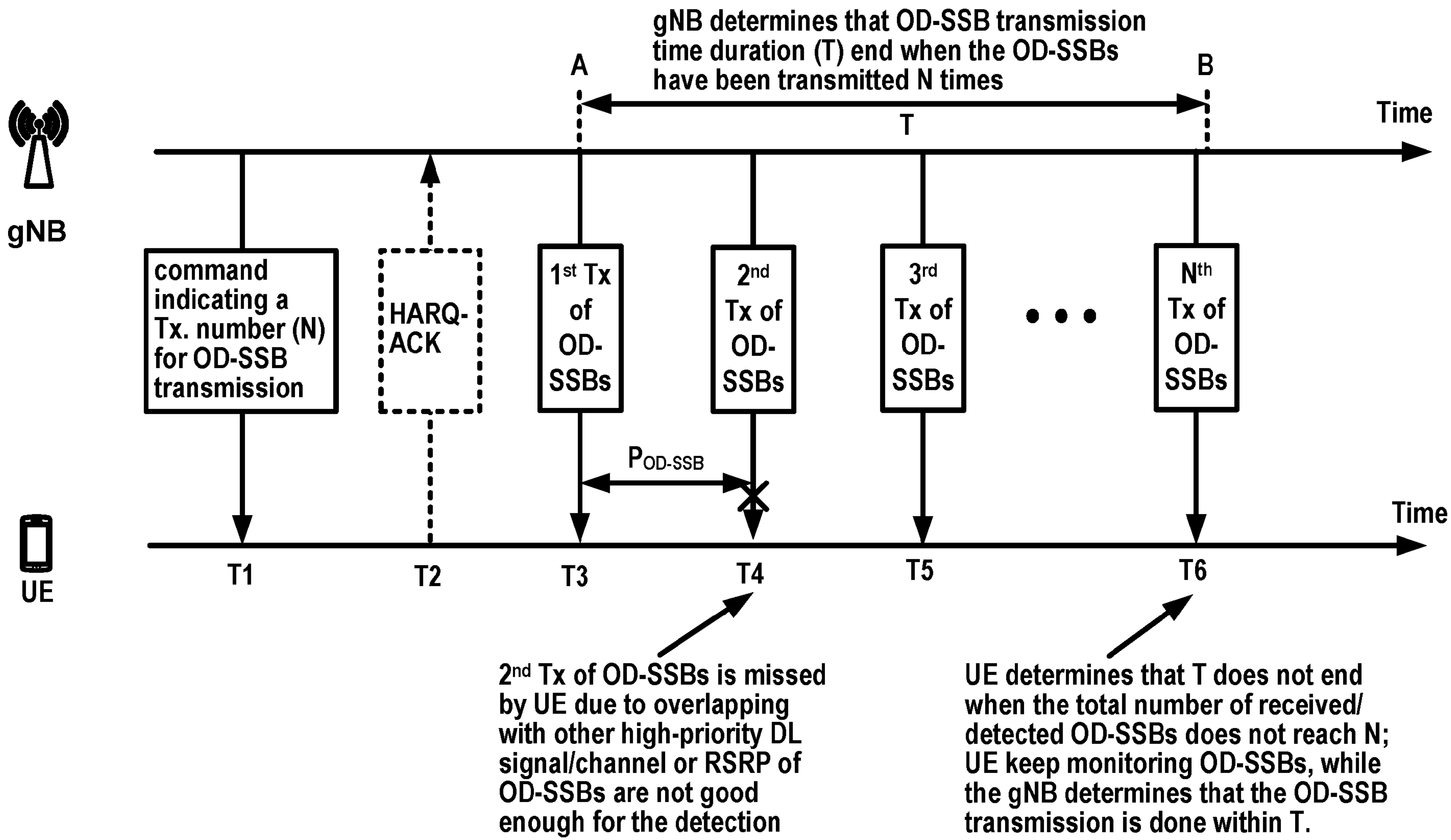
gNB
UE
Time
Time
gNB determines that OD-SSB transmission time duration (T) end when the OD-SSBs have been transmitted N times
A
B
T
command indicating a Tx. number (N) for OD-SSB transmission
HARQ-ACK
1st Tx of OD-SSBs
2nd Tx of OD-SSBs
3rd Tx of OD-SSBs
Nth Tx of OD-SSBs
$P_{OD-SSB}$
T1
T2
T3
T4
T5
T6
2nd Tx of OD-SSBs is missed by UE due to overlapping with other high-priority DL signal/channel or RSRP of OD-SSBs are not good enough for the detection
UE determines that T does not end when the total number of received/detected OD-SSBs does not reach N; UE keep monitoring OD-SSBs, while the gNB determines that the OD-SSB transmission is done within T.

FIG. 44

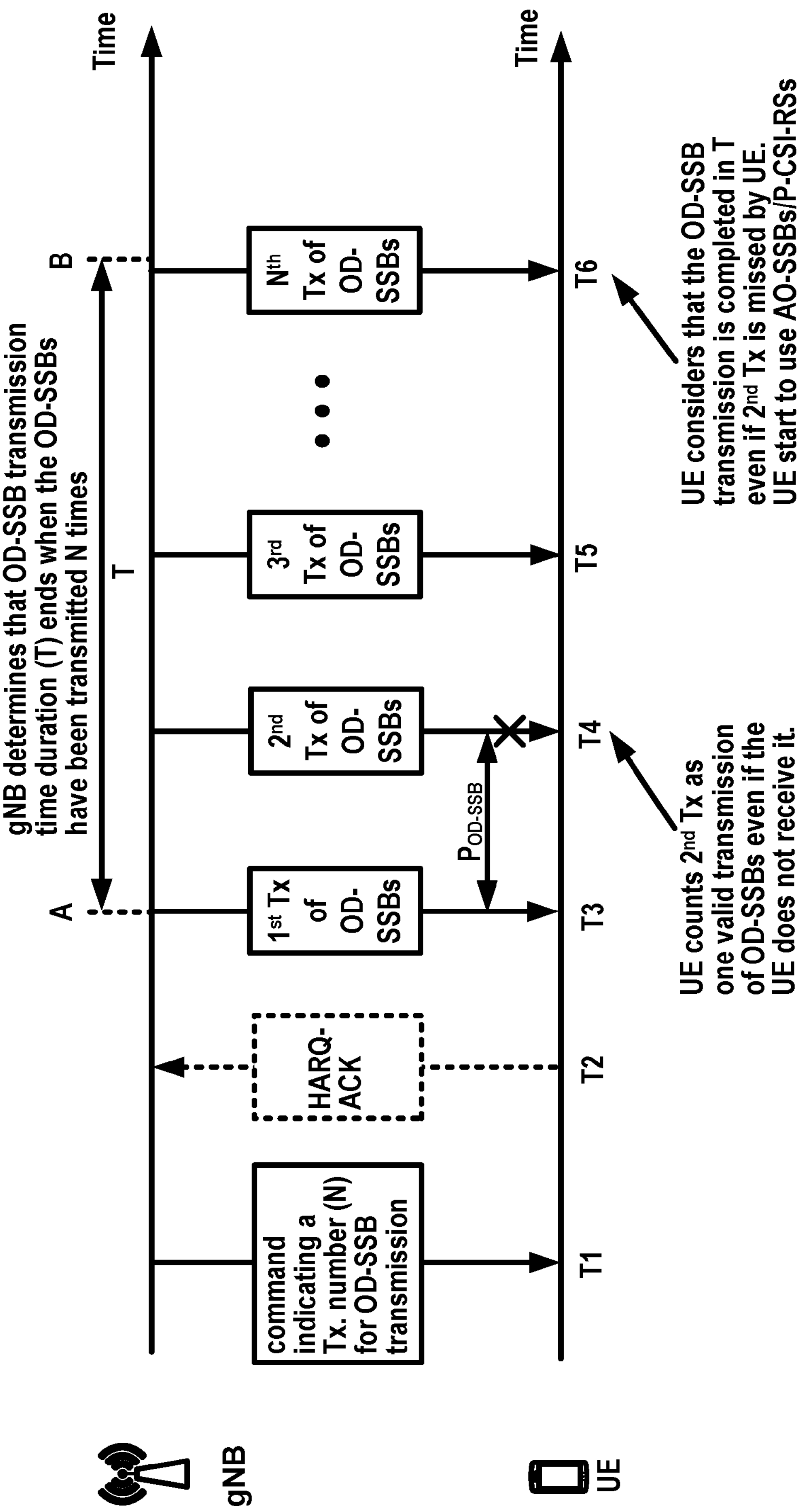
gNB
UE
Time
Time
command indicating a Tx. number (N) for OD-SSB transmission
HARQ-ACK
1st Tx of OD-SSBs
2nd Tx of OD-SSBs
3rd Tx of OD-SSBs
Nth Tx of OD-SSBs
T1
T2
T3
T4
T5
T6
A
B
T
P OD-SSB
gNB determines that OD-SSB transmission time duration (T) ends when the OD-SSBs have been transmitted N times
UE counts 2nd Tx as one valid transmission of OD-SSBs even if the UE does not receive it.
UE considers that the OD-SSB transmission is completed in T even if 2nd Tx is missed by UE. UE start to use AO-SSBs/P-CSI-RSs

FIG. 45

Europäisches Patentamt
European Patent Office
Office européen des brevets

# EUROPEAN SEARCH REPORT

Application Number
EP 25 17 4656

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PATRICK MERIAS ET AL: "Summary #3 of on-demand SSB for NES", 3GPP DRAFT; R1-2403508; TYPE DISCUSSION; NETW_ENERGY_NR_ENH-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. RAN WG1, no. Changsha, Hunan Province, CN; 20240415 - 20240419 18 April 2024 (2024-04-18), XP052593134, Retrieved from the Internet: URL:https://www.3gpp.org/ftp/TSG_RAN/WG1_RL1/TSGR1_116b/Docs/R1-2403508.zip R1-2403508.docx [retrieved on 2024-04-18] * page 20 * * page 27 - page 28 * * page 36 * ----- -/-- | 1-15 | INV. H04L5/00 |

TECHNICAL FIELDS SEARCHED (IPC)
H04L

The present search report has been drawn up for all claims

| Place of search | Date of completion of the search | Examiner |
|---|---|---|
| The Hague | 26 August 2025 | Devillers, Bertrand |

1

CATEGORY OF CITED DOCUMENTS
X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 25 17 4656

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SUKCHEL YANG ET AL: "On-demand SSB SCell operation", 3GPP DRAFT; R1-2403123; TYPE DISCUSSION; NETW_ENERGY_NR_ENH-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. RAN WG1, no. Changsha, Hunan Province, CN; 20240415 - 20240419 5 April 2024 (2024-04-05), XP052587104, Retrieved from the Internet: URL:https://www.3gpp.org/ftp/TSG_RAN/WG1_RL1/TSGR1_116b/Docs/R1-2403123.zip R1-2403123 On-demand SSB SCell operation.docx [retrieved on 2024-04-05] * Sections 3 and 3.1 * ----- | 1-15 | |
| A | BRIAN CLASSON ET AL: "Discussion of on-demand SSB Scell operation", 3GPP DRAFT; R1-2402048; TYPE DISCUSSION; NETW_ENERGY_NR_ENH-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. RAN WG1, no. Changsha, Hunan Province, CN; 20240415 - 20240419 5 April 2024 (2024-04-05), XP052586062, Retrieved from the Internet: URL:https://www.3gpp.org/ftp/TSG_RAN/WG1_RL1/TSGR1_116b/Docs/R1-2402048.zip R1-2402048.docx [retrieved on 2024-04-05] * Section 3.3 * ----- | 1-15 | TECHNICAL FIELDS SEARCHED (IPC) |

The present search report has been drawn up for all claims

1

| Place of search | Date of completion of the search | Examiner |
|---|---|---|
| The Hague | 26 August 2025 | Devillers, Bertrand |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 63643158